(19) Europäisches Patentamt
European Patent Office
Office européen des brevets

(11) EP 4 679 919 A1

(12) EUROPEAN PATENT APPLICATION
published in accordance with Art. 153(4) EPC

(43) Date of publication:
14.01.2026 Bulletin 2026/03

(21) Application number: 23932202.7

(22) Date of filing: 14.07.2023

(51) International Patent Classification (IPC):
*H04W 72/231 (2023.01)* *H04W 72/232 (2023.01)*
*H04W 72/12 (2023.01)* *H04B 7/06 (2006.01)*
*H04B 7/08 (2006.01)* *H04L 5/00 (2006.01)*

(52) Cooperative Patent Classification (CPC):
**H04B 7/06; H04B 7/08; H04L 5/00; H04W 72/12; H04W 72/231; H04W 72/232**

(86) International application number:
**PCT/KR2023/010143**

(87) International publication number:
**WO 2024/210268 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **06.04.2023 KR 20230045668**
**12.07.2023 KR 20230090696**

(71) Applicant: **Samsung Electronics Co., Ltd.**
**Suwon-si, Gyeonggi-do 16677 (KR)**

(72) Inventors:
- **JUNG, Euichang**
**Suwon-si, Gyeonggi-do 16677 (KR)**
- **JANG, Youngrok**
**Suwon-si, Gyeonggi-do 16677 (KR)**
- **MYUNG, Seho**
**Suwon-si, Gyeonggi-do 16677 (KR)**

(74) Representative: **Nederlandsch Octrooibureau**
**P.O. Box 29720**
**2502 LS The Hague (NL)**

# (54) METHOD AND APPARATUS FOR SOUNDING REFERENCE SIGNAL TRANSMISSION AND RECEPTION IN COMMUNICATION SYSTEM

(57) The present disclosure relates to a 5G or 6G communication system for supporting higher data transmission rates. A method performed by a terminal in the communication system, according to one embodiment, may comprise the steps of: receiving configuration information for a plurality of sounding reference signal (SRS) resource sets by means of higher layer signaling, wherein the plurality of SRS resource sets include one or more first SRS resource sets associated with a first index and one or more second SRS resource sets associated with a second index; and transmitting an SRS based on the configuration information and a unified transmission configuration index (TCI) state.

EP 4 679 919 A1

FIG. 1

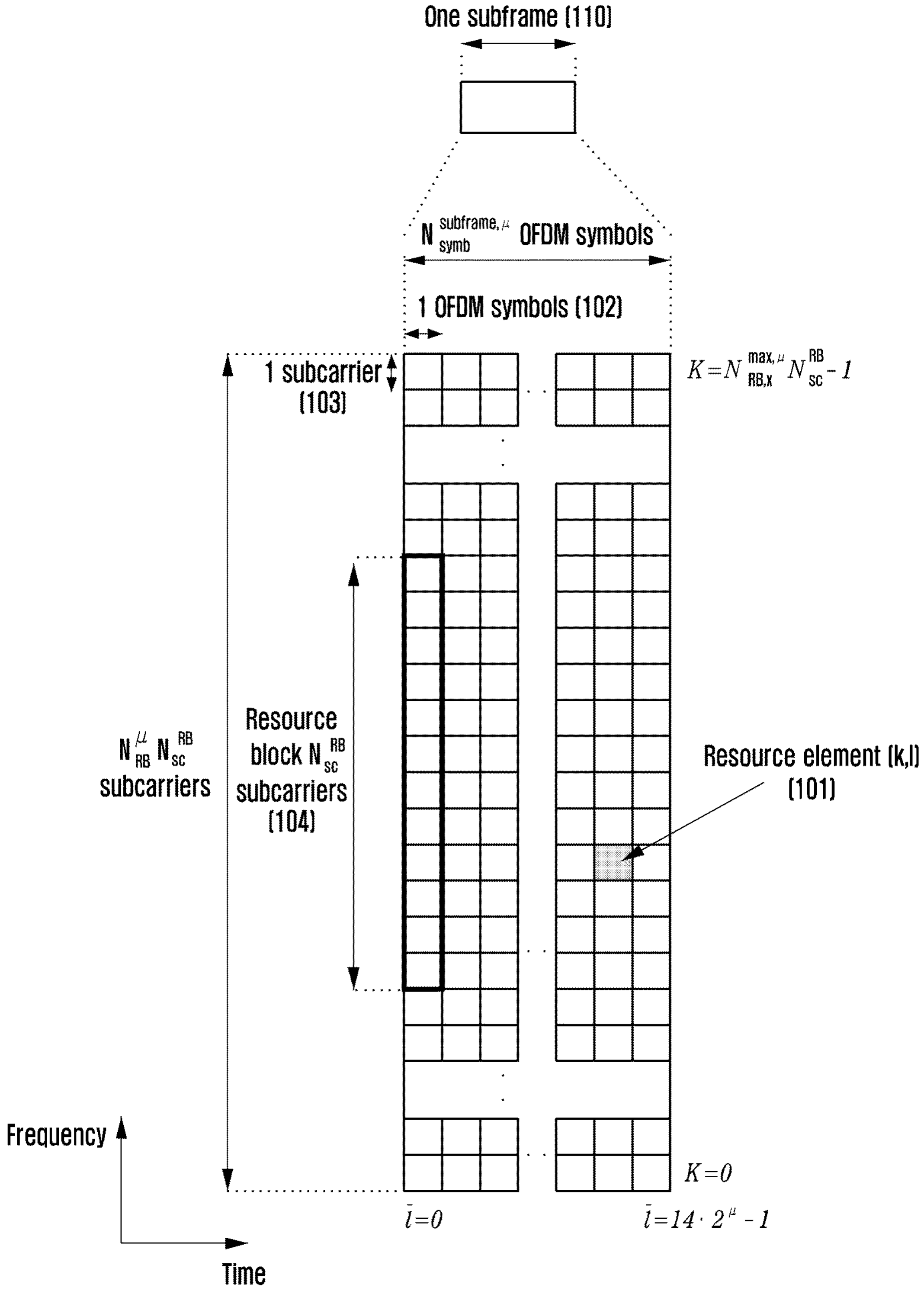
One subframe (110)
N subframe, μ symb OFDM symbols
1 OFDM symbols (102)
1 subcarrier (103)
K=N max,μ RB,x N RB sc - 1
Resource block N RB sc subcarriers (104)
N μ RB N RB sc subcarriers
Resource element (k,l) (101)
Frequency
Time
K=0
l=0
l=14 · 2μ - 1

## Description

## Field]

The present disclosure relates to the operation of a terminal and a base station in a wireless communication system. Specifically, the present disclosure relates to a method for transmitting and receiving a sounding reference signal in a communication system and a device capable of performing the same.

## [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

As described above and with the development of wireless communication systems, various services have become available, and methods for providing these services smoothly are required.

## [Disclosure of Invention]

## [Technical Problem]

Embodiments of the present disclosure provide a device and method capable of effectively providing a service in a mobile communication system.

Embodiments of the present disclosure provide a method and device for determining a TCI state to be applied when a terminal performs aperiodic CSI reporting.

Embodiments of the present disclosure provide a method and device for determining a TCI state to be applied when a terminal performs SRS transmission.

Problems to be achieved in various embodiments of the present disclosure are not limited to those mentioned above, and other technical problems not mentioned may be considered by a person having ordinary skill in the art from various embodiments of the present disclosure described below.

## [Solution to Problem]

According to one embodiment, a method performed by a terminal in a communication system may be provided.

According to one embodiment, the method may include receiving configuration information for a plurality of sounding reference signal (SRS) resource sets through higher layer signaling.

According to one embodiment, the plurality of SRS resource sets may include one or more first SRS resource sets associated with a first index and one or more second SRS resource sets associated with a second index.

According to one embodiment, the method may include transmitting an SRS on the basis of the configuration information and a unified transmission configuration index (TCI) state.

According to one embodiment, the unified TCI state may be identified to correspond to either the first index or the second index.

According to one embodiment, when the configuration information includes a control resource set (CORESET) pool index corresponding to a plurality of CORESETs, the first index is a first value of the CORESET pool index, the second index is a second value of the CORESET pool index, and the method further includes receiving a downlink control information (DCI ) including an SRS request field, wherein the unified TCI can be identified such that the DCI corresponds to a CORESET pool index corresponding to the CORESET in which the DCI is received.

According to one embodiment, when the TCI uplink (UL) state or the joint TCI state is configured to be used for the SRS, the first index is a first value of the CORESET pool index, the second index is a second value of the CORESET pool index, and the unified TCI state can be identified to correspond to a value of the CORESET pool index indicated on the basis of at least one of a medium access control (MAC) control element (CE) or DCI.

According to one embodiment, the configuration information may include a configuration indicating one or more of the first index and the second index.

According to one embodiment, when the configuration configures one of the first index and the second index, the unified TCI state can be identified to correspond to the index configured by the configuration.

According to one embodiment, the method may further include receiving a DCI including an SRS request field when the configuration configures both the first index and the second index.

According to one embodiment, the unified TCI may be identified to correspond to an index indicated by the DCI among the first index and the second index.

According to one embodiment, the one or more second SRS resource sets may be the remaining SRS resource sets excluding the one or more first SRS resource sets among the plurality of SRS resource sets.

According to one embodiment, a terminal of a communication system may be provided.

According to one embodiment, the terminal may include a transceiver and a processor connected to the transceiver.

According to one embodiment, the processor may be configured to receive configuration information for a plurality of sounding reference signal (SRS) resource sets through higher layer signaling.

According to one embodiment, the plurality of SRS resource sets may include one or more first SRS resource sets associated with a first index and one or more second SRS resource sets associated with a second index.

According to one embodiment, the processor may be configured to transmit an SRS on the basis of the configuration information and a unified transmission configuration index (TCI) state.

According to one embodiment, the unified TCI state may be identified to correspond to either the first index or the second index.

According to one embodiment, a method performed by a base station in a communication system may be provided.

According to one embodiment, the method may include transmitting configuration information for a plurality of sounding reference signal (SRS) resource sets through higher layer signaling.

According to one embodiment, the plurality of SRS resource sets may include one or more first SRS resource sets associated with a first index and one or more second SRS resource sets associated with a second index.

According to one embodiment, the method may include receiving an SRS related to the configuration information and a unified transmission configuration index (TCI) state.

According to one embodiment, the unified TCI state may correspond to either the first index or the second index.

According to one embodiment, when the configuration information includes a control resource set (CORESET) pool index corresponding to a plurality of CORESETs, the first index is a first value of the CORESET pool index, the second index is a second value of the CORESET pool index, and the method further includes transmitting a downlink control information (DCI) including an SRS request field, wherein the unified TCI can correspond to a CORESET pool index corresponding to a CORESET in which the DCI is received.

According to one embodiment, when the TCI uplink (UL) state or the joint TCI state is configured to be used for the SRS, the first index is a first value of the CORESET pool index, the second index is a second value of the CORESET pool index, and the unified TCI state can correspond to a value of the CORESET pool index indicated on the basis of at least one of a medium access control (MAC) control element (CE) or DCI.

According to one embodiment, the configuration information may include a configuration indicating one or more of the first index and the second index.

According to one embodiment, when the configuration configures one of the first index and the second index, the unified TCI state can be identified to correspond to the index configured by the configuration.

According to one embodiment, the method may further include transmitting a DCI including an SRS request field when the configuration configures both the first index and the second index.

According to one embodiment, the unified TCI may correspond to an index indicated by the DCI among the first index and the second index.

According to one embodiment, the one or more second SRS resource sets may be the remaining SRS resource sets excluding the one or more first SRS resource sets among the plurality of SRS resource sets.

According to one embodiment, a base station of a communication system may be provided.

According to one embodiment, the base station may include a transceiver and a processor connected to the transceiver.

According to one embodiment, the processor may be configured to transmit configuration information for a plurality of sounding reference signal (SRS) resource sets through higher layer signaling.

According to one embodiment, the plurality of SRS resource sets may include one or more first SRS resource sets associated with a first index and one or more second SRS resource sets associated with a second index.

According to one embodiment, the processor may be configured to receive an SRS associated with the configuration information and a unified transmission configuration index (TCI) state.

According to one embodiment, the unified TCI state may correspond to either the first index or the second index.

According to one embodiment of the present disclosure, a method performed by a terminal in a communication system may be provided.

According to one embodiment, the method may include receiving a radio resource control (RRC) message including a configuration for a channel state information-reference signal (CSI-RS) resource set, a CSI-RS configuration, a configuration for an aperiodic CSI trigger state, and a unified TCI state list.

According to one embodiment, the method may include receiving downlink control information (DCI) including a CSI request for triggering aperiodic CSI reporting.

According to one embodiment, the method may include receiving an aperiodic CSI-RS on the basis of a TCI state determined from the unified TCI state list, from CSI-RS resource set indicated by an aperiodic CSI trigger state corresponding to the CSI request.

According to one embodiment, the method may include transmitting a CSI report generated on the basis of the aperiodic CSI-RS to a base station.

According to one embodiment of the present disclosure, a method performed by a base station in a communication system may be provided.

According to one embodiment, the method may include transmitting a radio resource control (RRC) message including a configuration for a channel state information-reference signal (CSI-RS) resource set, a CSI-RS configuration, a configuration for an aperiodic CSI trigger state, and a unified TCI state list.

According to one embodiment, the method may include transmitting downlink control information (DCI) including a CSI request for triggering aperiodic CSI reporting.

According to one embodiment, the method may include transmitting an aperiodic CSI-RS in a CSI-RS resource set indicated by an aperiodic CSI trigger state corresponding to the CSI request.

According to one embodiment, a TCI state determined from among the unified TCI state list may be applied to the aperiodic CSI-RS.

According to one embodiment, the method may include receiving a CSI report generated on the basis of the aperiodic CSI-RS.

According to one embodiment of the present disclosure, a terminal may be provided in a communication system.

According to one embodiment, the terminal may include a transceiver and a control unit connected to the transceiver.

According to one embodiment, the control unit may be configured to receive a radio resource control (RRC) message including a configuration for a channel state information-reference signal (CSI-RS) resource set, a CSI-RS configuration, a configuration for an aperiodic CSI trigger state, and a unified TCI state list.

According to one embodiment, the control unit may be configured to receive downlink control information (DCI) including a CSI request for triggering aperiodic CSI reporting.

According to one embodiment, the control unit may be configured to receive an aperiodic CSI-RS on the basis of a TCI state determined from among the unified TCI state list, from a CSI-RS resource set indicated by an aperiodic CSI trigger state corresponding to the CSI request.

According to one embodiment, the control unit may be configured to transmit a CSI report generated on the basis of the aperiodic CSI-RS to the base station.

According to one embodiment of the present disclosure, a base station may be provided in a communication system.

According to one embodiment, the base station may include a transceiver and a control unit connected to the transceiver.

According to one embodiment, the control unit may be configured to transmit a radio resource control (RRC) message including a configuration for a channel state information-reference signal (CSI-RS) resource set, a CSI-RS configuration, a configuration for an aperiodic CSI trigger state, and a unified TCI state list.

According to one embodiment, the control unit may be configured to transmit downlink control information (DCI) including a CSI request for triggering aperiodic CSI reporting.

According to one embodiment, the control unit may be configured to transmit an aperiodic CSI-RS in a CSI-RS resource set indicated by an aperiodic CSI trigger state corresponding to the CSI request.

According to one embodiment, a TCI state determined from among the unified TCI state list may be applied to the aperiodic CSI-RS.

According to one embodiment, the control unit may be configured to receive a CSI report generated on the basis of the aperiodic CSI-RS.

The various embodiments of the present disclosure described above are only some of the preferred embodiments of the present disclosure, and various embodiments reflecting the technical features of the various embodiments of the present disclosure can be derived and understood by a person having ordinary skill in the art on the basis of the detailed description to be described below.

**[Advantageous Effects of Invention]**

Through the embodiments of the present disclosure, services may be effectively provided in a mobile communication system.

Through the embodiments of the present disclosure, an efficient aperiodic CSI reporting may be performed effectively.

Through the embodiments of the present disclosure, SRS transmission and reception may be performed efficiently.

Effects obtainable from various embodiments of the present disclosure are not limited to the effects mentioned above, and other effects that are not mentioned can be clearly derived and understood by a person having ordinary skill in the art on the basis of the detailed description below.

**[Brief Description of Drawings]**

FIG. 1 is a diagram illustrating a basic structure of a time-frequency domain in a wireless communication system according to one embodiment of the present disclosure.

FIG. 2 is a diagram illustrating a frame, subframe, and slot structure in a wireless communication system according to one embodiment of the present disclosure.

FIG. 3 is a diagram illustrating an example of bandwidth part configurations in a wireless communication system according to one embodiment of the present disclosure.

FIG. 4 is a diagram illustrating an example of configuring a control resource set of a downlink control channel in a wireless communication system according to one embodiment of the present disclosure.

FIG. 5a is a diagram illustrating the structure of a downlink control channel in a wireless communication system according to one embodiment of the present disclosure.

FIG. 5b is a diagram illustrating a case in which a terminal may have a plurality of PDCCH monitoring positions within a slot through span in a wireless communication system according to one embodiment of the present disclosure.

FIG. 6 is a diagram illustrating an example of DRX operation in a wireless communication system according to one embodiment of the present disclosure.

FIG. 7 is a diagram illustrating an example of base station beam allocation according to TCI state configurations in a wireless communication system according to one embodiment of the present disclosure.

FIG. 8 is a diagram illustrating an example of a TCI state allocation method for a PDCCH in a wireless communication system according to one embodiment of the present disclosure.

FIG. 9 is a diagram illustrating a TCI indication MAC CE signaling structure for PDCCH DMRS in a wireless communication system according to one embodiment of the present disclosure.

FIG. 10 is a diagram illustrating an example of beam configuration of a control resource set and a search space in a wireless communication system according to one embodiment of the present disclosure.

FIG. 11 is a diagram explaining a method for a base station and a terminal to transmit and receive data in consideration of a downlink data channel and rate matching resources in a wireless communication system according to one embodiment of the present disclosure.

FIG. 12 is a diagram for explaining a method for selecting a control resource set that may be received by a terminal while considering priorities when receiving a downlink control channel in a wireless communication system according to one embodiment of the present disclosure.

FIG. 13 is a diagram illustrating an example of frequency domain resource allocation of a PDSCH in a wireless communication system according to one embodiment of the present disclosure.

FIG. 14 is a diagram illustrating an example of time domain resource allocation of PDSCH in a wireless communication system according to one embodiment of the present disclosure.

FIG. 15 is a diagram illustrating an example of time domain resource allocation according to subcarrier spacing of a data channel and a control channel in a wireless communication system according to one embodiment of the present disclosure.

FIG. 16 illustrates a process for beam configuration and activation of PDSCH.

FIG. 17 is a diagram illustrating an example of PUSCH repetition transmission type B in a wireless communication system according to one embodiment of the present disclosure.

FIG. 18 is a diagram illustrating a wireless protocol structure of a base station and a terminal in a single cell, carrier aggregation, and dual connectivity situation in a wireless communication system according to one embodiment of the present disclosure.

FIG. 19 is a diagram illustrating an example of antenna port configuration and resource allocation for cooperative communication in a wireless communication system according to one embodiment of the present disclosure.

FIG. 20 is a diagram illustrating a configuration example of the downlink control information (DCI) for cooperative communication in a wireless communication system according to one embodiment of the present disclosure.

FIG. 21 is a diagram illustrating the structure of an enhanced PDSCH TCI state activation/deactivation MAC-CE.

FIG. 22 is a diagram illustrating an RLM RS selection process according to one embodiment of the present disclosure.

FIG. 23 is a diagram illustrating a MAC-CE structure for activating and indicating a joint TCI state in a wireless communication system according to one embodiment of the present disclosure.

FIG. 24 is a diagram illustrating another MAC-CE structure for joint TCI state activation and indication in a wireless communication system according to one embodiment of the present disclosure.

FIG. 25 is a diagram illustrating another MAC-CE structure for joint TCI state activation and indication in a wireless communication system according to one embodiment of the present disclosure.

FIG. 26 is a diagram illustrating a MAC-CE structure for activating and indicating a separate TCI state in a wireless communication system according to one embodiment of the present disclosure.

FIG. 27 is a diagram illustrating another MAC-CE structure for separate TCI state activation and indication in a wireless communication system according to one embodiment of the present disclosure.

FIG. 28 is a diagram illustrating another MAC-CE structure for separate TCI state activation and indication in a wireless communication system according to one embodiment of the present disclosure.

FIG. 29 is a diagram illustrating another MAC-CE structure for separate TCI state activation and indication in a wireless communication system according to one embodiment of the present disclosure.

FIG. 30 is a diagram illustrating a MAC-CE structure for joint and separate TCI state activation and indication in a wireless communication system according to one embodiment of the present disclosure.

FIG. 31 is a diagram illustrating another MAC-CE structure for joint and separate TCI state activation and indication in a wireless communication system according to one embodiment of the present disclosure.

FIG. 32 is a diagram illustrating a beam application time that can be considered when using a unified TCI scheme in a wireless communication system according to one embodiment of the present disclosure.

FIG. 33 is a diagram illustrating a MAC-CE structure for activating and indicating a plurality of joint TCI states in a wireless communication system according to one embodiment of the present disclosure.

FIG. 34 is a diagram illustrating a MAC-CE structure for activating and indicating a plurality of separate TCI states in a wireless communication system according to one embodiment of the present disclosure.

FIG. 35 is a diagram illustrating another MAC-CE structure for activating and indicating a plurality of separate TCI states in a wireless communication system according to one embodiment of the present disclosure.

FIG. 36 is a diagram illustrating a method for determining a TCI state of a downlink control channel to minimize the number of beam changes within a slot in a wireless communication system according to one embodiment of the present disclosure.

FIG. 37 is a diagram illustrating an example of applying power parameters to SRS resource configurations according to one embodiment of the present disclosure.

FIG. 38 is a diagram illustrating an example of an SRS resource set configuration linked to a TRP according to one embodiment of the present disclosure.

FIG. 39 is a diagram illustrating an example of an operation method of a terminal according to one embodiment of the present disclosure.

FIG. 40 is a diagram illustrating an example of an operation method of a base station according to one embodiment of the present disclosure.

FIG. 41 is a diagram illustrating the structure of a terminal in a wireless communication system according to one embodiment of the present disclosure.

FIG. 42 is a diagram illustrating the structure of a base station in a wireless communication system according to one embodiment of the present disclosure.

## [Mode for the Invention]

Hereinafter, embodiments of the present disclosure will be described in detail with reference to the attached drawings.

In describing the embodiments, descriptions of technical contents that are well known in the technical field to which the present disclosure pertains and are not directly related to the present disclosure are omitted. This is to convey the gist of the present disclosure more clearly without obscuring it by omitting unnecessary descriptions.

For the same reason, some components in the attached drawings are exaggerated, omitted, or schematically illustrated. In addition, the size of each component does not entirely reflect the actual size. The same or corresponding components in each drawing are assigned the same reference numbers.

The advantages and features of the present disclosure and methods for achieving them will become clear by reference to the embodiments described in detail below along with the accompanying drawings. However, the present disclosure is not limited to the embodiments disclosed below, but may be implemented in a variety of different forms and the present embodiments are merely provided to ensure that the disclosure of the present disclosure is complete and to fully inform the scope of the disclosure to persons of ordinary knowledge in the technical field to which the present disclosure pertains, and the present disclosure is only defined by the scope of the claims. Throughout the specification, the same reference numerals refer to the same components. In addition, when describing the present disclosure, if it is determined that a detailed description of a related function or configuration may unnecessarily obscure the gist of the present disclosure, the detailed description will be omitted. In addition, the terms described below are terms defined in consideration of the functions in the present disclosure and may vary depending on the intention or custom of the user or the operator. Therefore, the definition should be made on the basis of the contents throughout this specification.

Hereinafter, the base station is an entity that performs resource allocation of a terminal, and may be at least one of a gNode B, an eNode B, a Node B, a base station (BS), a wireless access unit, a base station controller, or a node on a network. The terminal may include a user equipment (UE), a mobile station (MS), a cellular phone, a smartphone, a computer, or a multimedia system capable of performing a communication function. In the present disclosure, the downlink (DL) refers to a wireless transmission path of a signal that a base station transmits to a terminal, and the uplink (UL) refers to a wireless transmission path of a signal that a terminal transmits to a base station. In addition, although the LTE or LTE-A system may be described as an example below, the embodiments of the present disclosure may be applied to other communication systems having a similar technical background or channel type. For example, the 5th generation mobile communication technology (5G, new radio, NR) developed after LTE-A may be included here, and the 5G below may be a concept that includes existing LTE, LTE-A, and other similar services. In addition, the present disclosure may be applied to other communication systems through some modifications without significantly departing from the scope of the present disclosure, as judged by a person having skilled technical knowledge.

In this case, it will be understood that each block of the processing flowchart illustrations and combinations of the flowchart illustrations may be performed by computer program instructions. These computer program instructions may be mounted on a processor of a general purpose computer, a special purpose computer, or other programmable data processing equipment, such that the instructions, when executed by the processor of the computer or other programmable data processing equipment, create means for performing the functions described in the flowchart block(s). These computer program instructions may be stored in computer-usable or computer-readable memory that may be directed to a computer or other programmable data processing equipment to implement the functions in a specific manner, so that the instructions stored in the computer-usable or computer-readable memory may produce a manufactured item comprising instructional means for performing the functions described in the flowchart block(s). The computer program instructions may also be mounted on a computer or other programmable data processing equipment and a series of operational steps are performed on the computer or other programmable data processing equipment to create a computer-executable process, such that the instructions performing the computer or other programmable data processing equipment may also provide steps for performing the functions described in the flowchart block(s).

In addition, each block may represent a module, a segment, or a portion of code comprising one or more executable instructions for performing a specified logical function(s). It should also be noted that in some alternative embodiments, the functions recited in the blocks may occur out of sequence. For example, two blocks shown one after the other may in fact be performed substantially simultaneously, or the blocks may be performed in reverse order according to the functions they sometimes perform.

In this case, the term '~unit' used in the present embodiment refers to software or a hardware component such as a Field Programmable Gate Array (FPGA) or Application Specific Integrated Circuit (ASIC), which may perform any of the roles. However, '~unit' is not software or hardware specific. It may be configured to reside on an addressable storage medium, or it may be configured to execute one or more processors. Therefore, in one example, '~unit' includes components such as software components, object-oriented software components, class components, and task components, processes, functions, properties, procedures, subroutines, segments of program code, drivers, firmware, microcode, circuits, data, databases, data structures, tables, arrays, and variables. The functionality provided within the components and '~units' may be combined into fewer components and '~units', or further separated into additional components and '~units'. Furthermore, the components and '~units' may be implemented to play one or more CPUs within the device or the security multimedia card. In addition, in the embodiment, '~unit' may include one or more processors.

Wireless communication systems have evolved from providing initially voice-oriented services to broadband wireless communication systems that provide high-speed, high-quality packet data services, for example, using communication standards such as 3GPP's High Speed Packet Access (HSPA), Long Term Evolution (LTE) or Evolved Universal Terrestrial Radio Access (E-UTRA), LTE-Advanced (LTE-A), LTE-Pro, 3GPP2's High Rate Packet Data (HRPD), Ultra Mobile Broadband (UMB), and IEEE's 802.16e.

As a representative example of the broadband wireless communication system, the LTE system adopts the Orthogonal Frequency Division Multiplexing (OFDM) method for the downlink (DL) and the Single Carrier Frequency Division Multiple Access (SC-FDMA) method for the uplink (UL). Uplink refers to a wireless link in which a terminal (User Equipment (UE) or Mobile Station (MS)) transmits data or control signals to a base station (eNode B, or base station (BS)), and downlink refers to a wireless link in which a base station transmits data or control signals to a terminal. In the above multiple access method, the data or control information of each user may be distinguished by allocating and operating the time-frequency resources to carry data or control information for each user so that they do not overlap, i.e., orthogonality is established.

As a future communication system after LTE, i.e., 5G communication system should be able to freely reflect various requirements of users and service providers, so services that satisfy various requirements simultaneously should be supported. The services considered for 5G communication systems include enhanced Mobile Broadband (eMBB), massive Machine Type Communication (mMTC), and Ultra Reliability Low Latency Communication (URLLC).

eMBB aims to provide higher data rates than those supported by conventional LTE, LTE-A, or LTE-Pro. For example, in a 5G communication system, eMBB should be able to provide a peak data rate of 20 Gbps in the downlink and 10 Gbps in the uplink from the perspective of one base station. In addition, 5G communication systems must provide peak data rates while also providing increased user perceived data rates. To meet these requirements, various transmission and reception technologies will need to be improved, including more advanced multi-antenna (Multi Input Multi Output, MIMO) transmission technologies. In addition, while LTE uses up to 20 MHz transmission bandwidth in the 2 GHz band to transmit signals, 5G communication systems will use wider frequency bandwidths than 20 MHz in the 3-6 GHz or 6 GHz or higher frequency bands to meet the data transmission rates required by 5G communication systems.

At the same time, mMTC is being considered to support application services such as the Internet of Things (IoT) in 5G communication systems. In order to efficiently deliver the Internet of Things, mMTC needs to support the access of a large number of terminals within a cell, improve coverage of terminals, improve battery life, and reduce the cost of terminals. Since the Internet of Things will be attached to a plurality of sensors and various devices to provide communication capabilities, it must be able to support a large number of terminals (e.g., 1,000,000 terminals/km2) within a cell. Additionally, because of the nature of the service, mMTC-enabled terminals are likely to be located in shadowed areas that are not covered by cells, such as the basement of a building, and may require greater coverage than other services provided by 5G communication systems. The mMTC-enabled devices will need to be low-cost devices and may require very long battery life times, such as 10 to 15 years, as it is difficult to replace the device's battery frequently.

Lastly, URLLC is a cellular-based wireless communication service used for specific mission-critical purposes. Examples include services used for remote control of robots or machinery, industrial automation, unmanned aerial vehicles, remote health care, emergency alerts, etc. As such, the communication provided by URLLC must be extremely low latency and highly reliable. For example, services that support URLLC must satisfy an air interface latency of less than 0.5 milliseconds, while simultaneously having a packet error rate requirement of 75 or less. Therefore, for services supporting URLLC, the 5G system may need to provide a smaller Transmit Time Interval (TTI) than other services, and at the same time, the design may require a large resource allocation in the frequency band to ensure the reliability of the communication link.

The three services of 5G, namely eMBB, URLLC, and mMTC, may be multiplexed and transmitted in one system. In this case, different transmission and reception techniques and transmission and reception parameters may be used among the services to satisfy the different requirements of each service. Of course, 5G is not limited to the three services described above.

[NR Time-Frequency Resource]

In the following, the frame structure of the 5G system will be described in more detail with reference to the drawings.

FIG. 1 is a diagram illustrating the basic structure of the time-frequency domain, which is a radio resource domain where data or control channels are transmitted in a 5G wireless communication system.

With reference to FIG. 1, the horizontal domain represents the time domain, and the vertical domain represents the frequency domain. The basic unit of resources in the time and frequency domains is a Resource Element (RE) 101, which is defined as 1 Orthogonal Frequency Division Multiplexing (OFDM) symbol 102 on the time domain and 1 subcarrier 103 on the frequency domain. In the frequency domain, $N_{sc}^{RB}$ (for example, 12) consecutive REs may constitute one Resource Block (RB) 104.

FIG. 2 is a diagram illustrating a frame, subframe, and slot structure in a wireless communication system according to one embodiment of the present disclosure.

With reference to FIG. 2, an example of a structure of a frame 200, a subframe 201, and a slot 202 is illustrated. 1 frame 200 may be defined as 10ms. 1 subframe 201 may be defined as 1 ms, and therefore 1 frame 200 may consist of a total of 10 subframes 201. 1 slot 202 and 203 may be defined by 14 OFDM symbols (that is, the number of symbols per slot ($N_{symb}^{slot}$) = 14 ). 1 subframe 201 may consist of one or a plurality of slots 202 and 203, and the number of slots 202 and 203 per 1 subframe 201 may vary depending on the configuration value μ 204 and 205 for the subcarrier spacing. In an example of FIG. 2, a case where μ=0 204 and a case where μ=1 205 are illustrated as the subcarrier spacing configuration value. When μ=0 204, 1 subframe 201 may consist of one slot 202, and when μ=1 205, 1 subframe 201 may consist of two slots 203. That is, the number of slots per subframe ($N_{slot}^{subframe,\mu}$) may vary depending on the configuration value μ for the subcarrier spacing, and the number of slots per one frame ($N_{slot}^{frame,\mu}$) may vary accordingly. $N_{slot}^{subframe,\mu}$ and $N_{slot}^{frame,\mu}$ according to each subcarrier spacing configuration μ may be defined as [Table 1] below.

[Table 1]

| $\mu$ | $N_{symb}^{slot}$ | $N_{slot}^{frame\mu}$ | $N_{slot}^{subframe\mu}$ |
|---|---|---|---|
| 0 | 14 | 10 | 1 |

(continued)

| $\mu$ | $N_{symb}^{slot}$ | $N_{slot}^{frame\mu}$ | $N_{slot}^{subframe\mu}$ |
|---|---|---|---|
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

[Bandwidth Part (BWP)]

Next, Bandwidth Part (BWP) configurations in the 5G communication system will be described in detail with reference to the drawings.

FIG. 3 is a diagram illustrating an example of bandwidth part configurations in a wireless communication system according to one embodiment of the present disclosure.

With reference to FIG. 3, an example is shown where the UE bandwidth 300 is configured to two bandwidth parts, that is, bandwidth part #1 (BWP#1) 301 and bandwidth part #2 (BWP#2) 302. The base station may configure one or more bandwidth parts to the terminal and may configure the following information for each bandwidth part.

[Table 2]

```
BWP ::=                         SEQUENCE {
    bwp-Id                          BWP-Id,
    (BWP Identity)
    locationAndBandwidth            INTEGER (1..65536),
    (BWP location)
    subcarrierSpacing               ENUMERATED {n0, n1, n2, n3, n4, n5},
    (Sucarrier spacing)
    cyclicPrefix                ENUMERATED { extended }
    (Cyclic prefix)
}
```

Of course, the configurations for the bandwidth part are not limited to the examples, and various parameters related to the bandwidth part may be configured to the terminal in addition to the configuration information. The configuration information may be transmitted by the base station to the terminal through higher layer signaling, e.g., Radio Resource Control (RRC) signaling. At least one bandwidth part of the configured one or more bandwidth parts may be activated. The activation status for a configured bandwidth part may be semi-statically transmitted from the base station to the terminal through RRC signaling or dynamically transmitted through Downlink Control Information (DCI).

According to some embodiments, the terminal prior to the Radio Resource Control (RRC) connection may receive the Initial Bandwidth Part (Initial BWP) for the initial connection from the base station through the Master Information Block (MIB). More specifically, during the initial connection phase, the terminal may receive configuration information for the Control Resource Set (CORESET) and the search space in which a PDCCH may be transmitted to receive the system information required for the initial connection (which may correspond to Remaining System Information (RMSI) or System Information Block 1 (SIB1)) through the MIB. The control resource set and search space configured by the MIB may be regarded as Identity (ID) 0, respectively. The base station may notify the terminal of configuration information such as frequency allocation information, time allocation information, and numerology for control resource set #0 through the MIB. In addition, the base station may notify the terminal of the monitoring period and occasion for the control resource set #0 through the MIB, that is, the configuration information for the search space #0. The terminal may regard the frequency domain configured in the control resource set #0 obtained from the MIB as the initial bandwidth part for the initial connection. In this case, the identity (ID) of the initial bandwidth part may be regarded as 0.

The configuration for the bandwidth part supported by the 5G wireless communication system may be used for various purposes.

According to some embodiments, the configuration for the bandwidth part may be used when the bandwidth supported by the terminal is smaller than the system bandwidth. For example, the base station may configure the frequency location of the bandwidth part (configuration information 2) to the terminal, allowing the terminal to transmit and receive data at a specific frequency location within the system bandwidth.

In addition, according to some embodiments, the base station may configure a plurality of bandwidth parts to the terminal for the purpose of supporting different numerologies. For example, to support both data transmission and reception using a subcarrier spacing of 15kHz and a subcarrier spacing of 30kHz for a terminal, the base station may configure the two bandwidth parts to the subcarrier spacing of 15kHz and 30kHz, respectively. Different bandwidth parts may be frequency division multiplexed, and when the base station wants to transmit and receive data at a specific subcarrier interval, the bandwidth part configured at the corresponding subcarrier interval may be activated.

In addition, according to one embodiment, for the purpose of reducing power consumption of the terminal, the base station may configure bandwidth parts with bandwidths of different sizes to the terminal. For example, if the terminal supports a very large bandwidth, for example, 100 MHz, and always transmits and receives data through that bandwidth, very large power consumption may occur. In particular, monitoring unnecessary downlink control channels with a large bandwidth of 100 MHz in a situation where there is no traffic may be very inefficient in terms of power consumption. For the purpose of reducing the power consumption of the terminal, the base station may configure a relatively small bandwidth part, for example, a bandwidth part of 20 MHz, to the terminal. In a situation where there is no traffic, the terminal may perform monitoring operations in the 20 MHz bandwidth part, and when data is generated, it may transmit and receive data in the 100 MHz bandwidth part according to the instructions of the base station.

In the method of configuring the bandwidth part, terminals before RRC connection may receive configuration information regarding the Initial Bandwidth Part through Master Information Block (MIB) in the initial connection stage. To be more specific, the terminal may have a Control Resource Set (CORESET) be configured for the downlink control channel through which Downlink Control Information (DCI) scheduling System Information Block (SIB) may be transmitted from the MIB of Physical Broadcast Channel (PBCH). The bandwidth of the Control Resource Set configured as MIB may be regarded as the initial bandwidth part, and through the configured initial bandwidth part, the terminal may receive Physical Downlink Shared Channel (PDSCH) on which the SIB is transmitted. In addition to receiving SIB, the initial bandwidth part may also be used for Other System Information (OSI), Paging, and Random Access.

[Bandwidth Part (BWP) Change]

If one or more bandwidth parts are configured, the base station may indicate the terminal to change (or switch, transition) the bandwidth part using the bandwidth part indicator field in the DCI. For example, in FIG. 3, if the currently activated bandwidth part of the terminal is bandwidth part #1 301, the base station may indicate the terminal to use the bandwidth part indicator in the DCI to indicate bandwidth part #2 302, and the terminal may perform a bandwidth part switch to bandwidth part #2 302 as indicated by the bandwidth part indicator in the received DCI.

As described above, since the DCI based bandwidth part switch may be indicated by the DCI scheduling the PDSCH or PUSCH, the terminal shall be able to receive or transmit the PDSCH or PUSCH scheduled by that DCI in the switched bandwidth part without any difficulty when it receives the bandwidth part switch request. To this end, the standard specifies requirements for the required time delay ($T_{BWP}$) for a bandwidth part switch, which may be defined, for example, as follows.

[Table 3]

| $\mu$ | **NR Slot length (ms)** | **BWP switch delay $T_{BWP}$ (slots)** | |
|---|---|---|---|
| | | **Type 1**[Note 1] | **Type 2**[Note 1] |
| 0 | 1 | 1 | 3 |
| 1 | 0.5 | 2 | 5 |
| 2 | 0.25 | 3 | 9 |
| 3 | 0.125 | 6 | 18 |

(continued)

| μ | NR Slot length (ms) | BWP switch delay $T_{BWP}$ (slots) | |
|---|---|---|---|
| | | Type 1[Note 1] | Type 2[Note 1] |
| Note 1: Depends on UE capability.<br>Note 2: If the BWP switch involves changing of SCS, the BWP switch delay is determined by the larger one between the SCS before BWP switch and the SCS after BWP switch. | | | |

Requirements for bandwidth part switch delay time may support type 1 or type 2 depending on the UE capability. The terminal may report the supportable bandwidth part delay time type to the base station.

According to the requirements for bandwidth part switch time delay described above, when the terminal receives a DCI including a bandwidth part change indicator in slot n, the terminal may complete the change to the new bandwidth part indicated by the bandwidth part change indicator at a time not later than slot n+$T_{BWP}$, and may perform transmission and reception on the data channel scheduled by the DCI in the new bandwidth part. When the base station wants to schedule a data channel with a new bandwidth part, the base station may determine the time domain resource allocation for the data channel by considering the bandwidth part change delay time ($T_{BWP}$) of the terminal. That is, when the base station schedules a data channel with a new bandwidth part, the base station may schedule the data channel after the bandwidth part change delay time in determining the time domain resource allocation for the data channel. Accordingly, the terminal may not expect a DCI indicating a bandwidth part change to indicate a slot offset (K0 or K2) value that is less than the bandwidth part change delay time ($T_{BWP}$).

If the terminal has received a DCI (e.g., DCI format 1_1 or 0_1) that indicates a bandwidth part change, the terminal may not perform any transmissions or receptions during the time interval from the third symbol of the slot in which it received the PDCCH including that DCI to the beginning of the slot indicated by the slot offset (K0 or K2) value indicated by the time domain resource allocation indicator field within that DCI. For example, if a terminal receives a DCI indicating a bandwidth part change in slot n, and the slot offset value indicated by that DCI is K, the terminal may not perform any transmissions or receptions from the third symbol of slot n until the symbol before slot n+K (i.e., the last symbol of slot n+K-1).

[SS/PBCH Block]

Next, the SS (Synchronization Signal)/PBCH block in the 5G wireless communication system will be described.

SS/PBCH block may refer to a physical layer channel block consisting of primary SS (PSS), secondary SS (SSS), and PBCH. Specifically, it may be as follows.

- PSS: It is a signal that serves as a standard for downlink time/frequency synchronization and provides some information about the cell ID.
- SSS: It is a standard for downlink time/frequency synchronization and provides the remaining cell ID information not provided by PSS. Additionally, it may serve as a reference signal for demodulation of PBCH.
- PBCH: It provides essential system information necessary for transmitting and receiving data channels and control channels of the terminal. Essential system information may include search space-related control information indicating radio resource mapping information of the control channel, and scheduling control information for a separate data channel transmitting system information, etc.
- SS/PBCH block: SS/PBCH block consists of a combination of PSS, SSS, and PBCH. One or more SS/PBCH blocks may be transmitted within 5ms, and each transmitted SS/PBCH block may be distinguished by an index.

The terminal may detect PSS and SSS in the initial access stage and decode the PBCH. The MIB may be obtained from the PBCH, and a control resource set (CORE SET) #0 (which may correspond to a control resource set with a control resource set index of 0) may be configured from this. The terminal may perform monitoring on control resource set #0 assuming that the selected SS/PBCH block and the Demodulation Reference Signal (DMRS) transmitted in control resource set #0 are in Quasi Co Location (QCL). The terminal may receive system information through downlink control information transmitted from control resource set #0. The terminal may obtain Random Access Channel (RACH) related configuration information necessary for initial access from the received system information. The terminal may transmit Physical RACH (PRACH) to the base station in consideration of the selected SS/PBCH index, and the base station receiving the PRACH may obtain information about the SS/PBCH block index selected by the terminal. The base station may know which block the terminal has selected among each SS/PBCH block and monitor the control resource set #0 related to it.

[DRX]

FIG. 6 is a diagram for explaining DRX (Discontinuous Reception).

DRX (Discontinuous Reception) is an operation in which a terminal using a service discontinuously receives data in an RRC connected state where a radio link is established between the base station and the terminal. When DRX is applied, the terminal turns on the receiver at a specific time point to monitor the control channel, and turns off the receiver if no data is received for a certain period of time to reduce the power consumption of the terminal. The DRX operation may be controlled by a MAC layer device on the basis of various parameters and timers.

With reference to FIG. 6, Active time 605 is the time when the terminal wakes up every DRX cycle and monitors the PDCCH. Active time 605 may be defined as follows.

- drx-onDurationTimer or drx-InactivityTimer or drx-RetransmissionTimerDL or drx-RetransmissionTimerUL or ra-ContentionResolutionTimer is running; or
- a Scheduling Request is sent on PUCCH and is pending; or
- a PDCCH indicating a new transmission addressed to the C-RNTI of the MAC entity has not been received after successful reception of a Random Access Response for the Random Access Preamble not selected by the MAC entity among the contention-based Random Access Preamble

drx-onDurationTimer, drx-InactivityTimer, drx-RetransmissionTimerDL, drx-RetransmissionTimerUL, ra-ContentionResolutionTimer, etc. are timers whose values are configured by the base station, and they have the function of configuring the terminal to monitor the PDCCH when certain conditions are met.

drx-onDurationTimer 615 is a parameter to configure the minimum time for which the terminal stays awake in a DRX cycle. drx-InactivityTimer 620 is a parameter to configure the additional time for which the terminal stays awake when receiving 630 a PDCCH indicating new uplink transmission or downlink transmission. drx-RetransmissionTimerDL is a parameter to configure the maximum time for which the terminal stays awake to receive downlink retransmission in a downlink HARQ procedure. drx-RetransmissionTimerUL is a parameter to configure the maximum time for which the terminal stays awake to receive uplink retransmission grant in an uplink HARQ procedure. drx-onDurationTimer, drx-InactivityTimer, drx-RetransmissionTimerDL, and drx-RetransmissionTimerUL may be configured to, for example, time, the number of subframes, the number of slots, etc. ra- ContentionResolutionTimer is a parameter for monitoring PDCCH in random access procedure.

The inActive time 610 is a time configured not to monitor PDCCH during DRX operation and/or a time configured not to receive PDCCH. The remaining time excluding the Active time 605 from the entire time of performing the DRX operation may be the inActive time 610. If the terminal does not monitor the PDCCH during the Active time 605, it may enter a sleep or inActive state to reduce power consumption.

DRX cycle refers to the period during which the terminal wakes up and monitors the PDCCH. In other words, it refers to the period of occurrence of the time interval or on duration after the terminal monitors the PDCCH and until it monitors the next PDCCH. There are two types of DRX cycles: short DRX cycle and long DRX cycle. The short DRX cycle may be applied as an option.

Long DRX cycle 625 is the longer cycle among the two DRX cycles configured in the terminal. While operating in Long DRX, the terminal starts drx-onDurationTimer 615 again on a time point when Long DRX cycle 625 has elapsed from the starting point (e.g., start symbol) of drx-onDurationTimer 615. When operating in Long DRX cycle 625, the terminal may start drx-onDurationTimer 615 in a slot after drx-SlotOffset in a subframe satisfying Equation 1 below. Here, drx-SlotOffset means a delay before starting drx-onDurationTimer 615. drx-SlotOffset may be configured to, for example, time, the number of slots, etc.

[(SFN X 10) + subframe number] modulo (drx-LongCycle) = drx- StartOffset [Equation 1]

At this time, drx-LongCycleStartOffset may be used to define a Long DRX cycle 625 and drx-StartOffset may be used to define a subframe to start the Long DRX cycle 625. drx-LongCycleStartOffset may be configured to, for example, time, number of subframes, number of slots, etc.

[PDCCH: DCI Related]

Next, we will specifically explain downlink control information (DCI) in the 5G system.

In a 5G system, scheduling information for uplink data (or physical uplink shared channel (PUSCH)) or downlink data (or physical downlink shared channel (PDSCH)) is transmitted from a base station to a terminal through DCI. The terminal may monitor a DCI format for fallback and a DCI format for non-fallback for PUSCH or PDSCH. The fallback DCI format may be composed of fixed fields defined between the base station and the terminal, and the non-fallback DCI format may include configurable fields.

DCI may be transmitted through PDCCH (Physical Downlink Control Channel) which is a physical downlink control channel after going through channel coding and modulation process. CRC (Cyclic Redundancy Check) is attached to DCI message payload, and CRC may be scrambled with RNTI (Radio Network Temporary Identifier) corresponding to the identity of the terminal. Different RNTIs may be used depending on the purpose of DCI message, such as UE-specific data transmission, power control command, or random access response. That is, RNTI is not transmitted explicitly, but is included in the CRC calculation process and transmitted. When receiving DCI message transmitted on PDCCH, the terminal identifies CRC using allocated RNTI, and if CRC identification result is correct, the terminal may know that the message was transmitted to the terminal.

For example, a DCI scheduling a PDSCH for System Information (SI) may be scrambled with SI-RNTI. A DCI scheduling a PDSCH for a Random Access Response (RAR) message may be scrambled with RA-RNTI. A DCI scheduling a PDSCH for a Paging message may be scrambled with P-RNTI. A DCI notifying a Slot Format Indicator (SFI) may be scrambled with SFI-RNTI. A DCI notifying a Transmit Power Control (TPC) may be scrambled with TPC-RNTI. A DCI scheduling a UE-specific PDSCH or PUSCH may be scrambled with C-RNTI (Cell RNTI).

DCI format 0_0 may be used as a fallback DCI for scheduling PUSCH, where the CRC may be scrambled with C-RNTI. DCI format 0_0 with the CRC scrambled with C-RNTI may include, for example, the following information.

[Table 4]

| |
|---|
| - Identifier for DCI formats - [1] bit<br>- Frequency domain resource assignment- $[\lceil log_2(N_{RB}^{UL,BWP}(N_{RB}^{UL,BWP}+1)/2)\rceil]$ bits<br>- Time domain resource assignment - X bits<br>- Frequency hopping flag- 1 bit.<br>- Modulation and coding scheme - 5 bits<br>- New data indicator- 1 bit<br>- Redundancy version- 2 bits<br>- HARQ process number - 4 bits<br>- TPC command for scheduled PUSCH- [2] bits<br>- UL/SUL indicator - 0 or 1 bit |

DCI format 0_1 may be used as a non-fallback DCI for scheduling PUSCH, where the CRC may be scrambled with C-RNTI. DCI format 0_1 with the CRC scrambled with C-RNTI may include, for example, the following information.

[Table 5]

| |
|---|
| - Carrier indicator - 0 or 3 bits<br>- UL/SUL indicator - 0 or 1 bit<br>- Identifier for DCI formats - [1] bits<br>- Bandwidth part indicator - 0, 1 or 2 bits<br>- Frequency domain resource assignment<br>• For resource allocation type 0, $\lceil N_{RB}^{UL,BWP}/P\rceil$ bits<br>• For resource allocation type 1, $\lceil \log_2(N_{RB}^{UL,BWP}(N_{RB}^{UL,BWP}+1)/2)\rceil$ bits<br>- Time domain resource assignment -1, 2, 3, or 4 bits<br>- VRB-to-PRB mapping - 0 or 1 bit, only for resource allocation type 1.<br>• 0 bit if only resource allocation type 0 is configured;<br>• 1 bit otherwise.<br>- Frequency hopping flag - 0 or 1 bit, only for resource allocation type 1.<br>• 0 bit if only resource allocation type 0 is configured;<br>• 1 bit otherwise.<br>- Modulation and coding scheme - 5 bits<br>- New data indicator - 1 bit |

(continued)

| |
|---|
| - Redundancy version - 2 bits<br>- HARQ process number - 4 bits<br>- 1st downlink assignment index- 1 or 2 bits<br>• 1 bit for semi-static HARQ-ACK codebook;<br>• 2 bits for dynamic HARQ-ACK codebook with single HARQ-ACK codebook. |
| - 2nd downlink assignment index - 0 or 2 bits<br>• 2 bits for dynamic HARQ-ACK codebook with two HARQ-ACK sub-codebooks;<br>• 0 bit otherwise.<br>- TPC command for scheduled PUSCH - 2 bits<br>- SRS resource indicator - $\log_2\left(\sum_{k=1}^{L_{\max}}\binom{N_{\mathrm{SRS}}}{k}\right)$ or $\lceil\log_2(N_{\mathrm{SRS}})\rceil$ bits<br>• $\log_2\left(\sum_{k=1}^{L_{\max}}\binom{N_{\mathrm{SRS}}}{k}\right)$ bits for non-codebook based PUSCH transmission;<br>• $\lceil\log_2(N_{\mathrm{SRS}})\rceil$ bits for codebook based PUSCH transmission.<br>- Precoding information and number of layers-up to 6 bits<br>- Antenna ports- up to 5 bits<br>- SRS request- 2 bits<br>- CSI request- 0, 1, 2, 3, 4, 5, or 6 bits<br>- CBG transmission information- 0, 2, 4, 6, or 8 bits<br>- PTRS-DMRS association - 0 or 2 bits.<br>- beta_offset indicator - 0 or 2 bits<br>- DMRS sequence initialization - 0 or 1 bit |

DCI format 1_0 may be used as a fallback DCI for scheduling PDSCH, where the CRC may be scrambled with C-RNTI. DCI format 1_0 with the CRC scrambled with C-RNTI may include, for example, the following information.

[Table 6]

| |
|---|
| - Identifier for DCI formats - [1] bit<br>- Frequency domain resource assignment - $[\lceil\log_2(N_{\mathrm{RB}}^{\mathrm{DL,BWP}}(N_{\mathrm{RB}}^{\mathrm{DL,BWP}}+1)/2)\rceil]$ bits<br>- Time domain resource assignment - X bits<br>- VRB-to-PRB mapping - 1 bit.<br>- Modulation and coding scheme - 5 bits<br>- New data indicator - 1 bit<br>- Redundancy version - 2 bits<br>- HARQ process number - 4 bits<br>- Downlink assignment index - 2 bits<br>- TPC command for scheduled PUCCH - [2] bits<br>- PUCCH resource indicator - 3 bits<br>- PDSCH-to-HARQ feedback timing indicator- [3] bits |

DCI format 1_1 may be used as a non-fallback DCI for scheduling PDSCH, where the CRC may be scrambled with C-RNTI. DCI format 1_1 with the CRC scrambled with C-RNTI may include, for example, the following information.

[Table 7]

| |
|---|
| - Carrier indicator - 0 or 3 bits<br>- Identifier for DCI formats - [1] bits |

(continued)

| |
|---|
| - Bandwidth part indicator - 0, 1 or 2 bits<br>- Frequency domain resource assignment<br>• For resource allocation type 0, $\lceil N_{RB}^{DL,BWP} / P \rceil$ bits<br>• For resource allocation type 1, $\lceil \log_2(N_{RB}^{DL,BWP}(N_{RB}^{DL,BWP}+1)/2) \rceil$ bits<br>- Time domain resource assignment -1, 2, 3, or 4 bits<br>- VRB-to-PRB mapping - 0 or 1 bit, only for resource allocation type 1.<br>• 0 bit if only resource allocation type 0 is configured;<br>• 1 bit otherwise.<br>- PRB bundling size indicator - 0 or 1 bit<br>- Rate matching indicator - 0, 1, or 2 bits<br>- ZP CSI-RS trigger - 0, 1, or 2 bits |
| For transport block 1:<br>- Modulation and coding scheme - 5 bits<br>- New data indicator - 1 bit<br>- Redundancy version - 2 bits |
| For transport block 2:<br>- Modulation and coding scheme - 5 bits<br>- New data indicator - 1 bit<br>- Redundancy version - 2 bits<br>- HARQ process number - 4 bits<br>- Downlink assignment index - 0 or 2 or 4 bits<br>- TPC command for scheduled PUCCH - 2 bits<br>- PUCCH resource indicator - 3 bits |
| - PDSCH-to-HARQ_feedback timing indicator - 3 bits<br>- Antenna ports - 4, 5 or 6 bits<br>- Transmission configuration indication- 0 or 3 bits<br>- SRS request - 2 bits<br>- CBG transmission information - 0, 2, 4, 6, or 8 bits<br>- CBG flushing out information - 0 or 1 bit<br>- DMRS sequence initialization - 1 bit |

[PDCCH: CORESET, REG, CCE, Search Space]

In the following, the downlink control channel in a 5G communication system will be described in more detail with reference to drawings.

FIG. 4 is a diagram illustrating an example of a Control Resource Set (CORESET) through which a downlink control channel is transmitted in a 5G wireless communication system. FIG. 4 illustrates an example where the UE bandwidth part 410 is configured on the frequency domain, and two control resource sets (control resource set #1 401, control resource set #2 402) are configured within one slot 420 on the time domain. The control resource sets 401 and 402 may be configured to specific frequency resources 403 within the overall UE bandwidth part 410 on the frequency domain. The control resource sets 401 and 402 may be configured to one or more OFDM symbols on the time domain, which may be defined as a control resource set duration 404. With reference to the example shown in FIG. 4, control resource set #1 401 is configured to a control resource set duration of 2 symbols, and control resource set #2 402 is configured to a control resource set duration of 1 symbol.

The control resource set in the aforementioned 5G may be configured by the base station to the terminal through higher layer signaling (e.g., System Information, Master Information Block (MIB), Radio Resource Control (RRC) signaling). Configuring a control resource set to the terminal means providing information such as the control resource set identity, the frequency location of the control resource set, and the symbol length of the control resource set. For example, the information may include the following.

[Table 8]

```
ControlResourceSet ::=                  SEQUENCE {
    -- Corresponds to L1 parameter 'CORESET-ID'

    controlResourceSetId                ControlResourceSetId,
    (control resource set identity)
    frequencyDomainResources            BIT STRING (SIZE (45)),
    (frequency axis resource assignment information)
    duration                            INTEGER (1..maxCoReSetDuration),
    (time axis resource assignment information)
    cce-REG-MappingType                     CHOICE {
    (CCE to REG mapping scheme)
      interleaved                           SEQUENCE {

        reg-BundleSize                      ENUMERATED {n2, n3, n6},
        (REG bundle size)

        precoderGranularity                 ENUMERATED {sameAsREG-bundle, allContiguousRBs},

        interleaverSize                     ENUMERATED {n2, n3, n6}
        (interleaver size)

        shiftIndex                          INTEGER(0..maxNrofPhysicalResourceBlocks-1)
                            OPTIONAL
        (interleaver shift)
      },
```

```
      nonInterleaved                              NULL
    },
    tci-StatesPDCCH                         SEQUENCE(SIZE (1..maxNrofTCI-StatesPDCCH)) OF TCI-
      StateId                      OPTIONAL,
    (QCL configuration information)
    tci-PresentInDCI                        ENUMERATED {enabled}
                    OPTIONAL,   -- Need S
}
```

In [Table 8], the tci-StatesPDCCH (simply named Transmission Configuration Indication (TCI) state) configuration information may include information of one or more Synchronization Signal (SS)/Physical Broadcast Channel (PBCH) Block indices or Channel State Information Reference Signal (CSI-RS) indices that are in a Quasi Co Location (QCL) relationship with the DMRS transmitted by the corresponding control resource set.

FIG. 5a is a diagram illustrating an example of the basic units of time and frequency resources constituting a downlink control channel that may be used in 5G. According to FIG. 5a, the basic unit of time and frequency resources constituting a control channel may be a Resource Element Group (REG) 503, wherein the REG 503 may be defined by 1 OFDM symbol 501 on the time domain and 1 Physical Resource Block (PRB) 502 on the frequency domain, i.e., 12 subcarriers. The base station may configure a downlink control channel allocation unit by concatenating REGs 503.

As illustrated in FIG. 5a, if the basic unit to which a downlink control channel is assigned in 5G is referred to as a Control Channel Element (CCE) 504, one CCE 504 may consist of a plurality of REGs 503. Using the REG 503 shown in FIG. 5a as an example, the REG 503 may consist of 12 REs, and if one CCE 504 consists of six REGs 503, then one CCE 504 may consist of 72 REs. When a downlink control resource set is configured, the corresponding area may consist of a plurality of CCEs 504, and a particular downlink control channel may be mapped to one or more CCEs 504 for transmission on the basis of an Aggregation Level (AL) within the control resource set. The CCEs 504 within the control resource set may be numbered, wherein the CCEs 504 may be numbered according to a logical mapping method.

The basic unit of the downlink control channel illustrated in FIG. 5a, i.e., the REG 503, may include both REs to which DCIs are mapped and areas to which DMRSs 505, which are reference signals for decoding them, are mapped. As illustrated in FIG. 5a, three DMRSs 505 may be transmitted within one REG 503. The number of CCEs required to transmit the PDCCH may be 1, 2, 4, 8, or 16 depending on the Aggregation Level (AL), and different numbers of CCEs may be used to implement link adaptation of the downlink control channel. For example, when AL=L, one downlink control channel may be transmitted through L CCEs. Since the terminal must detect the signal without knowing the information about the downlink control channel, a search space representing the set of CCEs is defined for blind decoding. A search space is a set of downlink control channel candidates consisting of CCEs that the terminal must attempt to decode at a given aggregation level, and since there are several aggregation levels that create bundles of 1, 2, 4, 8, and 16 CCEs, a terminal may have a plurality of search spaces. A search space set may be defined as the set of search spaces at all configured aggregation levels.

The search space may be categorized into common search space and UE-specific search space. The common search space of the PDCCH may be searched by a certain group of terminals or all terminals to receive cell common control information such as dynamic scheduling or paging messages for system information. For example, PDSCH scheduling allocation information for the transmission of SIBs including the cell's operator information, etc. may be received by searching the common search space of the PDCCH. The common search space may be defined as the set of CCEs that are pre-defined because a certain group of terminals or all terminals should receive the PDCCH. Scheduling assignment information for a UE-specific PDSCH or PUSCH may be received by searching the UE-specific search space of the PDCCH. The UE-specific search space may be defined UE-specifically as a function of the identity of the terminal and various system parameters.

In 5G, parameters for the search space for the PDCCH may be configured from the base station to the terminal by higher layer signaling (e.g., SIB, MIB, RRC signaling). For example, the base station may configure to the terminal the number of PDCCH candidates at each aggregation level L, the monitoring period for the search space, the monitoring occasion per symbol in the slot for the search space, the type of search space (common search space or UE-specific search space), the combination of DCI format and RNTI to be monitored in the search space, and the control resource set index to monitor the search space. For example, the parameters for a search space for a PDCCH may include the following information.

[Table 9]

```
SearchSpace ::=                         SEQUENCE {
  -- Identity of the search space. SearchSpaceId = 0 identifies the SearchSpace configured via PBCH
    (MIB) or ServingCellConfigCommon.
  searchSpaceId                         SearchSpaceId,
  (search space identity)
  controlResourceSetId                  ControlResourceSetId,
  (control resource set identity)
  monitoringSlotPeriodicityAndOffset    CHOICE {
  (monitoring slot level periodicity)
    sl1                                     NULL,
    sl2                                     INTEGER (0..1),
    sl4                                     INTEGER (0..3),
    sl5                                 INTEGER (0..4),
    sl8                                     INTEGER (0..7),
    sl10                                INTEGER (0..9),
    sl16                                INTEGER (0..15),
    sl20                                INTEGER (0..19)
  }
                OPTIONAL,
  duration(monitoring duration (monitoring length))        INTEGER (2..2559)
  monitoringSymbolsWithinSlot               BIT STRING (SIZE (14))
                        OPTIONAL,
  (monitoring symbols within slot)
  nrofCandidates                        SEQUENCE {
  (the number of PDCCH candidates at each aggregation level)
```

```
    aggregationLevel1                  ENUMERATED {n0, n1, n2, n3, n4, n5, n6, n8},
    aggregationLevel2                  ENUMERATED {n0, n1, n2, n3, n4, n5, n6, n8},
    aggregationLevel4                  ENUMERATED {n0, n1, n2, n3, n4, n5, n6, n8},
    aggregationLevel8                  ENUMERATED {n0, n1, n2, n3, n4, n5, n6, n8},
    aggregationLevel16                   ENUMERATED {n0, n1, n2, n3, n4, n5, n6, n8}
  },

  searchSpaceType                        CHOICE {
  (search space type)
    -- Configures this search space as common search space (CSS) and DCI formats to monitor.
    common                               SEQUENCE {
   (common search space)
      }
    ue-Specific                          SEQUENCE {
   (UE-specific search space)
      -- Indicates whether the UE monitors in this USS for DCI formats 0-0 and 1-0 or for formats 0-1
    and 1-1.
      formats                            ENUMERATED {formats0-0-And-1-0, formats0-1-And-
    1-1},
      ...
    }
```

On the basis of the configuration information, the base station may configure one or more search space sets for the terminal. According to some embodiments, the base station may configure a search space set 1 and a search space set 2 for the terminal, and may configure DCI format A scrambled with X-RNTI in search space set 1 to be monitored in a common search space, and may configure DCI format B scrambled with Y-RNTI in search space set 2 to be monitored in a UE-specific search space.

According to the configuration information, one or more sets of search spaces may exist in the common search space or the UE-specific search space. For example, search space set #1 and search space set #2 may be configured as the common search spaces, and search space set #3 and search space set #4 may be configured as the UE-specific search spaces.

In the common search space, the combination of the following DCI format and RNTI may be monitored. Of course, this is not limited to the following examples.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

In the UE-specific search space, the combination of the following DCI format and RNTI may be monitored. Of course, this is not limited to the following examples.

- DCI format 0_0/1_0 with CRC scrambled by C-RNTI, CS-RNTI, TC-RNTI

- DCI format 1_0/1_1 with CRC scrambled by C-RNTI, CS-RNTI, TC-RNTI

The specified RNTIs may have the following definitions and uses.

C-RNTI (Cell RNTI): Used for UE-specific PDSCH scheduling
TC-RNTI (Temporary Cell RNTI): Used for UE-specific PDSCH scheduling
CS-RNTI (Configured Scheduling RNTI): Used for semi-statically configured UE-specific PDSCH scheduling
RA-RNTI (Random Access RNTI): Used for PDSCH scheduling in the random access phase
P-RNTI (Paging RNTI): Used for PDSCH scheduling where paging is transmitted
SI-RNTI (System Information RNTI): Used for PDSCH scheduling where system information is transmitted
INT-RNTI (Interruption RNTI): Used to indicate whether puncturing has been applied to the PDSCH
TPC-PUSCH-RNTI (Transmit Power Control for PUSCH RNTI): Used to indicate power control commands to PUSCH
TPC-PUCCH-RNTI (Transmit Power Control for PUCCH RNTI): Used to indicate power control commands to PUCCH
TPC-SRS -RNTI (Transmit Power Control for SRS RNTI): Used to indicate power control commands to SRS

The DCI formats specified above may follow the definitions below.

[Table 10]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

In 5G, the search space of the aggregation level L in the control resource set p and the search space set s may be expressed as the following equation 2.

[Equation 2]

$$L \cdot \left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} \right) mod \left\lfloor \frac{N_{CCE,p}}{L} \right\rfloor \right\} + i$$

- $L$: Aggregation level

- $n_{CI}$: Carrier index

- $N_{CCE,p}$: Total number of CCEs existing within the control resource set p

- $n_{s,f}^{\mu}$ : Slot index

- $M_{s,max}^{(L)}$ : Number of PDCCH candidates for aggregation level L
- $m_{s,n_{CI}} = 0, \ldots, M_{s,max}^{(L)} -1$ : PDCCH candidate index of aggregation level L
- $i = 0, \ldots, L -1$
- $Y_{p,n_{s,f}^{\mu}} = \left(A_p \cdot Y_{p,n_{s,f}^{\mu}-1}\right) mod\ D$ , $Y_{p,-1} = n_{RNTI} \neq 0$, $A_p = 39827$ *for pmod3* = 0, $A_p = 39829$ *for pmod3* = 1 $A_p = 39839$ *for pmod3* = 2, $D = 65537$
- $n_{RNTI}$ : Terminal identifier

The value $Y_{p,n_{s,f}^{\mu}}$ may correspond to 0 in the case of a common search space.

In the case of a UE-specific search space, the value $Y_{p,n_{s,f}^{\mu}}$ may correspond to a value that changes depending on the terminal's identity (C-RNTI or ID configured for the terminal by the base station) and time index.

In 5G, since a plurality of search space sets may be configured with different parameters (e.g., the parameters in Table 9), the set of search space sets monitored by the terminal at each time point may be different. For example, if search space set #1 is configured with an X-slot period, search space set #2 is configured with a Y-slot period, and X and Y are different, the terminal may monitor both search space set #1 and search space set #2 in a specific slot, or may monitor either search space set #1 or search space set #2 in a specific slot.

[PDCCH: Span]

A terminal may perform UE capability reporting for each subcarrier interval when having a plurality of PDCCH monitoring positions within a slot, and at this time, the concept of span may be used. A span refers to consecutive symbols within a slot in which the terminal may monitor a PDCCH, and each PDCCH monitoring position is within one span. A span may be expressed as (X, Y), where x refers to the minimum number of symbols that must be spaced between the first symbols of two consecutive spans, and Y refers to the number of consecutive symbols in which the PDCCH may be monitored within one span. In this case, the terminal may monitor the PDCCH in the section from the first symbol of the span to Y symbols within the span.

FIG. 5b is a diagram illustrating a case in which a terminal may have a plurality of PDCCH monitoring positions within a slot in a wireless communication system through span. Span may be (X,Y)=(7,3), (4,3), and (2,2), and each of the three cases is expressed as (5-1-00), (5-1-05), and (5-1-10) in FIG. 5b. For example, (5-1-00) represents a case in which there are two spans, which may be expressed as (7,3), within a slot. The interval between the first symbols of the two spans is expressed as X=7, and PDCCH monitoring positions may exist within a total of Y = 3 symbols from the first symbol of each span, and it is shown that search spaces 1 and 2 each exist within Y=3 symbols. As another example, (5-1-05) represents a case where there are a total of three spans in the slot that may be expressed as (4,3), and the interval between the second and third spans is X'=5 symbols, which is larger than X=4.

[PDCCH: UE Capability Report]

The slot positions where the above-described common search space and UE-specific search space are located are indicated by the monitoringSymbolsWitninSlot parameter of Table 11-1, and the symbol positions within the slot are indicated as a bitmap through the monitoringSymbolsWithinSlot parameter of Table 9. Meanwhile, the symbol positions within the slot where the terminal can monitor the search space may be reported to the base station through the following UE capabilities.

- UE capability 1 (hereinafter referred to as FG 3-1). This UE capability means the capability to monitor a monitoring occasion (MO) for a Type 1 and Type 3 common search space or a UE-specific search space when one MO exists in a slot, and the MO is located within the first three symbols of the slot, as shown in Table 9a below. This UE capability is a mandatory capability that all terminals supporting NR must support, and whether or not this capability is supported is not explicitly reported to the base station.

[Table 11-1]

| Index | Feature group | Components | Field name in TS 38.331 [2] |
|---|---|---|---|
| 3-1 | Basic DL control channel | 1) One configured CORESET per BWP per cell in addition to CORESET0<br>- CORESET resource allocation of 6RB bit-map and duration of 1 - 3 OFDM symbols for FR1<br><br>- For type 1 CSS without dedicated RRC configuration and for type 0, 0A, and 2 CSSs, CORESET resource allocation of 6RB bit-map and duration 1-3 OFDM symbols for FR2<br>- For type 1 CSS with dedicated RRC configuration and for type 3 CSS, UE specific SS, CORESET resource allocation of 6RB bit-map and duration 1-2 OFDM symbols for FR2<br>- REG-bundle sizes of 2/3 RBs or 6 RBs<br>- Interleaved and non-interleaved CCE-to-REG mapping<br>- Precoder-granularity of REG-bundle size<br>- PDCCH DMRS scrambling determination<br>- TCI state(s) for a CORESET configuration<br>2) CSS and UE-SS configurations for unicast PDCCH transmission per BWP per cell<br>- PDCCH aggregation levels 1, 2, 4, 8, 16<br>- UP to 3 search space sets in a slot for a scheduled SCell per BWP<br>This search space limit is before applying all dropping rules.<br>- For type 1 CSS with dedicated RRC configuration, type 3 CSS, and UE-SS, the monitoring occasion is within the first 3 OFDM symbols of a slot<br>- For type 1 CSS without dedicated RRC configuration and for type 0, 0A, and 2 CSS, the monitoring occasion can be any OFDM symbol(s) of a slot, with the monitoring occasions for any of Type 1- CSS without dedicated RRC configuration, or Types 0, 0A, or 2 CSS configurations within a single span of three consecutive OFDM symbols within a slot<br>3) Monitoring DCI formats 0_0, 1_0, 0_1, 1_1<br>4) Number of PDCCH blind decodes per slot with a given SCS follows Case 1-1 table<br>5) Processing one unicast DCI scheduling DL and one unicast DCI scheduling UL per slot per scheduled CC for FDD | n/a |
| | | 6) Processing one unicast DCI scheduling DL and 2 unicast DCI scheduling UL per slot per scheduled CC for TDD | |

- UE capability 2 (hereinafter referred to as FG 3-2). This UE capability means the capability to monitor regardless of the starting symbol position of a MO, if there is one MO for a common search space or a UE-specific search space in a slot, as shown in Table 11-2 below. This UE capability may be optionally supported by the terminal, and whether or not this capability is supported is explicitly reported to the base station.

[Table 11-2]

| Index | Feature group | Components | Field name in TS 38.331 [2] |
|---|---|---|---|
| 3-2 | PDCCH monitoring on any span of up to 3 consecutive OFDM symbols of a slot | For a given UE, all search space configurations are within the same span of 3 consecutive OFDM symbols in the slot | *pdcchMonitoringSingleOccasion* |

- UE capability 3 (hereinafter referred to as FG 3-5, 3-5a, 3-5b). This UE capability indicates a pattern of a plurality of monitoring occasions (MOs) that the terminal can monitor when a plurality of MOs exist for a common search space or a UE-specific search space in a slot, as shown in Table 11-3 below. The above-described pattern is composed of an interval X between start symbols between different MOs, and a maximum symbol length Y for an MO. The combination of (X, Y) supported by the terminal may be one or more of {(2,2), (4,3), (7,3)}. This UE capability may be optionally supported by the terminal, and whether or not this capability is supported and the above-described combination of (X, Y) are explicitly reported to the base station.

[Table 11-3]

| Index | Feature group | Components | Field name in TS 38.331 [2] |
|---|---|---|---|
| 3-5 | For type 1 CSS with dedicated RRC configuration, type 3 CSS, and UE-SS, monitoring occasion can be any OFDM symbol(s) of a slot for Case 2 | For type 1 CSS with dedicated RRC configuration, type 3 CSS, and UE-SS, monitoring occasion can be any OFDM symbol(s) of a slot for Case 2 | *pdcch-MonitoringAnyOccasions* { *3-5. withoutDCI-Gap* 3-5a. *withDCI-Gap* } |
| 3-5a | For type 1 CSS with dedicated RRC configuration, type 3 CSS, and UE-SS, monitoring occasion can be any OFDM symbol(s) of a slot for Case 2 with a DCI gap | For type 1 CSS with dedicated RRC configuration, type 3 CSS and UE-SS, monitoring occasion can be any OFDM symbol(s) of a slot for Case 2, with minimum time separation (including the cross-slot boundary case) between two DL unicast DCIs, between two UL unicast DCIs, or between a DL and an UL unicast DCI in different monitoring occasions where at least one of them is not the monitoring occasions of FG-3-1, for a same UE as<br>- 2OFDM symbols for 15kHz<br>- 4OFDM symbols for 30kHz<br>- 7OFDM symbols for 60kHz with NCP<br>- 11OFDM symbols for 120kHz<br>Up to one unicast DL DCI and up to one unicast UL DCI in a monitoring occasion except for the monitoring occasions of FG 3-1.<br>In addition for TDD the minimum separation between the first two UL unicast DCIs within the first 3 OFDM symbols of a slot can be zero OFDM symbols. | |

(continued)

| Index | Feature group | Components | Field name in TS 38.331 [2] |
|---|---|---|---|
| 3-5b | All PDCCH monitoring occasion can be any OFDM symbol(s) of a slot for Case 2 with a span gap | PDCCH monitoring occasions of FG-3-1, plus additional PDCCH monitoring occasion(s) can be any OFDM symbol(s) of a slot for Case 2, and for any two PDCCH monitoring occasions belonging to different spans, where at least one of them is not the monitoring occasions of FG-3-1, in same or different search spaces, there is a minimum time separation of X OFDM symbols (including the cross-slot boundary case) between the start of two spans, where each span is of length up to Y consecutive OFDM symbols of a slot. Spans do not overlap. Every span is contained in a single slot. The same span pattern repeats in every slot. The separation between consecutive spans within and across slots may be unequal but the same (X, Y) limit must be satisfied by all spans. Every monitoring occasion is fully contained in one span. In order to determine a suitable span pattern, first a bitmap b(l), 0<=l<=13 is generated, where b(l)=1 if symbol l of any slot is part of a monitoring occasion, b(l)=0 otherwise. The first span in the span pattern begins at the smallest l for which b(l)=1. The next span in the span pattern begins at the smallest l not included in the previous span(s) for which b(l)=1. The span duration is max {maximum value of all CORESET durations, minimum value of Y in the UE reported candidate value} except possibly the last span in a slot which can be of shorter duration. A particular PDCCH monitoring configuration meets the UE capability limitation if the span arrangement satisfies the gap separation for at least one (X, Y) in the UE reported candidate value set in every slot, including cross slot boundary.<br>For the set of monitoring occasions which are within the same span:<br>• Processing one unicast DCI scheduling DL and one unicast DCI scheduling UL per scheduled CC across this set of monitoring occasions for FDD<br>• Processing one unicast DCI scheduling DL and two unicast DCI scheduling UL per scheduled CC across this set of monitoring occasions for TDD<br>• Processing two unicast DCI scheduling DL and one unicast DCI scheduling UL per scheduled CC across this set of monitoring occasions for TDD The number of different start symbol indices of spans for all PDCCH monitoring occasions per slot, including PDCCH monitoring occasions of FG-3-1, is no more than floor(14/X) (X is minimum among values reported by UE).<br>The number of different start symbol indices of PDCCH monitoring occasions per slot including PDCCH monitoring occasions of FG-3-1, is no more than 7.<br>The number of different start symbol indices of PDCCH monitoring occasions per half-slot including PDCCH monitoring occasions of FG-3-1 is no more than 4 in SCell. | |

The terminal may report to the base station whether it supports the UE capability 2 and/or UE capability 3 described above and the related parameters. The base station may perform time domain resource allocation for the common search space and the UE-specific search space on the basis of the reported UE capability. When allocating the resource, the base station may prevent the terminal from positioning the MO in a location that cannot be monitored.

[PDCCH: BD/CCE Limit]

When a plurality of search space sets are configured for a terminal, the following conditions may be considered in determining the search space set that the terminal should monitor.

If the terminal has configured the value of monitoringCapabilityConfig-r16, which is a higher layer signaling, to r15monitoringcapability, the terminal defines the maximum values for the number of PDCCH candidates that may be monitored and the number of CCEs that constitute the entire search space (wherein the entire search space means the entire set of CCEs corresponding to the union area of a plurality of search space sets) per slot, and if the value of monitoringCapabilityConfig-r16 is configured to r16monitoringcapability, the terminal defines the maximum values for the number of PDCCH candidates that may be monitored and the number of CCEs that constitute the entire search space (wherein the entire search space means the entire set of CCEs corresponding to the union area of a plurality of search space sets ) per span.

[Condition 1: Maximum PDCCH Candidates Number Limit]

As described above, depending on the configuration value of the higher layer signaling, the maximum number of PDCCH candidates, $M^{\mu}$, that the terminal can monitor may follow Table 12-1 below when defined on a slot basis in a cell configured to a subcarrier spacing of $15 \cdot 2^{\mu}$kHz, and may follow Table 12-2 below when defined on a span basis.

[Table 12-1]

| $\mu$ | Maximum number of PDCCH candidates per slot and per serving cell ($M^{\mu}$) |
|---|---|
| 0 | 44 |
| 1 | 36 |
| 2 | 22 |
| 3 | 20 |

[Table 12-2]

| | Maximum number $M^{\mu}$ of monitored PDCCH candidates per span for combination (X,Y) and per serving cell | | |
|---|---|---|---|
| $\mu$ | (2,2) | (4,3) | (7,3) |
| 0 | 14 | 28 | 44 |
| 1 | 12 | 24 | 36 |

[Condition 2: Maximum CCE Number Limit]

As described above, depending on the configuration value of the higher layer signaling, the maximum number of CCEs, $C^{\mu}$, that constitute the entire search space (here, the entire search space means the entire CCE set corresponding to the union area of a plurality of search space sets) may follow Table 12-3 below when defined on a slot basis in a cell configured to a subcarrier spacing of $15 \cdot 2^{\mu}$ kHz, and may follow Table 12-4 below when defined on a span basis.

[Table 12-3]

| $\mu$ | Maximum number of non-overlapped CCEs per slot and per serving cell ($C^{\mu}$) |
|---|---|
| 0 | 56 |
| 1 | 56 |
| 2 | 48 |
| 3 | 32 |

[Table 12-4]

| | Maximum number $C^{\mu}$ of non-overlapped CCEs per span for combination (X,Y) and per serving cell | | |
|---|---|---|---|
| $\mu$ | (2,2) | (4,3) | (7,3) |
| 0 | 18 | 36 | 56 |
| 1 | 18 | 36 | 56 |

For convenience of explanation, let us define a situation where both conditions 1 and 2 are satisfied on a certain time point as "condition A". Therefore, not satisfying condition A may mean not satisfying at least one of conditions 1 and 2.

[PDCCH: Overbooking]

Depending on the configuration of the search space sets of the base station, there may be cases where condition A is not satisfied on a certain time point. If condition A is not satisfied on a certain time point, the terminal may select and monitor only some of the search space sets that are configured to satisfy condition A on that time point, and the base station may transmit a PDCCH to the selected search space set.

The following method may be used to select a portion of the search space from the entire set of search spaces.

If condition A for a PDCCH is not satisfied on a specific time point (slot), the terminal (or base station) may preferentially select a search space set whose search space type is configured to a common search space among the search space sets existing on that time point over a search space set that is configured to a UE-specific search space.

If all search space sets configured as common search spaces are selected (i.e., if condition A is satisfied even after all search spaces configured as common search spaces are selected), the terminal (or base station) may select search space sets configured as UE-specific search spaces. At this time, if there are a plurality of search space sets configured as UE-specific search spaces, a search space set with a lower search space set index may have a higher priority. Considering the priority, the UE-specific search space sets may be selected within the range where condition A is satisfied.

[QCL, TCI State]

In a wireless communication system, one or more different antenna ports (or one or more channels, signals, and combinations thereof, but hereinafter referred to collectively as different antenna ports for convenience) may be associated with each other by a Quasi Co Location (QCL) configuration as shown in Table 13 below. The TCI state is intended to announce the QCL relationship between PDCCH (or PDCCH DMRS) and other RSs or channels, and when a reference antenna port A (reference RS #A) and another target antenna port B (target RS #B) are QCLed, it means that the terminal is allowed to apply some or all of the large-scale channel parameters estimated at antenna port A to the channel measurements from antenna port B. The QCL may need to relate different parameters depending on the situation, such as 1) time tracking, which is affected by average delay and delay spread, 2) frequency tracking, which is affected by Doppler shift and Doppler spread, 3) radio resource management (RRM), which is affected by average gain, and 4) beam management (BM), which is affected by spatial parameters. Therefore, NR supports four types of QCL relationships as shown in Table 13 below.

[Table 13]

| QCL type | Large-scale characteristics |
|---|---|
| A | Doppler shift, Doppler spread, average delay, delay spread |
| B | Doppler shift, Doppler spread |
| C | Doppler shift, average delay |
| D | Spatial Rx parameter |

The spatial RX parameter may collectively refer to any or all of various parameters such as Angle of arrival (AoA), Power Angular Spectrum (PAS) of AoA, Angle of departure (AoD), PAS of AoD, transmit/receive channel correlation, transmit/receive beamforming, spatial channel correlation, etc.

The QCL relationship may be configured to the terminal through the RRC parameter TCI-State and QCL-Info as shown in Table 14 below. With reference to Table 14, the base station may configure one or more TCI states to inform the terminal of up to two QCL relationships (qcl-Type1, qcl-Type2) for the RS referring to the ID of the TCI state, i.e., the target RS. At this time, each QCL information (QCL-Info) included in each TCI state includes the serving cell index and BWP index of the reference RS indicated by the corresponding QCL information, the type and ID of the reference RS, and the QCL type as shown in Table 13.

[Table 14]

```
TCI-State ::=                    SEQUENCE {
    tci-StateId                      TCI-StateId,
    (ID of the corresponding TCI state)
    qcl-Type1                        QCL-Info,
    (QCL information of the first reference RS of the RS (target RS))
    qcl-Type2                        QCL-Info                  OPTIONAL,  -- Need R
    (QCL information of the second reference RS of the RS (target RS) referring to the corresponding TCI state
ID)
    ...
}

QCL-Info ::=                     SEQUENCE {
    cell                             ServCellIndex             OPTIONAL,  -- Need R
    (Serving cell index of the reference RS indicated by the corresponding QCL information)
    bwp-Id                           BWP-Id                    OPTIONAL, -- Cond CSI-RS-Indicated
    (BWP index of the reference RS indicated by the relevant QCL information)
    referenceSignal                  CHOICE {
        csi-rs                           NZP-CSI-RS-ResourceId,
        ssb                              SSB-Index
        (One of the CSI-RS ID or SSB ID indicated by the relevant QCL information)
    },
    qcl-Type                         ENUMERATED {typeA, typeB, typeC, typeD},
    ...
}
```

FIG. 7 is a diagram illustrating an example of base station beam allocation according to TCI state configurations. With reference to FIG. 7, the base station may communicate information about different N beams to the terminal through different N TCI states. For example, in the case of N=3 as shown in FIG. 7, the base station may communicate that the antenna ports referencing the three TCI states 700, 705, and 710 have different spatial Rx parameters, i.e., different beams, by ensuring that the qcl-Type2 parameters included in the three TCI states 700, 705, and 710 are associated with CSI-RS or SSB corresponding to different beams and are configured to QCL type D.

Tables 15-1 to 15-5 below show valid TCI state configurations according to target antenna port type.

Table 15-1 illustrates valid TCI state configurations when the target antenna port is CSI-RS for tracking (TRS). The TRS refers to an NZP CSI-RS in which the repetition parameter is not configured, and trs-Info is configured to true among CSI-RSs. Configuration number 3 in Table 15-1 may be used for aperiodic TRS.

[Table 15-1] Valid TCI state configurations when the target antenna port is CSI-RS for tracking (TRS)

| Valid TCI state Configuration | DL RS 1 | qcl-Type1 | DL RS 2 (if configured) | qcl-Type2 (if configured) |
|---|---|---|---|---|
| 1 | SSB | QCL-TypeC | SSB | QCL-TypeD |
| 2 | SSB | QCL-TypeC | CSI-RS (BM) | QCL-TypeD |
| 3 | TRS (periodic) | QCL-TypeA | TRS (same as DL RS 1) | QCL-TypeD |

Table 15-2 illustrates valid TCI state configurations when the target antenna port is CSI-RS for CSI. The CSI-RS for CSI refers to an NZP CSI-RS in which a parameter indicating repetition (e.g., repetition parameter) is not configured and trs-Info is also not configured to true among CSI-RSs.

[Table 15-2] Valid TCI state configurations when the target antenna port is CSI-RS for CSI

| Valid TCI state Configuration | DL RS 1 | qcl-Type1 | DL RS 2 (if configured) | qcl-Type2 (if configured) |
|---|---|---|---|---|
| 1 | TRS | QCL-TypeA | SSB | QCL-TypeD |
| 2 | TRS | QCL-TypeA | CSI-RS for BM | QCL-TypeD |
| 3 | TRS | QCL-TypeA | TRS (same as DL RS 1) | QCL-TypeD |
| 4 | TRS | QCL-TypeB | | |

Table 15-3 illustrates valid TCI state configurations when the target antenna port is CSI-RS for beam management (BM, same meaning as CSI-RS for L1 RSRP reporting). The CSI-RS for BM refers to an NZP CSI-RS in which the repetition parameter is configured and has a value of On or Off, and trs-Info is not configured to true among CSI-RSs.

[Table 15-3] Valid TCI state configurations when the target antenna port is CSI-RS for BM (for L1 RSRP reporting)

| Valid TCI state Configuration | DL RS 1 | qcl-Type1 | DL RS 2 (if configured) | qcl-Type2 (if configured) |
|---|---|---|---|---|
| 1 | TRS | QCL-TypeA | TRS (same as DL RS 1) | QCL-TypeD |
| 2 | TRS | QCL-TypeA | CSI-RS (BM) | QCL-TypeD |
| 3 | SS/PBCH Block | QCL-TypeC | SS/PBCH Block | QCL-TypeD |

Table 15-4 illustrates valid TCI state configurations when the target antenna port is PDCCH DMRS.

[Table 15-4] Valid TCI state configurations when target antenna port is PDCCH DMRS

| Valid TCI state Configuration | DL RS 1 | qcl-Type1 | DL RS 2 (if configured) | qcl-Type2 (if configured) |
|---|---|---|---|---|
| 1 | TRS | QCL-TypeA | TRS (same as DL RS 1) | QCL-TypeD |
| 2 | TRS | QCL-TypeA | CSI-RS (BM) | QCL-TypeD |
| 3 | CSI-RS (CSI) | QCL-TypeA | CSI-RS (same as DL RS 1) | QCL-TypeD |

Table 15-5 illustrates valid TCI state configurations when the target antenna port is PDSCH DMRS.

[Table 15-5] Valid TCI state configurations when target antenna port is PDSCH DMRS

| Valid TCI state Configuration | DL RS 1 | qcl-Type1 | DL RS 2 (if configured) | qcl-Type2 (if configured) |
|---|---|---|---|---|
| 1 | TRS | QCL-TypeA | TRS | QCL-TypeD |
| 2 | TRS | QCL-TypeA | CSI-RS (BM) | QCL-TypeD |
| 3 | CSI-RS (CSI) | QCL-TypeA | CSI-RS (CSI) | QCL-TypeD |

The representative QCL configuration method according to the Tables 15-1 to 15-5 is to configure the target antenna port and reference antenna port for each step as "SSB" -> "TRS" -> "CSI-RS for CSI, or CSI-RS for BM, or PDCCH DMRS, or PDSCH DMRS". This allows the statistical features measured from SSB and TRS to be linked to each antenna port to help the reception operation of the terminal.

[PDCCH: TCI state related]

Specifically, the TCI state combinations applicable to the PDCCH DMRS antenna port are as shown in Table 16 below. The fourth row in Table 16 is the combination assumed by the terminal before RRC configuration, and configuration after RRC is not possible.

[Table 16]

| Valid TCI state Configuration | DL RS 1 | qcl-Type1 | DL RS 2 (if configured) | qcl-Type2 (if configured) |
|---|---|---|---|---|
| 1 | TRS | QCL-TypeA | TRS | QCL-TypeD |
| 2 | TRS | QCL-TypeA | CSI-RS (BM) | QCL-TypeD |
| 3 | CSI-RS (CSI) | QCL-TypeA | | |
| 4 | SS/PBCH Block | QCL-TypeA | SS/PBCH Block | QCL-TypeD |

The NR supports a hierarchical signaling method, as illustrated in FIG. 8, for dynamic allocation of PDCCH beams. With reference to FIG. 8, the base station may configure N TCI states 805, 810...., 820 to the terminal through RRC signaling 800, some of which may be configured as TCI states for CORESET 825. The base station may then indicate one of the TCI states 830, 835, and 840 for CORESET to the terminal through MAC CE signaling 845. The terminal then receives a PDCCH on the basis of beam information that includes the TCI state indicated by the MAC CE signaling.

FIG. 9 is a diagram illustrating a TCI indication MAC CE signaling structure for the PDCCH DMRS. With reference to FIG. 9, the TCI indication MAC CE signaling for the PDCCH DMRS consists of 2 bytes (16 bits) and includes a 5-bit serving cell ID 915, a 4-bit CORESET ID 920, and a 7-bit TCI state ID 925.

FIG. 10 is a diagram illustrating an example of beam configurations of a control resource set (CORESET) and search space according to the above description. With reference to FIG. 10, the base station may indicate one of the TCI state lists included in the CORESET 1000 configuration through MAC CE signaling 1005. Afterwards, until a different TCI state is subsequently indicated to that CORESET through another MAC CE signaling, the terminal considers that the same QCL information (beam #1) 1005 applies to all of the one or more search spaces 1010, 1015, and 1020 associated with the CORESET. The above-described PDCCH beam allocation method has the disadvantage that it is difficult to indicate a beam change faster than the MAC CE signaling delay, and also has the disadvantage that the same beam is applied to all of the CORESETs regardless of the search space features, which makes it difficult to operate flexible PDCCH beams. The following embodiments of the present disclosure provide a more flexible PDCCH beam configuration and operation method. Hereinafter, in describing the embodiments of the present disclosure below, several distinct examples are provided for ease of explanation, but they are not mutually exclusive and may be combined with each other as appropriate depending on the situation.

The base station may configure one or more TCI states for a specific control resource set to the terminal and may activate one of the configured TCI states through the MAC CE activation command. For example, if control resource set #1 has {TCI state#0, TCI state#1, TCI state#2} configured as the TCI state for control resource set #1, the base station may transmit a command to the terminal through MAC CE to enable the terminal to assume TCI state#0 as the TCI state for control resource set #1. On the basis of the activation command for the TCI state received by the MAC CE, the terminal may correctly receive DMRS for the corresponding control resource set on the basis of the QCL information in the activated TCI state.

For the control resource set (control resource set #0) with index configured to 0, if the terminal does not receive a MAC CE activation command for the TCI state of control resource set #0, the terminal may assume that the DMRS transmitted from control resource set #0 is QCL with the SS/PBCH block identified in the initial access process or in the non-contention based random access process that is not triggered by the PDCCH command.

For a control resource set (control resource set #X) with an index configured to a value other than 0, if the terminal has not received a TCI state for control resource set #X, or if it has received one or more TCI states but has not received a MAC CE activation command to activate one of them, the terminal may assume that it is QCL with the SS/PBCH block identified during the initial connection process for DMRS transmitted from control resource set #X.

[PDCCH: QCL Prioritization Rule Related]

In the following, the QCL priority determination operation for PDCCH will be described in detail.

If the terminal operates in single cell or intra-band carrier aggregation and a plurality of control resource sets within the activated bandwidth part of a single or a plurality of cells overlap in time with the same or different QCL-TypeD attributes in a particular PDCCH monitoring occasion, the terminal may select a particular control resource set according to the QCL prioritization operation and monitor the control resource sets with the same QCL-TypeD attributes as the corresponding control resource set. In other words, when a plurality of control resource sets overlap in time, only one QCL-TypeD attribute may be received. In this case, the criteria for determining QCL priority may be as follows.

- Criterion 1. Within the cell corresponding to the lowest index of the cells including the common search space, the control resource set associated with the lowest indexed common search space.
- Criterion 2. Within the cell corresponding to the lowest index of the cells including the UE-specific search space, the control resource set associated with the lowest indexed UE-specific search space.

As described above, for each of the above criteria, the next criterion shall be applied if the corresponding criterion is not met. For example, if control resource sets overlap in time in a particular PDCCH monitoring occasion, and if all control resource sets are connected to a UE-specific search interval and not to a common search interval, i.e., if criterion 1 is not met, the terminal may omit applying criterion 1 and apply criterion 2.

When selecting the control resource set according to the criteria described above, the terminal may additionally consider two points regarding the QCL information configured in the control resource set as follows. First, if control resource set 1 has CSI-RS 1 as a reference signal with a QCL-TypeD relationship, the reference signal with which this CSI-RS 1 has a QCL-TypeD relationship is SSB 1, and another control resource set 2 has a reference signal with which a QCL-TypeD relationship is SSB 1, the terminal may consider that these two control resource sets 1 and 2 have different QCL-TypeD features. Secondly, if control resource set 1 has CSI-RS 1 configured in cell 1 as the reference signal with QCL-TypeD relationship, the reference signal with which CSI-RS 1 has QCL-TypeD relationship is SSB 1, control resource set 2 has CSI-RS 2 configured in cell 2 as the reference signal with QCL-TypeD relationship, and the reference signal with which CSI-RS 2 has QCL-TypeD relationship is the same SSB 1, the terminal may consider the two control resource sets to have the same QCL-TypeD features.

FIG. 12 is a diagram for explaining a method for selecting a control resource set that may be received by a terminal in consideration of priorities when receiving a downlink control channel in a wireless communication system according to one embodiment of the present disclosure. For example, a terminal may be configured to receive a plurality of control resource sets that overlap in time in a specific PDCCH monitoring occasion 1210, and these plurality of control resource sets may be connected to a common search space or a UE-specific search space for a plurality of cells. In the corresponding PDCCH monitoring occasion, a first control resource set 1215 connected to the first common search space may exist in a first bandwidth part 1200 of a first cell, and a first control resource set 1220 connected to the first common search space and a second control resource set 1225 connected to the second UE-specific search space may exist in a first bandwidth part 1205 of a second cell. Control resource sets 1215 and 1220 may have a relationship of QCL-TypeD with the first CSI-RS resource set within the first bandwidth part of the first cell, and control resource set 1225 may have a relationship of QCL-TypeD with the first CSI-RS resource set within the first bandwidth part of the second cell. Therefore, if criterion 1 is applied to the corresponding PDCCH monitoring occasion 1210, all other control resource sets having the same QCL-TypeD reference signal as the first control resource set 1215 may be received. Therefore, the terminal may receive control resource sets 1215 and 1220 in the corresponding PDCCH monitoring occasion 1210. As another example, a terminal may be configured to receive a plurality of control resource sets that overlap in time in a specific PDCCH monitoring occasion 1240, and these plurality of control resource sets may be connected to a common search space or a UE-specific search space for a plurality of cells. Within the PDCCH monitoring occasion, in the first bandwidth part 1230 of the first cell, there may exist a first control resource set 1245 connected to the first UE-specific search interval and a second control resource set 1250 connected to the second UE-specific search interval, and in the first bandwidth part 1235 of the second cell, there may exist a first control resource set 1255 connected to the first UE-specific search interval and a second control resource set 1260 connected to the third UE-specific search interval. Control resource sets 1245 and 1250 may have a relationship with the first CSI-RS resource set in the first bandwidth part of the first cell and QCL-TypeD, control resource set 1255 may have a relationship with the first CSI-RS resource set in the first bandwidth part of the second cell and QCL-TypeD, and control resource set 1260 may have a relationship with the second CSI-RS resource set in the first bandwidth part of the second cell and QCL-TypeD. However, if criterion 1 is applied to the corresponding PDCCH monitoring occasion 1240, there is no common search space, so the next criterion, criterion 2, may be applied. If criterion 2 is applied to the corresponding PDCCH monitoring occasion 1240, all other control resource sets having the same QCL-TypeD reference signal as the control resource set 1245, may be received. Accordingly, the terminal may receive control resource sets 1245 and 1250 in the corresponding PDCCH monitoring occasion 1240.

[Rate Matching /Puncturing Related]

In the following, the rate matching operation and puncturing operation are described in detail.
When a time and frequency resource A for transmitting an arbitrary symbol sequence A overlaps with an arbitrary time and frequency resource B, a rate matching or puncturing operation may be considered as a transmission and reception operation of channel A considering a resource C, the area where resource A and resource B overlap.

**Rate Matching Operation**

- The base station may map and transmit channel A only for the remaining resource areas excluding resource C corresponding to the overlapping area with resource B among the entire resource A that wants to transmit symbol sequence A to the terminal. For example, if symbol sequence A is composed of {Symbol #1, Symbol #2, Symbol #3, Symbol #4}, and if resource A is {Resource #1, Resource #2, Resource #3, Resource #4}, and resource B is {Resource #3, Resource #5}, the base station may sequentially map and transmit symbol sequence A to the remaining resources {Resource #1, Resource #2, Resource #4} excluding {Resource #3} corresponding to resource C among resources A. As a result, the base station may transmit symbol sequences {Symbol #1, Symbol #2, Symbol #3} by mapping them to {Resource #1, Resource #2, Resource #4}, respectively.

The terminal may determine resource A and resource B from scheduling information for symbol sequence A from the base station, and may thereby determine resource C, which is an area where resource A and resource B overlap. The terminal may receive symbol sequence A, assuming that symbol sequence A is mapped and transmitted in the remaining area except for resource C among the entire resource A. For example, if symbol sequence A is composed of {Symbol #1, Symbol #2, Symbol #3, Symbol #4}, and resource A is {Resource #1, Resource #2, Resource #3, Resource #4}, and resource B is {Resource #3, Resource #5}, the terminal may receive symbol sequence A, assuming that symbol sequence A is sequentially mapped to {Resource #1, Resource #2, Resource #4}, which are the remaining resources among resource A except for {Resource #3} corresponding to resource C. As a result, the terminal may assume that the symbol sequence {Symbol #1, Symbol #2, Symbol #3} is transmitted by being mapped to {Resource #1, Resource #2, Resource #4}, respectively, and perform a series of subsequent receiving operations.

**Puncturing Operation**

If a base station wants to transmit symbol sequence A to a terminal, and there is a resource C corresponding to an area overlapping with resource B among the entire resource A, the base station maps symbol sequence A to the entire resource A, but does not perform transmission in the resource area corresponding to resource C, and may perform transmission only for the remaining resource areas of resource A excluding resource C. For example, if symbol sequence A is composed of {Symbol #1, Symbol #2, Symbol #3, Symbol #4}, and resource A is {Resource #1, Resource #2, Resource #3, Resource #4}, and resource B is {Resource #3, Resource #5}, the base station may map symbol sequence A {Symbol #1, Symbol #2, Symbol # 3, Symbol #4} to resource A {Resource #1, Resource #2, Resource #3, Resource # 4} respectively, and may transmit only the symbol sequences {Symbol #1, Symbol #2, Symbol #4} corresponding to the remaining resources {Resource #1, Resource #2, Resource #4} excluding {Resource #3} corresponding to resource C among resource A, and may not transmit {Symbol #3} mapped to {Resource # 3} corresponding to resource C. As a result, the base station may transmit the symbol sequence {Symbol #1, Symbol #2, Symbol #4} by mapping them to {Resource #1, Resource #2, Resource #4}, respectively.
The terminal may determine resources A and B from scheduling information for symbol sequence A from the base station, and through this, determine resource C, which is an area where resources A and B overlap. The terminal may receive symbol sequence A assuming that symbol sequence A is mapped to the entire resource A, but is transmitted only in the remaining area of resource area A excluding resource C. For example, if symbol sequence A is composed of {Symbol #1, Symbol #2, Symbol #3, Symbol #4}, and resource A is {Resource #1, Resource #2, Resource #3, Resource #4}, and resource B is {Resource #3, Resource #5}, the terminal may assume that symbol sequence A {Symbol #1, Symbol #2, Symbol #3, Symbol #4} is mapped to resource A {Resource #1, Resource #2, Resource #3, Resource #4} respectively, but {Symbol#3} mapped to {Resource # 3} corresponding to resource C is not transmitted, and may receive assuming that symbol sequences {Symbol #1, Symbol #2, Symbol #4} corresponding to {Resource #1, Resource #2, Resource #4}, which are the remaining resources among resource A except {Resource#3} corresponding to resource C, are mapped and transmitted. As a result, the terminal may assume that the symbol sequence {Symbol #1, Symbol #2, Symbol #4} is transmitted by being mapped to {Resource #1, Resource #2, Resource #4}, respectively, and perform a series of subsequent receiving operations.

In the following, a method for configuring rate matching resources for the purpose of rate matching in a 5G communication system is described. Rate matching means that the size of a signal is adjusted in consideration of the amount of resources that can transmit the signal. For example, rate matching of a data channel may mean that the size of data is adjusted accordingly without mapping and transmitting the data channel for a specific time and frequency resource area.

FIG. 11 is a diagram explaining a method for a base station and a terminal to transmit and receive data while considering downlink data channels and rate matching resources.

FIG. 11 illustrates a downlink data channel (PDSCH) 1101 and a rate matching resource 1102. A base station may configure one or more rate matching resources 1102 to a terminal through higher layer signaling (e.g., RRC signaling). The rate matching resource 1102 configuration information may include time domain resource allocation information 1103, frequency domain resource allocation information 1104, and periodicity information 1105. In the following, a bitmap corresponding to frequency domain resource allocation information 1104 is named "first bitmap," a bitmap corresponding to time domain resource allocation information 1103 is named "second bitmap," and a bitmap corresponding to periodicity information 1105 is named "third bitmap." If all or part of the time and frequency resources of a scheduled data channel 1101 overlap with the configured rate matching resource 602, the base station may rate-match and transmit the data channel 1101 in the rate matching resource 1102 portion, and the terminal may perform reception and decoding after assuming that the data channel 1101 is rate-matched in the rate matching resource 1102 portion.

The base station may dynamically notify the terminal through DCI whether to rate-match the data channel in the configured rate-matching resource portion through additional configuration (corresponding to the "rate-matching indicator" in the DCI format described above). Specifically, the base station may select some of the configured rate-matching resources and group them into rate-matching resource groups and may use a bitmap method to indicate to the terminal through DCI whether to rate-match the data channel for each rate-matching resource group. For example, if four rate-matching resources, RMR #1, RMR #2, RMR #3, and RMR #4 are configured, the base station may configure RMG #1= {RMR #1, RMR #2}, RMG #2={RMR #3, RMR #4} as the rate-matching groups, and may use 2 bits in the DCI field to indicate to the terminal whether to rate-match in RMG #1 and RMG #2, respectively, as a bitmap. For example, if rate matching is required, it may be indicated as "1", and if rate matching is not required, it may be indicated as "0".

In 5G, the granularity of "RB symbol level" and "RE level" is supported by configuring the aforementioned rate matching resources to the terminal. More specifically, the following configuration method may be followed.

## RB Symbol Level

A terminal may configure up to four RateMatchPatterns for each bandwidth part through higher layer signaling, and one RateMatchPattern may include the following contents.

- As a reserved resource within the bandwidth part, a resource in which the time and frequency resource domains of the reserved resource are configured by combining a bitmap of the RB level and a bitmap of the symbol level along the frequency domain may be included. The reserved resource may span one or two slots. A time domain pattern (periodicityAndPattern) in which the time and frequency domains composed of each RB level and symbol level bitmap pair are repeated may be additionally configured.
- It may include a time and frequency domain resource area configured as a control resource set within the bandwidth part and a resource area corresponding to a time domain pattern configured as a search space configuration in which the resource area is repeated.

## RE Level

The terminal may be configured with the following contents through higher layer signaling.

- The configuration information (lte-CRS-ToMatchAround) for RE corresponding to the LTE CRS (Cell-specific Reference Signal or Common Reference Signal) pattern may include the number of ports (nrofCRS-Ports) of LTE CRS and the LTE-CRS-vshift(s) value (v-shift), the location information (carrierFreqDL) of the center subcarrier of the LTE carrier from the reference frequency point (for example, reference point A), the bandwidth size (carrierBandwidthDL) information of the LTE carrier, and the subframe configuration information (mbsfn-SubframConfigList) corresponding to the MBSFN (Multicast-broadcast single-frequency network ). On the basis of the above-described information, the terminal may determine the location of the CRS within the NR slot corresponding to the LTE subframe.
- It may include configuration information for a resource set corresponding to one or more ZP (Zero Power) CSI-RS within the bandwidth part.

[LTE CRS Rate Match Related]

Next, the rate match process for the LTE CRS described above will be described in detail. In order to coexist between LTE (Long Term Evolution) and NR (New RAT), NR provides a function to configure a pattern of LTE CRS (Cell Specific Reference Signal) to NR terminals. More specifically, the CRS pattern may be provided by RRC signaling including at least one parameter in ServingCellConfig IE (Information Element) or ServingCellConfigCommon IE. Examples of the parameters may include lte-CRS-ToMatchAround, lte-CRS-PatternList1-r16, lte-CRS-PatternList2-r16, crs-RateMatch-PerCORESETPoolIndex-r16, etc.

In Rel-15 NR, the Ite-CRS-ToMatchAround parameter provides a function that allows one CRS pattern to be configured per serving cell. In Rel-16 NR, the function is extended to allow a plurality of CRS patterns to be configured per serving cell. More specifically, in a Single-TRP (transmission and reception point) configured terminal, one CRS pattern may be configured per LTE carrier, and in a Multi-TRP configured terminal, two CRS patterns may be configured per LTE carrier. For example, in a Single-TRP configured terminal, up to three CRS patterns may be configured per serving cell through the lte-CRS-PatternList1-r16 parameter. In another example, in a multi-TRP configured terminal, CRS may be configured per TRP. That is, the CRS pattern for TRP1 may be configured through the lte-CRS-PatternList1-r16 parameter, and the CRS pattern for TRP2 may be configured through the lte-CRS-PatternList2-r16 parameter. Meanwhile, when two TRPs are configured as above, whether both the CRS patterns of TRP1 and TRP2 or only the CRS pattern for one TRP is applied to a specific PDSCH (Physical Downlink Shared Channel) is determined through the crs-RateMatch-PerCORESETPoolIndex-r16 parameter. If the crs-RateMatch-PerCORESETPoolIndex-r16 parameter is configured to enabled, only the CRS pattern of one TRP is applied, and in other cases, the CRS patterns of both TRPs are applied.

Table 17 shows a ServingCellConfig IE including the above CRS pattern, and Table 18 shows a RateMatch-PatternLTE-CRS IE including at least one parameter for the CRS pattern.

[Table 17]

```
ServingCellConfig ::=                SEQUENCE {
    tdd-UL-DL-ConfigurationDedicated    TDD-UL-DL-ConfigDedicated
OPTIONAL,   -- Cond TDD
    initialDownlinkBWP                  BWP-DownlinkDedicated
OPTIONAL,   -- Need M
    downlinkBWP-ToReleaseList           SEQUENCE (SIZE (1..maxNrofBWPs)) OF BWP-Id
OPTIONAL,   -- Need N
    downlinkBWP-ToAddModList            SEQUENCE (SIZE (1..maxNrofBWPs)) OF BWP-
Downlink                         OPTIONAL,   -- Need N
    firstActiveDownlinkBWP-Id           BWP-Id
OPTIONAL,   -- Cond SyncAndCellAdd
    bwp-InactivityTimer                 ENUMERATED {ms2, ms3, ms4, ms5, ms6, ms8, ms10,
ms20, ms30,
                                            ms40,ms50, ms60, ms80,ms100,
ms200,ms300, ms500,
                                            ms750, ms1280, ms1920, ms2560,
spare10, spare9, spare8,
                                            spare7, spare6, spare5, spare4, spare3,
spare2, spare1 }    OPTIONAL,   --Need R
    defaultDownlinkBWP-Id               BWP-Id
OPTIONAL,   -- Need S
    uplinkConfig                        UplinkConfig
OPTIONAL,   -- Need M
    supplementaryUplink                 UplinkConfig
OPTIONAL,   -- Need M
    pdcch-ServingCellConfig             SetupRelease { PDCCH-ServingCellConfig }
OPTIONAL,   -- Need M
    pdsch-ServingCellConfig             SetupRelease { PDSCH-ServingCellConfig }
OPTIONAL,   -- Need M
    csi-MeasConfig                      SetupRelease { CSI-MeasConfig }
OPTIONAL,   -- Need M
    sCellDeactivationTimer              ENUMERATED {ms20, ms40, ms80, ms160, ms200,
ms240,
                                            ms320, ms400, ms480, ms520, ms640,
ms720,
                                            ms840, ms1280, spare2,spare1}
OPTIONAL,   -- Cond ServingCellWithoutPUCCH
```

```
    crossCarrierSchedulingConfig         CrossCarrierSchedulingConfig
OPTIONAL,   -- Need M
    tag-Id                                TAG-Id,
    dummy                                  ENUMERATED {enabled}
OPTIONAL,   -- Need R
    pathlossReferenceLinking             ENUMERATED {spCell, sCell}
OPTIONAL,   -- Cond SCellOnly
    servingCellMO                          MeasObjectId
OPTIONAL,   -- Cond MeasObject
    ...,
    [[
    lte-CRS-ToMatchAround                  SetupRelease { RateMatchPatternLTE-CRS }
OPTIONAL,   -- Need M
    rateMatchPatternToAddModList           SEQUENCE (SIZE (1..maxNrofRateMatchPatterns))
OF RateMatchPattern     OPTIONAL,   -- Need N
    rateMatchPatternToReleaseList       SEQUENCE (SIZE (1..maxNrofRateMatchPatterns)) OF
RateMatchPatternId     OPTIONAL,   -- Need N
    downlinkChannelBW-PerSCS-List        SEQUENCE (SIZE (1..maxSCSs)) OF SCS-
SpecificCarrier                        OPTIONAL    -- Need S
    ]],
    [[
    supplementaryUplinkRelease            ENUMERATED {true}
OPTIONAL,   -- Need N
    tdd-UL-DL-ConfigurationDedicated-IAB-MT-r16    TDD-UL-DL-ConfigDedicated-IAB-MT-
r16                        OPTIONAL,   -- Cond TDD_IAB
    dormantBWP-Config-r16                  SetupRelease { DormantBWP-Config-r16 }
OPTIONAL,   -- Need M
    ca-SlotOffset-r16                    CHOICE {
        refSCS15kHz                           INTEGER (-2..2),
        refSCS30KHz                           INTEGER (-5..5),
        refSCS60KHz                           INTEGER (-10..10),
        refSCS120KHz                          INTEGER (-20..20)
    }
OPTIONAL,   -- Cond AsyncCA
    channelAccessConfig-r16               SetupRelease { ChannelAccessConfig-r16 }
OPTIONAL,   -- Need M
    intraCellGuardBandsDL-List-r16       SEQUENCE (SIZE (1..maxSCSs)) OF
IntraCellGuardBandsPerSCS-r16            OPTIONAL,   -- Need S
    intraCellGuardBandsUL-List-r16       SEQUENCE (SIZE (1..maxSCSs)) OF
IntraCellGuardBandsPerSCS-r16            OPTIONAL,   -- Need S
```

```
    csi-RS-ValidationWith-DCI-r16           ENUMERATED {enabled}
OPTIONAL,    -- Need R
    lte-CRS-PatternList1-r16                SetupRelease { LTE-CRS-PatternList-r16 }
OPTIONAL,    -- Need M
    lte-CRS-PatternList2-r16                SetupRelease { LTE-CRS-PatternList-r16 }
OPTIONAL,    -- Need M
    crs-RateMatch-PerCORESETPoolIndex-r16   ENUMERATED {enabled}
OPTIONAL,    -- Need R
    enableTwoDefaultTCI-States-r16          ENUMERATED {enabled}
OPTIONAL,    -- Need R
    enableDefaultTCI-StatePerCoresetPoolIndex-r16 ENUMERATED {enabled}
OPTIONAL,    -- Need R
    enableBeamSwitchTiming-r16              ENUMERATED {true}
OPTIONAL,    -- Need R
    cbg-TxDiffTBsProcessingType1-r16        ENUMERATED {enabled}
OPTIONAL,    -- Need R
    cbg-TxDiffTBsProcessingType2-r16        ENUMERATED {enabled}
OPTIONAL     -- Need R
    ]]
}
```

[Table 18]

– *RateMatchPatternLTE-CRS*

The IE *RateMatchPatternLTE-CRS* is used to configure a pattern to rate match around LTE CRS. See TS 38.214 [19], clause 5.1.4.2.

***RateMatchPatternLTE-CRS* information element**

```
-- ASN1START
-- TAG-RATEMATCHPATTERNLTE-CRS-START

RateMatchPatternLTE-CRS ::=          SEQUENCE {
    carrierFreqDL                        INTEGER (0..16383),
    carrierBandwidthDL                   ENUMERATED {n6, n15, n25, n50, n75, n100, spare2,
spare1},
    mbsfn-SubframeConfigList             EUTRA-MBSFN-SubframeConfigList
OPTIONAL,   -- Need M
    nrofCRS-Ports                        ENUMERATED {n1, n2, n4},
    v-Shift                              ENUMERATED {n0, n1, n2, n3, n4, n5}
}

LTE-CRS-PatternList-r16 ::=         SEQUENCE (SIZE (1..maxLTE-CRS-Patterns-r16)) OF
RateMatchPatternLTE-CRS

-- TAG-RATEMATCHPATTERNLTE-CRS-STOP
-- ASN1STOP
```

| ***RateMatchPatternLTE-CRS* field descriptions** |
|---|
| ***carrierBandwidthDL***<br>BW of the LTE carrier in number of PRBs (see TS 38.214 [19], clause 5.1.4.2). |
| ***carrierFreqDL***<br>Center of the LTE carrier (see TS 38.214 [19], clause 5.1.4.2). |
| ***mbsfn-SubframeConfigList***<br>LTE MBSFN subframe configuration (see TS 38.214 [19], clause 5.1.4.2). |
| ***nrofCRS-Ports***<br>Number of LTE CRS antenna port to rate-match around (see TS 38.214 [19], clause 5.1.4.2). |
| ***v-Shift***<br>Shifting value v-shift in LTE to rate match around LTE CRS (see TS 38.214 [19], clause 5.1.4.2). |

[PDSCH: Frequency Resource Allocation Related]

FIG. 13 is a diagram illustrating an example of frequency domain resource allocation of a PDSCH (physical downlink shared channel) in a wireless communication system according to one embodiment of the present disclosure.

FIG. 13 is a diagram illustrating three frequency domain resource allocation methods, type 0 13-00, type 1 13-05, and dynamic switch 13-10, which may be configured through a higher layer in an NR wireless communication system.

With reference to FIG. 13, if a terminal is configured to use only resource type 0 13-00 through higher layer signaling, some downlink control information (DCI) that allocates PDSCH to the terminal includes a bitmap consisting of NRBG bits. The conditions for this will be explained later. At this time, NRBG means the number of RBG (resource block groups) determined according to the BWP size allocated by the BWP indicator and the upper layer parameter rbg-Size as shown in [Table 19] below, and data is transmitted to the RBG indicated as 1 by the bitmap.

[Table 19]

| Bandwidth Part Size | Configuration 1 | Configuration 2 |
|---|---|---|
| 1 – 36 | 2 | 4 |
| 37 – 72 | 4 | 8 |
| 73 – 144 | 8 | 16 |
| 145 – 275 | 16 | 16 |

If the terminal is configured to use only resource type 1 through higher layer signaling 13-05, some DCIs that allocate PDSCH to the terminal include frequency domain resource allocation information consisting of $\lceil \log_2 (N_{RB}^{DL,BWP} (N_{RB}^{DL,BWP} +1)/2 \rceil$ bits. The conditions for this will be explained later. Through this, the base station may configure the starting VRB 13-20 and the length 13-25 of frequency domain resources allocated sequentially therefrom.

If the terminal is configured to use both resource type 0 and resource type 1 through higher layer signaling 13-10, some DCIs that allocate PDSCH to the terminal include frequency domain resource allocation information consisting of bits of the larger value 13-35 among the payload 13-15 for configuring resource type 0 and the payload 13-20 and 13-25 for configuring resource type 1. The conditions for this will be explained later. At this time, one bit may be added to the most significant bit (MSB) of the frequency domain resource allocation information in the DCI, and if the bit has a value of '0', it may indicate that resource type 0 is used, and if it has a value of '1', it may indicate that resource type 1 is used.

[PDSCH/PUSCH: Time Resource Allocation Related]

In the following, a time domain resource allocation method for data channels in next-generation mobile communication systems (5G or NR system) is described.

A base station may configure a table for time domain resource allocation information for a Physical Downlink Shared Channel (PDSCH) and a Physical Uplink Shared Channel (PUSCH) to a terminal through higher layer signaling (e.g., RRC signaling). A table with up to maxNrofDL-Allocations=16 entries may be configured for PDSCH, and a table with up to maxNrofUL-Allocations=16 entries may be configured for PUSCH. In one embodiment, the time domain resource allocation information may include PDCCH-to-PDSCH slot timing (corresponding to a time interval in slot units between a time point when a PDCCH is received and a time point when a PDSCH scheduled by the received PDCCH is transmitted, denoted as K0), PDCCH-to-PUSCH slot timing (corresponding to a time interval in slot units between a time point when a PDCCH is received and a time point when a PUSCH scheduled by the received PDCCH is transmitted, denoted as K2), information about a position and a length of a start symbol in which a PDSCH or a PUSCH is scheduled within a slot, a mapping type of the PDSCH or PUSCH, etc. For example, information such as [Table 20] or [Table 21] below may be transmitted from a base station to a terminal.

[Table 20]

| ***PDSCH-TimeDomainResourceAllocationList*** **information element** |
| --- |
| PDSCH-TimeDomainResourceAllocationList ::= SEQUENCE (SIZE(1..maxNrofDL-Allocations)) OF PDSCH-TimeDomainResourceAllocation<br><br>PDSCH-TimeDomainResourceAllocation ::= SEQUENCE {<br>k0 INTEGER(0..32) OPTIONAL, -- Need S<br>(PDCCH-to-PDSCH timing, slot units)<br>mappingType ENUMERATED {typeA, typeB},<br>(PDSCH mapping type)<br>startSymbolAndLength INTEGER (0..127)<br>(PDSCH start symbol and length)<br>} |

[Table 21]

| ***PUSCH-TimeDomainResourceAllocation*** **information element** |
| --- |
| PUSCH-TimeDomainResourceAllocationList ::= SEQUENCE (SIZE(1..maxNrofUL-Allocations)) OF PUSCH-TimeDomainResourceAllocation<br><br>PUSCH-TimeDomainResourceAllocation ::= SEQUENCE {<br>k2 INTEGER(0..32) OPTIONAL, -- Need S<br>(PDCCH-to-PUSCH timing, slot units)<br>mappingType ENUMERATED {typeA, typeB},<br>(PUSCH mapping type)<br>startSymbolAndLength INTEGER (0..127)<br>(PUSCH start symbol and length)<br>} |

The base station may notify the terminal of one of the entries in the table for the time domain resource allocation information described above through L1 signaling (e.g., DCI) (e.g., it may be indicated by the 'time domain resource allocation' field in the DCI). The terminal may obtain the time domain resource allocation information for the PDSCH or PUSCH on the basis of the DCI received from the base station.

FIG. 14 is a diagram illustrating an example of time domain resource allocation of PDSCH in a wireless communication system according to one embodiment of the present disclosure.

With reference to FIG. 14, the base station may indicate the time domain position of the PDSCH resource according to the subcarrier spacing (SCS) ($\mu_{PDSCH}$, $\mu_{PDCCH}$) of the data channel and the control channel configured by using the upper layer, the scheduling offset K0 value, and the start position 14-00 and length 14-05 of the OFDM symbol within a slot dynamically indicated through DCI.

FIG. 15 is a diagram illustrating an example of time domain resource allocation according to subcarrier spacing of a data channel and a control channel in a wireless communication system according to one embodiment of the present disclosure.

With reference to FIG. 15, when the subcarrier spacing of a data channel and a control channel are the same 15-00, $\mu_{PDSCH} = \mu_{PDCCH}$, since the slot numbers for data and control are the same, the base station and the terminal may generate a scheduling offset according to a predetermined slot offset K0. On the other hand, when the subcarrier spacing of the data channel and the control channel are different 15-05, $\mu_{PDSCH} \neq \mu_{PDCCH}$, since the slot numbers for data and control are different, the base station and the terminal may generate a scheduling offset according to a predetermined slot offset K0 on the basis of the subcarrier spacing of the PDCCH.

[PDSCH: Processing Procedure Time]

Next, the PDSCH processing procedure time is described. When the base station schedules the terminal to transmit the PDSCH using DCI format 1_0, 1_1, or 1_2, the terminal may need PDSCH processing procedure time to receive the PDSCH by applying the transmission method indicated through the DCI (modulation and coding indication index (MCS), demodulation reference signal related information, time and frequency resource allocation information, etc.). NR defines the PDSCH processing procedure time considering this. The PDSCH processing procedure time of the terminal may follow the following [Equation 3].

[Equation 3]

$$T_{proc,1} = (N_1 + d_{1,1} + d_2)\ (2048 + 144)\ \kappa 2^{-\mu} T_c + T_{ext}$$

- $N_1$: The number of symbols determined by the UE processing capability 1 or 2 and the numerology $\mu$ according to the capability of the terminal. If the UE processing capability is reported as 1 according to the capability report of the terminal, it may have the value of [Table 22], and if the UE processing capability is reported as 2 and it is configured through higher layer signaling that the UE processing capability 2 may be used, it may have the value of [Table 23]. The numerology $\mu$ may correspond to the minimum value among $\mu_{PDCCH}$, $\mu_{PDSCH}$, and $\mu_{UL}$ to maximize the $T_{proc,1}$ and $\mu_{PDCCH}$, $\mu_{PDSCH}$, and $\mu_{UL}$ may mean the numerology of the PDCCH that schedules the PDSCH, the numerology of the scheduled PDSCH, and the numerology of the uplink channel on which HARQ-ACK is to be transmitted, respectively.

[Table 22] PDSCH processing procedure time when PDSCH processing capability is 1.

| $\mu$ | PDSCH decoding time $N_1$ [symbols] | |
|---|---|---|
| | In case that both PDSCH mapping types A and B are dmrs-AdditionalPosition = pos0 in higher layer signaling DMRS-DownlinkConfig | In case that both PDSCH mapping types A and B are not dmrs-AdditionalPosition = pos0 in higher layer signaling DMRS-DownlinkConfig, or that no higher layer parameters are configured |
| 0 | 8 | $N_{1,0}$ |
| 1 | 10 | 13 |
| 2 | 17 | 20 |
| 3 | 20 | 24 |

[Table 23] PDSCH processing procedure time when PDSCH processing capability is 2.

| $\mu$ | PDSCH decoding time $N_1$ [symbols] |
|---|---|
| | In case that both PDSCH mapping types A and B are dmrs-AdditionalPosition = pos0 in higher layer signaling DMRS-DownlinkConfig |
| 0 | 3 |
| 1 | 4.5 |
| 2 | 9 for frequency range 1 |

- $\kappa$:64
- $T_{ext}$: If the terminal uses the shared spectrum channel access method, the terminal may calculate $T_{ext}$ and apply it to the PDSCH processing procedure time. Otherwise, $T_{ext}$ is assumed to be 0.
- If $l_1$ indicating the PDSCH DMRS location value is 12, N1,0 in the above [Table 22] has a value of 14, otherwise it has a value of 13.
- For PDSCH mapping type A, if the last symbol of the PDSCH is the i-th symbol in the slot in which the PDSCH is transmitted, and i < 7, then $d_{1,1}$ is 7-i, otherwise $d_{1,1}$ is 0.
- $d_2$: When a PUCCH with a high priority index and a PUCCH or PUSCH with a low priority index overlap in time, $d_2$ of the PUCCH with the high priority index may be configured to a value reported from the terminal. Otherwise, $d_2$ is 0.
- If PDSCH mapping type B is used for terminal processing capability 1, the value of $d_{1,1}$ may be determined on the basis of L, the number of symbols of the scheduled PDSCH, and d, the number of overlapping symbols between the PDCCH that schedules the PDSCH and the scheduled PDSCH.

- If $L \geq 7$, then $d_{1,1} = 0$.
- If $L \geq 4$ and $L \leq 6$, then $d_{1,1} = 7 - L$.
- If $L = 3$, then $d_{1,1} = \min(d, 1)$.
- If $L = 2$, then $d_{1,1} = 3 + d$.
- When PDSCH mapping type B is used for terminal processing capability 2, the value of $d_{1,1}$ may be determined on the basis of L, the number of symbols of the scheduled PDSCH, and d, the number of overlapping symbols between the PDCCH that schedules the PDSCH and the scheduled PDSCH.
- If $L \geq 7$, then $d_{1,1} = 0$.
- If $L \geq 4$ and $L \leq 6$, then $d_{1,1} = 7 - L$.
- When $L = 2$,

  - - If the scheduled PDCCH exists within a CORESET consisting of three symbols, and the CORESET and the scheduled PDSCH have the same start symbol, $d_{1,1} = 3$.
  - - Otherwise, $d_{1,1} = d$.

- For a terminal supporting capability 2 within a given serving cell, the PDSCH processing procedure time according to terminal processing capability 2 may be applied when the terminal configures processingType2Enabled, which is a higher layer signaling for the cell, to enable.

If the position of the first uplink transmission symbol of the PUCCH including HARQ-ACK information (For the corresponding position, $K_1$ defined as the transmission time point of HARQ-ACK, PUCCH resources used for HARQ-ACK transmission, and timing advance effects may be considered) does not start earlier than the first uplink transmission symbol that comes after $T_{proc,1}$ time from the last symbol of the PDSCH, the terminal shall transmit a valid HARQ-ACK message. That is, the terminal shall transmit the PUCCH including HARQ-ACK only when the PDSCH processing procedure time is sufficient. Otherwise, the terminal may not provide the base station with valid HARQ-ACK information corresponding to the scheduled PDSCH. The $T\text{-}_{proc,1}$ may be used for both the normal and the extended CP. In case of a PDSCH having two PDSCH transmission positions in one slot, $d_{1,1}$ is calculated on the basis of the first PDSCH transmission position in the corresponding slot.

[PDSCH: Reception Preparation Time During Cross-carrier Scheduling]

Next, in the case of cross-carrier scheduling where $\mu_{PDCCH}$, a numerology through which the scheduled PDCCH is transmitted and $\mu_{PDSCH}$, a numerology through which the PDSCH scheduled through the corresponding PDCCH is transmitted, are different from each other, the PDSCH reception preparation time, $N_{pdsch}$, of the terminal defined for the time interval between the PDCCH and the PDSCH, is described.

If $\mu_{PDCCH} < \mu_{PDSCH}$, the scheduled PDSCH may not be transmitted earlier than the first symbol of the slot that follows $N_{pdsch}$ symbols from the last symbol of the PDCCH that scheduled the PDSCH. The transmission symbol of the corresponding PDSCH may include a DM-RS.

If $\mu_{PDCCH} > \mu_{PDSCH}$, the scheduled PDSCH may be transmitted starting $N_{pdsch}$ symbols after the last symbol of the PDCCH that scheduled the corresponding PDSCH. The transmission symbol of the corresponding PDSCH may include a DM-RS.

[Table 24] $N_{pdsch}$ according to scheduled PDCCH subcarrier spacing [432]

| $\mu_{PDCCH}$ | $N_{pdsch}$ [symbols] |
|---|---|
| 0 | 4 |
| 1 | 5 |
| 2 | 10 |
| 3 | 14 |

[PDSCH: TCI state activation MAC-CE]

Next, a method for configuring a beam for PDSCH is examined. FIG. 16 illustrates a process for configuring and activating a beam for PDSCH. A list of TCI states for PDSCH may be indicated through a list of upper layers such as RRC (16-00). The list of TCI states may be indicated, for example, by tci-StatesToAddModList and/or tci-StatesToReleaseList in the PDSCH-Config IE for each BWP. Next, some of the list of TCI states may be activated through MAC-CE (16-20). The maximum number of TCI states to be activated may be determined according to the capability reported by the terminal. 16-50 illustrates an example of a MAC-CE structure for PDSCH TCI state activation/deactivation.

The meaning of each field in the above MAC CE and the values that may be configured for each field are as follows.

- **Serving Cell ID:** This field indicates the identity of the Serving Cell for which the MAC CE applies. The length of the field is 5 bits. If the indicated Serving Cell is configured as part of a simultaneousTCI-UpdateList1 or simultaneousTCI-UpdateList2 as specified in TS 38.331 [5], this MAC CE applies to all the Serving Cells configured in the set simultaneousTCI-UpdateList1 or simultaneousTCI-UpdateList2, respectively;
- **BWP ID**: This field indicates a DL BWP for which the MAC CE applies as the codepoint of the DCI bandwidth part indicator field as specified in TS 38.212 [9]. The length of the BWP ID field is 2 bits. This field is ignored if this MAC CE applies to a set of Serving Cells;
- **$T_i$** (TCI state identifier): If there is a TCI state with TCI-StateId i as specified in TS 38.331 [5], this field indicates the activation/deactivation status of the TCI state with TCI-StateId i, otherwise MAC entity shall ignore the Ti field. The Ti field is set to 1 to indicate that the TCI state with TCI-StateId i shall be activated and mapped to the codepoint of the DCI Transmission Configuration Indication field, as specified in TS 38.214 [7]. The Ti field is set to 0 to indicate that the TCI state with TCI-StateId i shall be deactivated and is not mapped to the codepoint of the DCI Transmission Configuration Indication field. The codepoint to which the TCI State is mapped is determined by its ordinal position among all the TCI States with Ti field set to 1, i.e. the first TCI State with $T_i$ field set to 1 shall be mapped to the codepoint value 0, second TCI State with Ti field set to 1 shall be mapped to the codepoint value 1 and so on. The maximum number of activated TCI states is 8;
- **CORESET Pool ID:** This field indicates that mapping between the activated TCI states and the codepoint of the DCI Transmission Configuration Indication set by field Ti is specific to the ControlResourceSetId configured with CORESET Pool ID as specified in TS 38.331 [5]. This field set to 1 indicates that this MAC CE shall be applied for the DL transmission scheduled by CORESET with the CORESET pool ID equal to 1, otherwise, this MAC CE shall be applied for the DL transmission scheduled by CORESET pool ID equal to 0. If the coresetPoolIndex is not configured for any CORESET, MAC entity shall ignore the CORESET Pool ID field in this MAC CE when receiving the MAC CE. If the Serving Cell in the MAC CE is configured in a cell list that contains more than one Serving Cell, the CORESET Pool ID field shall be ignored when receiving the MAC CE.

[SRS related]

Next, a method for estimating an uplink channel using a Sounding Reference Signal (SRS) transmission of a terminal is described. A base station may configure at least one SRS configuration for each uplink BWP to transmit configuration information for SRS transmission to a terminal, and may also configure at least one SRS resource set for each SRS configuration. For example, the base station and the terminal may exchange the following upper signaling information to transmit information about the SRS resource set.

- srs-ResourceSetId: SRS resource set index
- srs-ResourceIdList: A set of SRS resource indices referenced in the SRS resource set.
- resourceType: This is the time domain transmission configuration of the SRS resource referenced in the SRS resource set, and may be configured to one of 'periodic', 'semi-persistent', and 'aperiodic'. If configured to 'periodic' or 'semi-persistent', associated CSI-RS information may be provided depending on the usage of the SRS resource set. If configured to 'aperiodic', an aperiodic SRS resource trigger list and slot offset information may be provided, and associated CSI-RS information may be provided depending on the usage of the SRS resource set.
- usage: This is a configuration for the usage of the SRS resource referenced in the SRS resource set, and may be configured to one of 'beamManagement', 'codebook', 'nonCodebook', or 'antennaSwitching'.
- alpha, p0, pathlossReferenceRS, srs-PowerControlAdjustmentStates: This provides parameter configurations for adjusting the transmission power of SRS resources referenced in the SRS resource set.

The terminal may understand that the SRS resource included in the set of SRS resource indices referenced in the SRS resource set follows the information configured in the SRS resource set.

In addition, the base station and the terminal may transmit and receive higher layer signaling information to deliver individual configuration information for the SRS resource. For example, the individual configuration information for the SRS resource may include time-frequency domain mapping information within a slot of the SRS resource, which can include information about frequency hopping within a slot or between slots of the SRS resource. In addition, the individual configuration information for the SRS resource may include a time domain transmission configuration of the SRS resource, which can be configured to one of 'periodic', 'semi-persistent', and 'aperiodic'. This may be restricted to having the same time domain transmission configuration as an SRS resource set including the SRS resource. If the time domain transmission configuration of the SRS resource is configured to 'periodic' or 'semi-persistent', an SRS resource transmission period and slot offset (e.g., periodicityAndOffset) may be additionally included in the time domain transmission configuration.

The base station may activate, deactivate, or trigger SRS transmission to the terminal through higher layer signaling including RRC signaling or MAC CE signaling, or L1 signaling (e.g., DCI). For example, the base station may activate or deactivate periodic SRS transmission to the terminal through higher layer signaling. The base station may indicate the terminal to activate an SRS resource set in which resourceType is configured to periodic through higher layer signaling, and the terminal may transmit an SRS resource referenced in the activated SRS resource set. Time-frequency domain resource mapping within a slot of the transmitted SRS resource follows resource mapping information configured in the SRS resource, and slot mapping including a transmission period and a slot offset follows periodicityAndOffset configured in the SRS resource. In addition, a spatial domain transmission filter applied to the transmitted SRS resource may refer to spatial relation information configured in the SRS resource, or may refer to associated CSI-RS information configured in an SRS resource set including the SRS resource. A terminal may transmit SRS resources within an activated uplink BWP for activated periodic SRS resources through higher layer signaling.

For example, a base station may activate or deactivate semi-persistent SRS transmission to a terminal through higher layer signaling. The base station may indicate activating an SRS resource set through MAC CE signaling, and the terminal may transmit an SRS resource referenced in the activated SRS resource set. An SRS resource set activated through MAC CE signaling may be limited to an SRS resource set of which resourceType is configured to semi-persistent. Time-frequency domain resource mapping within a slot of a transmitted SRS resource follows resource mapping information configured in the SRS resource, and slot mapping including a transmission period and a slot offset follows periodicityAndOffset configured in the SRS resource. In addition, a spatial domain transmission filter applied to the transmitted SRS resource may refer to spatial relation information configured in the SRS resource, or may refer to associated CSI-RS information configured in an SRS resource set including the SRS resource. If spatial relation information is configured in the SRS resource, the spatial domain transmission filter may be determined by referring to the configuration information for spatial relation information delivered through MAC CE signaling that activates semi-persistent SRS transmission without following it. The terminal may transmit the SRS resource within the activated uplink BWP for the semi-persistent SRS resource activated through higher layer signaling.

For example, a base station may trigger aperiodic SRS transmission to a terminal through DCI. The base station may indicate one of aperiodic SRS resource triggers (aperiodicSRS-ResourceTrigger) through an SRS request field of the DCI. The terminal may understand that an SRS resource set including an aperiodic SRS resource trigger indicated through DCI in an aperiodic SRS resource trigger list among configuration information of an SRS resource set is triggered. The terminal may transmit an SRS resource referenced in the triggered SRS resource set. Time-frequency domain resource mapping within a slot of the transmitted SRS resource follows resource mapping information configured in the SRS resource. In addition, the slot mapping of the transmitted SRS resource may be determined through a slot offset between a PDCCH including DCI and the SRS resource, and this may refer to value(s) included in a slot offset configured in the SRS resource set. Specifically, the slot offset between the PDCCH including DCI and the SRS resource may apply a value indicated in the time domain resource allocation field of the DCI among the offset value(s) included in the slot offset configured in the SRS resource set. In addition, the spatial domain transmission filter applied to the transmitted SRS resource may refer to the spatial relation information configured in the SRS resource, or may refer to the associated CSI-RS information configured in the SRS resource set including the SRS resource. The UE may transmit the SRS resource within the activated uplink BWP for the aperiodic SRS resource triggered through the DCI.

When a base station triggers an aperiodic SRS transmission to a terminal through DCI, a minimum time interval may be required between a PDCCH including the DCI triggering the aperiodic SRS transmission and the SRS to be transmitted, in order for the terminal to transmit the SRS by applying configuration information for the SRS resource. The time interval for the SRS transmission of the terminal may be defined as the number of symbols between the last symbol of the PDCCH including the DCI triggering the aperiodic SRS transmission and the first symbol to which the SRS resource to be transmitted is mapped first among the SRS resource(s) to be transmitted. The minimum time interval may be determined with reference to the PUSCH preparation procedure time required for the terminal to prepare for the PUSCH transmission. In addition, the minimum time interval may have different values depending on the usage of the SRS resource set including the SRS resource to be transmitted. For example, the minimum time interval may be determined as N2 symbols defined in consideration of the terminal processing ability according to the capability of the terminal with reference to the PUSCH preparation procedure time of the terminal. In addition, considering the usage of the SRS resource set including the SRS resource to be transmitted, if the usage of the SRS resource set is configured to 'codebook' or 'antennaSwitching', the minimum time interval may be configured to N2 symbols, and if the usage of the SRS resource set is configured to 'nonCodebook' or 'beamManagement', the minimum time interval may be configured to N2+14 symbols. The terminal transmits an aperiodic SRS if the time interval for aperiodic SRS transmission is greater than or equal to the minimum time interval, and may ignore the DCI that triggers the aperiodic SRS if the time interval for aperiodic SRS transmission is less than the minimum time interval.

[Table 25]

```
SRS-Resource ::=                          SEQUENCE {
    srs-ResourceId                            SRS-ResourceId,
    nrofSRS-Ports                             ENUMERATED {port1, ports2, ports4},
    ptrs-PortIndex                            ENUMERATED {n0, n1 }
OPTIONAL,    -- Need R
    transmissionComb                          CHOICE {
        n2                                        SEQUENCE {
            combOffset-n2                             INTEGER (0..1),
            cyclicShift-n2                            INTEGER (0..7)
        },
        n4                                        SEQUENCE {
            combOffset-n4                             INTEGER (0..3),
            cyclicShift-n4                            INTEGER (0..11)
        }
    },
    resourceMapping                           SEQUENCE {
        startPosition                             INTEGER (0..5),
        nrofSymbols                               ENUMERATED {n1, n2, n4},
        repetitionFactor                          ENUMERATED {n1, n2, n4}
    },
    freqDomainPosition                        INTEGER (0..67),
    freqDomainShift                           INTEGER (0..268),
    freqHopping                               SEQUENCE {
        c-SRS                                     INTEGER (0..63),
        b-SRS                                     INTEGER (0..3),
        b-hop                                     INTEGER (0..3)
    },
    groupOrSequenceHopping                    ENUMERATED { neither, groupHopping,
sequenceHopping },
```

```
    resourceType                                      CHOICE {
        aperiodic                                         SEQUENCE {
            ...
        },
        semi-persistent                                   SEQUENCE {
            periodicityAndOffset-sp                               SRS-PeriodicityAndOffset,
            ...
        },
        periodic                                          SEQUENCE {
            periodicityAndOffset-p                                SRS-PeriodicityAndOffset,
            ...
        }
    },
    sequenceId                                        INTEGER (0..1023),
    spatialRelationInfo                           SRS-SpatialRelationInfo
OPTIONAL,     -- Need R
    ...
}
```

The spatialRelationInfo configuration information of the above [Table 25] refers to one reference signal and applies the beam information of the reference signal to the beam used for the SRS transmission. For example, the configuration of spatialRelationInfo may include information such as [Table 26] below.

[Table 26]

```
SRS-SpatialRelationInfo ::=        SEQUENCE {
    servingCellId                      ServCellIndex                OPTIONAL,     -- Need
S
    referenceSignal                    CHOICE {
        ssb-Index                          SSB-Index,
        csi-RS-Index                       NZP-CSI-RS-ResourceId,
        srs                                SEQUENCE {
            resourceId                         SRS-ResourceId,
            uplinkBWP                            BWP-Id
        }
    }
}
```

With reference to the spatialRelationInfo configuration, the index of the reference signal to be referenced in order to use the beam information of a specific reference signal, that is, the SS/PBCH block index, the CSI-RS index, or the SRS index may be configured. The upper signaling referenceSignal is configuration information indicating which beam information of a reference signal is to be referenced for the corresponding SRS transmission, and ssb -Index means the index of the SS/PBCH block, csi -RS-Index means the index of the CSI-RS, and srs means the index of the SRS, respectively. If the value of the upper signaling referenceSignal is configured to 'ssb-Index', the terminal may apply the reception beam used when receiving the SS/PBCH block corresponding to ssb-Index as the transmission beam of the corresponding SRS transmission. If the value of the upper signaling referenceSignal is configured to 'csi-RS-Index', the terminal may apply the reception beam used when receiving the CSI-RS corresponding to csi -RS-Index as the transmission beam of the corresponding SRS transmission. If the value of the upper signaling referenceSignal is configured to 'srs ', the terminal may apply the transmission beam used when transmitting the SRS corresponding to srs as the transmission beam for the corresponding SRS transmission.

[PUSCH: Transmission Method Related]

Next, the scheduling method of PUSCH transmission is described. PUSCH transmission may be dynamically scheduled by UL grant in DCI, or may operate by configured grant Type 1 or Type 2. Dynamic scheduling instruction for PUSCH transmission is possible in DCI format 0_0 or 0_1.

Configured grant Type 1 PUSCH transmission may be semi-statically scheduled by reception of configuredGrantConfig including rrc-ConfiguredUplinkGrant of [Table 25] through higher layer signaling, without reception of UL grant in DCI. Configured grant Type 2 PUSCH transmission may be semi-persistently scheduled by UL grant in DCI after reception of configuredGrantConfig not including rrc-ConfiguredUplinkGrant of [Table 27] through higher layer signaling. When PUSCH transmission operates by configured grant, parameters applied to PUSCH transmission are applied by configuredGrantConfig of [Table 27] through higher layer signaling, except dataScramblingIdentityPUSCH, txConfig, codebookSubset, maxRank, scaling of UCI-OnPUSCH provided by pusch-Config of [Table 28]. If the terminal has been provided with transformPrecoder in configuredGrantConfig, which is the upper signaling of [Table 27], the terminal applies tp-pi2BPSK in pusch-Config of [Table 28] to PUSCH transmission operated by configured grant.

[Table 27]

```
ConfiguredGrantConfig ::=                SEQUENCE {
    frequencyHopping                         ENUMERATED {intraSlot, interSlot}
OPTIONAL,    -- Need S,
    cg-DMRS-Configuration                    DMRS-UplinkConfig,
    mcs-Table                                ENUMERATED {qam256, qam64LowSE}
OPTIONAL,    -- Need S
    mcs-TableTransformPrecoder               ENUMERATED {qam256, qam64LowSE}
OPTIONAL,    -- Need S
    uci-OnPUSCH                              SetupRelease { CG-UCI-OnPUSCH }
OPTIONAL,    -- Need M
    resourceAllocation                       ENUMERATED { resourceAllocationType0,
resourceAllocationType1, dynamicSwitch },
    rbg-Size                                 ENUMERATED {config2}
OPTIONAL,    -- Need S
    powerControlLoopToUse                    ENUMERATED {n0, n1},
    p0-PUSCH-Alpha                           P0-PUSCH-AlphaSetId,
    transformPrecoder                        ENUMERATED {enabled, disabled}
OPTIONAL,    -- Need S
    nrofHARQ-Processes                       INTEGER(1..16),
    repK                                     ENUMERATED {n1, n2, n4, n8},
    repK-RV                                  ENUMERATED {s1-0231, s2-0303, s3-0000}
OPTIONAL,    -- Need R
    periodicity                              ENUMERATED {
                                                 sym2, sym7, sym1x14, sym2x14,
sym4x14, sym5x14, sym8x14, sym10x14, sym16x14, sym20x14,
                                                 sym32x14, sym40x14, sym64x14,
sym80x14, sym128x14, sym160x14, sym256x14, sym320x14, sym512x14,
                                                 sym640x14, sym1024x14, sym1280x14,
sym2560x14, sym5120x14,
```

```
                                        sym6, sym1x12, sym2x12, sym4x12,
sym5x12, sym8x12, sym10x12, sym16x12, sym20x12, sym32x12,
                                        sym40x12, sym64x12, sym80x12,
sym128x12, sym160x12, sym256x12, sym320x12, sym512x12, sym640x12,
                                        sym1280x12, sym2560x12
    },
    configuredGrantTimer                INTEGER (1..64)
OPTIONAL,    -- Need R
    rrc-ConfiguredUplinkGrant           SEQUENCE {
        timeDomainOffset                    INTEGER (0..5119),
        timeDomainAllocation                INTEGER   (0..15),
        frequencyDomainAllocation           BIT STRING (SIZE(18)),
        antennaPort                         INTEGER (0..31),
        dmrs-SeqInitialization              INTEGER (0..1)
OPTIONAL,    -- Need R
        precodingAndNumberOfLayers          INTEGER (0..63),
        srs-ResourceIndicator               INTEGER (0..15)
OPTIONAL,    -- Need R
        mcsAndTBS                           INTEGER (0..31),
        frequencyHoppingOffset              INTEGER (1..
maxNrofPhysicalResourceBlocks-1)            OPTIONAL,    -- Need R
        pathlossReferenceIndex              INTEGER (0..maxNrofPUSCH-
PathlossReferenceRSs-1),
        ...
    }
OPTIONAL,    -- Need R
    ...
}
```

Next, the PUSCH transmission method is described. The DMRS antenna port for PUSCH transmission is the same as the antenna port for SRS transmission. PUSCH transmission may follow the codebook-based transmission method and the non-codebook-based transmission method, respectively, depending on whether the value of txConfig in the pusch-Config of [Table 28], which is the upper signaling, is 'codebook' or 'nonCodebook'.

As described above, PUSCH transmission may be dynamically scheduled through DCI format 0_0 or 0_1, and may be semi-statically configured by configured grant. If the terminal is indicated to schedule PUSCH transmission through DCI format 0_0, the terminal performs beam configuration for PUSCH transmission using pucch-spatialRelationInfoID corresponding to the UE-specific PUCCH resource corresponding to the minimum ID within the activated uplink BWP within the serving cell, and at this time, the PUSCH transmission is on the basis of a single antenna port. The UE does not expect scheduling for PUSCH transmission through DCI format 0_0 within a BWP where a PUCCH resource including pucch-spatialRelationInfo is not configured. If the terminal has not configured txConfig in pusch-Config of [Table 28], the terminal does not expect to be scheduled with DCI format 0_1.

[Table 28]

```
PUSCH-Config ::=                          SEQUENCE {
    dataScramblingIdentityPUSCH               INTEGER (0..1023)
OPTIONAL,    -- Need S
    txConfig                                  ENUMERATED {codebook, nonCodebook}
OPTIONAL,    -- Need S
    dmrs-UplinkForPUSCH-MappingTypeA            SetupRelease { DMRS-UplinkConfig }
OPTIONAL,    -- Need M
    dmrs-UplinkForPUSCH-MappingTypeB            SetupRelease { DMRS-UplinkConfig }
OPTIONAL,    -- Need M


    pusch-PowerControl                        PUSCH-PowerControl
OPTIONAL,    -- Need M
    frequencyHopping                          ENUMERATED {intraSlot, interSlot}
OPTIONAL,    -- Need S
    frequencyHoppingOffsetLists               SEQUENCE (SIZE (1..4)) OF INTEGER (1..
maxNrofPhysicalResourceBlocks-1)


OPTIONAL,    -- Need M
    resourceAllocation                        ENUMERATED { resourceAllocationType0,
resourceAllocationType1, dynamicSwitch},
    pusch-TimeDomainAllocationList            SetupRelease { PUSCH-
TimeDomainResourceAllocationList }              OPTIONAL,    -- Need M
    pusch-AggregationFactor                   ENUMERATED { n2, n4, n8 }
OPTIONAL,    -- Need S
    mcs-Table                                 ENUMERATED {qam256, qam64LowSE}
OPTIONAL,    -- Need S
    mcs-TableTransformPrecoder                ENUMERATED {qam256, qam64LowSE}
OPTIONAL,    -- Need S
    transformPrecoder                         ENUMERATED {enabled, disabled}
```

```
OPTIONAL,     -- Need S
    codebookSubset                              ENUMERATED
{fullyAndPartialAndNonCoherent, partialAndNonCoherent,nonCoherent}

OPTIONAL, -- Cond codebookBased
    maxRank                                     INTEGER (1..4)
OPTIONAL, -- Cond codebookBased
    rbg-Size                                    ENUMERATED { config2}
OPTIONAL, -- Need S
    uci-OnPUSCH                                 SetupRelease { UCI-OnPUSCH}
OPTIONAL, -- Need M
    tp-pi2BPSK                                  ENUMERATED {enabled}
OPTIONAL, -- Need S
    ...
}
```

Next, codebook-based PUSCH transmission is described. Codebook-based PUSCH transmission may be dynamically scheduled through DCI format 0_0 or 0_1, and may operate semi-statically by configured grant. When codebook-based PUSCH is dynamically scheduled through DCI format 0_1 or semi-statically configured through configured grant, the terminal determines a precoder for PUSCH transmission on the basis of SRS Resource Indicator (SRI), Transmission Precoding Matrix Indicator (TPMI), and transmission rank (the number of PUSCH transmission layers).

At this time, SRI may be given through field SRS resource indicator in DCI or configured through upper signaling srs-ResourceIndicator. When codebook-based PUSCH transmission is performed, the terminal is configured with at least one SRS resource, and may be configured with up to two SRS resources. When the terminal receives SRI through DCI, the SRS resource indicated by the SRI means an SRS resource corresponding to the SRI among the SRS resources transmitted before the PDCCH including the SRI. In addition, TPMI and transmission rank may be given through field precoding information and number of layers in DCI or configured through upper signaling precodingAndNumberOfLayers. TPMI is used to indicate a precoder to be applied to PUSCH transmission. If the terminal is configured with one SRS resource, TPMI is used to indicate a precoder to be applied in the configured one SRS resource. When a terminal is configured with a plurality of SRS resources, TPMI is used to indicate the precoder to be applied in the SRS resource indicated through SRI.

A precoder to be used for PUSCH transmission is selected from an uplink codebook having the same number of antenna ports as the nrofSRS-Ports value in the higher layer signaling, SRS-Config. In codebook-based PUSCH transmission, the terminal determines a codebook subset on the basis of TPMI and codebookSubset in the higher layer signaling, pusch-Config. The codebookSubset in the higher layer signaling, pusch-Config, may be configured to one of 'fullyAndPartialAndNonCoherent', 'partialAndNonCoherent', or 'nonCoherent' on the basis of the UE capability that the terminal reports to the base station. If the terminal reports 'partialAndNonCoherent' as the UE capability, the terminal does not expect the value of codebookSubset in the higher layer signaling to be configured to 'fullyAndPartialAndNonCoherent'. Additionally, if the terminal reports 'nonCoherent' as the UE capability, the terminal does not expect the value of codebookSubset in the upper signaling to be configured to 'fullyAndPartialAndNonCoherent' or ' partialAndNonCoherent'. If nrofSRS-Ports in the upper signaling SRS-ResourceSet points to two SRS antenna ports, the terminal does not expect the value of codebookSubset in the upper signaling to be configured to 'partialAndNonCoherent'.

A terminal may receive one SRS resource set in which the usage value in the upper signaling SRS-ResourceSet is configured to 'codebook', and one SRS resource in the corresponding SRS resource set may be indicated through SRI. If a plurality of SRS resources are configured in an SRS resource set in which the usage value in the upper signaling SRS-ResourceSet is configured to 'codebook', the terminal expects that the value of nrofSRS-Ports in the upper signaling SRS-Resource is configured to the same value for all SRS resources.

A terminal may transmit to the base station one or a plurality of SRSs included in SRS resource set in which the usage value is configured to 'codebook' according to upper signaling, and the base station selects one of the SRS resources transmitted by the terminal and indicates the terminal to perform PUSCH transmission using transmission beam information of the corresponding SRS resource. At this time, in codebook-based PUSCH transmission, the SRI is used as information for selecting an index of one SRS resource and is included in the DCI. Additionally, the base station includes in the DCI the information indicating TPMI and rank to be used by the terminal for PUSCH transmission. The terminal performs PUSCH transmission by applying the indicated rank and the precoder indicated by the TPMI on the basis of the transmission beam of the corresponding SRS resource using the SRS resource indicated by the SRI.

Next, non-codebook based PUSCH transmission is described. Non-codebook based PUSCH transmission may be dynamically scheduled through a DCI format 0_0 or 0_1, and may operate semi-statically by configured grant. If at least one SRS resource is configured in an SRS resource set in which the value of usage in upper signaling SRS-ResourceSet is configured to 'nonCodebook', the terminal may be scheduled for non-codebook based PUSCH transmission through DCI format 0_1.

For an SRS resource set in which the usage value in the upper signaling SRS-ResourceSet is configured to 'nonCodebook', the terminal may be configured with one connected NZP CSI-RS (non-zero power CSI-RS) resource. The terminal may perform calculation for a precoder for SRS transmission through measurement of the NZP CSI-RS resource connected to the SRS resource set. If the difference between the last received symbol of the aperiodic NZP CSI-RS resource connected to the SRS resource set and the first symbol of the aperiodic SRS transmission at the terminal is less than 42 symbols, the terminal does not expect information on the precoder for SRS transmission to be updated.

If the value of resource Type in the upper signaling SRS-ResourceSet is configured to 'aperiodic', the connected NZP CSI-RS is indicated by the SRS request field in DCI format 0_1 or 1_1. At this time, if the connected NZP CSI-RS resource is an aperiodic NZP CSI-RS resource, it indicates the existence of the connected NZP CSI-RS when the value of the field SRS request in DCI format 0_1 or 1_1 is not '00'. At this time, the DCI must not indicate cross carrier or cross BWP scheduling. In addition, if the value of SRS request indicates the existence of the NZP CSI-RS, the NZP CSI-RS is located in the slot in which the PDCCH including the SRS request field is transmitted. At this time, the TCI states configured for the scheduled subcarriers are not configured to QCL-TypeD.

If a periodic or semi-persistent SRS resource set is configured, the associated NZP CSI-RS may be indicated through the associatedCSI-RS in the higher layer signaling SRS-ResourceSet. For non-codebook based transmission, the terminal does not expect that the higher layer signaling spatialRelationInfo for SRS resources and the associatedCSI-RS in the higher layer signaling SRS-ResourceSet are configured together.

When a plurality of SRS resources are configured, the terminal may determine the precoder and transmission rank to be applied to PUSCH transmission on the basis of the SRI indicated by the base station. At this time, the SRI may be indicated through SRS resource indicator, the field in the DCI, or configured through the upper signaling srs-ResourceIndicator. Similar to the codebook-based PUSCH transmission described above, when the terminal is provided with an SRI through the DCI, the SRS resource indicated by the SRI means an SRS resource corresponding to the SRI among the SRS resources transmitted before the PDCCH including the SRI. The terminal may use one or more SRS resources for SRS transmission, and the maximum number of SRS resources that may be simultaneously transmitted in the same symbol within one SRS resource set and the maximum number of SRS resources are determined by the UE capability that the terminal reports to the base station. At this time, the SRS resources that the UE simultaneously transmits occupy the same RB. The terminal configures one SRS port for each SRS resource. Only one SRS resource configured with the usage value configured to 'nonCodebook' in the upper signaling SRS-ResourceSet may be configured, and up to four SRS resources for non-codebook based PUSCH transmission may be configured.

The base station transmits one NZP-CSI-RS associated with an SRS resource set to the terminal, and the terminal calculates a precoder to be used when transmitting one or more SRS resources within the SRS resource set on the basis of a result measured upon reception of the NZP-CSI-RS. When the terminal transmits one or more SRS resources within the SRS resource set of which usage is configured to 'nonCodebook' to the base station, the terminal applies the calculated precoder, and the base station selects one or more SRS resources from the received one or more SRS resources. At this time, in non-codebook based PUSCH transmission, SRI represents an index that can express a combination of one or more SRS resources, and the SRI is included in the DCI. At this time, the number of SRS resources indicated by the SRI transmitted by the base station may be the number of transmission layers of the PUSCH, and the terminal transmits the PUSCH by applying the precoder applied to SRS resource transmission for each layer.

[PUSCH: Preparation Procedure Time]

Next, the PUSCH preparation procedure time is described. When the base station schedules the terminal to transmit the PUSCH using DCI format 0_0, 0_1, or 0_2, the terminal may need a PUSCH preparation procedure time to transmit the PUSCH by applying the transmission method (transmission precoding method of SRS resource, number of transmission layers, spatial domain transmission filter) indicated through the DCI. NR defines the PUSCH preparation procedure time considering this. The PUSCH preparation procedure time of the UE may follow the following [Equation 4].

[Equation 4]

$$T_{proc,2} = \max((N_2 + d_{2,1} + d_2)(2048 + 144)\kappa 2^{-\mu} T_c + T_{ext} + T_{switch}, d_{2,2})$$

In the above-described $T_{proc,2}$ in Equation 4, each variable may have the following meaning.

- $N_2$: The number of symbols determined by the UE processing capability 1 or 2 and the numerology $\mu$ according to the capability of the terminal. If the UE processing capability is reported as 1 according to the capability report of the terminal, it may have the value of [Table 29], and if the UE processing capability is reported as 2 and it is configured through higher layer signaling that the UE processing capability 2 may be used, it may have the value of [Table 30].

[Table 29]

| $\mu$ | PUSCH preparation time $N_2$ [symbols] |
|---|---|
| 0 | 10 |
| 1 | 12 |
| 2 | 23 |
| 3 | 36 |

[Table 30]

| $\mu$ | PUSCH preparation time $N_2$ [symbols] |
|---|---|
| 0 | 5 |
| 1 | 5.5 |
| 2 | 11 for frequency range 1 |

- $d_{2,1}$: The number of symbols configured to 0 if all resource elements of the first OFDM symbol of PUSCH transmission are configured to consist of only DM-RS, otherwise configured to 1.
- $\kappa$: 64
- $\mu$: Among $\mu_{DL}$ or $\mu_{UL}$, $T_{proc,2}$ follows the larger value. $\mu_{DL}$ refers to the numerology of the downlink where PDCCH including the DCI scheduling PUSCH is transmitted, and $\mu_{UL}$ refers to the numerology of the uplink where PUSCH is transmitted.
- $T_c$: it has $1/(\Delta f_{max} \cdot N_f)$, $\Delta f_{max} = 480 \cdot 10^3 H_2$, $N_f$=4096.
- $d_{2,2}$: If the DCI scheduling PUSCH indicates BWP switching, the BWP switching time is followed. Otherwise, it has 0.
- $d_2$: When PUCCH and the OFDM symbols of the PUSCH with a high priority index and the PUCCH with a low priority index overlap in time, the $d_2$ value of the PUSCH with a high priority index is used. Otherwise, $d_2$ is 0.
- $T_{ext}$: If the terminal uses the shared spectrum channel access method, the terminal may calculate $T_{ext}$ and apply it to the PUSCH preparation procedure time. Otherwise, $T_{ext}$ is assumed to be 0.
- $T_{switch}$: When the uplink switching interval is triggered, $T_{switch}$ is assumed to be the switching interval time. Otherwise, it is assumed to be 0.

When the base station and the terminal consider the time domain resource mapping information of the PUSCH scheduled through the DCI and the influence of the uplink-downlink timing advance, the base station and the terminal determine that the PUSCH preparation time is not sufficient if the first symbol of the PUSCH starts before the first uplink symbol where the CP starts after $T_{proc,2}$ from the last symbol of the PDCCH including the DCI that scheduled the PUSCH. Otherwise, the base station and the terminal determine that the PUSCH preparation time is sufficient. The terminal transmits the PUSCH only when the PUSCH preparation time is sufficient, and may ignore the DCI that schedules the PUSCH if the PUSCH preparation time is not sufficient.

[PUSCH: Repetition Transmission Related]

The following describes in detail the repetition transmission of uplink data channels in 5G systems. The 5G system supports two types of repetition transmission methods for uplink data channels: PUSCH repetition transmission type A and PUSCH repetition transmission type B. A terminal may be configured to either PUSCH repetition transmission type A or B through higher layer signaling.

**PUSCH Repetition Transmission Type A**

- As described above, the symbol length and the position of the start symbol of the uplink data channel are determined by the time domain resource allocation method within one slot, and the base station may notify the terminal of the number of repeated transmissions through higher layer signaling (e.g. RRC signaling) or L1 signaling (e.g. DCI).
- The terminal may repeatedly transmit an uplink data channel having the same length and start symbol as the uplink data channel configured on the basis of the number of repeated transmissions received from the base station in consecutive slots. In this case, if a slot is configured by the base station to the terminal as downlink or at least one symbol among the symbols of the uplink data channel configured by the terminal is configured as downlink, the terminal omits the uplink data channel transmission, but counts the number of repeated transmissions of the uplink data channel.

**PUSCH Repetition Transmission Type B**

- As described above, the start symbol and length of the uplink data channel are determined by the time domain resource allocation method within one slot, and the base station may notify the terminal of the number of repetition transmissions, numberofrepetitions, through upper signaling (e.g. RRC signaling) or L1 signaling (e.g. DCI).
- First, the nominal repetition of the uplink data channel is determined on the basis of the start symbol and length of the configured uplink data channel as follows. The slot where the n-th nominal repetition starts is given by $K_s + \left\lfloor \frac{S+n\cdot L}{N_{symb}^{slot}} \right\rfloor$, and the symbol starting in that slot is given by $mod\left(S + n \cdot L, N_{symb}^{slot}\right)$. The slot where the n-th nominal repetition ends is given by $K_s + \left\lfloor \frac{S+(n+1)\cdot L-1}{N_{symb}^{slot}} \right\rfloor$, and the symbol ending in that slot is given by $mod\left(S + (n+1) \cdot L - 1, N_{symb}^{slot}\right)$. Here, n=0,..., numberofrepetitions -1, S represents the start symbol of the configured uplink data channel, and L represents the symbol length of the configured uplink data channel. $K_s$ represents the slot where the PUSCH transmission starts and $N_{symb}^{slot}$ represents the number of symbols per slot.
- The terminal determines an invalid symbol for PUSCH repetition transmission type B. A symbol configured for downlink by tdd-UL-DL-ConfigurationCommon or tdd-UL-DL-ConfigurationDedicated is determined as an invalid symbol for PUSCH repetition transmission type B. Additionally, an invalid symbol may be configured in a higher layer parameter (e.g., InvalidSymbolPattern). The higher layer parameter (e.g., InvalidSymbolPattern) provides a symbol level bitmap spanning one slot or two slots so that an invalid symbol may be configured. 1 in the bitmap indicates an invalid symbol. Additionally, a period and a pattern of the bitmap may be configured through a higher layer parameter (e.g., periodicity AndPattern). If a higher layer parameter (e.g., InvalidSymbolPattern) is configured and the InvalidSymbolPatternIndicator-ForDCIFormat0_1 or InvalidSymbolPatternIndicator-ForDCIFormat0_2 parameter indicates 1, the terminal applies the invalid symbol pattern, and if the parameter indicates 0, the terminal does not apply the invalid symbol pattern. If a higher layer parameter (e.g., InvalidSymbolPattern) is configured and the InvalidSymbolPatternIndicator -ForDCIFormat0_1 or InvalidSymbolPatternIndicator-ForDCIFormat0_2 parameter is not configured, the terminal applies the invalid symbol pattern.

After the invalid symbol is determined, for each nominal repetition, the terminal may consider symbols other than the invalid symbol as valid symbols. If each nominal repetition includes one or more valid symbols, the nominal repetition may include one or more actual repetitions. Here, each actual repetition includes a continuous set of valid symbols that may be used for PUSCH repetition transmission type B in one slot.

FIG. 17 is a diagram illustrating an example of PUSCH repetition transmission type B in a wireless communication system according to one embodiment of the present disclosure. A terminal may configure a start symbol S of an uplink data channel to 0 and a length L of an uplink data channel to 14, and may configure the number of repetition transmissions to 16. In this case, nominal repetition 1701 is indicated in 16 consecutive slots. After that, the terminal may determine a symbol configured as a downlink symbol in each nominal repetition 1701 as an invalid symbol. In addition, the terminal determines symbols configured to 1 in an invalid symbol pattern 1702 as invalid symbols. If valid symbols that are not invalid symbols in each nominal repetition consist of one or more consecutive symbols in one slot, they are configured as actual repetition 1703 and transmitted.

Additionally, for PUSCH repetition transmissions, NR Release 16 may define the following additional methods for UL grant-based PUSCH transmission across slot boundaries and configured grant-based PUSCH transmission:

- Method 1 (mini-slot level repetition): Two or more PUSCH repetition transmissions are scheduled within one slot or across the boundary of consecutive slots through one UL grant. In addition, for Method 1, time domain resource allocation information in the DCI indicates resources of the first repetition transmission. In addition, time domain resource information of the first repetition transmission and time domain resource information of the remaining repetition transmissions may be determined on the basis of the uplink or downlink direction determined for each symbol in each slot. Each repetition transmission occupies consecutive symbols.
- Method 2 (multi-segment transmission): Two or more PUSCH repetition transmissions are scheduled in consecutive slots through one UL grant. In this case, one transmission is designated for each slot, and different starting points or repetition lengths may be different for each transmission. In addition, in Method 2, the time domain resource allocation information in the DCI indicates the starting points and repetition lengths of all repetition transmissions. In addition, when performing repetition transmissions in a single slot through Method 2, if there are a plurality of bundles of consecutive uplink symbols in the slot, each repetition transmission is performed for each bundle of uplink symbols. If there is only one bundle of consecutive uplink symbols in the slot, one PUSCH repetition transmission is performed according to the method of NR Release 15.
- Method 3: Two or more PUSCH repeated transmissions are scheduled in consecutive slots through two or more UL grants. In this case, one transmission is designated for each slot, and the n-th UL grant may be received before the PUSCH transmission scheduled by the (n-1)th UL grant ends.
- Method 4: One or more PUSCH repetition transmissions in a single slot, or two or more PUSCH repetition transmissions across the boundary of consecutive slots may be supported through one UL grant or one configured grant. The number of repetitions that the base station indicates to the terminal is only a nominal value, and the number of PUSCH repetition transmissions that the terminal actually performs may be greater than the nominal number of repetitions. The time domain resource allocation information in the DCI or the configured grant indicates the resources of the first repetition transmission indicated by the base station. The time domain resource information of the remaining repetition transmissions may be determined by referring at least to the resource information of the first repetition transmission and the uplink or downlink direction of the symbols. If the time domain resource information of the repetition transmission indicated by the base station crosses the slot boundary or includes an uplink/downlink switching point, the corresponding repetition transmission may be divided into a plurality of repetition transmissions. In this case, one repetition transmission may be included for each uplink period in one slot.

[PUSCH: Frequency Hopping Process]

In the following, frequency hopping of the uplink data channel (Physical Uplink Shared Channel; PUSCH) in a 5G system is described in detail.

In 5G, two methods are supported for each PUSCH repetition transmission type as a frequency hopping method for uplink data channels. First, PUSCH repetition transmission type A supports intra-slot frequency hopping and inter-slot frequency hopping, and PUSCH repetition transmission type B supports inter-repetition frequency hopping and inter-slot frequency hopping.

The intra-slot frequency hopping method supported in PUSCH repetition transmission type A is a method in which a terminal changes the allocated resources of the frequency domain by a configured frequency offset and transmits them in two hops within one slot. In intra-slot frequency hopping, the start RB of each hop may be expressed by Equation 5.

[Equation 5]

$$\mathrm{RB}_{\mathrm{start}} = \begin{cases} \mathrm{RB}_{\mathrm{start}} & i=0 \\ \left(\mathrm{RB}_{\mathrm{start}} + \mathrm{RB}_{\mathrm{offset}}\right) \bmod N_{BWP}^{size} & i=1 \end{cases}$$

In Equation 5, i=0 and i=1 represent the first hop and the second hop, respectively, and $RB_{stars}$ represents the starting RB in the UL BWP and is calculated from the frequency resource allocation method. $RB_{offset}$ represents the frequency offset between two hops through the upper layer parameters. The number of symbols of the first hop may be represented as $\lfloor N_{symb}^{PUSCH,s}/2 \rfloor$, and the number of symbols of the second hop may be represented as $N_{symb}^{PUSCH,s} - \lfloor N_{symb}^{PUSCH,s}/2 \rfloor$. $N_{symb}^{PUSCH,s}$ is the length of PUSCH transmission in one slot, which is represented as the number of OFDM symbols.

Next, the inter-slot frequency hopping method supported by PUSCH repetition transmission types A and B is a method in which a terminal changes the allocated resources of the frequency domain by a configured frequency offset for each slot and transmits them. In inter-slot frequency hopping, the starting RB during a $n_s^\mu$ slot may be expressed by Equation 6.

[Equation 6]

$$\mathrm{RB}_{\mathrm{start}}\left(n_s^\mu\right)=\begin{cases}\mathrm{RB}_{\mathrm{start}} & n_s^\mu \bmod 2=0\\ \left(\mathrm{RB}_{\mathrm{start}}+\mathrm{RB}_{\mathrm{offset}}\right) \bmod N_{BWP}^{size} & n_s^\mu \bmod 2=1\end{cases}$$

In Equation 6, $n_s^\mu$ represents the current slot number in multi-slot PUSCH transmission, $RB_{start}$ represents the starting RB in UL BWP and is calculated from the frequency resource allocation method. $RB_{offset}$ represents the frequency offset between two hops through the upper layer parameter.

Next, the inter-repetition frequency hopping method supported in PUSCH repetition transmission type B is to transmit the allocated resources in the frequency domain for one or more actual repetitions within each nominal repetition by shifting them by a configured frequency offset. $RB_{start}(n)$, which is the index of the starting RB in the frequency domain for one or more actual repetitions within the n-th nominal repetition, may follow the following Equation 7.

[Equation 7]

$$\mathrm{RB}_{\mathrm{start}}(n)=\begin{cases}\mathrm{RB}_{\mathrm{start}} & n \bmod 2=0\\ \left(\mathrm{RB}_{\mathrm{start}}+\mathrm{RB}_{\mathrm{offset}}\right) \bmod N_{BWP}^{size} & n \bmod 2=1\end{cases}$$

In Equation 7, n is the index of nominal repetition, and $RB_{offset}$ represents the RB offset between two hops through the upper layer parameter.

[UE Capability Reporting Related]

In LTE and NR, a terminal may perform a procedure to report the capabilities supported by the terminal to the serving base station while connected to the serving base station. In the explanation below, this is referred to as a UE capability report.

A base station may transmit a UE capability enquiry message requesting a capability report to a terminal in a connected state. The message may include a UE capability request for each radio access technology (RAT) type of the base station. The RAT type-specific request may include information on a combination of supported frequency bands, etc. In addition, in the case of the UE capability enquiry message, a plurality of UE capabilities for each RAT type may be requested through one RRC message container transmitted by the base station, or the base station may include the UE capability enquiry message including the UE capability request for each RAT type a plurality of times and transmit it to the terminal. That is, the UE capability enquiry may be repeated a plurality of times in one message, and the terminal may configure a corresponding UE capability information message and report it a plurality of times. In the next-generation mobile communication system, a UE capability request may be made for Multi-RAT dual connectivity (MR-DC), including NR, LTE, and E-UTRA - NR dual connectivity (EN-DC). Additionally, the UE capability enquiry message is typically transmitted initially after the terminal is connected to the base station, but it may be requested under any conditions when the base station is needed.

In the above step, the terminal that receives the UE capability report request from the base station configures the UE capability according to the RAT type and band information requested from the base station. Below is a summary of how the terminal configures the UE capability in the NR system.

1. If the terminal receives a list of LTE and/or NR bands from the base station as a UE capability request, the terminal configures a band combination (BC) for EN-DC and NR stand alone (SA). That is, it configures a candidate list of BCs for EN-DC and NR SA on the basis of the bands requested to the base station as FreqBandList. In addition, the priority of the bands is given in the order listed in FreqBandList.
2. If the bast station requests a UE capability reporting by configuring "eutra-nr-only" flag or the "eutra" flag, the terminal completely removes NR SA BCs from the candidate list of the configured BCs. This operation may only occur when the LTE base station (eNB) requests the "eutra" capability.
3. After that, the terminal removes fallback BCs from the candidate list of BCs configured in the above step. Here, fallback BC means a BC that may be obtained by removing at least one band corresponding to SCell from any BC, and may be omitted because the BC before removing the band corresponding to at least one SCell can already cover the fallback BC. This step is also applied to MR-DC, i.e., to LTE bands. The BCs remaining after this step are the final "candidate BC list."
4. The terminal selects BCs to report by selecting BCs that match the requested RAT type from the final "candidate BC list" above. In this step, the terminal configures the supported BandCombinationList in a determined order. That is, the terminal configures BCs and UE capabilities to report in the order of the predetermined rat-Type (nr -> eutra-nr -> eutra). In addition, it configures featureSetCombination for the configured supportedBandCombinationList and configures a list of "candidate feature set combinations" from the candidate BC list from which the list for the fallback BC (which includes capabilities of the same or lower level) is removed. The "candidate feature set combination" above includes feature set combinations for both NR and EUTRA-NR BCs, and may be obtained from feature set combinations of the UE-NR-Capabilities and UE-MRDC-Capabilities containers.
5. In addition, if the requested rat Type is eutra-nr and influential, featureSetCombinations are included in both containers: UE-MRDC-Capabilities and UE-NR-Capabilities. However, the feature set of NR is included only in UE-NR-Capabilities.

After the UE capability is configured, the terminal transmits a UE capability information message containing the UE capability to the base station. On the basis of the UE capability received from the terminal, the base station then performs appropriate scheduling and transmission/reception management for the terminal.

[CA/DC Related]

FIG. 18 is a diagram illustrating a wireless protocol structure of a base station and a terminal in a single cell, carrier aggregation, and dual connectivity situation according to one embodiment of the present disclosure.
With reference to FIG. 18, the wireless protocol of the next-generation mobile communication system consists of NR Service Data Adaptation Protocol (SDAP) S25 and S70, NR Packet Data Convergence Protocol (PDCP) S30 and S65, NR Radio Link Control (RLC) S35 and S60, and NR Medium Access Control (MAC) S40 and S55 in the terminal and NR base station, respectively.
Key features of NR SDAP S25 and S70 may include some of the following:

- Transfer of user plane data
- Mapping between a QoS flow and a DRB for both DL and UL
- Marking QoS flow ID in both DL and UL packets
- Function to map reflective QoS flow to DRB mapping for the UL SDAP PDUs.

For the SDAP layer device, the terminal may be configured by an RRC message for each PDCP layer device, by bearer, or by logical channel, whether to use the header of the SDAP layer device or whether to use the function of the SDAP layer device, and if the SDAP header is configured, the terminal may indicate the NAS QoS reflection configuration 1-bit indicator (NAS reflective QoS) and the AS QoS reflection configuration 1-bit indicator (AS reflective QoS) of the SDAP header to update or reconfigure the mapping information for the QoS flow and data bearer of the uplink and downlink. The SDAP header may include QoS flow ID information indicating QoS. The QoS information may be used as data processing priority, scheduling information, etc. to support a desired service.
The main functions of NR PDCP S30 and S65 may include some of the following functions.

- Header compression and decompression (ROHC only)
- Transfer of user data function
- In-sequence delivery of upper layer PDUs

- Out-of-sequence delivery of upper layer PDUs
- PDCP PDU reordering for reception
- Duplicate detection of lower layer SDUs
- Retransmission of PDCP SDUs
- Ciphering and deciphering functions
- Timer-based SDU discard in uplink

The reordering function of the NR PDCP device above refers to a function of reordering PDCP PDUs received from a lower layer in order on the basis of a PDCP sequence number (SN), and may include a function of transmitting data to an upper layer in the reordered order. Alternatively, the reordering function of the NR PDCP device may include a function of directly transmitting data without considering the order, a function of recording lost PDCP PDUs by reordering the order, a function of reporting a status of lost PDCP PDUs to the transmitting side, and a function of requesting retransmission of lost PDCP PDUs.

The main functions of NR RLC S35 and S60 may include some of the following functions.

- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection function
- Protocol error detection
- RLC SDU discard function
- RLC re-establishment function

In the above, the in-sequence delivery function of the NR RLC device means the function of sequentially delivering RLC SDUs received from a lower layer to an upper layer. The in-sequence delivery function of the NR RLC device may include a function of reassembling and delivering a single RLC SDU that is originally divided into a plurality of RLC SDUs and received, a function of rearranging received RLC PDUs on the basis of the RLC sequence number (SN) or the PDCP sequence number (SN), a function of recording lost RLC PDUs by rearranging the order, a function of reporting the status of lost RLC PDUs to the transmitting side, and a function of requesting retransmission of lost RLC PDUs. The in-sequence delivery function of the NR RLC device may include a function to sequentially deliver to the upper layer only the RLC SDUs up to the lost RLC SDU if there is a lost RLC SDU, or may include a function to sequentially deliver to the upper layer all RLC SDUs received before the timer starts if a predetermined timer has expired even if there is a lost RLC SDU. Alternatively, the in-sequence delivery function of the NR RLC device may include a function to sequentially deliver to the upper layer all RLC SDUs received up to the present if a predetermined timer has expired even if there is a lost RLC SDU. In addition, the RLC PDUs may be processed in the order they are received (in the order of arrival, regardless of the order of the sequence number) and delivered to the PDCP device regardless of the order (out-of-sequence delivery), or in the case of segments, the segments stored in the buffer or to be received later may be received, reconstructed into a single complete RLC PDU, processed, and delivered to the PDCP device. The above NR RLC layer may not include a concatenation function, and the function may be performed in the NR MAC layer or replaced with a multiplexing function of the NR MAC layer.

In the above, the out-of-sequence delivery function of the NR RLC device refers to the function of directly delivering RLC SDUs received from a lower layer to an upper layer regardless of the order, and may include a function of reassembling and delivering a plurality of RLC SDUs when one RLC SDU is originally received in a plurality of RLC SDUs, and may include a function of storing and arranging the RLC SN or PDCP SN of received RLC PDUs to record any lost RLC PDUs.

NR MAC S40 and S55 may be connected to a plurality of NR RLC layer devices configured in one terminal, and the main functions of NR MAC may include some of the following functions.

- Mapping between logical channels and transport channels
- Multiplexing /demultiplexing of MAC SDUs
- Scheduling information reporting function
- HARQ function (Error correction through HARQ)
- Priority handling between logical channels of one UE
- Priority handling between UEs by means of dynamic scheduling

- MBMS service identification function
- Transmission format selection function
- Padding function

The NR PHY layer S45 and S50 may perform operations of channel coding and modulating upper layer data, converting it into OFDM symbols and transmitting it over a wireless channel, or demodulating and channel decoding OFDM symbols received over a wireless channel and transmitting them to a higher layer.

The wireless protocol structure may have various detailed structures changed depending on the carrier (or cell) operation method. For example, if a base station transmits data to a terminal on the basis of a single carrier (or cell), the base station and the terminal use a protocol structure having a single structure for each layer, such as S00. On the other hand, if the base station transmits data to a terminal on the basis of carrier aggregation (CA) that uses a plurality of carriers in a single TRP, the base station and the terminal use a protocol structure that has a single structure up to RLC, but multiplexes the PHY layer through the MAC layer, such as S10. As another example, if the base station transmits data to a terminal on the basis of dual connectivity (DC) that uses a plurality of carriers in a plurality of TRPs, the base station and the terminal use a protocol structure that has a single structure up to RLC, but multiplexes the PHY layer through the MAC layer, such as S20.

With reference to the above-described PDCCH and beam configuration related descriptions, PDCCH repeated transmission is not supported in current Rel-15 and Rel-16 NR, making it difficult to achieve required reliability in scenarios requiring high reliability such as URLLC. The present disclosure provides a method for repeated PDCCH transmission through a plurality of transmission points (TRPs) to improve PDCCH reception reliability of a terminal. The specific method is specifically described in the following embodiments.

Hereinafter, embodiments of the present disclosure will be described in detail with reference to the attached drawings. The contents of the present disclosure may be applied to FDD and TDD systems. In the present disclosure below, upper signaling (or higher layer signaling) refers to a signal transmission method in which a base station transmits a signal to a terminal using a downlink data channel of a physical layer, or a terminal transmits a signal to a base station using an uplink data channel of a physical layer, and may also be referred to as RRC signaling, PDCP signaling, or medium access control (MAC) control element (MAC control element; MAC CE).

In the present disclosure below, when determining whether cooperative communication is applied, the terminal may use various methods, such as having a specific format for the PDCCH(s) that allocate the PDSCH to which cooperative communication is applied, or including a specific indicator that indicates whether cooperative communication is applied, or having scrambled a specific RNTI for the PDCCH(s) that allocate the PDSCH to which cooperative communication is applied, or assuming the application of cooperative communication in a specific section indicated by a higher layer. For the convenience of the following description, a case in which the terminal receives a PDSCH to which cooperative communication is applied on the basis of similar conditions as above will be referred to as an NC-JT case.

In the present disclosure below, determining the priority between A and B may be referred to in various ways, such as selecting a higher priority according to a predetermined priority rule and performing an action corresponding to it, or omitting or dropping an action for a lower priority.

In the following, the present disclosure explains the above examples through a number of embodiments, but these are not independent and one or more embodiments may be applied simultaneously or in combination.

[NC-JT related]

According to one embodiment of the present disclosure, Non-Coherent Joint Transmission (NC-JT) may be used for a terminal to receive PDSCH from a plurality of TRPs.

5G wireless communication system may support not only services requiring high transmission rates, but also services with very short transmission delays and services requiring high connection density. In a wireless communication network including a plurality of cells, transmission and reception points (TRPs), or beams, coordinated transmission between each cell, TRP, or/and beam may increase the strength of a signal received by a terminal or efficiently perform interference control between each cell, TRP, or/and beam, thereby satisfying various service requirements.

Joint Transmission (JT) is a representative transmission technology for the aforementioned cooperative communication, which increases the intensity or processing rate of a signal received by a terminal by transmitting a signal to a single terminal through a number of different cells, TRPs, or/and beams. At this time, the channel between each cell, TRP or/and beam and the terminal may have significantly different features, and in particular, in the case of Non-Coherent Joint Transmission (NC-JT) that supports non-coherent precoding among each cell, TRP or/and beam, individual precoding, MCS, resource allocation, TCI indication, etc. may be required depending on the channel features of each link between each cell, TRP or/and beam and the terminal.

The above-described NC-JT transmission may be applied to at least one channel among a downlink data channel (PDSCH: physical downlink shared channel), a downlink control channel (PDCCH: physical downlink control channel), an uplink data channel (PUSCH: physical uplink shared channel), and an uplink control channel (PUCCH: physical uplink control channel). When transmitting PDSCH, transmission information such as precoding, MCS, resource allocation, and TCI are indicated by DL DCI, and for NC-JT transmission, the transmission information must be independently indicated for each cell, TRP, or/and beam. This is a major factor that increases the payload required for DL DCI transmission, and this may adversely affect the reception performance of the PDCCH transmitting the DCI. Therefore, in order to support JT of PDSCH, it is necessary to carefully design a tradeoff between the amount of DCI information and the reception performance of control information.

FIG. 19 is a diagram illustrating an example of antenna port configuration and resource allocation for transmitting a PDSCH using cooperative communication in a wireless communication system according to one embodiment of the present disclosure.

With reference to FIG. 19, an example for PDSCH transmission is explained by the technique of Joint Transmission (JT), and examples for allocating radio resources by TRP are illustrated.

With reference to FIG. 19, an example N000 for Coherent Joint Transmission (C-JT) supporting coherent precoding between each cell, TRP or/and beam is illustrated.

In the case of C-JT, TRP A N005 and TRP B N010 transmit a single data (PDSCH) to the terminal N015, and joint precoding may be performed on a plurality of TRPs. This may mean that DMRS is transmitted through the same DMRS ports for TRP A N005 and TRP B N010 to transmit the same PDSCH. For example, TRP A N005 and TRP B N010 may each transmit DMRS to the terminal through DMRS port A and DMRS B. In this case, the terminal may receive one DCI information for receiving one PDSCH demodulated on the basis of the DMRS transmitted through DMRS port A and DMRS B.

FIG. 19 illustrates an example N020 of Non-Coherent Joint Transmission (NC-JT) supporting non-coherent precoding between each cell, TRP or/and beam for PDSCH transmission.

In the case of NC-JT, PDSCH is transmitted to the terminal N035 for each cell, TRP or/and beam, and individual precoding may be applied to each PDSCH. Each cell, TRP or/and beam may transmit different PDSCHs or different PDSCH layers to the terminal, thereby improving throughput compared to single cell, TRP or/and beam transmission. In addition, each cell, TRP or/and beam may repeatedly transmit the same PDSCH to the terminal, thereby improving reliability compared to single cell, TRP or/and beam transmission. For convenience of explanation, a cell, TRP or/and beam are collectively referred to as TRP hereinafter.

At this time, various radio resource allocations may be considered, such as when the frequency and time resources used by a plurality of TRPs for PDSCH transmission are all the same (N040), when the frequency and time resources used by a plurality of TRPs do not overlap at all (N045), and when some of the frequency and time resources used by a plurality of TRPs overlap (N050).

To support NC-JT, DCIs of various shapes, structures, and relationships may be considered to simultaneously allocate a plurality of PDSCHs to a single terminal.

FIG. 20 is a diagram illustrating an example of a configuration of downlink control information (DCI) for NC-JT in which each TRP transmits a different PDSCH or a different PDSCH layer to a terminal in a wireless communication system according to one embodiment of the present disclosure.

With reference to FIG. 20, case #1 (N100) is an example in which, in addition to a serving TRP (TRP#0) used for single PDSCH transmission, different (N-1) PDSCHs are transmitted from additional (N-1) TRPs (TRP#1 to TRP#(N-1)), and control information for PDSCHs transmitted from the additional (N-1) TRPs is transmitted independently from control information for PDSCHs transmitted from the serving TRP. That is, a terminal may obtain control information for PDSCHs transmitted from different TRPs (TRP#0 to TRP#(N-1)) through independent DCIs (DCI#0 to DCI#(N-1)). Formats between the independent DCIs may be the same or different, and payloads between the DCIs may also be the same or different. In the aforementioned case #1, each PDSCH control or allocation freedom may be fully guaranteed, but if each DCI is transmitted in different TRPs, coverage differences for each DCI may occur, which may deteriorate reception performance.

Case #2 (N105) illustrates an example in which different (N-1) PDSCHs are transmitted from additional (N-1) TRPs (TRP#1 to TRP#(N-1)) other than the serving TRP (TRP#0) used for single PDSCH transmission, control information (DCI) for PDSCHs of the additional (N-1) TRPs is transmitted respectively, and each of these DCIs is dependent on the control information for the PDSCH transmitted from the serving TRP.

For example, in the case of DCI#0, which is control information for a PDSCH transmitted from a serving TRP (TRP#0), it includes all information elements of DCI format 1_0, DCI format 1_1, and DCI format 1_2, but in the case of shortened DCI (hereinafter, sDCI ) (sDCI#0 to sDCI #(N-2)), which is control information for PDSCHs transmitted from cooperating TRPs (TRP#1 to TRP # (N-1)), it may include only some of the information elements of DCI format 1_0, DCI format 1_1, and DCI format 1_2. Therefore, in the case of sDCI, which transmits control information for PDSCHs transmitted from cooperating TRPs, since the payload is smaller than that of normal DCI (nDCI), which transmits PDSCH-related control information transmitted from a serving TRP, it is possible to include reserved bits compared to nDCI.

In the case #2 described above, the degree of freedom in controlling or allocating each PDSCH may be limited depending on the content of the information elements included in sDCI, but since the reception performance of sDCI is superior to that of nDCI, the probability of a difference in coverage by DCI may be reduced.

Case #3 (N110) illustrates an example in which different (N-1) PDSCHs are transmitted from additional (N-1) TRPs (TRP#1 to TRP#(N-1)) other than the serving TRP (TRP#0) used for single PDSCH transmission, one control information for the PDSCHs of the additional (N-1) TRPs is transmitted, and this DCI is dependent on the control information for the PDSCH transmitted from the serving TRP.

For example, in the case of DCI#0, which is control information for a PDSCH transmitted from a serving TRP (TRP#0), it includes all information elements of DCI format 1_0, DCI format 1_1, and DCI format 1_2, and in the case of control information for PDSCHs transmitted from cooperating TRPs (TRP#1 to TRP#(N-1)), it is possible to collect only some of the information elements of DCI format 1_0, DCI format 1_1, and DCI format 1_2 into one 'secondary' DCI (sDCI) and transmit them. For example, the sDCI may include at least one of HARQ-related information such as frequency domain resource assignment, time domain resource assignment, and MCS of cooperating TRPs. In addition, for information not included in sDCI, such as bandwidth part (BWP) indicator or carrier indicator, the DCI (DCI#0, normal DCI, nDCI ) of serving TRP may be followed.

Case #3 (N110) may limit the degree of freedom in controlling or allocating each PDSCH depending on the content of the information elements included in sDCI, but it is possible to control the reception performance of sDCI and reduce the complexity of DCI blind decoding of the terminal compared to case #1 (N100) or case #2 (N105).

Case #4 (N115) is an example of transmitting control information for PDSCHs transmitted from additional (N-1) TRPs (TRP#1 to TRP#(N-1)) other than a serving TRP (TRP#0) used for single PDSCH transmission, in the same DCI (Long DCI) as the control information for the PDSCHs transmitted from the serving TRP. That is, the terminal may obtain control information for PDSCHs transmitted from different TRPs (TRP#0 to TRP#(N-1)) through a single DCI. In case #4 (N115), the complexity of DCI blind decoding of the terminal may not increase, but the degree of freedom in PDSCH control or allocation may be low because the number of cooperative TRPs is limited because of the long DCI payload limitation.

In the following description and examples, sDCI may refer to various auxiliary DCIs such as shortened DCI, secondary DCI, or normal DCI (DCI format 1_0 to 1_1 described above) including PDSCH control information transmitted in cooperative TRP, and unless special restrictions are specified, the description may be applied similarly to the various auxiliary DCIs described above.

In the following description and examples, the cases of case #1 (N100), case #2 (N105), and case #3 (N110), where more than one DCI (PDCCH) is used to support NC-JT, may be classified as a plurality of PDCCH-based NC-JT, and the case of case #4 (N115), where a single DCI (PDCCH) is used to support NC-JT, may be classified as single PDCCH-based NC-JT. In PDSCH transmission on the basis of a plurality of PDCCH, a CORESET in which the DCI of the serving TRP (TRP#0) is scheduled and a CORESET in which the DCIs of the cooperating TRPs (TRP#1 to TRP#(N-1)) are scheduled may be distinguished. As a method for distinguishing the CORESETs, there may be a method of distinguishing through an upper layer indicator for each CORESET, a method of distinguishing through beam configuration for each CORESET, etc. In addition, in single PDCCH based NC-JT, instead of a single DCI scheduling a plurality of PDSCHs, a single PDSCH having a plurality of layers is scheduled, and the plurality of layers described above may be transmitted from a plurality of TRPs. In this case, the connection relationship between a layer and a TRP transmitting the corresponding layer may be indicated through a Transmission Configuration Indicator (TCI) indication for the layer.

In the embodiments of the present disclosure, "cooperative TRP" may be replaced with various terms such as "cooperative panel" or "cooperative beam" in actual application.

In the embodiments of the present disclosure, "when NC-JT is applied" may be interpreted in various ways depending on the situation, such as "when a terminal receives one or more PDSCHs simultaneously in one BWP," "when a terminal receives PDSCHs on the basis of two or more Transmission Configuration Indicator (TCI) indications simultaneously in one BWP," or "when a PDSCH received by the terminal is associated with one or more DMRS port groups," but is used as a single expression for convenience of explanation.

The wireless protocol architecture for NC-JT in the present disclosure may be used in various ways depending on the TRP deployment scenario. For example, when there is no or small backhaul delay between cooperative TRPs, a method (CA-like method) on the basis of a MAC layer multiplexing-based structure similar to S10 of FIG. x4 is possible. On the other hand, when the backhaul delay between cooperative TRPs is large enough not to be ignored (for example, when more than 2 ms is required for information exchange such as CSI, scheduling, and HARQ-ACK between cooperative TRPs), a method (DC-like method) is possible to secure delay-robust features by using an independent structure for each TRP starting from the RLC layer, similar to S20 of FIG. x4.

A terminal supporting C-JT / NC-JT may receive C-JT / NC-JT related parameters or configuration values from upper layer configuration, and set the RRC parameters of the terminal on the basis of the parameters. For upper layer configuration, the terminal may utilize UE capability parameters, for example, tci-StatePDSCH. Here, the UE capability parameters, for example, tci-StatePDSCH, may define TCI states for the purpose of PDSCH transmission, and the number of TCI states may be configured to 4, 8, 16, 32, 64, and 128 in FR1, and to 64 and 128 in FR2, and among the configured numbers, up to 8 states that may be indicated with 3 bits of the TCI field of DCI through the MAC CE message may be configured. The maximum value 128 means the value indicated by maxNumberConfiguredTCIstatesPerCC in the tci-StatePDSCH parameter included in the capability signaling of the terminal. In this way, a series of configuration processes from upper layer configuration to MAC CE configuration may be applied to a beamforming indication or beamforming change command for at least one PDSCH in one TRP.

[Multi-DCI based Multi-TRP]

As one embodiment of the present disclosure, a multi-DCI based multi-TRP transmission method is described. The multi-DCI based multi-TRP transmission method may configure a downlink control channel for NC-JT transmission on the basis of a multi-PDCCH.

In NC-JT on the basis of a plurality of PDCCHs, when transmitting DCI for the PDSCH schedule of each TRP, a CORESET or search space may be distinguished for each TRP. The CORESET or search space for each TRP may be configured as in at least one of the following cases.

* Configuration of upper layer index for each CORESET: The CORESET configuration information configured as an upper layer may include an index value, and the TRP transmitting the PDCCH in the corresponding CORESET may be distinguished by the configured index value for each CORESET. That is, in a set of CORESETs with the same upper layer index value, it may be considered that the same TRP transmits the PDCCH or that a PDCCH scheduling the PDSCH of the same TRP is transmitted. The above-described index for each CORESET may be named as CORESETPoolIndex, and for CORESETs configured with the same CORESETPoolIndex value, it may be considered that the PDCCH is transmitted from the same TRP. In the case of a CORESET for which the CORESETPoolIndex value is not configured, it may be considered that the default value of CORESETPoolIndex is configured, and the above-described default value may be 0.

    - In the present disclosure, if the number of types of CORESETPoolIndex of each of the plurality of CORESETs included in the higher layer signaling PDCCH-Config exceeds 1, i.e., if each CORESET has a different CORESETPoolIndex, the terminal may consider that the base station can use the multi-DCI based multi-TRP transmission method.
    - In contrast, in the present disclosure, if each of a plurality of CORESETs included in the higher layer signaling PDCCH-Config has only one type of CORESETPoolIndex, that is, if all CORESETs have the same CORESETPoolIndex of 0 or 1, the terminal may assume that the base station transmits using single-TRP without using the multi-DCI based multi-TRP transmission method.

* A plurality of PDCCH-Config configurations: A plurality of PDCCH-Configs are configured within one BWP, and each PDCCH-Config may include PDCCH configurations for each TRP. That is, a list of CORESETs for each TRP and/or a list of search spaces for each TRP may be configured in one PDCCH-Config, and one or more CORESETs and one or more search spaces included in one PDCCH-Config may be considered as corresponding to a specific TRP.
* CORESET beam/beam group configuration: The TRP corresponding to the CORESET may be distinguished through the beam or beam group configured for each CORESET. For example, if the same TCI state is configured for a plurality of CORESETs, the CORESETs may be considered to be transmitted through the same TRP, or the PDCCH that schedules the PDSCH of the same TRP in the CORESET may be considered to be transmitted.
* Search space beam/beam group configuration: A beam or beam group is configured for each search space, through which TRPs for each search space may be distinguished. For example, if the same beam/beam group or TCI state is configured for a plurality of search spaces, it may be considered that the same TRP transmits PDCCH in the corresponding search space, or it may be considered that a PDCCH that schedules the PDSCH of the same TRP is transmitted in the corresponding search space.

By dividing the CORESET or search space by TRP as described above, PDSCH and HARQ-ACK information classification for each TRP is possible, which enables independent HARQ-ACK codebook generation and independent PUCCH resource use for each TRP.

The above configuration may be independent per cell or per BWP. For example, two different CORESETPoolIndex values may be configured in a PCellset, while a CORESETPoolIndex value may not be configured in a specific Scell. In this case, it may be considered that NC-JT transmission is configured on the PCell, while NC-JT transmission is not configured on the SCell for which the CORESETPoolIndex value is not configured.

The PDSCH TCI state activation/deactivation MAC-CE applicable to the multi-DCI based multi-TRP transmission method may follow the FIG. 16. If the terminal does not have CORESETPoolIndex configured for each of all CORESETs in the higher layer signaling PDCCH-Config, the terminal may ignore the CORESET Pool ID field 16-55 in the corresponding MAC-CE 16-50. If the terminal can support the multi-DCI based multi-TRP transmission method, i.e., if the terminal has different CORESETPoolIndex for each CORESET in the higher layer signaling PDCCH-Config, the terminal may activate the TCI state in the DCI included in the PDCCH transmitted in the CORESETs having the same CORESETPoolIndex value as the CORESET Pool ID field 16-55 value in the corresponding MAC-CE 16-50. For example, if the value of the CORESET Pool ID field 16-55 in the corresponding MAC-CE 16-50 is 0, the TCI state in the DCI included in the PDCCH transmitted from CORESETs with CORESETPoolIndex of 0 may follow the activation information of the corresponding MAC-CE.

When a terminal is configured to use a multi-DCI based multi-TRP transmission method from a base station, that is, when each of a plurality of CORESETs included in PDCCH-Config, which is a higher layer signaling, has more than one type of CORESETPoolIndex or when each CORESET has a different CORESETPoolIndex, the terminal may know that the following restrictions exist for PDSCHs scheduled from PDCCHs within each CORESET having two different CORESETPoolIndexes.

1) If the PDSCHs indicated from the PDCCHs within each CORESET having two different CORESETPoolIndexes completely or partially overlap, the TCI states indicated from each PDCCH may be applied to different CDM groups, respectively. That is, two or more TCI states may not be applied to one CDM group.
2) The terminal may expect that the actual number of front-loaded DMRS symbols, the actual number of additional DMRS symbols, the positions of actual DMRS symbols, and the DMRS type of each PDSCH will not be different when the PDSCHs indicated from the PDCCHs within each CORESET having two different CORESETPoolIndexes completely or partially overlap.
3) The terminal may expect that the bandwidth part indicated by the PDCCH within each CORESET having two different CORESETPoolIndexes will be the same and that the subcarrier spacing will also be the same.
4) The terminal may expect that each PDCCH will fully include information about the PDSCH scheduled from the PDCCH within each CORESET having two different CORESETPoolIndexes.

[Single-DCI based Multi-TRP]

As one embodiment of the present disclosure, a single-DCI based multi-TRP transmission method is described. The single-DCI based multi-TRP transmission method may configure a downlink control channel for NC-JT transmission on the basis of a single-PDCCH.

In a single DCI based multi-TRP transmission method, PDSCHs transmitted by a plurality of TRPs may be scheduled with one DCI. At this time, the number of TCI states may be used as a method of indicating the number of TRPs transmitting the corresponding PDSCH. That is, if the number of TCI states indicated in the DCI scheduling the PDSCH is 2, it may be considered as a single PDCCH based NC-JT transmission, and if the number of TCI states is 1, it may be considered as a single-TRP transmission. The TCI states indicated in the above DCI may correspond to one or both of the TCI states activated by MAC-CE. When the TCI states of the DCI correspond to two TCI states activated by MAC-CE, a correspondence relationship between the TCI codepoint indicated in the DCI and the TCI states activated by MAC-CE may be established, and it may be when there are two TCI states activated by MAC-CE corresponding to the TCI codepoint.

As another example, if at least one codepoint among all codepoints in the TCI state field in the DCI indicates two TCI states, the terminal may consider that the BS can transmit on the basis of the single-DCI based multi-TRP method. In this case, at least one codepoint indicating two TCI states in the TCI state field may be activated through the enhanced PDSCH TCI state activation/deactivation MAC-CE.

FIG. 21 is a diagram illustrating the structure of the enhanced PDSCH TCI state activation/deactivation MAC-CE. The meaning of each field in the MAC CE and the values that may be configured for each field are as follows.

- **Serving Cell ID:** This field indicates the identity of the Serving Cell for which the MAC CE applies. The length of the field is 5 bits. If the indicated Serving Cell is configured as part of a *simultaneousTCI-UpdateList1* or *simultaneousTCI-UpdateList2* as specified in TS 38.331 [5], this MAC CE applies to all the Serving Cells configured in the set *simultaneousTCI-UpdateList1* or *simultaneousTCI-UpdateList2,* respectively;
- **BWP ID:** This field indicates a DL BWP for which the MAC CE applies as the codepoint of the DCI bandwidth part indicator field as specified in TS 38.212 [9]. The length of the BWP ID field is 2 bits;
- **$C_i$**: This field indicates whether the octet containing TCI state $ID_{i,2}$ is present. If this field is set to "1", the octet containing TCI state $ID_{i,2}$ is present. If this field is set to "0", the octet containing TCI state $ID_{i,2}$ is not present;

(continued)

| |
|---|
| - **TCI state ID$_{i,j}$:** This field indicates the TCI state identified by TCI-StateId as specified in TS 38.331 [5], where i is the index of the codepoint of the DCI Transmission configuration indication field as specified in TS 38.212 [9] and TCI state ID$_{i,j}$ denotes the j-th TCI state indicated for the i-th codepoint in the DCI Transmission Configuration Indication field. The TCI codepoint to which the TCI States are mapped is determined by its ordinal position among all the TCI codepoints with sets of TCI state ID$_{i,j}$ fields, i.e. the first TCI codepoint with TCI state ID$_{0,1}$ and TCI state ID$_{0,2}$ shall be mapped to the codepoint value 0, the second TCI codepoint with TCI state ID$_{1,1}$ and TCI state ID$_{1,2}$ shall be mapped to the codepoint value 1 and so on. The TCI state ID$_{i,2}$ is optional based on the indication of the Ci field. The maximum number of activated TCI codepoint is 8 and the maximum number of TCI states mapped to a TCI codepoint is 2.<br>- **R**: Reserved bit, set to "0". |

In FIG. 21, if the value of the $C_0$ field 21-05 is 1, the MAC-CE may include the TCI state ID$_{0,2}$ field 21-15 in addition to the TCI state ID$_{0,1}$ field 21-10. This means that the TCI state ID$_{0,1}$ and TCI state ID$_{0,2}$ are activated for the 0th codepoint of the TCI state field included in the DCI, and if the base station indicates the corresponding codepoint to the terminal, the terminal may be indicated with two TCI states. If the value of the $C_0$ field 21-05 is 0, the MAC-CE cannot include the TCI state ID$_{0,2}$ field 21-15, and this means that one TCI state corresponding to the TCI state ID$_{0,1}$ is activated for the 0th codepoint of the TCI state field included in the DCI.

The above configuration may be independent per cell or per BWP. For example, a PCell may have at most two activated TCI states corresponding to one TCI codepoint, while a specific SCell may have at most one activated TCI state corresponding to one TCI codepoint. In this case, it may be considered that the PCell is configured for NC-JT transmission, while the above-mentioned SCell is not configured for NC-JT transmission.

[Single-DCI based Multi-TRP PDSCH Repetitive Transmission Technique (TDM/FDM/SDM) Distinction Method]

Next, a method for distinguishing single-DCI based multi-TRP PDSCH repetition transmission techniques is described. A terminal may be indicated to use different single-DCI based multi-TRP PDSCH repetition transmission techniques (e.g., TDM, FDM, SDM) depending on a value indicated by a DCI field from a base station and a higher layer signaling configuration. Table 31 below illustrates a method for distinguishing between single or a plurality of TRP based techniques indicated to a terminal depending on a value of a specific DCI field and a higher layer signaling configuration.

[Table 31]

| Combination | The number of TCI state | The numer of CDM group | repetitionNumber configuration and indication condition | repetitionScheme configuration related | transmission scheme indicated for UE |
|---|---|---|---|---|---|
| 1 | 1 | ≥1 | Condition 2 | Not configured | Single-TRP |
| 2 | 1 | ≥1 | Condition 2 | Configured | Single-TRP |
| 3 | 1 | ≥1 | Condition 3 | Configured | Single-TRP |
| 4 | 1 | 1 | Condition 1 | Configured or not configured | Single-TRP TDM scheme B |
| 5 | 2 | 2 | Condition 2 | Not configured | Multi-TRP SDM |
| 6 | 2 | 2 | Condition 3 | Not configured | Multi-TRP SDM |
| 7 | 2 | 2 | Condition 3 | Configured | Multi-TRP SDM |
| 8 | 2 | 2 | Condition 3 | Configured | Multi-TRP FDM scheme A/FDM scheme B/TDM scheme A |
| 9 | 2 | 2 | Condition 1 | Not configured | Multi-TRP TDM scheme B |

In the Table 31, each column may be explained as follows.

- Number of TCI states (2 columns): This refers to the number of TCI states indicated by the TCI state field in the DCI, and may be 1 or 2.
- Number of CDM groups (column 3): This indicates the number of different CDM groups of DMRS ports indicated by the antenna port field in the DCI. It may be 1, 2, or 3.
- repetitionNumber configuration and indication conditions (column 4): There may be three conditions depending on whether repetitionNumber is configured for all TDRA entries that may be indicated by the Time Domain Resource Allocation field in DCI and whether the actually indicated TDRA entry has repetitionNumber configuration.

  ■ Condition 1: At least one of all TDRA entries that may be indicated by the Time Domain Resource Allocation field includes a configuration for repetitionNumber, and the TDRA entry indicated by the Time Domain Resource Allocation field in the DCI includes a configuration for repetitionNumber greater than 1.
  ■ Condition 2: At least one of all TDRA entries that may be indicated by the Time Domain Resource Allocation field includes a configuration for repetitionNumber, and the TDRA entry indicated by the Time Domain Resource Allocation field in the DCI does not include a configuration for repetitionNumber.
  ■ Condition 3: All TDRA entries that may be indicated by the Time Domain Resource Allocation field do not include a configuration for repetitionNumber.

- repetitionScheme configuration related (column 5): This means whether the higher layer signaling repetitionScheme is configured. The upper layer singnaling repetitionScheme may be configured to one of ' tdmSchemeA', ' fdmSchemeA', or ' fdmSchemeB'.
- Transmission technique indicated to the terminal (column 6): This refers to single or a plurality of TRP techniques indicated according to each combination (column 1) expressed in the Table 31.

  ■ Single-TRP: This refers to a single TRP-based PDSCH transmission. If the terminal has configured pdsch-AggegationFactor in the higher layer signaling PDSCH-config, the terminal may be scheduled for the configured number of repeated single TRP-based PDSCH transmissions. Otherwise, the terminal may be scheduled for a single TRP-based PDSCH single transmission.
  ■ Single-TRP TDM scheme B: This refers to PDSCH repetitive transmission on the basis of time resource division between single TRP-based slots. According to Condition 1 related to repetitionNumber described above, the terminal repetitively transmits PDSCH in the time dimension as many times as the number of slots whose repetitionNumber is greater than 1 configured in the TDRA entry indicated by the Time Domain Resource Allocation field. At this time, for each slot equal to the repetitionNumber number, the start symbol and symbol length of the PDSCH indicated by the TDRA entry are applied equally, and the same TCI state is applied to each PDSCH repetitive transmission. This technique is similar to the slot aggregation method in that it performs PDSCH repetitive transmission between slots on time resources, but it differs from slot aggregation in that it can dynamically determine whether to indicate repetitive transmission on the basis of the Time Domain Resource Allocation field in the DCI.
  ■ Multi-TRP SDM: This refers to a multi-TRP based spatial resource division PDSCH transmission method. This is a method of receiving by dividing layers from each TRP, and although it is not a repetitive transmission method, it may increase the reliability of PDSCH transmission in that it can transmit by lowering the coding rate by increasing the number of layers. The terminal may receive PDSCH by applying two TCI states indicated through the TCI state field in the DCI for each of the two CDM groups indicated by the base station.
  ■ Multi-TRP FDM scheme A: This refers to a multi-TRP based frequency resource division PDSCH transmission method. It has one PDSCH transmission position (occasion), so it is not repetitive transmission like multi-TRP SDM, but it is a technique that can transmit with high reliability by increasing the frequency resource amount and lowering the coding rate. Multi-TRP FDM scheme A may apply two TCI states indicated through the TCI state field in the DCI to non-overlapping frequency resources. If the PRB bundling size is determined as wideband, the terminal applies the first TCI state to the first ceil (N/2) RBs when the number of RBs indicated by the Frequency Domain Resource Allocation field is N, and applies the second TCI state to the remaining floor (N/2) RBs. Here, ceil (.) and floor (.) are operators indicating round up and down for the first decimal place. If the PRB bundling size is determined as 2 or 4, even-numbered PRGs receive by applying the first TCI state, and odd-numbered PRGs receive by applying the second TCI state.
  ■ Multi-TRP FDM scheme B: This refers to a multi-TRP based frequency resource division PDSCH repeated transmission method, and since it has two PDSCH transmission positions (occasions), PDSCH may be repeatedly transmitted at each position. Multi-TRP FDM scheme B, like A, may apply two TCI states indicated through the TCI state field in the DCI to non-overlapping frequency resources. If the PRB bundling size is determined as wideband, the terminal applies the first TCI state to the first ceil (N/2) RBs when the number of RBs indicated by the Frequency Domain Resource Allocation field is N, and applies the second TCI state to the remaining floor (N/2) RBs and receives them. Here, ceil (.) and floor (.) are operators indicating round up and down for the first decimal place. If the PRB bundling size is determined as 2 or 4, even-numbered PRGs receive by applying the first TCI state, and odd-numbered PRGs receive by applying the second TCI state.

■ Multi-TRP TDM scheme A: This refers to a PDSCH repeated transmission method within a multi-TRP based time resource division slot. The terminal has two PDSCH transmission positions (occasions) within one slot, and the first reception position may be determined on the basis of the start symbol and symbol length of the PDSCH indicated through the Time Domain Resource Allocation field in the DCI. The starting symbol of the second reception position of PDSCH may be the position to which a symbol offset equal to the higher layer signaling StartingSymbolOffsetK is applied from the last symbol of the first transmission position, and the transmission position may be determined on the basis of the symbol length specified from this. If the higher layer signaling StartingSymbolOffsetK is not configured, the symbol offset may be considered to be 0.

■ Multi-TRP TDM scheme B: This refers to a PDSCH repetition transmission method between time resource division slots on the basis of multi-TRP. The terminal has one PDSCH transmission position (occasion) in one slot, and may receive repeated transmission on the basis of the start symbol and symbol length of the same PDSCH for the number of slots indicated by the repetitionNumber through the Time Domain Resource Allocation field in the DCI. If the repetitionNumber is 2, the terminal may receive the PDSCH repetition transmission of the first and second slots by applying the first and second TCI states, respectively. If the repetitionNumber is greater than 2, the terminal may receive the PDSCH repetition transmission of the first and second slots by applying the first and second TCI states, which are higher layer signalings. Depending on how tciMapping is configured, different TCI state application methods may be used. If tciMapping is configured to cyclicMapping, the first and second TCI states are applied to the first and second PDSCH transmission positions respectively, and this TCI state application method is applied to the remaining PDSCH transmission positions equally. If tciMapping is configured to sequentialMapping, the first TCI state is applied to the first and second PDSCH transmission positions, the second TCI state is applied to the third and fourth PDSCH transmission positions, and this TCI state application method is applied to the remaining PDSCH transmission positions equally.

[RLM RS related]

Next, the method of selecting or determining RLM RS (Radio Link Monitoring Reference Signal) when RLM RS is configured or not configured will be described. The terminal may receive a set of RLM RSs for each downlink bandwidth part of SpCell from the base station through RadioLinkMonitoringRS in RadioLinkMonitoringConfig, which is higher layer signaling. The specific higher layer signaling structure may follow Table 32 below.

[Table 32]

```
RadioLinkMonitoringConfig ::= SEQUENCE {
    failureDetectionResourcesToAddModList   SEQUENCE (SIZE(1..maxNrofFailureDetectionResources)) OF
RadioLinkMonitoringRS    OPTIONAL, -- Need N
    failureDetectionResourcesToReleaseList SEQUENCE (SIZE(1..maxNrofFailureDetectionResources)) OF
RadioLinkMonitoringRS-Id OPTIONAL, -- Need N
    beamFailureInstanceMaxCount ENUMERATED {n1, n2, n3, n4, n5, n6, n8, n10}
OPTIONAL, -- Need R
    beamFailureDetectionTimer ENUMERATED {pbfd1, pbfd2, pbfd3, pbfd4, pbfd5, pbfd6, pbfd8, pbfd10}
            OPTIONAL, -- Need R
...
}


RadioLinkMonitoringRS ::= SEQUENCE {
    radioLinkMonitoringRS-Id   RadioLinkMonitoringRS-Id,
    purpose              ENUMERATED {beamFailure, rlf, both},
    detectionResource          CHOICE {
        ssb-Index          SSB-Index,
        csi-RS-Index       NZP-CSI-RS-ResourceId
    },
...
}
```

Table 33 below may represent the number of RLM RSs that may be configured or selected for specific purposes according to the maximum number of SSBs per half frame ($L_{max}$). As shown in Table 33 below, depending on the $L_{max}$ value, $N_{LR-RLM}$ RSs may be used for link recovery or radio link monitoring, and among the $N_{LR-RLM}$ RSs, $N_{RLM}$ RSs may be used for radio link monitoring.

[Table 33]

**Table 5-1: $N_{LR-RLM}$ and $N_{RLM}$ as a function of maximum number $L_{max}$ of SS/PBCH blocks per half frame**

| $L_{max}$ | $N_{LR-RLM}$ | $N_{RLM}$ |
|---|---|---|
| 4 | 2 | 2 |
| 8 | 6 | 4 |
| 64 | 8 | 8 |

If the terminal has not received RadioLinkMonitoringRS configured through the higher layer signaling, and the terminal has received the TCI state configured in the control resource set for receiving PDCCH, and at least one CSI-RS is included in the TCI state, the RLM RS may be selected according to the following RLM RS selection methods.

- RLM RS Selection Method 1) If an activated TCI state to be used for PDCCH reception has one reference RS (i.e., one activated TCI state has only one of QCL-TypeA, B, or C), the terminal may select the reference RS of the activated TCI state to be used for PDCCH reception as an RLM RS.
- RLM RS selection method 2) If an activated TCI state to be used for PDCCH reception has two reference RSs (i.e., one activated TCI state has one of QCL-TypeA, B, or C and additionally has QCL-TypeD), the terminal may select the reference RS of QCL-TypeD as the RLM-RS. The terminal does not expect that two QCL-TypeDs are configured in one activated TCI state.
- RLM RS selection method 3) The terminal does not expect an aperiodic or semi-persistent RS to be selected as the RLM RS.
- RLM RS selection method 4) In the case of $L_{max}$ = 4, the terminal may select $N_{RLM}$ (since $L_{max}$ is 4, 2 may be selected) RSs. The selection for the RLM RS is performed from among the reference RSs of the TCI state configured in the control resource set for PDCCH reception on the basis of the RLM RS selection methods 1 to 3, and the RLM RS selection is performed starting from the reference RS of the TCI state configured in the control resource set connected to the search space with the shortest period by determining that the search space to which the control resource set is connected has a short period as a high priority. If there are a plurality of control resource sets connected to a plurality of search spaces having the same period, the RLM RS selection is performed starting from the reference RS of the TCI state configured to a high control resource set index.

FIG. 22 is a diagram illustrating an RLM RS selection process according to one embodiment of the present disclosure. The diagram illustrates control resource sets #1 to #3 22-05 to 22-07 connected to search spaces #1 to #4 22-01 to 22-04 having different periods within an activated downlink bandwidth part, and reference RSs of TCI states configured for each control resource set. On the basis of the RLM RS selection method 4, RLM RS selection uses the TCI state configured for the control resource set connected to the search space with the shortest period, but since the periods of search space #1 22-01 and search space #3 22-03 are the same, the reference RS of the TCI state configured for the control resource set #2 having a higher index among control resource set #1 22-05 and control resource set #2 22-06 connected to each search space may be used as the highest priority in RLM RS selection. In addition, since the TCI state configured in the control resource set #2 has only QCL-TypeA and the reference RS is a periodic RS, P CSI-RS#2 22-10 may be selected as the RLM RS first by the RLM RS selection methods 1 and 3. Next, among the reference RSs of the TCI state configured in the control resource set #1 having priority, the reference RS of QCL-TypeD may be a selection candidate by the RLM RS selection method 2, but since the RS is a semi-persistent RS 22-09, it is not selected as the RLM RS by the RLM RS selection method 3. Therefore, the reference RSs of the TCI state configured in the control resource set #3 may be considered in the following priority, and the reference RS of QCL-TypeD may be a selection candidate by the RLM RS selection method 2, and since the corresponding reference RS is a periodic RS, P CSI-RS#4 22-12 may be selected as the second RLM RS by the RLM RS selection method 3. Therefore, the finally selected RLM RSs may be P CSI-RS#2 and P CSI-RS#4 22-13.

In the following description of the present disclosure, for convenience, cells, transmission points, panels, beams, and/or transmission directions, which may be distinguished through upper layer/L1 parameters such as TCI state or spatial relation information, or indicators such as cell ID, TRP ID, and panel ID, may be uniformly described as TRP (transmission reception point), beam, or TCI state. Therefore, in actual application, TRP, beam, or TCI state may be appropriately replaced with one of the above terms.

In the present disclosure below, when determining whether cooperative communication is applied, the terminal may use various methods, such as having a specific format for the PDCCH(s) that allocate the PDSCH to which cooperative communication is applied, or including a specific indicator that indicates whether cooperative communication is applied, or having scrambled a specific RNTI for the PDCCH(s) that allocate the PDSCH to which cooperative communication is applied, or assuming the application of cooperative communication in a specific section indicated by a higher layer. For the convenience of explanation herein, a case in which the terminal receives a PDSCH to which cooperative communication is applied on the basis of similar conditions as above will be referred to as an NC-JT case.

Hereinafter, embodiments of the present disclosure will be described in detail with reference to the attached drawings. Hereinafter, a base station is a subject that performs resource allocation of a terminal, and may be at least one of a gNode B, a gNB, an eNode B, a Node B, a Base Station (BS), a wireless access unit, a base station controller, or a node on a network. The terminal may include a User Equipment (UE), a Mobile Station (MS), a cellular phone, a smartphone, a computer, or a multimedia system capable of performing a communication function. Hereinafter, embodiments of the present disclosure will be described using a 5G system as an example, but embodiments of the present disclosure may be applied to other communication systems having similar technical backgrounds or channel types. For example, LTE or LTE-A mobile communication and mobile communication technologies developed after 5G may be included here. Therefore, embodiments of the present disclosure may be applied to other communication systems with some modifications without significantly departing from the scope of the present disclosure as judged by a person skilled in the art. The contents of the present disclosure may be applied to FDD and TDD systems.

In addition, when describing the present disclosure, if it is judged that a specific description of a related function or configuration may unnecessarily obscure the gist of the present disclosure, the detailed description will be omitted. In addition, the terms described below are terms defined in consideration of the functions in the present disclosure, and these may vary depending on the intention or custom of the user or operator. Therefore, the definitions should be made on the basis of the contents throughout this specification.

In describing the present disclosure below, higher layer signaling may be signaling corresponding to at least one or a combination of one or more of the following signaling.

- Master Information Block (MIB)
- System Information Block (SIB) or SIB

- Radio Resource Control (RRC)
- Medium Access Control (MAC) Control Element (CE)

In addition, L1 signaling may be signaling corresponding to at least one or a combination of one or more of the following physical layer channels or signaling methods.

- Physical Downlink Control Channel (PDCCH)
- Downlink Control Information (DCI)
- UE-specific DCI
- Group common DCI
- Common DCI
- Scheduling DCI (DCI used for scheduling downlink or uplink data, for example)
- Non-scheduled DCI (e.g. DCI not intended for scheduling downlink or uplink data)

- - Physical Uplink Control Channel (PUCCH)

- Uplink Control Information (UCI)

In the present disclosure below, determining the priority between A and B may be referred to in various ways, such as selecting a higher priority according to a predetermined priority rule and performing an action corresponding to it, or omitting or dropping an action for a lower priority.
The term "slot" used in the present disclosure below is a general term that may refer to a specific time unit corresponding to a Transmit Time Interval (TTI), and specifically may mean a slot used in a 5G NR system, or a slot or subframe used in a 4G LTE system.
In the following, the present disclosure explains the above examples through a number of embodiments, but these are not independent and one or more embodiments may be applied simultaneously or in combination.

<First embodiment: Single TCI state activation and indication method on the basis of unified TCI scheme>

As one embodiment of the present disclosure, a method for indicating and activating a single TCI state on the basis of a unified TCI scheme is described. The unified TCI scheme may refer to a scheme for managing transmission and reception beam management methods, which were distinguished into a TCI state scheme used in downlink reception of a terminal and a spatial relation information scheme used in uplink transmission in existing Rel-15/16, by integrating them into a TCI state. Accordingly, when a terminal is indicated by a base station to use the unified TCI scheme, the terminal may perform beam management using the TCI state even for uplink transmission. If the terminal has configured a TCI-State including tci-stateId-r17 through higher layer signaling from the base station, the terminal may perform an operation on the basis of the unified TCI scheme by using the corresponding TCI-State. The TCI-State may exist in two forms, a joint TCI state or a separate TCI state.
The first form is a joint TCI state, and the terminal may be indicated on both TCI states to be applied to uplink transmission and downlink reception through a single TCI-State from the base station. If the terminal is indicated on a TCI-State on the basis of the joint TCI state, the terminal may be indicated on a parameter to be used for downlink channel estimation using an RS corresponding to qcl-Type1 in the TCI-State on the basis of the joint TCI state, and a parameter to be used as a downlink reception beam or reception filter using an RS corresponding to qcl-Type2. If the terminal is indicated on a TCI-State on the basis of the joint TCI state, the terminal may be indicated on a parameter to be used as an uplink transmission beam or transmission filter using an RS corresponding to qcl-Type2 in the joint DL/UL TCI state based TCI-State. In this case, if the terminal is indicated on the joint TCI state, the terminal may apply the same beam to both uplink transmission and downlink reception.
The second form is a separate TCI state, and the terminal may be individually indicated by the base station on the UL TCI state to be applied to uplink transmission and the DL TCI state to be applied to downlink reception. If the terminal is indicated on the UL TCI state, the terminal may be indicated on a parameter to be used as an uplink transmission beam or a transmission filter by using the reference RS or source RS configured in the corresponding UL TCI state. If the terminal is indicated on the DL TCI state, the terminal may be indicated on a parameter to be used for downlink channel estimation by using the RS corresponding to qcl-Type1 configured in the corresponding DL TCI state, and a parameter to be used as a downlink reception beam or a reception filter by using the RS corresponding to qcl-Type2.
If the terminal is indicated on both the DL TCI state and the UL TCI state, the terminal may be indicated on a parameter to be used as an uplink transmission beam or a transmission filter by using the reference RS or source RS configured in the corresponding UL TCI state, and may be indicated on a parameter to be used for downlink channel estimation by using the RS corresponding to qcl-Type1 configured in the corresponding DL TCI state, and may be indicated on a parameter to be used as a downlink reception beam or a reception filter by using the RS corresponding to qcl-Type2. In this case, if the reference RS or source RS configured in the DL TCI state and UL TCI state to which the terminal is indicated are different, the terminal may individually apply beams to uplink transmission and downlink reception, respectively, on the basis of the indicated UL TCI state and DL TCI state.

The terminal may receive up to 128 joint TCI states from a base station for each bandwidth part in a specific cell through higher layer signaling, and among separate TCI states, a maximum of 64 or 128 DL TCI states may be configured for each bandwidth part in a specific cell through higher layer signaling through a UE capability report. Among separate TCI states, the DL TCI state and the joint TCI state may use the same higher layer signaling structure. For example, if 128 joint TCI states are configured and 64 DL TCI states are configured among separate TCI states, the 64 DL TCI states may be included in the 128 joint TCI states.

Among separate TCI states, the UL TCI state may be configured with up to 32 or 64 higher layer signaling for each specific bandwidth part within a specific cell through the UE capability report. Just like the relationship between the DL TCI state and the joint TCI state among separate TCI states, the UL TCI state and the joint TCI state among separate TCI may also use the same higher layer signaling structure, and the UL TCI state among separate TCI may use different higher layer signaling structures from the joint TCI state and the DL TCI state among separate TCI states. The use of different or identical higher layer signaling structures like this may be defined in the specification, or may be distinguished through another higher layer signaling configured by the base station on the basis of the UE capability report that includes information on whether the terminal may support which of the two usage methods.

The terminal may receive transmit/receive beam related indications in a unified TCI scheme by using one of the joint TCI state and separate TCI state configured by the base station. The terminal may distinguish between using one of the joint TCI state and separate TCI state by receiving the configuration through higher layer signaling from the base station.

The terminal receives indications related to transmission and reception beams using one of the joint TCI state and separate TCI state selected through higher layer signaling. At this time, there may be two indication methods from the base station, a MAC-CE-based indication method and a MAC-CE-based activation and DCI-based indication method.

If the terminal receives an indication related to transmit/receive beams using the joint TCI state method configured through higher layer signaling, the terminal may perform a transmit/receive beam application operation by receiving a MAC-CE indicating the joint TCI state from the base station. In addition, the base station may schedule the terminal to receive a PDSCH including the corresponding MAC-CE through a PDCCH. If the joint TCI state included in the MAC-CE is one, the terminal may determine the uplink transmit beam or transmit filter and the downlink receive beam or receive filter using the joint TCI state indicated by the MAC-CE starting from 3 ms after transmitting a PUCCH including HARQ-ACK information indicating whether reception of the PDSCH including the corresponding MAC-CE was successful. If there are two or more joint TCI states included in the MAC-CE, the terminal may activate the plurality of joint TCI states indicated by the MAC-CE for each code point of the TCI state field of the DCI (e.g., DCI format 1_1 or 1_2) starting from 3 ms after the PUCCH transmission including the HARQ-ACK information indicating the successful reception of the PDSCH including the MAC-CE. That is, the plurality of joint TCI states indicated by the MAC-CE are activated, the activated TCI states are mapped to each code point of the TCI state field of the DCI, and the terminal may apply the beam indicated by the code point of the TCI state field included in the DCI. Alternatively, in addition to the TCI state activated by the MAC-CE, the TCI state may be activated on the basis of the TCI state field included in the DCI, and the terminal may apply the indicated TCI state among the activated TCI states. In addition, the above contents may be equally applied to all embodiments of the present disclosure.

If a terminal receives an indication related to a transmit/receive beam using a separate TCI state method configured through higher layer signaling, the terminal may receive a MAC-CE indicating a separate TCI state from a base station and perform a transmit/receive beam application operation. In addition, the base station may schedule the terminal to receive a PDSCH including the corresponding MAC-CE through a PDCCH. If the number of separate TCI state set included in the MAC-CE is one, the terminal may determine an uplink transmit beam or transmit filter and a downlink receive beam or receive filter using the separate TCI states included in the separate TCI state set indicated by the MAC-CE starting from 3 ms after transmitting a PUCCH including HARQ-ACK information indicating whether reception of the corresponding PDSCH was successful. At this time, a separate TCI state set may mean a single or a plurality of separate TCI states that one code point of a TCI state field in DCI (e.g., DCI format 1_1, 1_2) may have, and one separate TCI state set may include one DL TCI state, one UL TCI state, or one DL TCI state and one UL TCI state. If there are two or more separate TCI state sets included in the MAC-CE, the UE may activate the plurality of separate TCI state sets indicated by the MAC-CE for each code point of the TCI state field of the DCI (e.g., DCI format 1_1, 1_2) starting from 3 ms after transmitting a PUCCH including HARQ-ACK information indicating whether reception for the corresponding PDSCH was successful. At this time, each code point in the TCI state field of DCI may indicate one DL TCI state, one UL TCI state, or one DL TCI state and one UL TCI state each.

The MAC-CE used to activate or indicate the single joint TCI state and separate TCI state described above may exist for each of the joint and separate TCI state modes. Alternatively, the TCI state may be activated or indicated on the basis of either the joint or separate TCI state mode using a single MAC-CE. Through the drawings described below, various MAC-CE structures for activating and indicating the joint or separate TCI state may be considered.

FIG. 23 is a diagram illustrating a MAC-CE structure for activating and indicating a joint TCI state in a wireless communication system according to one embodiment of the present disclosure.

In FIG. 23, if the value of the S field 23-00 is 1, the corresponding MAC-CE may indicate 1 joint TCI state, and the length may be up to the 2nd Octet only. If the value of the S field 23-00 is 0, the corresponding MAC-CE may include information of 2 or more joint TCI states, may activate each joint TCI state included in the MAC-CE for each code point of the TCI state field of the DCI (e.g., DCI format 1_1, 1_2), and may activate up to 8 joint TCI states. The TCI states indicated through the TCI state $ID_0$ field 23-15 to the TCI state $ID_{N-1}$ field 23-25 may be activated for the 0th to the N-1th code points of the TCI state field of the DCI, respectively. The Serving Cell ID field 23-05 and the BWP ID field 23-10 may indicate a serving cell ID and a bandwidth part ID, respectively.

FIG. 24 is a diagram illustrating another MAC-CE structure for joint TCI state activation and indication in a wireless communication system according to one embodiment of the present disclosure.

In FIG. 24, the Serving Cell ID field 24-05 and the BWP ID field 24-10 may indicate a serving cell ID and a bandwidth part ID, respectively. The R field 24-00 may be a 1-bit reserved field. Each field present in the 2nd to Nth Octets is a bitmap indicating a joint TCI state configured by higher layer signaling. For example, $T_7$ 24-15 may be a field indicating whether the 8th joint TCI state configured by higher layer signaling is indicated.

If there is one joint TCI state transmitted through MAC-CE of FIG. 24, the terminal may apply the joint TCI state indicated by the MAC-CE to the uplink transmission and downlink reception beams. In addition, if there are two or more joint TCI states transmitted through MAC-CE, the terminal may activate each joint TCI state indicated by the MAC-CE to each code point of the TCI state field of the DCI (e.g., DCI format 1_1, 1_2), and the joint TCI state having the lowest index among the indicated joint TCI states may be sequentially activated to the code points of lower indexes of the TCI state field.

FIG. 25 is a diagram illustrating another MAC-CE structure for joint TCI state activation and indication in a wireless communication system according to one embodiment of the present disclosure.

In FIG. 25, the Serving Cell ID field 25-05 and the BWP ID field 25-10 may indicate the serving cell ID and the bandwidth part ID, respectively. If the value of the S field 25-00 is 1, the corresponding MAC-CE may indicate 1 joint TCI state, may have a length only up to the 2nd Octet, and may indicate the joint TCI state to the terminal through the TCI state $ID_0$ field 25-20. If the value of the S field 25-00 is 0, the corresponding MAC-CE may include information of 2 or more joint TCI states, may activate each joint TCI state included in the MAC-CE for each code point of the TCI state field of DCI (e.g., DCI format 1_1, 1_2), and may activate up to 8 joint TCI states. The 2nd Octet does not exist, and the 1st Octet and the 3rd to N-1th Octets in the MAC-CE structure may exist. Each field existing in the 3rd to N+1th Octets is a bitmap indicating each joint TCI state configured by higher layer signaling. For example, $T_{15}$ 25-25 may be a field indicating whether the 16th joint TCI state configured by higher layer signaling is indicated. If there is one joint TCI state transmitted through the MAC-CE structure of FIG. 25, the terminal may apply the joint TCI state indicated by the MAC-CE to the uplink transmission and downlink reception beams, and if there are two or more joint TCI states transmitted through the MAC-CE structure, the terminal may activate each joint TCI state indicated by the MAC-CE to each code point of the TCI state field of DCI format 1_1, 1_2, and the joint TCI state having the lowest index among the indicated joint TCI states may be sequentially activated to the code points of lower indexes of the TCI state field.

FIG. 26 is a diagram illustrating a MAC-CE structure for activating and indicating a separate TCI state in a wireless communication system according to one embodiment of the present disclosure.

In FIG. 26, the Serving Cell ID field 26-05 and the BWP ID field 26-10 may indicate the serving cell ID and the bandwidth part ID, respectively. If the value of the S field 26-00 is 1, the corresponding MAC-CE may indicate one separate TCI state and may have a length of only up to the 3rd Octet.

If the value of the S field 26-00 is 0, the MAC-CE may include information of two or more separate TCI state sets may activate each separate TCI state set included in the MAC-CE for each code point of the TCI state field of the DCI (e.g., format 1_1, 1_2), and may activate up to eight separate TCI state sets.

The $C_0$ field 26-15 may be a field indicating which separate TCI states are included in the indicated separate TCI state set. If the value of the $C_0$ field is "00", it may mean reserve, if "01", it may mean one DL TCI state, if "10", it may mean one UL TCI state, and if "11", it may mean one DL TCI state and one UL TCI state.

The TCI state $ID_{D,0}$ field 26-20 and the TCI state $ID_{U,0}$ field 26-25 may indicate a DL TCI state and a UL TCI state, which may be included and indicated within the 0th separate TCI state set, respectively. If the value of the $C_0$ field is "01", the TCI state $ID_{D,0}$ field 26-20 may indicate a DL TCI state, and the TCI state $ID_{U,0}$ field 26-25 may be ignored. In addition, if the value of the $C_0$ field is "10", the TCI state $ID_{D,0}$ field 26-20 may be ignored, and the TCI state $ID_{U,0}$ field 26-25 may indicate a UL TCI state. In addition, if the value of the $C_0$ field is "11", the TCI state $ID_{D,0}$ field 26-20 may indicate the DL TCI state, and the TCI state $ID_{U,0}$ field 26-25 may indicate the UL TCI state.

FIG. 26 may mean a case where a UL TCI state among separate TCI states uses the same higher layer signaling structure as the DL TCI state and the joint TCI state among separate TCI states, and accordingly, 7 bits may be used for the length of the TCI state $ID_{D,0}$ field 26-20 and the TCI state $ID_{U,0}$ field 26-25 to express up to 128 TCI states. Accordingly, 6 bits 26-20 may be allocated to the 2nd Octet and 1 bit 26-21 may be allocated to the 3rd Octet in order for the TCI state $ID_{D,0}$ field 26-20 to use 7 bits. In addition, FIG. 26 may mean a case where a UL TCI state among separate TCI states uses different higher layer signaling structures from the DL TCI state and the joint TCI state among separate TCI states, and accordingly, 6 bits may be used for the UL TCI state to express up to 64. Therefore, the first bit of the TCI state $ID_{U,0}$ field 26-25 may be fixed to 0 or 1, and only a total of 6 bits from the 2nd to the 7th bits representing the actual UL TCI state may have meaning.

FIG. 27 is a diagram illustrating another MAC-CE structure for separate TCI state activation and indication in a wireless communication system according to one embodiment of the present disclosure.

In FIG. 27, the Serving Cell ID field 27-05 and the BWP ID field 27-10 may indicate the serving cell ID and the bandwidth part ID, respectively. If the value of the S field 27-00 is 1, the corresponding MAC-CE may indicate one separate TCI state set, and the length may be up to the 3rd Octet only. If the value of S field 27-00 is 0, the corresponding MAC-CE may include information of two or more separate TCI state sets, each separate TCI state set included in the MAC-CE may be activated for each code point of the TCI state field of DCI (e.g., DCI format 1_1, 1_2), and up to 8 separate TCI state sets may be activated.

The $C_{D,0}$ field 27-15 may be a field indicating whether the indicated separate TCI state set includes a DL TCI state. If the value of the $C_{D,0}$ field 27-15 is 1, the set includes a DL TCI state and the DL TCI state may be indicated through the TCI state $ID_{D,0}$ field 27-25. If the value of the $C_{D,0}$ field 27-15 is 0, the set does not include a DL TCI state and the TCI state $ID_{D,0}$ field 27-25 may be ignored.

Similarly, the $C_{U,0}$ field 27-20 may be a field indicating whether the indicated separate TCI state set includes a UL TCI state. If the value of the $C_{U,0}$ field 27-20 is 1, the set includes a UL TCI state and the UL TCI state may be indicated through the TCI state $ID_{U,0}$ field 27-30, and if the value of the $C_{U,0}$ field 27-20 is 0, the set does not include a UL TCI state and the TCI state $ID_{U,0}$ field 27-30 may be ignored.

FIG. 27 may mean a case where a UL TCI state among separate TCI states uses the same higher layer signaling structure as the DL TCI state and the joint TCI state among separate TCI states, and accordingly, 7 bits may be used for the length of the TCI state $ID_{D,0}$ field 27-25 and the TCI state $ID_{U,0}$ field 27-30 to express up to 128 TCI states. In addition, FIG. 27 may mean a case where a UL TCI state among separate TCI states uses different higher layer signaling structures from the DL TCI state and the joint TCI state among separate TCI states, and accordingly, 6 bits may be used for the UL TCI state to express up to 64 states. Accordingly, the first bit of the TCI state ID $_{U,0}$ field 26-25 may be fixed to 0 or 1, and only a total of 6 bits from the 2nd to the 7th bits may have meaning as bits expressing an actual UL TCI state.

FIG. 28 is a diagram illustrating another MAC-CE structure for separate TCI state activation and indication in a wireless communication system according to one embodiment of the present disclosure.

In FIG. 28, the Serving Cell ID field 28-05 and the BWP ID field 28-10 may indicate the serving cell ID and the bandwidth part ID, respectively. If the value of the S field 28-00 is 1, the corresponding MAC-CE may indicate one separate TCI state set, and may have a length only up to the 3rd Octet. The MAC-CE structure of FIG. 28 may indicate one separate TCI state set using two Octets, and if the corresponding separate TCI state set includes a DL TCI state, the first Octet of the two Octets may always indicate the DL TCI state, and the second Octet may always indicate the UL TCI state.

If the value of the S field 28-00 is 0, the corresponding MAC-CE may include information of two or more separate TCI state sets, may activate each separate TCI state set included in the MAC-CE for each code point of the TCI state field of the DCI (e.g., DCI format 1_1, 1_2), and may activate up to eight separate TCI state sets.

The $C_{0,0}$ field 28-15 may have a meaning of distinguishing whether the TCI state indicated by the TCI state $ID_{D,0}$ field 28-25 is a DL TCI state or a UL TCI state. If the value of the $C_{0,0}$ field 28-15 is 1, it means a DL TCI state, and the DL TCI state may be indicated through the TCI state $ID_{D,0}$ field 28-25, and a third Octet may exist. At this time, if the value of the $C_{1,0}$ field 28-20 is 1, the UL TCI state may be indicated through the TCI state $ID_{1,0}$ field 28-30, and if the value of the $C_{1,0}$ field 28-20 is 0, the TCI state $ID_{1,0}$ field 28-30 may be ignored.

If the value of the $C_{0,0}$ field 28-15 is 0, the UL TCI state may be indicated through the TCI state $ID_{D,0}$ field 28-25, and the 3rd Octet may not exist.

FIG. 28 may mean a case where a UL TCI state among separate TCI states uses the same higher layer signaling structure as the DL TCI state and the joint TCI state among separate TCI states, and accordingly, the length of the TCI state $ID_{D,0}$ field 28-25 and the TCI state $ID_{1,0}$ field 28-30 may use 7 bits to express up to 128 TCI states. In addition, FIG. 28 may mean a case where a UL TCI state among separate TCI states uses different higher layer signaling structures from the DL TCI state and the joint TCI state among separate TCI states, and accordingly, the TCI state $ID_{D,0}$ field 28-25 may use 7 bits to express both 6 bits that can express up to 64 UL TCI states and 7 bits that can express up to 128 DL TCI states.

If the value of the $C_{1,0}$ field 28-20 is 1 and the TCI state ID $_{1,0}$ field 28-30 indicates a UL TCI state, the first bit of the TCI state $ID_{1,0}$ field 28-30 may be fixed to 0 or 1, and only a total of 6 bits from the 2nd to the 7th bits representing the actual UL TCI state may have meaning.

FIG. 29 is a diagram illustrating another MAC-CE structure for separate TCI state activation and indication in a wireless communication system according to one embodiment of the present disclosure.

In FIG. 29, the Serving Cell ID field 29-05 and the BWP ID field 29-10 may indicate the serving cell ID and the bandwidth part ID, respectively. If the value of the S field 29-00 is 1, the corresponding MAC-CE may indicate one separate TCI state set, and the length may be up to the 3rd Octet only. If the value of the S field 29-00 is 0, the corresponding MAC-CE may include information of two or more separate TCI state sets, each separate TCI state set included in the MAC-CE may be activated for each code point of the TCI state field of DCI (e.g., DCI format 1_1, 1_2), and up to 8 separate TCI state sets may be activated.

The $C_0$ field 29-15 may be a field indicating which separate TCI states are included in the indicated separate TCI state set. For example, if the value of the $C_0$ field 29-15 is "00", it may mean reserve, if "01", it may mean one DL TCI state, if "10", it may mean one UL TCI state, and if "11", it may mean one DL TCI state and one UL TCI state, respectively. The TCI state $ID_{U,0}$ field 29-20 and the TCI state $ID_{D,0}$ field 29-25 may mean a UL TCI state and a DL TCI state that may be included and indicated in the 0th separate TCI state set, respectively. If the value of the $C_0$ field 29-15 is "01", the TCI state $ID_{D,0}$ field 29-25 may indicate a DL TCI state, and the TCI state $ID_{U,0}$ field 29-20 may be ignored. In addition, if the value of the $C_0$ field 29-15 is "10", the 3rd Octet may be ignored, and the TCI state $ID_{U,0}$ field 29-20 may indicate a UL TCI state. In addition, if the value of the $C_0$ field 29-15 is "11", the TCI state $ID_{D,0}$ field 29-25 may indicate a DL TCI state, and the TCI state $ID_{U,0}$ field 29-20 may indicate a UL TCI state.

FIG. 29 may mean a case where the UL TCI state among the separate TCI states uses a different higher layer signaling structure from the DL TCI state and the joint TCI state among the separate TCI states, and accordingly, the length of the TCI state $ID_{D,0}$ field 29-20 may be 7 bits to express up to 128 TCI states, and the length of the TCI state $ID_{U,0}$ field 29-25 may be 6 bits to express up to 64 TCI states.

FIG. 30 is a diagram illustrating a MAC-CE structure for joint and separate TCI state activation and indication in a wireless communication system according to one embodiment of the present disclosure.

In FIG. 30, the Serving Cell ID field 30-05 and the BWP ID field 30-10 may indicate the serving cell ID and the bandwidth part ID, respectively. If the value of the J field 30-00 is 1, the corresponding MAC-CE may indicate a joint TCI state, and if it is 0, it may indicate a separate set of TCI states.

- If the MAC-CE indicates a joint TCI state, all odd Octets (3rd, 5th, ...) except the first Octet may be ignored. The $C_{0,0}$ field 30-15 may indicate whether the MAC-CE indicates one joint TCI state or whether the MAC-CE can include two or more joint TCI states and activate each TCI state for each code point of the TCI state field of the DCI (e.g., DCI format 1_1, 1_2). If the value of the $C_{0,0}$ field 30-15 is 1, the MAC-CE may indicate one joint TCI state, and joint TCI state may not exist from the 3rd Octet onwards. If the value of the $C_{0,0}$ field 30-15 is 0, the MAC-CE may activate two or more joint TCI states for each code point of the TCI state field of the DCI. TCI state $ID_{D,0}$ may mean the 1st joint TCI state indicated.
- If the corresponding MAC-CE indicates a separate TCI state set, the $C_{0,0}$ field 30-15 may have a meaning of distinguishing whether the TCI state indicated by the TCI state $ID_{D,0}$ field 30-25 is a DL TCI state or a UL TCI state. If the value of the $C_{0,0}$ field 30-15 is 1, it indicates a DL TCI state, and the DL TCI state may be indicated through the TCI state $ID_{D,0}$ field 30-25, and a third Octet may exist. In this case, if the value of the $C_{1,0}$ field 30-20 is 1, the UL TCI state may be indicated through the TCI state $ID_{1,0}$ field 30-30, and if the value of the $C_{1,0}$ field 30-20 is 0, the TCI state $ID_{1,0}$ field 30-30 may be ignored.

If the value of the $C_{0,0}$ field 30-15 is 0, the UL TCI state may be indicated through the TCI state $ID_{D,0}$ field 30-25, and the 3rd Octet may not exist.

FIG. 30 may mean a case where a UL TCI state among separate TCI states uses the same higher layer signaling structure as a DL TCI state and a joint TCI state among separate TCI states, and accordingly, the length of the TCI state $ID_{D,0}$ field 30-25 and the TCI state $ID_{1,0}$ field 30-30 may use 7 bits to express up to 128 TCI states. In addition, FIG. 30 may mean a case where a UL TCI state among separate TCI states uses different higher layer signaling structures from the DL TCI state and the joint TCI state among separate TCI states, and accordingly, the TCI state $ID_{D,0}$ field 30-25 may use 7 bits to express both 6 bits that can express a maximum of 64 UL TCI states and 7 bits that can express a maximum of 128 DL TCI states. If the value of the $C_{1,0}$ field 30-20 is 1 and the TCI state $ID_{1,0}$ field 30-30 indicates a UL TCI state, the first bit of the TCI state $ID_{1,0}$ field 30-30 may be fixed to 0 or 1, and only a total of 6 bits from the 2nd to the 7th bits representing the actual UL TCI state may have meaning.

FIG. 31 is a diagram illustrating another MAC-CE structure for joint and separate TCI state activation and indication in a wireless communication system according to one embodiment of the present disclosure.

In FIG. 31, the Serving Cell ID field 31-05 and the BWP ID field 31-10 may indicate the serving cell ID and the bandwidth part ID, respectively. If the value of the J field 31-00 is 1, the corresponding MAC-CE may indicate a joint TCI state, and if it is 0, it may indicate a separate set of TCI states.

- If the MAC-CE indicates a joint TCI state, all even-numbered Octets (2nd, 4th, ...) except the first Octet may be ignored. The S field 31-21 may indicate whether the MAC-CE indicates one joint TCI state or whether the MAC-CE activates two or more joint TCI states for each code point of the TCI state field of DCI (e.g., DCI format 1_1, 1_2). If the value of the S field 31-21 is 1, the MAC-CE may indicate one joint TCI state and may not exist from the 3rd Octet onwards. If the value of the S field 31-21 is 0, the MAC-CE may include information of two or more joint TCI states and may activate each joint TCI state included in the MAC-CE for each code point of the TCI state field of DCI format 1_1, 1_2. TCI state $ID_{D,0}$ may mean the 1st joint TCI state indicated.

- If the corresponding MAC-CE indicates a separate TCI state set, the $C_0$ field 31-15 may be a field indicating which separate TCI states the indicated separate TCI state set includes. For example, if the value of the $C_0$ field 31-15 is "00", it may mean reserve, if "01", it may mean one DL TCI state, if "10", it may mean one UL TCI state, and if "11", it may mean one DL TCI state and one UL TCI state. The TCI state $ID_{U.0}$ field 31-20 and the TCI state $ID_{D.0}$ field 31-25 may mean a UL TCI state and a DL TCI state that may be included and indicated in the 0th separate TCI state set, respectively. If the value of the $C_0$ field 31-15 is "01", the TCI state ID $_{D,0}$ field 31-25 may indicate a DL TCI state, and the TCI state $ID_{U,0}$ field 31-20 may be ignored. In addition, if the value of the $C_0$ field 31-15 is "10", the TCI state $ID_{U,0}$ field 31-20 may indicate a UL TCI state, and if the value of the $C_0$ field 31-15 is "11", the TCI state $ID_{D,0}$ field 31-25 may indicate a DL TCI state, and the TCI state $ID_{U,0}$ field 31-20 may indicate a UL TCI state.

If the value of the $S_0$ field 31-21 is 1, the MAC-CE indicates one separate TCI state set, and may not exist from the 4th Octet. In addition, if the value of the $S_0$ field 31-21 is 0, the MAC-CE may include information of two or more separate TCI state sets, may activate each separate TCI state set included in the MAC-CE for each code point of the TCI state field of the DCI (e.g., DCI format 1_1, 1_2), and may activate up to 8 separate TCI state sets. If the value of the $S_0$ field 31-21 is 0 and the value of the $C_{1,}$ ... , $C_{N-1}$ fields is "10", only the UL TCI state is indicated, and therefore the 5th, 7th, ..., Mth Octets may be ignored.

FIG. 31 may mean a case where the UL TCI state among the separate TCI states uses a different higher layer signaling structure from the DL TCI state and the joint TCI state among the separate TCI states, and accordingly, the length of the TCI state $ID_{D,0}$ field 31-20 may be 7 bits to express up to 128 TCI states, and the length of the TCI state $ID_{U,0}$ field 31-25 may be 6 bits to express up to 64 TCI states.

If the terminal receives an indication related to a transmit/receive beam using the joint TCI state method or the separate TCI state method configured through higher layer signaling, the terminal may receive a PDSCH including a MAC-CE indicating a TCI state from the base station and apply the TCI state to the transmit/receive beam. If there are two or more sets of joint TCI states or separate TCI states included in the MAC-CE, the terminal may activate a plurality of joint TCI states indicated by the MAC-CE for each code point of the TCI state field of the DCI (e.g., DCI format 1_1, 1_2) starting from 3 ms after transmitting a PUCCH including HARQ-ACK information indicating whether reception of the corresponding PDSCH was successful as described above. Thereafter, the terminal may receive the DCI and apply the TCI state to the uplink transmission and downlink reception beams using one joint TCI state or one set of separate TCI states indicated by the TCI state field in the corresponding DCI. At this time, DCI format 1_1 or 1_2 may include downlink data channel scheduling information (with DL assignment) or may not include it (without DL assignment).

FIG. 32 is a diagram illustrating a beam application time that may be considered when using a unified TCI scheme in a wireless communication system according to one embodiment of the present disclosure.

As described above, the terminal may receive DCI (e.g., DCI format 1_1 or 1_2) from the base station, which includes (with DL assignment) or does not include (without DL assignment) downlink data channel scheduling information. The terminal may apply the TCI state to the uplink transmission and downlink reception beams by using one joint TCI state or a separate TCI state set indicated by the TCI state field in the corresponding DCI.

**[0393]** - DCI format 1_1, 1_2 with DL assignment 32-00: If the terminal receives DCI including downlink data channel scheduling information from the base station 32-01 and one joint TCI state or a separate TCI state set on the basis of the unified TCI scheme is indicated, the terminal may receive a PDSCH scheduled on the basis of the DCI 32-05, and may transmit a PUCCH including a HARQ-ACK indicating whether reception of the DCI and the PDSCH was successful 32-10. At this time, the HARQ-ACK may include whether reception of both the DCI and the PDSCH was successful. If at least one of the DCI and the PDSCH is not received, the terminal may transmit a NACK, and if reception of the DCI and the PDSCH is successful, the terminal may transmit an ACK.

- DCI format 1_1, 1_2 without DL assignment 32-50: If the terminal receives DCI from the base station that does not include downlink data channel scheduling information 32-55 and a single joint TCI state or a separate TCI state set on the basis of the unified TCI scheme is indicated, the terminal may assume the following for the corresponding DCI.

  ■ CRC scrambled using CS-RNTI is included.
  ■ The value of all bits assigned to all fields used as Redundancy Version (RV) fields is 1.
  ■ The value of all bits assigned to all fields used as Modulation and Coding Scheme (MCS) fields is 1.
  ■ The value of all bits assigned to all fields used as New Data Indication (NDI) fields is 0.
  ■ For Frequency Domain Resource Allocation (FDRA) Type 0, all bits assigned to the FDRA field have values of 0, for FDRA Type 1, all bits assigned to the FDRA field have values of 1, and when the FDRA method is dynamicSwitcH, all bits assigned to the FDRA field have values of 0.

The terminal may transmit a PUCCH including a HARQ-ACK indicating whether reception of the DCI for which the above-described matters are assumed to be successful (32-60).

- For both DCI formats 1_1, 1_2 with DL assignment (32-00) and without DL assignment (32-50), if the new TCI state indicated through DCI 32-01 and 32-55 is the same as the TCI state that was already indicated and applied to the uplink transmission and downlink reception beams, the terminal may maintain the previously applied TCI state. If the new TCI state is different from the previously indicated TCI state, the terminal may determine the application time of the joint TCI state or the separate TCI state set, which may be indicated from the TCI state field included in the DCI, to be after the first slot 32-20 and 32-70 following the duration equal to the beam application time (BAT) 32-15 and 32-65 after the PUCCH transmission 32-30 and 32-80, and until the time 32-25 and 32-75 immediately preceding this determined slot 32-20 and 32-70, the terminal may continue to use the previously indicated TCI.
- For both DCI format 1_1, 1_2 with DL assignment 32-00 and without DL assignment 32-50, BAT may be configured by higher layer signaling on the basis of UE capability report information as a specific number of OFDM symbols, and the numerology for BAT and the first slot after BAT may be determined on the basis of the smallest numerology among all cells to which a joint TCI state or a separate TCI state set indicated through DCI is applied.

The terminal may apply one joint TCI state indicated through MAC-CE or DCI to reception of control resource sets connected to all UE-specific search spaces, PDSCH reception and PUSCH transmission scheduled by PDCCH transmitted from the corresponding control resource set, and all PUCCH transmissions.

The terminal may apply a separate TCI state set, if a separate TCI state set indicated through MAC-CE or DCI includes a DL TCI state, to reception of control resource sets associated with all UE-specific search spaces and reception of PDSCHs scheduled by PDCCHs transmitted from the corresponding control resource sets, and it may apply a previously indicated UL TCI state to all PUSCH and PUCCH resources.

The terminal may apply a separate set of TCI states to all PUSCH and PUCCH resources, if the separate set of TCI states indicated through MAC-CE or DCI includes a single UL TCI state, and it may apply the previously indicated DL TCI state to reception for all control resource sets connected to a specific search space of the terminal and reception for a PDSCH scheduled as a PDCCH transmitted from the corresponding control resource set.

When a separate set of TCI states indicated through MAC-CE or DCI includes one DL TCI state and one UL TCI state, the terminal may apply the DL TCI state to reception for all control resource sets associated with the UE-specific search space and to reception for PDSCH scheduled as PDCCH transmitted from the corresponding control resource set, and it may apply the UL TCI state to all PUSCH and PUCCH resources.

<Second embodiment: Multi-TCI state indication and activation method on the basis of unified TCI scheme>

As one embodiment of the present disclosure, a method for indicating and activating a plurality of TCI states on the basis of a unified TCI scheme is described. The method for indicating and activating a plurality of TCI states may mean, compared to the first embodiment described above, a case where the number of indicated joint TCI states is expanded to two or more, and a case where each of a DL TCI state and a UL TCI state included in one separate TCI state set is expanded to two or more at most. If each of a DL TCI state and a UL TCI state may include two at most in one separate TCI state set, a total of eight combinations of DL TCI states and UL TCI states that one separate TCI state set can have are possible ({DL,UL} = {0,1}, {0,2}, {1,0}, {1,1}, {1,2}, {2,0}, {2,1}, {2,2}).

If the terminal is indicated to receive a plurality of TCI states from a base station on the basis of MAC-CE, the terminal may receive two or more joint TCI states or one separate TCI state set from the base station through MAC-CE. The base station may schedule the terminal to receive a PDSCH including the corresponding MAC-CE through PDCCH, and the terminal may determine an uplink transmission beam or transmission filter and a downlink reception beam or reception filter using two or more joint TCI states or one separate TCI state set indicated by MAC-CE starting from 3 ms after transmitting a PUCCH including HARQ-ACK information indicating whether reception of the PDSCH including the corresponding MAC-CE was successful.

If the terminal is indicated to receive a plurality of TCI states from a base station on the basis of DCI (e.g., DCI format 1_1, 1_2), each code point of one TCI state field in the corresponding DCI may mean a set of two or more joint TCI states or two or more separate TCI states included in MAC-CE. In this case, the terminal may receive the MAC-CE from the base station and activate two or more joint TCI states or two or more separate TCI state sets corresponding to each code point of one TCI state field in the corresponding DCI. The base station may schedule the terminal to receive a PDSCH including the MAC-CE through a PDCCH, and the terminal may activate the TCI state information included in the MAC-CE from 3 ms after transmitting a PUCCH including HARQ-ACK information indicating whether reception of the PDSCH including the MAC-CE was successful.

If a terminal is indicated to receive a plurality of TCI states from a base station on the basis of DCI (DCI format 1_1, 1_2), there may be two or more TCI state fields in the corresponding DCI (DCI format 1_1, 1_2), and one of two or more joint TCI states or two or more separate TCI state sets may be indicated on the basis of each TCI state field. At this time, the terminal may receive MAC-CE from the base station and activate the joint TCI state or separate TCI state set corresponding to each code point of two or more TCI state fields in the corresponding DCI. The base station may schedule reception of a PDSCH including the corresponding MAC-CE to the terminal through a PDCCH, and the terminal may activate TCI state information included in the MAC-CE from 3 ms after transmitting a PUCCH including HARQ-ACK information indicating whether reception of the PDSCH including the corresponding MAC-CE was successful. The terminal may be configured for the presence of one or more additional TCI state fields through higher layer signaling, and the bit length of the additional TCI state fields may be the same as the existing TCI state fields, or its length may be adjusted on the basis of higher layer signaling.

The terminal may receive transmit/receive beam related indications in the unified TCI scheme by using one of the joint TCI state and separate TCI state configured by the base station. The terminal may distinguish between the use of the joint TCI state and the separate TCI state by receiving the configuration from the base station through higher layer signaling. For the separate TCI state indication, the terminal may configure the bit length of the TCI state field in the DCI (DCI format 1_1, 1_2) to a maximum of 4 through higher layer signaling.

The MAC-CE used to activate or indicate the above-described a plurality of joint TCI states and separate TCI states may exist for each of the joint and separate TCI state methods, or a single MAC-CE may be used to activate or indicate the TCI state on the basis of either the joint or separate TCI state method, and the MAC-CE used for the MAC-CE-based indication method. And the MAC-CE-based activation method may share a single MAC-CE structure, or may use separate MAC-CE structures. Various MAC-CE structures for activating and indicating a plurality of joint or separate TCI states may be considered through the drawings described below. In the drawings described below, for the convenience of explanation, a case where two TCI states are activated or indicated is considered, but the same may be applied to three or more cases.

FIG. 33 is a diagram illustrating a MAC-CE structure for activating and indicating a plurality of joint TCI states in a wireless communication system according to one embodiment of the present disclosure.

In FIG. 33, the Serving Cell ID field 33-05 and the BWP ID field 33-10 may indicate the serving cell ID and the bandwidth part ID, respectively. If the value of the S field 33-00 is 1, the corresponding MAC-CE may indicate one or two joint TCI states and may have a length of only up to the 3rd Octet.

At this time, if the value of the $C_0$ field 33-15 is 0, the 3rd Octet does not exist, and one joint TCI state may be indicated through the TCI state $ID_{D,0}$ field 33-20. If the value of the $C_0$ field 33-15 is 1, the 3rd Octet exists, and two joint TCI states may be indicated through the TCI state $ID_{D,0}$ field 33-20 and the TCI state $ID_{1,0}$ field 33-25, respectively.

If the value of the S field 33-00 is 0, the MAC-CE may activate one or two joint TCI states included in the MAC-CE for each code point of the TCI state field of the DCI (e.g., DCI format 1_1, 1_2), or may activate one joint TCI state included in the MAC-CE for each code point of the two TCI state fields of the DCI, for up to eight code points.

If one or two joint TCI states are activated for one code point of one TCI state field, the TCI state $ID_{0,Y}$ field and the TCI state $ID_{1,Y}$ field may indicate the first and second joint TCI states among the two joint TCI states activated for the Yth code point of the TCI state field, respectively.

If one joint TCI state is activated for one code point of two TCI state fields, the TCI state $ID_{0,Y}$ field and the TCI state $ID_{1,Y}$ field may mean each joint TCI state activated for the Yth code point of the 1st and 2nd TCI state fields, respectively.

FIG. 34 is a diagram illustrating a MAC-CE structure for activating and indicating a plurality of separate TCI states in a wireless communication system according to one embodiment of the present disclosure.

In FIG. 34, the Serving Cell ID field 34-05 and the BWP ID field 34-10 may indicate the serving cell ID and the bandwidth part ID, respectively. If the value of the S field 34-00 is 1, the corresponding MAC-CE may indicate one separate set of TCI states, and may have a length of only up to the 5th Octet.

If the value of the S field 34-00 is 0, the MAC-CE may include information about a plurality of separate TCI state sets, and the MAC-CE may activate one separate TCI state configured for each code point of the TCI state field of the DCI (e.g., format 1_1, 1_2) or one separate TCI state configured for each code point of the two TCI state fields of the DCI, and may activate for up to 8 or 16 code points by higher layer signaling as described above.

In the MAC-CE structure of FIG. 34, each of the four Octets from the second Octet may correspond to a separate TCI state set. The $C_0$ field 34-15 may have a total of eight values from "000" to "111", and each may correspond to one of the eight cases that a separate TCI state set may have, as described above.

- When the $C_0$ field has the value "000", it means that one separate TCI state set includes one UL TCI state, the TCI state $ID_{D,0,0}$ field 34-20 and 34-21 may be ignored, and the TCI state $ID_{U,0,0}$ field 34-25 may include information about one UL TCI state. Also, the 4th and 5th Octets may be ignored.
- When the $C_0$ field has the value "001", it means that one separate TCI state set includes two UL TCI states, the TCI state $ID_{D,0,0}$ field 34-20 and 34-21 may be ignored, and the TCI state $ID_{U,0,0}$ field 34-25 may include information about the first UL TCI state among the two UL TCI states. In addition, the 4th Octet may be ignored, and the TCI state $ID_{U,1,0}$ field 34-35 may include information about the second UL TCI state among the two UL TCI states.

- When the $C_0$ field has the value "010", it means that one separate TCI state set includes one DL TCI state, the TCI state $ID_{D,0,0}$ field 34-20 and 34-21 may include information about one DL TCI state, and the TCI state $ID_{U,0,0}$ field 34-25 and the 4th and 5th Octets may be ignored.
- When the $C_0$ field has the value "011", it means that one separate TCI state set includes one DL TCI state and one UL TCI state, the TCI state $ID_{D,0,0}$ field 34-20, 34-21 may include information for one DL TCI state, and the TCI state $ID_{U,0,0}$ field 34-25 may include information for one UL TCI state. The 4th and 5th Octets may be ignored.
- When the $C_0$ field has the value "100", it means that one separate TCI state set includes one DL TCI state and two UL TCI states, the TCI state $ID_{D,0,0}$ field 34-20 and 34-21 may include information about one DL TCI state, and the TCI state $ID_{U,0,0}$ field 34-25 may include information about the first UL TCI state among the two UL TCI states. In addition, the 4th Octet may be ignored, and the TCI state $ID_{U,1,0}$ field 34-35 may include information about the second UL TCI state among the two UL TCI states.
- When the $C_0$ field has the value of "101", it means that one separate TCI state set includes two DL TCI states, the TCI state $ID_{D,0,0}$ field 34-20, 34-21 may include information about the first DL TCI state among the two DL TCI states, and the TCI state $ID_{U,0,0}$ field 34-25 and the 5th Octet may be ignored. The TCI state $ID_{D,1,0}$ field 34-30 may include information about the second DL TCI state among the two DL TCI states.
- When the $C_0$ field has the value "110", it means that one separate TCI state set includes two DL TCI states and one UL TCI state, the TCI state $ID_{D,0,0}$ field 34-20 and 34-21 may include information about the first DL TCI state among the two DL TCI states, the TCI state $ID_{U,0,0}$ field 34-25 may include information about one UL TCI state, the TCI state $ID_{D,1,0}$ field 34-30 may include information about the second DL TCI state among the two DL TCI states, and the 5th Octet may be ignored.
- When the $C_0$ field has the value of "1 11", it means that one separate TCI state set includes two DL TCI states and two UL TCI states, the TCI state $ID_{D,0,0}$ field 34-20 and 34-21 may include information about the first DL TCI state among the two DL TCI states, the TCI state $ID_{U,0,0}$ field 34-25 may include information about the first UL TCI state among the two UL TCI states, the TCI state $ID_{D,1,0}$ field 34-30 may include information about the second DL TCI state among the two DL TCI states, and the TCI state $ID_{U,1,0}$ field 34-35 may include information about the second UL TCI state among the two UL TCI states.

FIG. 34 may mean a case where the UL TCI state among the separate TCI states uses a different higher layer signaling structure from the DL TCI state and the joint TCI state among the separate TCI states, and accordingly, the UL TCI state requires 6 bits that may express up to 64, so the TCI state $ID_{D,0,0}$ to TCI state $ID_{D,1,N}$ fields expressing the DL TCI state may be expressed with 7 bits, whereas the TCI state $ID_{U,0,0}$ to TCI state $ID_{U,1,N}$ fields expressing the UL TCI state may be expressed with 6 bits.

FIG. 35 is a diagram illustrating another MAC-CE structure for activating and indicating a plurality of separate TCI states in a wireless communication system according to one embodiment of the present disclosure.

In FIG. 35, the Serving Cell ID field 35-05 and the BWP ID field 35-10 may indicate the serving cell ID and the bandwidth part ID, respectively. If the value of the S field 35-00 is 1, the corresponding MAC-CE may indicate one separate set of TCI states, and may have a length of only up to the 5th Octet.

If the value of the S field 35-00 is 0, the MAC-CE may include information about a plurality of separate TCI state sets and the MAC-CE may activate one separate TCI state set included in the MAC-CE for each code point of the TCI state field of the DCI (e.g., format 1_1, 1_2) or one separate TCI state set included in the MAC-CE for each code point of the two TCI state fields of the DCI, and may activate for up to 8 or 16 code points by higher layer signaling as described above.

In the MAC-CE structure of FIG. 35, each of the four Octets from the second Octet may correspond to a separate TCI state set. The $C_{U,0}$ field 35-15 and the $C_{D,0}$ field 35-21 indicate the number of UL TCI states and DL TCI states included in one separate TCI state set, respectively, and may have meanings for each code point as follows.

- If the $C_{U,0}$ field has the value "00", it means that it does not include a UL TCI state, so TCI state $ID_{U,0,0}$ 35-20 and TCI state $ID_{U,1,0}$ 35-25 may be ignored.
- When the $C_{U,0}$ field has the value "01", it means that it includes one UL TCI state, so TCI state $ID_{U,0,0}$ 35-20 may include one UL TCI state information, and TCI state $ID_{U,1,0}$ 35-25 may be ignored.
- When the $C_{U,0}$ field has a value of "10", it means that it includes two UL TCI states, so TCI state $ID_{U,0,0}$ 35-20 may include information on the first UL TCI state among the two UL TCI states, and TCI state $ID_{U,1,0}$ 35-25 may include information on the second UL TCI state among the two UL TCI states.
- If the $C_{D,0}$ field has the value "00", it means that it does not include the DL TCI state, so the 4th and 5th Octets may be ignored.
- When the $C_{D,0}$ field has the value "01", it means that it includes one DL TCI state, so the TCI state $ID_{D,0,0}$ 35-30 may include one DL TCI state information, and the 5th Octet may be ignored.

- When the $C_{D,0}$ field has a value of "10", it means that it includes two DL TCI states, so TCI state $ID_{D,0,0}$ 35-30 may include information on the first DL TCI state among the two DL TCI states, and TCI state $ID_{D,1,0}$ 35-35 may include information on the second DL TCI state among the two DL TCI states.

FIG. 35 may mean a case where the UL TCI state among the separate TCI states uses a different higher layer signaling structure from the DL TCI state and the joint TCI state among the separate TCI states, and accordingly, the UL TCI state requires 6 bits that may express up to 64, so the TCI state $ID_{D,0,0}$ to TCI state $ID_{D,1,N}$ fields expressing the DL TCI state may be expressed with 7 bits, whereas the TCI state $ID_{U,0,0}$ to TCI state $ID_{U,1,N}$ fields expressing the UL TCI state may be expressed with 6 bits.

<Third embodiment: Method for determining downlink control channel reception TCI state when multiple TCI states are indicated>

As one embodiment of the present disclosure, a method for determining a TCI state for receiving a downlink control channel when multiple TCI states are indicated or activated on the basis of a unified TCI scheme is described. If a terminal is indicated with one joint TCI state or one separate TCI state configured through MAC-CE or DCI, the terminal may perform reception of a downlink control channel by applying the indicated TCI state to a control resource set connected to all UE-specific search spaces. If the terminal is indicated with one separate TCI state set that may include a plurality of joint TCI states or a plurality of DL TCI states or UL TCI states, the terminal may group the configured control resource sets and apply each of the plurality of indicated TCI states to the control resource sets in each group. A method for grouping control resource sets through various methods to be mentioned below is described.

[Method 3-1] TCI state determination method on the basis of higher layer signaling for each control resource set

According to one embodiment of the present disclosure, when a terminal receives a plurality of joint TCI states or a separate TCI state set including a plurality of DL and UL TCI states that are indicated in a unified TCI scheme through higher layer signaling for each control resource set from a base station, the terminal may be configured as to which TCI state among each TCI state is to be applied to the corresponding control resource set. For example, when two TCI states are indicated (i.e., when a separate TCI state set including a maximum of two joint TCI states or a maximum of two DL TCI states and two UL TCI states is used for TCI state indication), the information for each control resource set received through higher layer signaling may be enablewhichTCI, and the value that the parameter may have may be one of enable1stTCI or enable2ndTCI. If any control resource sets are configured to enable1stTCI as the value of the higher layer signaling enablewhichTCI, the terminal may receive the PDCCH by applying the first joint TCI state among the two joint TCI states indicated through MAC-CE or DCI or the first DL TCI state among the separate TCI state sets that may include two DL TCI states to the corresponding control resource set. In addition, if any control resource sets are configured to enable2ndTCI as the value of the higher layer signaling enablewhichTCI, the terminal may receive the PDCCH by applying the second joint TCI state among the two joint TCI states indicated through MAC-CE or DCI or the second DL TCI state among the separate TCI state set that may include two DL TCI states to the corresponding control resource set.

If the terminal has received control resource sets with different CORESETPoolIndex values configured through higher layer signaling for a specific cell, the terminal may not expect to receive the higher layer signaling enableWhichTCI described above.

If the terminal has received sfnSchemeA or sfnSchemeB in relation to the PDCCH reception method for higher layer signaling for a specific bandwidth part, the terminal may not expect to receive the higher layer signaling information enableWhichTCI described above.

If the terminal has a searchSpaceLinking value configured in the higher layer signaling of search space set A that is search space set B, and a searchSpaceLinking value configured in the higher layer signaling of search space set B that is search space set A, the two search spaces A and B may be used for a plurality of TRP-based PDCCH repeated transmissions, and the control resource set a connected to search space set A and the control resource set b connected to search space set B may receive different enableWhichTCI values in the higher layer signaling.

[Method 3-2] TCI state determination method on the basis of connected search space

According to one embodiment of the present disclosure, a terminal may receive from a base station two search space sets explicitly linked through higher layer signaling for a plurality of TRP-based PDCCH repetition transmissions. If a searchSpaceLinking value configured in the higher layer signaling of search space set A is search space set B, and a searchSpaceLinking value configured in the higher layer signaling of search space set B is search space set A, the terminal may determine that the two search space sets are explicitly linked through higher layer signaling. On the basis of the search space sets explicitly linked as described above, if the terminal receives from the base station a set of a plurality of joint TCI states indicated in a unified TCI scheme or a separate TCI state set which may include a plurality of DL and UL TCI states, the terminal may determine which TCI state among each TCI state is to be applied to a corresponding control resource set.

When a terminal receives a set of separate TCI states, which may include a plurality of joint TCI states or a plurality of DL and UL TCI states, and if there are search space sets explicitly connected by higher layer signaling as described above, the terminal may apply each TCI state to each control resource set connected to each of the two search space sets. In this case, the terminal may apply a first TCI state to the control resource set connected to the search space set with a lower index among the two connected search space sets, and apply a second TCI state to the control resource set connected to the search space set with a higher index among the two connected search space sets. Alternatively, the terminal may apply a first TCI state to the control resource set with a lower index and apply the second TCI state to the control resource set with a higher index, according to the index of each control resource set connected to each of the two connected search space sets.

For a control resource set connected to a search space for which there is no search space set explicitly connected by higher layer signaling, i.e., for a control resource set connected to a search space used for a single PDCCH transmission, the terminal may use the first TCI state among the two indicated TCI states for reception.

If there are control resource sets 1 and 2 respectively connected to search space sets 2 and 3 which are explicitly connected through higher layer signaling, and control resource sets 2 are connected to search space set 1 which does not have an explicit connection, and if the terminal receives joint TCI states 1 and 2, the terminal may apply joint TCI states 1 and 2 respectively to control resource sets 1 and 2 which are respectively connected to search space sets 2 and 3 which are explicitly connected according to the above-described method, and may apply joint TCI state 1 which is the first TCI state among the two TCI states to control resource set 2 connected to search space set 1 which does not have an explicit connection. In this case, since control resource set 2 should apply joint TCI state 2 if it is on the basis of a connected search space, and should apply joint TCI state 1 if it is on the basis of a search space without explicit connectivity, a conflict may occur in applying TCI states. In this case, the terminal may consider the priority of applying the TCI state on the basis of the lower index of the search space set, and as a result, may apply the joint TCI state 1 on the basis of the search space set 1 without explicit connectivity. Alternatively, the terminal may consider the priority of applying the TCI state on the basis of the search space set with explicit connectivity, and the terminal may apply the joint TCI state 2.

[Method 3-3] TCI state determination method on the basis of CORESETPoolIndex

According to one disclosure, on the basis of CORESETPoolIndex, which is a higher layer signaling that may be configured for each control resource set, when the terminal receives a single separate TCI state set that may include a plurality of joint TCI states or a plurality of DL and UL TCI states indicated by the base station in a unified TCI scheme, it may determine which TCI state to apply to which CORESETPoolIndex among the TCI states. If the terminal receives two TCI states from the base station, the terminal may apply the first TCI state to all control resource sets with a CORESETPoolIndex value of 0 and apply the second TCI state to all control resource sets with a CORESETPoolIndex value of 1. In this case, when the terminal receives a TCI state indication from the base station through DCI, the DCI transmitted from the control resource set connected to a specific CORESETPoolIndex may only include one separate TCI state set that may include one joint TCI state or up to one DL TCI state. That is, receiving two TCI states means the situation of receiving and applying two separate TCI state sets, each including either two different joint TCI states or up to one DL TCI state, through two DCIs transmitted from control resource sets connected to two different CORESETPoolIndex values.

[Method 3-4] TCI state determination method on the basis of SFN PDCCH configuration

According to one disclosure, on the basis of sfnSchemeA or sfnSchemeB, which are higher layer signaling that may be configured in relation to the PDCCH reception method for each bandwidth part, when the terminal receives a separate TCI state set that may include a plurality of joint TCI states or a plurality of DL and UL TCI states indicated by the base station using the unified TCI scheme, it may determine which TCI state to apply to which control resource set group. If the terminal has received sfnSchemeA or sfnSchemeB, which are higher layer signaling schemes that can be set in relation to the PDCCH reception method in the bandwidth part, and the terminal receives two TCI states, the terminal may apply both TCI states to all control resource sets connected to the UE-specific search space within that bandwidth, and may apply the first TCI state of the two TCI states to control resource sets connected to the common search space. If the terminal has not been configured with sfnSchemeA or sfnSchemeB, which are higher layer signaling methods related to PDCCH reception mode that may be configured in the bandwidth part, the terminal may apply methods other than the [Method 3-4] described in this embodiment.

[Method 3-5] TCI state determination method on the basis of control resource set index

According to one disclosure, a terminal may group control resource sets on the basis of a control resource set index, and when a terminal receives a separate TCI state set that may include a plurality of joint TCI states or a plurality of DL and UL TCI states indicated by the base station using the unified TCI scheme, the terminal may determine which TCI state among each TCI state is to be applied to which control resource set group.

A terminal may be configured up to 4 bandwidth parts within a cell, and a control resource set may be configured up to 3 per bandwidth part. Since the index of the control resource set is unique within a cell, the index of the control resource set within a cell may be from 0 to 11. On the basis of this, if the terminal is indicated to apply two TCI states, the terminal may be divided into two groups of even-numbered control resource sets and odd-numbered control resource sets, and apply the first TCI state to the group including the even-numbered control resource sets, and apply the second TCI state to the group including the odd-numbered control resource sets. In another way, the terminal may be divided into three groups on the basis of the remainder when the index of each control resource set is divided by 3, considering the modulo 3 considered in the hashing function, and when three TCI states are indicated and applied, one TCI state may be applied to each group , and when two TCI states are indicated and applied, the first TCI state may be applied to the groups with remainders of 0 and 2, and the second TCI state may be applied to the group with remainder of 1.

[Method 3-6] TCI state determination method on the basis of search space group

According to one disclosure, a terminal may group search space sets, and when the terminal receives a set of separate TCI states that may include a plurality of joint TCI states or a plurality of DL and UL TCI states indicated by he base station in a unified TCI scheme, it may decide which TCI state among each TCI state is to be applied to a control resource set associated with which search space group set.

Similar to [Method 3-5], the terminal may divide the search space into two groups, an even search space and an odd search space, on the basis of the index of the search space, and apply the first TCI state to the group including the control resource set connected to the even search space, and apply the second TCI state to the group including the control resource set connected to the odd search space. If there exists a control resource set connected to both search spaces included in the two groups, the terminal may preferentially apply the first TCI state, preferentially apply the TCI state to be applied to the group including the search space with a lower index, or apply both the first and second TCI states when sfnSchemeA or sfnSchemeB , which is the higher layer signaling, is configured in the corresponding bandwidth part. In another method, the two groups of search spaces may be configured through higher layer signaling. For example, after a set of certain search spaces is configured as one group through higher layer signaling, and another set of search spaces is configured as another group through higher layer signaling, the terminal may apply each of the two indicated TCI states to the control resource sets associated with each group.

[Method 3-7] How to determine TCI state to minimize the number of beam switching within the slot

According to one disclosure, a terminal may determine a TCI state of a control resource set to minimize the number of beam switching within a slot. When the terminal receives TCI state activation and indication from a base station on the basis of a unified TCI scheme, the terminal may report the number of possible beam or TCI state changes within a slot to the base station as a UE capability report, and this report may vary by numerology, cell, FR, normal CP or extended CP. In addition, when the terminal receives TCI state activation and indication from the base station on the basis of the unified TCI scheme, the terminal may report to the base station the minimum time required to change a beam or TCI state within a slot as a UE capability report. In this case, this report may reuse timeDurationForQCL, which is an existing UE capability report related to beam change time, or may reuse a UE capability report related to beam application time required in the unified TCI scheme, or may define and use a new UE capability report separate from the two parameters. These UE capability reports may be reported in terms of the number of OFDM symbols, and may vary by numerology, cell, FR, normal CP or extended CP.

When the terminal is indicated with two TCI states from the base station, the terminal may apply the two TCI states to all control resource sets connected to the UE-specific search space. At this time, as described above, the base station may adjust the transmission beam or TCI state for the control resource set so that the terminal may receive by applying different TCI states to one control resource set in different monitoring sections, so as to minimize the number of beam switching in one slot by considering the beam change time of the terminal.

FIG. 36 is a diagram illustrating a method for determining a TCI state of a downlink control channel to minimize the number of beam switching within a slot in a wireless communication system according to one embodiment of the present disclosure.

With reference to FIG. 36, it may be assumed that the terminal has been indicated with joint TCI state#1, #2 from the base station before slot# 1. In addition, the terminal may receive by applying TCI state#1, #2 to control resource set#1 (CORESET#1) and control resource set#2 (CORESET#2), respectively, by considering one of the above-described [Methods 3-1] to [Methods 3-6]. When the terminal receives the control resource set in each slot without PDSCH scheduling, the terminal may use the applied TCI state. In addition, when PDSCH scheduling exists, the terminal may determine the TCI state for receiving the control resource configured by considering the beam change time from before the first symbol to after the last symbol of the scheduled PDSCH. If the last symbol of the control resource set exists within a time period earlier than the beam change time from the first symbol of the scheduled PDSCH, or if the first symbol of the control resource set exists within a time period later than the beam change time from the last symbol of the scheduled PDSCH, the terminal may change the beam or TCI state to be applied when receiving the control resource set to the beam of the scheduled PDSCH.

- The terminal may receive control resource set #1 36-00 from the base station in slot #1 and schedule inter-slot based time division multiplexing (TDM) PDSCH repetitions 36-05 and 36-20. Since there is no PDSCH scheduling in the corresponding slot at the time of receiving control resource set #1, the terminal may receive control resource set #1 on the basis of the previously applied TCI state #1. The terminal may receive two PDSCHs 36-05 and 36-20 scheduled from control resource set #1 on the basis of TCI state #1 and TCI state #2, respectively.
- Since there is scheduling for PDSCH in slot#2, the terminal may determine the TCI state for receiving the control resource configured by considering the beam change time from before the first symbol of the scheduled PDSCH 36-20 and after the last symbol. Since the last symbol of the control resource set#1 36-10 exists within the time 36-15 before the beam change time from the first symbol of the scheduled PDSCH 36-20, the terminal may use TCI state#2 when receiving the control resource set #1 36-10, considering that the reception beam or TCI state of the control resource set#1 36-10 is the same as that of the PDSCH.
- The terminal may be scheduled inter-slot based time division multiplexing (TDM) PDSCH repetition 36-30 and 36-55 for slot#3 and slot#4 from control resource set#1 36-10 of slot#2. The terminal may receive the two scheduled PDSCHs 36-30 and 36-55 on the basis of TCI state#1 and TCI state#2, respectively. The terminal may determine the TCI state for receiving the control resource configured by considering the beam change time from before the first symbol to after the last symbol of the PDSCH 36-30 scheduled in slot#3. Since the last symbol of control resource set #1 36-25 exists within a time period 36-40 prior to the beam change time from the first symbol of scheduled PDSCH 36-30, the terminal considers that the reception beam or TCI state of control resource set #1 36-25 is the same as that of PDSCH, and thus, TCI state #1 may be used when receiving control resource set #1 36-25. Similarly, since the first symbol of control resource set #2 36-35 exists within a time period 36-45 subsequent to the beam change time from the last symbol of scheduled PDSCH 36-30, the terminal considers that the reception beam or TCI state of control resource set #2 36-35 is the same as that of PDSCH, and thus, TCI state #1 may be used when receiving control resource set #2 36-35.
- Since there is scheduling for PDSCH in slot#4, the terminal may determine the TCI state for receiving the control resource configured by considering the beam change time from before the first symbol of the scheduled PDSCH 36-55 and after the last symbol. Since the last symbol of the control resource set # 1 36-50 exists within the time 36-65 before the beam change time from the first symbol of the scheduled PDSCH 36-55, the terminal may use TCI state#2 when receiving the control resource set#1 36-50, considering that the reception beam or TCI state of the control resource set#1 36-50 is the same as that of the PDSCH 36-55. Similarly, since the first symbol of control resource set #2 36-60 exists within the time 36-70 after the beam change time from the last symbol of scheduled PDSCH 36-55, the terminal may use TCI state #2 when receiving control resource set #2 36-60 by considering that the reception beam or TCI state of control resource set #2 36-60 is the same as that of PDSCH.
- As described above, considering the PDSCH scheduling situation of each slot and the beam change time, etc., in order to minimize the number of beam switching times, a situation may occur in which reception is performed using different TCI states for each slot even if it is the same control resource set.

In the following fourth or fifth embodiment, a method of applying a TCI state of a terminal when the terminal transmits an SRS to perform channel measurement and beam management of a base station after a single/a plurality of TCI state on the basis of the unified TCI scheme described in the first to third embodiments described above is indicated by DCI (for example, DCI format 0_1, DCI format 0_2, DCI format 1_1, DCI format 1_2, DCI format 2_3) is described. At least a part of the fourth embodiment may be applied in combination with at least a part of the first to third embodiments described above. At least a part of the fifth embodiment may be applied in combination with at least a part of the first to third embodiments described above. In addition, at least a part of the fourth embodiment may be applied in combination with at least a part of the fifth embodiment.

First, the terminal in the upper layer configuration process may receive the dl-OrJoint-TCIStateList upper layer parameter including the unified TCI-state. The upper layer configuration parameter dl-OrJoint-TCIStateList is a parameter considering unified TCI and may be configured in the form of a list including at least one TCI-State and may be configured in a terminal supporting release 17 or a later release terminal. At least one TCI-State included in the dl-OrJoint-TCIStateList may be for unified TCI application. And/or, in the upper layer configuration process, the terminal may receive the ul-TCI-StateList parameter including the TCI-UL-State. The upper layer configuration parameter ul-TCI-StateList may be configured in the form of a list including at least one TCI-UL-State. For example, at least one TCI-State included in dl-OrJoint-TCIStateList may be applied in the case of unifiedTCI-StateType=joint. For example, at least one TCI-UL-State included in ul-TCI-StateList may be applied to the unifiedTCI-StateType=separate.

In addition, the terminal may configure the TCI state of the DM-RS of the PUSCH, the DM-RS of the PUCCH, and the TCI state of the SRS by using the TCI state related information indicated in the MAC CE message and/or the DCI on the basis of the dl-OrJoint-TCIStateList upper layer parameter. The configured TCI state is configured on the basis of the QCL assumption information. Alternatively, the terminal may configure the TCI state (TCI UL State) of the DM-RS of the PUSCH, the DM - RS of the PUCCH, and the TCI state (TCI UL State) of the SRS by using the TCI state (TCI UL State) related information indicated in the MAC CE message and/or the DCI on the basis of the ul-TCI-StateList upper layer parameter. The configured TCI state is configured on the basis of the QCL assumption information.

The SRS may be classified into periodic, semi-persistent, and aperiodic SRS, and the corresponding operations may be the same or different. The operation of the terminal may be different or the same depending on the time domain behavior configuration of the SRS.

Unless specifically stated otherwise, in this disclosure, dl-OrJoint-TCIStateList and ul-TCI-StateList are interchangeable, and TCI-state and TCI-UL-State are also interchangeable.

According to one embodiment of the present disclosure, if the terminal identifies at least one of dl-OrJoint-TCIStateList (and/or TCI-State), TCI-UL-State (and/or ul-TCI-StateList), followUnifiedTCIstateSRS (followUnifiedTCI-StateSRS) in the upper layer configuration process described above for periodic SRS and semi-periodic SRS transmission, the terminal may apply the TCI state using the TCI state related information indicated in the MAC CE message for unified TCI application.

In another embodiment, if the terminal identifies at least one of dl-OrJoint-TCIStateList (and/or TCI-State), TCI-UL-State (and/or ul-TCI-StateList), followUnifiedTCIstateSRS during the upper layer configuration process for aperiodic SRS reception, the terminal may apply the TCI state using the TCI state related information indicated in the DCI information for unified TCI application.

According to one embodiment of the present disclosure, if followUnifiedTCIstateSRS is configured together with configuring an SRS resource set and TCI state indication related information in DCI transmitted by a base station is received, the terminal may determine that the TCI state is applied to each SRS resource set or to all SRS resources. If followUnifiedTCIstateSRS is configured together with configuring an SRS resource set and TCI state indication related information in DCI is identified, the TCI state (one unified TCI state) may be applied to all SRS resources included in the SRS resource set per SRS resource set.

Conversely, if followUnifiedTCIstateSRS is not configured together with the SRS resource set, the terminal may determine that the previously set TCI state is applied to each SRS resource configured by the base station.

FIG. 37 is a diagram illustrating an example of applying power parameters to SRS resource configurations according to one embodiment of the present disclosure.

According to one embodiment of the present disclosure, when followUnifiedTCIstateSRS is configured together with configuring an SRS resource set, the terminal may apply power control parameters (e.g., $P_{O_SRS,b,f,c}(q_s)$, $\alpha_{SRS,b,f,c}(q_s)$ and SRS transmission power control adjustment state $l$ values, etc.) for transmission power control linked to the TCI-state or TCI-UL-state of the SRS resource for each SRS resource set configured by the base station according to the p0AlphaSetforSRS value linked to the indicated TCI-state or TCI-UL-state.

Conversely, when followUnifiedTCIstateSRS is not configured together with the SRS resource set configuration, the terminal may apply power control parameters (e.g., Power control parameter 1, e.g., $P_{O_SRS,b,f,c}(q_s)$, $\alpha_{SRS,b,f,c}(q_s)$ SRS transmit power control adjustment state $l$) associated with the TCI-state or TCI-UL-state of the SRS resource having the lowest SRS-ResourceId (SRS resource 1) in the SRS resource set configured by the base station, such as 37-00 . In addition, if the base station configures the terminal to activate followUnifiedTCIstateSRS, the terminal may apply the indicated UL only or joint TCI. The base station may configure aperiodic SRS resources for the purpose of beamforming management or configure SRS resources in the time domain for at least one of the purposes of codebook, non-codebook, and antenna switching.

In various embodiments of the present disclosure, the base station may configure or activate/indicate a plurality of unified TCI states for SRS transmission of the terminal. In various embodiments of the present disclosure, the base station may indicate SRS transmission on the basis of single or a plurality of DCI information for SRS transmission of the terminal.

For example, the base station may configure SRS resources for codebook-based SRS transmission or non-codebook-based SRS transmission. Specifically, the base station may configure one SRS resource set to the terminal considering SRS reception in a single TRP. Specifically, the base station may configure at least two SRS resource sets to the terminal considering SRS reception in a plurality of TRPs. Here, the terminal may perform an operation of simultaneously transmitting a plurality of panels and an operation of repeatedly transmitting a time divsion PUSCH.

As another example, the base station may configure SRS resources for SRS transmission for antenna switching. Specifically, for antenna switching operation such as 1T4R ('mTnR' means the terminal capability to support transmission through m antennas and reception through n antennas), the base station may configure up to four SRS resource sets to the terminal. Specifically, for aperiodic SRS transmission, all power control parameter(s) may be applied equally.

As another example, the base station may indicate SRS resources using the SRS request field in the DCI. Specifically, the base station may indicate SRS request related information to the terminal using DCI format 0_1/0_2/1_1/1_2/2_3. The SRS request related information may be individually configured according to the SRS usage purpose, and may include a plurality of SRS resource sets according to each SRS trigger state.

As another example, the base station may indicate SRS resources by considering power control parameters. Specifically, the base station may be indicated by linking the power control parameters with information such as Po, alpha, closeloopindex, etc. The power control parameters configured and indicated by the base station may be included in the TCI state information.

As another example, the base station may transmit PDCCH in different CORESETs with different CORESETPoolindexes to distinguish TRPs in a plurality of DCI-based multiple TRP operation scenario. Specifically, the base station may include SRS request related information or SRS indicator related information in the DCI transmitted by each TRP.

As another example, the base station may configure new RRC parameters for SRS resources (sets) to follow the TCI state(s) indicated in each CORESET in a single DCI-based multiple TRP operation scenario. Specifically, if the base station considers two TCI states for the SRS resource, it may configure at least one of the first TCI (1st TCI), the second TCI (2nd TCI), both TCIs, and none.

<Fourth embodiment: Method for SRS configuration and triggering on the basis of unified TCI state in a plurality of DCIs>

<4-1st Embodiment>

According to one embodiment, the base station may configure each SRS resource set to be associated with a specific CORESETPoolindex for configuration periodic/semi-periodic/aperiodic SRS resource sets.

FIG. 38 is a diagram illustrating an example of an SRS resource set configuration according to one embodiment of the present disclosure.

For example, instead of configuration followUnifiedTCIStateSRS in the upper layer SRS resource set configuration as shown in FIG. 38 and Table 34, the base station may directly associate with CORESETPoolindex. That is, at least some of the SRS resource set configurations may be associated/connected with CORESETPoolindex. When a plurality of SRS resource sets are configured, different CORESETPoolindexes may be associated between at least some of the plurality of SRS resource sets and the remaining some.

Specifically, the base station may configure four SRS resource sets (e.g., SRS resource sets #1, #2, #3, #4) for the terminal. The base station may configure at least one SRS resource set (e.g., SRS resource sets #1, #2) among the four SRS resource sets to be associated with CORESETPoolindex 0, and one or more remaining SRS resource sets (e.g., SRS resource sets #3, #4) other than those configured above to be associated with CORESETPoolindex 1.

[Table 34]

```
-- ASN1START
-- TAG-SRS-CONFIG-START

SRS-ResourceSet ::=                     SEQUENCE {
   srs-ResourceSetId                       SRS-ResourceSetId,
   srs-ResourceIdList                      SEQUENCE (SIZE(1..maxNrofSRS-
ResourcesPerSet)) OF SRS-ResourceId
   resourceType                           CHOICE {
      aperiodic                              SEQUENCE {
         aperiodicSRS-ResourceTrigger               INTEGER (1..maxNrofSRS-
TriggerStates-1),
         csi-RS                                 NZP-CSI-RS-ResourceId
         slotOffset                              INTEGER (1..32)
         ...,
         [[
         aperiodicSRS-ResourceTriggerList              SEQUENCE
(SIZE(1..maxNrofSRS-TriggerStates-2))
                                                       OF INTEGER
(1..maxNrofSRS-TriggerStates-1)
         ]]
      },
      semi-persistent                          SEQUENCE {
         associatedCSI-RS                           NZP-CSI-RS-ResourceId
         ...
      },
      periodic                                SEQUENCE {
         associatedCSI-RS                           NZP-CSI-RS-ResourceId
         ...
      }
   },
   usage                                 ENUMERATED {beamManagement,
codebook, nonCodebook, antennaSwitching},
   alpha                                 Alpha
   p0                                    INTEGER (-202..24)
   pathlossReferenceRS                      PathlossReferenceRS-Config
   srs-PowerControlAdjustmentStates            ENUMERATED { sameAsFci2,
separateClosedLoop}
   ...,
   [[
   pathlossReferenceRSList-r16                 SetupRelease
{ PathlossReferenceRSList-r16}
   ]],
   [[
   usagePDC-r17                           ENUMERATED {true}
   availableSlotOffsetList-r17                 SEQUENCE (SIZE(1..4)) OF
AvailableSlotOffset-r17
   followUnifiedTCI-StateSRS-r17               ENUMERATED {enabled}

   coresetPoolIndex-r18                     INTEGER (0..1)
   ]]
}
```

For example, a terminal configured with RRC as in the example in Table 34 may identify the SRS resource ID and TCI-state or TCI-UL-state information included in the SRS resource set linked by CORESETPoolindex for periodic/semi-periodic/aperiodic SRS transmission.

As another example, the terminal may identify the SRS resource ID included in the SRS resource set linked by CORESETPoolindex for semi-periodic SRS transmission, and, after a certain period of time from receiving MAC CE information including unified TCI configuration, may transmit an SRS on the basis of the SRS resource ID included in the SRS resource set configuration linked to CORESETPoolindex that transmits DCI including the received SRS request information.

As another example, the terminal may idenfity the SRS resource ID included in the SRS resource set linked by CORESETPoolindex for aperiodic SRS transmission, and, after a certain period of time from receiving DCI information including unified TCI indication information, may transmit an SRS on the basis of the SRS resource ID included in the SRS resource set configuration linked to CORESETPoolindex that transmits the DCI including the received SRS request information.

As another example, if the base station and terminal are configured to be directly linked with CORESETPoolindex, the configuration of followUnifiedTCIStateSRS may be assumed to be disabled.

<4-2nd Embodiment>

Meanwhile, as shown in Table 34, the base station may keep the followUnifiedTCIStateSRS configured in the SRS resource set configuration as described above for the terminal to perform semi-periodic/aperiodic SRS transmission in the upper layer SRS resource set configuration for integrated unified TCI in a plurality of DCIs (M-DCIs). For example, in the RRC configuration process, CORESETPoolindex may not be included/explicitly configured in the SRS-ResourceSet in the SRS-Config, and instead, UnifiedTCIstateSRS configured in the SRS-ResourceSet may be enabled. For example, in the SRS-Resource configured in the SRS-ResourceSet, it may be possible to configure TCI-UL-state or joint TCI state in srs-TCI-State-r17 by resource ID.

That is, the base station may perform followUnifiedTCIStateSRS related configuration without explicitly configuration CORESETPoolindex in the upper layer SRS resource set configuration, and then the terminal may receive the PDCCH and PDSCH activated/indicated to trigger, and determine to apply the unified TCI state on the basis of CORESETPoolindex in conjunction with the identified information (e.g., DCI information and/or MAC CE message).

As an example, in order to configure the same SRS resource set (e.g., SRS-ResourceSet) during the RRC configuration process, the base station and the terminal may determine that a PDCCH is transmitted in a TRP linked to a specific CORESETPoolindex, and that the SRS resource set activated or indicated in the PDCCH applies the TCI state information linked to the specific CORESETPoolindex.

With reference to FIG. 37 again, as in 37-30, the base station may configure an SRS resource set (e.g., SRS-ResourceSetId #1 to #4), transmit at least one of DCI formats 0_1, 0_2, 1_1, 1_2, 2_3 in a plurality of TRPs, transmit PDCCH or PDSCH (e.g., MAC-CE) information activated/ triggering on the basis of the same, and associate the CORESET ID, CORESETPoolindex ID, or SRI, SRS request related information for scheduling it. For example, the PDCCH for activation/triggering may be the same as or different from the PDCCH that transmits and receives at least one of the DCI formats 0_1, 0_2, 1_1, 1_2, 2_3. That is, the PDCCH for activation/triggering may be transmitted/received separately from the PDCCH that transmits/receives at least one of DCI formats 0_1, 0_2, 1_1, 1_2, 2_3, or information for activation/triggering may be included in the PDCCH that transmits/receives at least one of DCI formats 0_1, 0_2, 1_1, 1_2, 2_3.

If the terminal identifies the configuration information and idenfifies information 01/10 (2-bit field: first/second SRS resource set information) of the SRS request field indicated in the PDCCH or PDSCH received from TRP 1 linked to CORESETPoolindex 0, the terminal may determine that the SRS is transmitted on the basis of the resources of SRS resource set #1/#2. Conversely, if the terminal identifies the configuration information and identifies information 01/10 (2 bit field: first/second SRS resource set information) of the SRS request field indicated in the PDCCH received from TRP 2 linked to CORESETPoolindex 1, the terminal may determine that the SRS is transmitted on the basis of the resources of SRS resource set #3/#4.

The above-described embodiment is a description of one embodiment for various configurations, and may be extended to other various embodiments. That is, the description of the above-described embodiment is an example, and the present disclosure is not limited thereto.

<4-3rd Embodiment>

The above-described 4-1st and 4-2nd embodiments may be partially combined and operated/applied for periodic SRS, semi-periodic SRS, and aperiodic SRS transmissions. For example, the 4-1st embodiment may be applied for periodic SRS transmission and semi-periodic SRS transmission, and the 4-2nd embodiment may be applied for aperiodic SRS transmission. As another example, the 4-1st embodiment may be applied for periodic SRS transmission, and the 4-2nd embodiment may be applied for semi-periodic SRS transmission and aperiodic SRS transmission.

<4-4th Embodiment>

In Table 34, the base station may configure the usage of the SRS resource referenced in the SRS resource set to either 'codebook' or ' nonCodebook ' to enable the terminal to select usage in the SRS-ResourceSet configuration. For the codebook and nonCodebook, if there is a configuration according to the above-described embodiment (for example, if a plurality of SRS resource sets are configured), the first and second SRS resource sets may follow the TCI configured in connection with pool index 0, 1. This will be described in detail below.

<4-4-1st Embodiment>

For example, the base station may configure at least two SRS resource sets (e.g., SRS-ResourceSetId #1, #2) in a plurality of TRPs for the terminal and configure usage to 'codebook', considering the SRS transmission of the terminal. In addition, as in the 4-1st embodiment, the base station may configure CORESETPoolindex 0 for the SRS resource set SRS-ResourceSetId #1 for the terminal, and CORESETPoolindex 1 for the SRS resource set SRS-ResourceSetId #2, thereby linking the SRS resource set and CORESETPoolindex.
The terminal that has received the configuration information may determine that, for codebook-based periodic/semi-periodic/aperiodic SRS transmission, a first SRS resource set (SRS-ResourceSetId #1) is configured in conjunction with CORESETPoolindex 0, and a second SRS resource set (SRS-ResourceSetId #2) is configured in conjunction with CORESETPoolindex 1. In addition, the terminal may identify the SRI field in the DCI transmitted in each TRP to identify one SRS resource indicated among the SRS resource sets. On the basis of this, the terminal may transmit an SRS that applies an indicated TCI on the basis of the SRS resource set configured in conjunction with each CORESETPoolindex and the CORESETPoolindex.
If the terminal that has received the configuration information performs aperiodic SRS transmission on the basis of codebook, it may additionally identify the SRS request field in the DCI transmitted in each TRP to identify one SRS resource set indicated among the SRS resource sets. On the basis of this, the terminal may transmit SRS on the basis of the SRS resource set configured in connection with each CORESETPoolindex.
This embodiment may be extended and applied even in non-codebook cases.

<4-4-2nd Embodiment>

For example, the base station may configure at least two SRS resource sets (e.g., SRS-ResourceSetId #1, #2) in a plurality of TRPs for the terminal and configure usage to 'non-codebook', considering the SRS transmission of the terminal. In addition, as in the 4-2nd embodiment, the base station may configure followUnifiedTCIStateSRS in the SRS resource sets SRS-ResourceSetId #1 to #4 for the terminal, and thereafter, the terminal may receive a PDCCH or PDSCH that is activated/indicated to be triggered, and determine to apply the unified TCI state on the basis of CORESETPoolindex in conjunction with the identified information (e.g., DCI information or MAC CE message).
The terminal that has received the configuration information may determine that the first SRS-ResourceSetId #1 among the two configured SRS resource sets (e.g., SRS-ResourceSetId #1, #2) is linked if, for non-codebook based periodic/semi-periodic/aperiodic SRS transmission, the base station transmits a PDCCH or PDSCH that is configured and activated/triggered by the upper layer to the terminal, and the PDCCH or PDSCH received by the terminal is transmitted from CORESETPoolindex 0. Conversely, if the PDCCH or PDSCH received by the terminal is transmitted from CORESETPoolindex 1, it may be determined that the second SRS-ResourceSetId #2 among the two configured SRS resource sets (e.g. SRS-ResourceSetId #1, #2) is linked. In this case, the embodiment has been described as if two SRS resource sets are configured, but if four SRS resource sets are configured, a method of selecting the first two and the remaining two may be used, or the base station and the terminal may be implicitly applied such as odd/even numbers, and/or may be updated to be linked by a MAC CE message, etc.
If the terminal that has received the configuration information transmits non-codebook-based aperiodic SRS, the terminal may additionally identify the SRS request field in the DCI transmitted in each TRP to identify one indicated SRS resource set among the SRS resource sets. On the basis of this, the terminal may transmit SRS on the basis of the SRS resource set linked to each CORESETPoolindex.
The present embodiment may be extended and applied even in the case of a codebook.

<4-5th Embodiment>

The base station and terminal may configure the TCI for the terminal's SRS transmission on the basis of the unified TCI without configuration additional parameters.
First, the base station and the terminal may configure the TCI state in SRS resource units, not in the preceding SRS resource sets, for TCI state configuration. For example, the TCI state configuration in the preceding SRS resource units may be performed only by RRC configuration. That is, the TCI state directly configured in RRC may be applied to perform SRS transmission without dynamic activation/triggering (L1/L2 based dynamic signaling) of semi-periodic/aperiodic SRS resource sets. The TCI state may be configured by RRC per SRS resource (purely RRC).
For example, when the base station and the terminal configure an SRS resource set, the beamforming direction is determined by applying the TCI (e.g., TCI state #1, #1, #2, #2) configured separately for each configured SRS resource (e.g., SRS-ResourceId # 1, #2, #3, #4) in the SRS resource set (e.g., SRS-ResourceSetId #1), and for power control, as shown in FIG. 37-00, the power control parameter (e.g., $P_{O_SRS,b,f,c}(q_s)$, $\alpha_{SRS,b,f,c}(q_s)$, and SRS power control adjustment state $l$ configured by p0AlphaSetforSRS) of the first SRS resource (e.g., SRS-ResourceId #1) within the same set (e.g., SRS-ResourceSetId #1) may be applied to all resources (e.g., SRS-ResourceSetId #1, #2) within the same set.

Second, the base station and the terminal may configure the TCI state by SRS resource units, not by the preceding SRS resource sets. In particular, the TCI state configuration of the preceding SRS resource units may be applied for the purpose of QCL or TCI state configuration for beam direction in RRC configuration, and may also be applied for power control purposes on the basis of L1/L2-based dynamic signaling. The TCI state may be configured for beam direction by RRC per SRS resource, and dynamically controlled for power.

Here, the terminal needs a rule on which SRS resource set's power control parameters to identify and apply when performing power control on the basis of dynamic signaling (L1/L2 based activation/triggering) transmitted from a TRP associated with a specific CORESETPoolindex.

For example, the base station and the terminal may apply the configured TCI (e.g., TCI state #1) to the SRS resource signaled in the TRP associated with CORESETPoolindex (e.g., #0) among the configured SRS resources (e.g., SRS-ResourceId #1, #2, #3, #4) in the SRS resource set (e.g., SRS-ResourceSetId #1), and may apply the configured TCI (e.g., TCI state #2) to the SRS resource signaled in the TRP associated with CORESETPoolindex (e.g., #1).

Meanwhile, the base station may indicate to apply the power control parameter (the first power control parameters) of the first SRS resource (e.g., SRS-ResourceSetId #1) within the same set (e.g., SRS-ResourceSetId #1) to all resources (e.g., SRS-ResourceSetId #1, #2, #3, #4 ) within the same set for power control of the SRS resource signaled in the TRP associated with the CORESETPoolindex (e.g., #0) as shown in FIG. 37-30. In addition, the base station may indicate to apply the power control parameter (the second power control parameters) of the second SRS resource (e.g., SRS-ResourceSetId #2) within the same set (e.g., SRS-ResourceSetId #1) to all resources (e.g., SRS-ResourceSetId #1, #2, #3, #4) within the same set for power control of the SRS resource signaled in the TRP associated with the CORESETPoolindex (e.g., #1).

In response to the base station indication, the terminal may receive a PDCCH for scheduling a MAC-CE message that triggers an aperiodic SRS transmission or activates a semi-periodic SRS transmitted in a TRP associated with CORESETPoolindex (e.g., #0), and, when the aperiodic SRS transmission occurs, the terminal may apply the power control parameters (the first power control parameters) of a first SRS resource (e.g., SRS-ResourceSetId #1) within the same set (e.g., SRS-ResourceSetId #1) to all resources (e.g., SRS-ResourceSetId #1, #2, #3, #4) within the same set. The terminal may receive a PDCCH that schedules a MAC-CE message that triggers an aperiodic SRS transmission transmitted in a TRP associated with a CORESETPoolindex (e.g., #1) or activates a semi-periodic SRS, and when transmitting an aperiodic SRS, the terminal may apply the power control parameters (second power control parameters) of a second SRS resource (e.g., SRS-ResourceSetId #2) within the same set (e.g., SRS-ResourceSetId #1) to all resources (e.g., SRS-ResourceSetId #1, #2, #3, #4) within the same set.

If the base station and the terminal configure only one SRS resource (e.g., SRS-ResourceId #1) within the same set (e.g., SRS-ResourceSetId #1), it may be assumed that the power control parameters of the first SRS resource (the first power control parameters) are applied regardless of the CORESETPoolindex described above.

As another example, if the base station and the terminal have at least one (e.g., two) TCI states configured for each SRS resource (e.g., SRS-ResourceId # 1, #2, #3, #4) included in the SRS resource set (e.g., SRS-ResourceSetId #1), the SRS resource signaled in the TRP associated with CORESETPoolindex (e.g., #0) among the SRS resource set (e.g., SRS-ResourceSetId #1) may apply the first TCI among the at least one or more TCI states, and the SRS resource signaled in the TRP associated with CORESETPoolindex (e.g., #1) may apply the second TCI among the at least one or more TCI states.

Meanwhile, the base station may indicate to apply the power control parameters (1-1st power control parameters) for the first TCI state of the first SRS resource (e.g., SRS-ResourceId #1) within the same set (e.g., SRS-ResourceSetId # 1) and the power control parameters (1-2nd power control parameters) for the second TCI state to all resources (e.g., SRS-ResourceSetId #1, #2, #3, #4) within the same set for power control of the SRS resource signaled in the TRP linked to the CORESETPoolindex (e.g., #0) as shown in FIG. 37-60, and indicate to apply the power control parameters (2-1st power control parameters) for the first TCI state of the second SRS resource (e.g., SRS-ResourceSetId #2) within the same set (e.g., SRS-ResourceSetId #1) and the power control parameters (2-2nd power control parameters) for the second TCI state to all resources (e.g., SRS-ResourceSetId #1, #2, #3, #4) within the same set for power control of the SRS resource signaled in the TRP linked to the CORESETPoolindex (e.g., #1).

In response to the base station indication, the terminal may receive a PDCCH for triggering an aperiodic SRS transmission transmitted in a TRP associated with CORESETPoolindex (e.g., #0) or scheduling a MAC-CE message for activating a semi-periodic SRS, and, when the aperiodic SRS transmission occurs, the terminal may apply the power control parameters (1-1st power control parameters) for the first TCI of the first SRS resource (e.g., SRS-ResourceId #1) within the same set (e.g., SRS-ResourceSetId #1) and the power control parameters (1-2nd power control parameters) for the second TCI state to all resources (e.g., SRS-ResourceSetId #1, #2, #3, #4) within the same set. The terminal may receive a PDCCH for triggering an aperiodic SRS transmission transmitted in a TRP associated with a CORESETPoolindex (e.g., #1) or scheduling a MAC-CE message for activating a semi-periodic SRS, and when transmitting an aperiodic SRS, the terminal may apply the power control parameters (2-$1^{st}$ power control parameters) for the first TCI of a second SRS resource (e.g., SRS-ResourceId #2) within the same set (e.g., SRS-ResourceSetId #1) and the power control parameters (2-$2^{nd}$ power control parameters) for the second TCI state to all resources (e.g., SRS-ResourceSetId #1, #2, #3, #4) within the same set.

For example, if the base station and the terminal configure one TCI state or two TCI states compositely per SRS resource (e.g. SRS-ResourceId #1) within the same set (e.g. SRS-ResourceSetId #1), it may be assumed that the case where only one TCI state is configured follows the embodiment described above. As another example, it may be assumed that the base station and the terminal configure two TCI states compositely per SRS resource (e.g. SRS-ResourceId #1) within the same set (e.g. SRS-ResourceSetId #1), and if only one TCI state is configured, it may be assumed that the second TCI state is configured to the same value.

<5th Embodiment 5: Method for SRS configuration and triggering on the basis of unified TCI state in a single DCI>

<5-$1^{st}$ Embodiment>

Meanwhile, the base station may configure each SRS resource set to be linked to a specific CORESET(s) to configure periodic/semi-periodic/aperiodic SRS resource sets on the basis of a unified TCI state in a single DCI (S-DCI).

FIG. 38 is a diagram illustrating an example of an SRS resource set configuration linked to a TRP according to one embodiment of the present disclosure.

For example, as shown in FIG. 38 and Table 35, the base station may add a new parameter in the upper layer SRS resource set configuration (e.g., followUnifiedTCI-State-r18), and directly associate with the SRS resource sets here by configuring one of the $1^{st}$ TCI, the $2^{nd}$ TCI, and both TCIs. Specifically, the base station may configure four SRS resource sets (e.g., SRS resource sets #1, #2, #3, #4) for the terminal, and at least one SRS resource set (e.g., SRS resource sets #1 and #2) may be associated with the $1^{st}$ TCI state, and one or more remaining SRS resource sets (e.g., SRS resource sets #3 and #4) other than those configured above may be configured to be associated with the $2^{nd}$ TCI state. In addition, the base station may indicate to transmit semi-periodic/aperiodic SRS by signaling (activating/triggering L1/L2) in at least one CORESET(s) after at least one SRS resource set (e.g. SRS resource set #1, #2) is configured to "both TCIs".

[Table 35]

```
-- ASN1START
-- TAG-SRS-CONFIG-START

SRS-ResourceSet ::=                 SEQUENCE {
    srs-ResourceSetId                   SRS-ResourceSetId,
    srs-ResourceIdList                  SEQUENCE (SIZE(1..maxNrofSRS-
ResourcesPerSet)) OF SRS-ResourceId
    resourceType                        CHOICE {
        aperiodic                           SEQUENCE {
            aperiodicSRS-ResourceTrigger        INTEGER (1..maxNrofSRS-
TriggerStates-1),
            csi-RS                              NZP-CSI-RS-ResourceId
            slotOffset                          INTEGER (1..32)
            ...,
            [[
            aperiodicSRS-ResourceTriggerList          SEQUENCE
(SIZE(1..maxNrofSRS-TriggerStates-2))
                                                     OF INTEGER
(1..maxNrofSRS-TriggerStates-1)
            ]]
        },
        semi-persistent                     SEQUENCE {
            associatedCSI-RS                    NZP-CSI-RS-ResourceId
            ...
        },
        periodic                            SEQUENCE {
            associatedCSI-RS                    NZP-CSI-RS-ResourceId
            ...
        }
    },
    usage                               ENUMERATED {beamManagement,
codebook, nonCodebook, antennaSwitching},
    alpha                               Alpha
    p0                                  INTEGER (-202..24)
    pathlossReferenceRS                 PathlossReferenceRS-Config
    srs-PowerControlAdjustmentStates    ENUMERATED { sameAsFci2,
separateClosedLoop}
    ...,
    [[
    pathlossReferenceRSList-r16         SetupRelease
{ PathlossReferenceRSList-r16}
    ]],
    [[
    usagePDC-r17                        ENUMERATED {true}
    availableSlotOffsetList-r17         SEQUENCE (SIZE(1..4)) OF
AvailableSlotOffset-r17
    followUnifiedTCI-StateSRS-r17       ENUMERATED {enabled}
```

```
    followUnifiedTCI-State-r18             ENUMERATED {first, second, both,
none}   // for Single-DCI
    ]]
}

-- ASN1START
-- TAG-CONTROLRESOURCESET-START

ControlResourceSet ::=              SEQUENCE {
    controlResourceSetId                ControlResourceSetId,
    frequencyDomainResources            BIT STRING (SIZE (45)),
    duration                          INTEGER (1..maxCoReSetDuration),
    cce-REG-MappingType                 CHOICE {
        interleaved                       SEQUENCE {
            reg-BundleSize                    ENUMERATED {n2, n3, n6},
            interleaverSize                   ENUMERATED {n2, n3, n6},
            shiftIndex
INTEGER(0..maxNrofPhysicalResourceBlocks-1)
        },
        nonInterleaved                    NULL
    },
    precoderGranularity                 ENUMERATED {sameAsREG-bundle,
allContiguousRBs},
    tci-StatesPDCCH-ToAddList           SEQUENCE(SIZE (1..maxNrofTCI-
StatesPDCCH)) OF TCI-StateId
    tci-StatesPDCCH-ToReleaseList       SEQUENCE(SIZE (1..maxNrofTCI-
StatesPDCCH)) OF TCI-StateId
    tci-PresentInDCI                     ENUMERATED {enabled}
    pdcch-DMRS-ScramblingID               INTEGER (0..65535)
    ...,
    [[
    rb-Offset-r16                      INTEGER (0..5)
    tci-PresentDCI-1-2-r16               INTEGER (1..3)
    coresetPoolIndex-r16                 INTEGER (0..1)
    controlResourceSetId-v1610           ControlResourceSetId-v1610
    ]],
    [[
    followUnifiedTCI-State-r17            ENUMERATED {enabled}
    followUnifiedTCI-State-r18            ENUMERATED {first, second, both,
none}
    ]]
}
```

<5-2nd Embodiment>

Meanwhile, as in Table 35, the base station may maintain followUnifiedTCIStateSRS to be configured in the SRS resource set configuration in the upper layer for integrated unified TCI in a single DCI, as described above, for the terminal to perform semi-periodic/aperiodic SRS transmission.

That is, the base station may perform followUnifiedTCIStateSRS related configuration in the upper layer SRS resource set configuration and associate the CORESET ID with the unified TCI state by configuring one of 1st TCI, 2nd TCI, both TCI, none for at least one CORESET ID. After that, the terminal may receive the PDCCH and PDSCH that are activated/indicated to be triggered and decide to apply the unified TCI state on the basis of the CORESET by linking it with the identified information (e.g., DCI information or MAC CE message).

As an example, to configure the same SRS resource set (e.g., SRS-resourceSet) during the RRC configuration process, the base station may consider configuring the TCI to "first" or "second" for specific CORESET(s) and transmitting PDCCH in TRP associated with the CORESET(s). Here, it may be assumed that the 1st /2nd TCI state information configured for the specific CORESET(s) is applied to the SRS resource set activated or indicated in the PDCCH.

When the terminal receives the configuration information and identifies information 01/10 (2-bit field: first/second SRS resource set information) of the SRS request field indicated in the PDCCH received from TRP 1 linked to the CORESET ID (e.g., CORESET #0), the terminal may determine to transmit the SRS by applying the 1st TCI state among

the unified TCI states set to the CORESET ID on the basis of the resources of the SRS resource set #1/#2.

Conversely, if the terminal identifies the configuration information and identifies information 01/10 (2-bit field: first/second SRS resource set information) of the SRS request field indicated in the PDCCH received from TRP 2 linked to the CORESET ID (e.g., CORESET #1), the terminal may determine to transmit the SRS by applying the 1st TCI state among the unified TCI states set to the CORESET ID on the basis of the resources of the SRS resource set #3/#4.

As another example, to configure the same SRS resource set (e.g., SRS-ResourceSet) during the RRC configuration process, the base station may configure "both" TCI to specific CORESET(s), and consider transmitting PDCCH in the TRP associated with the CORESET(s). Here, the SRS resource set activated or indicated in the PDCCH may be assumed to apply one of the promised/configured 1st TCI/2nd TCI state instead of applying the both TCI state information configured in the specific CORESET(s). In addition, the SRS resource set activated or indicated in the PDCCH may be assumed to apply one of the promised/configured 1st TCI/2nd TCI state if it is impossible to apply the both TCI state information configured in the specific CORESET(s) considering the capability (simultaneous transmission capability, etc.) of the terminal.

Specifically, when the terminal receives the both TCI state configuration information and identifies the information 01/10 (2-bit field: first/second SRS resource set information) of the SRS request field indicated in the PDCCH received from TRP 1 linked to the CORESET ID (e.g., CORESET #0), the terminal may determine that the SRS is transmitted on the basis of the 1st TCI state as a default TCI or a pre-arranged TCI (e.g., odd, first 2, etc.) on the basis of the resources of the SRS resource set #1/#2.

Conversely, if the terminal identifies the configuration information and identifies information 01/10 (2-bit field: first/second SRS resource set information) of the SRS request field indicated in the PDCCH received from TRP 2 linked to the CORESET ID (e.g., CORESET # 1), the terminal may determine that the SRS is transmitted on the basis of the 2nd TCI state as a default TCI or a pre-arranged TCI (e.g., even, the last two, etc.) on the basis of the resources of the SRS resource set #3/#4.

If the RRC configuration is none in the same state described above, the base station and terminal may be extended to apply the preconfigured, immediately prior configured, or default TCI.

The above-described embodiment is a description of one embodiment for various configurations, and may be extended to other various embodiments. That is, the description of the above-described embodiment is exemplary, and the present disclosure is not limited to the above-described contents.

<5-3rd Embodiment>

The above-described 5-1st and 5-2nd embodiments may be partially combined and operated for periodic SRS, semi-periodic SRS, and aperiodic SRS transmissions. For example, the 5-1st embodiment may be applied for periodic SRS transmission and semi-periodic SRS transmission, and the 5-2nd embodiment may be applied for aperiodic SRS transmission. As another example, the 5-1st embodiment may be applied for periodic SRS transmission, and the 5-2nd embodiment may be applied for semi-periodic SRS transmission and aperiodic SRS transmission.

<5-4th Embodiment>

In Table 35, the base station may configure the usage of the SRS resource referenced in the SRS resource set to be either 'codebook' or ' nonCodebook ' for the terminal to select usage in the SRS-ResourceSet configuration. For the codebook and nonCodebook, if there is a configuration according to the above-described embodiment (for example, if a plurality of SRS resource sets are configured), the first and second SRS resource sets may follow the TCI configured in conjunction with pool index 0 and 1. This will be described in detail below.

<5-4-1st Embodiment>

For example, the base station may configure at least two SRS resource sets (e.g., SRS-ResourceSetId #1, #2) for the terminal and configure usage to 'codebook', considering SRS transmission in a plurality of TRPs. In addition, as in the 5-1st embodiment, the base station may configure the SRS resource set and TCI state(s) by configuring a new parameter (followUnifiedTCI-State-r18) for the SRS resource set SRS-ResourceSetId #1 and a new parameter (followUnifiedTCI-State-r18) for the SRS resource set SRS-ResourceSetId #2. In addition, the TCI state(s) may be configured by linking the SRS resource set and CORESET(s) to the configuration value of the new parameter (followUnifiedTCI-State-r18).

The terminal that has received the configuration information may transmit an SRS signal by applying the 1st TCI state on the basis of the SRS resources of SRS-ResourceSetId #1 for TRP-1 and by applying the 2nd TCI state on the basis of the SRS resources of SRS-ResourceSetId #2 for TRP-2, if the first SRS resource set SRS-ResourceSetId #1 has a new parameter (followUnifiedTCI-State-r18) configured to "first" and the second SRS resource set SRS-ResourceSetId #2 has a new parameter (followUnifiedTCI-State-r18) configured to " second " for codebook-based periodic/semi-periodic/aperiodic SRS transmission.

The terminal that has received the configuration information may transmit semi-periodic/aperiodic SRS by applying the TCI state associated with the CORESET, if a new parameter (followUnifiedTCI-State-r18) is configured to "both" in at least one Id of the first SRS resource set SRS-ResourceSetId #1 and #2 for codebook-based semi-periodic/aperiodic SRS transmission, and then receives signaling (L1/L2 activation/triggering) from at least one CORESET(s).

If the terminal that has received the configuration information performs aperiodic SRS transmission on the basis of a codebook, it may additionally identify the SRS request field in the DCI transmitted in each TRP to identify one indicated SRS resource set among the SRS resource sets. On the basis of this, the terminal may transmit an SRS signal using SRS resources within the configured SRS resource set.

<5-4-2nd Embodiment>

For example, the base station may configure at least two SRS resource sets (e.g., SRS-ResourceSetId #1, #2) for the terminal and configure usage to 'non-codebook', considering SRS transmission in a plurality of TRPs. In addition, as in the 5-1st embodiment, the base station may configure followUnifiedTCI-State-r18 for the SRS resource sets SRS-ResourceSetId #1 to #4 for the terminal, and configure a new parameter (followUnifiedTCI-State-r18) for each SRS resource set SRS-ResourceSetId, thereby configuring the SRS resource set, the number of transmitting ports, and the TCI state(s). In addition, the TCI state(s) may be configured by linking the SRS resource set and CORESET(s) to the configuration value of the new parameter (followUnifiedTCI-State-r18).

The terminal that has received the configuration information, for non-codebook based periodic/semi-periodic/aperiodic SRS transmission, if a first SRS resource set SRS-ResourceSetId #1 has a new parameter (followUnifiedTCI-State-r18) configured to "first" and a second SRS resource set SRS-ResourceSetId #2 has a new parameter (followUnifiedTCI-State-r18) configured to "second", may transmit an SRS signal corresponding to each antenna port by applying the 1st TCI state on the basis of the SRS resources of SRS-ResourceSetId #1 for TRP-1 and by applying the 2nd TCI state on the basis of the SRS resources of SRS-ResourceSetId #2 for TRP-2. Here, the SRS resources to which the same TCI state is applied may be featured in that at least one or more symbols are overlapped in the time domain or all symbols are overlapped and transmitted.

The terminal that has received the configuration information may transmit semi-periodic/aperiodic SRS by applying the TCI state associated with the CORESET, if a new parameter (followUnifiedTCI-State-r18) is configured to "both" in at least one Id of the first SRS resource set SRS-ResourceSetId #1 and #2 for non-codebook based semi-periodic/aperiodic SRS transmission, and then receives signaling (L1/L2 activation/triggering) from at least one CORESET(s). That is, if the terminal is configured to transmit SRS in the same slot or symbol on the basis of non-codebook, it may be assumed that SRS-ResourceSetId #1 to #4 are configured to correspond to the same TRP.

If the terminal that has received the configuration information performs aperiodic SRS transmission on the basis of non-codebook, it may additionally identify the SRS request field in the DCI transmitted in each TRP to identify one indicated SRS resource set among the SRS resource sets. On the basis of this, the terminal may transmit an SRS signal using SRS resources within the configured SRS resource set.

<5-4-3rd Embodiment>

For example, the base station may configure at least two SRS resource sets (e.g., SRS-ResourceSetId #1, #2) for the terminal and configure usage to 'codebook', considering SRS transmission in a plurality of TRPs. In addition, as in the 5-2nd embodiment, the base station may configure the terminal to activate followUnifiedTCI-StateSRS in at least one of the SRS resource sets SRS-ResourceSetId #1 and SRS-ResourceSetId #2 , and thereafter, the terminal may receive a PDCCH or PDSCH indicated to be activated/ triggered, and may determine to apply the unified TCI state on the basis of the configuration to CORESET(s) in conjunction with the identified information (e.g., DCI information or MAC CE message).

The terminal that has received the configuration information may determine that the TCI state(s) are configured for each SRS resource set if it identifies that followUnifiedTCI-StateSRS is activated in the first SRS resource set SRS-ResourceSetId #1 or #2 for periodic/semi-periodic/aperiodic SRS transmission on the basis of the codebook.

Here, in the case of periodic SRS transmission, TCI state(s) means TCI determined in ControlResourceSet 0 or common CORESET determined in RRC configuration process. In addition, in the case of semi-periodic/aperiodic SRS transmission, TCI state(s) means TCI determined in RRC configuration (e.g., ControlResourceSet) of CORESET(s) determined on the basis of at least one of CORESET(s) including PDCCH indicated to be activated/triggered, CORESET triggered by PDCCH, or CORESET(s) linked to information (MAC CE message) identified by receiving PDSCH. If the terminal that has received the configuration information, in the case of codebook-based aperiodic SRS transmission, may additionally identify SRS request field in DCI transmitted in each TRP to identify one SRS resource set indicated among SRS resource sets.

Finally, the terminal may idenfity the SRI field in the DCI transmitted in the previously determined TCI state and TRP, and identify one indicated SRS resource among the SRS resource set, and transmit the SRS with the TCI applied.

<5-4-4th Embodiment>

For another example, the base station may configure at least two SRS resource sets (e.g., SRS-ResourceSetId #1, #2) for the terminal and configure usage to 'non-codebook', considering SRS transmission in a plurality of TRPs. In addition, as in the 5-2nd embodiment, the base station may configure the SRS resource sets, the number of transmitting ports, and the TCI state(s) for the terminal, by configuring followUnifiedTCI-StateSRS for each SRS resource set SRS-ResourceSetId in the SRS resource sets SRS-ResourceSetId #1 to #4.

The terminal that has received the configuration information may identify that followUnifiedTCI-StateSRS is activated for SRS resource sets SRS-ResourceSetId #1 and #2 for non-codebook based periodic/semi-periodic/aperiodic SRS transmission.

Here, for periodic SRS transmission, TCI state(s) may mean the TCI state configured in ControlResourceSet 0 or common CORESET determined during the RRC setup process.

In addition, for semi-periodic/aperiodic SRS transmission, TCI state(s) means a unified TCI state determined in an RRC configuration (e.g., ControlResourceSet) of a CORESET(s) determined on the basis of at least one of a CORESET(s) including a PDCCH indicated to be activated/triggered, a CORESET triggered by a PDCCH, or a CORESET(s) linked to information identified by receiving a PDSCH (e.g., a MAC CE message ).

Additionally, when transmitting non-codebook-based aperiodic SRS, the terminal may further identify the SRS request field in the DCI transmitted by each TRP to identify one indicated SRS resource set among the SRS resource sets.

Meanwhile, if the unified TCI-state configured in the ControlResourceSet 0, common CORESET, or CORESET(s) described above is configured to "first" or "second", the terminal may determine to apply the 1st TCI state or the 2nd TCI state. If the unified TCI-state configured in the ControlResourceSet 0, common CORESET, or CORESET(s) described above is configured to "both", the terminal may determine to apply one TCI state that is predetermined among the 1st TCI state or the 2nd TCI state. For example, the one predetermined TCI state may be determined according to default TCI, 1st TCI state, CORESET ID such as even/odd, etc. Alternatively, the terminal may apply the 1st TCI state or the 2nd TCI state in the order of each antenna port (e.g., ascending or descending, even or odd, etc.).

Finally, the terminal may identify the SRS request field or SRI field in the DCI transmitted in the previously determined TCI state and TRP, identify one SRS resource indicated among the SRS resource sets, and transmit the SRS to which the TCI is applied. Here, the SRS resource to which the same TCI state is applied may be featured by having an SRS signal transmitted in the same slot or symbol in the time domain.

<5-5th Embodiment>

The base station and terminal may configure the TCI for SRS transmission on the basis of the unified TCI without configuring additional parameters.

First, the base station and the terminal may configure the TCI state by SRS resource units, not by the preceding SRS resource sets. In particular, the TCI state configuration of the preceding SRS resource units may be performed only by RRC configuration. That is, the TCI state configured directly in RRC may be applied to perform SRS transmission without dynamic activation/triggering (L1/L2-based dynamic signaling) of semi-periodic/aperiodic SRS resource sets. The TCI state may be configured by RRC per SRS resource (purely RRC).

For example, when the base station and the terminal configure an SRS resource set, the beamforming direction is determined by applying the TCI (e.g., TCI state #1, #1, #2, #2) configured separately for each configured SRS resource (e.g., SRS-ResourceId # 1, #2, #3, #4) in the SRS resource set (e.g., SRS-ResourceSetId #1), and for power control, the power control parameter (e.g., $P_{O_SRS,b,f,c}(q_s)$, $\alpha_{SRS,b,f,c}(q_s)$, and SRS power control adjustment state $l$ configured by p0AlphaSetforSRS) of the first SRS resource (e.g., SRS-ResourceId #1) within the same set (e.g., SRS-ResourceSetId #1) may be applied to all resources (e.g., SRS-ResourceSetId #1, #2) within the same set.

Second, the base station and the terminal may configure the TCI state in units of SRS resources, not in the preceding SRS resource set. In particular, the TCI state configuration in units of preceding SRS resources may be applied for the purpose of QCL or TCI state configuration for beam direction in RRC configuration, and may also be applied for the purpose of power control on the basis of L1/L2-based dynamic signaling. The TCI state may be configured in the beam direction by RRC per SRS resource, and dynamically controlled in power.

Here, the terminal needs a rule on which power control parameters of SRS resource set to identify and apply when performing power control on the basis of dynamic signaling (L1/L2 based activation/triggering) transmitted in TRP associated with specific CORESET(s) or CORESET group ID.

For example, the base station and the terminal may apply the configured TCI (e.g., TCI state #1) to the SRS resources signaled in the TRP associated with the CORESET ID or CORESET group ID (e.g., #0) among the configured SRS resources (e.g., SRS-ResourceId #1, #2, #3, #4) in the SRS resource set (e.g., SRS-ResourceSetId #1), and may apply the configured TCI (e.g., TCI state #2 ) to the SRS resources signaled in the TRP associated with the CORESET(s) or CORESET group ID (e.g., #1).

In a response to the indication of the base station, the terminal may receive a PDCCH for triggering an aperiodic SRS transmission transmitted in a TRP associated with a CORESET ID or a CORESET group ID (e.g., #0) or scheduling a MAC-CE message for activating a semi-periodic SRS, and when the aperiodic SRS transmission occurs, the terminal may apply the power control parameters (the first power control parameters) of the first SRS resource (e.g., SRS-Resource-SetId #1) within the same set (e.g., SRS-ResourceSetId #1) to all resources (e.g., SRS-ResourceSetId #1, #2, #3, #4) within the same set. The terminal may receive a PDCCH that schedules a MAC-CE message that triggers an aperiodic SRS transmission or activates a semi-periodic SRS transmitted in a TRP associated with a CORESET ID or a CORESET group ID (e.g., #1), and, when transmitting an aperiodic SRS, the terminal may apply the power control parameters (the second power control parameters) of the second SRS resource (e.g., SRS-ResourceId #2) within the same set (e.g., SRS-ResourceSetId #1) to all resources (e.g., SRS-ResourceSetId #1, #2, #3, #4) within the same set.

If the base station and the terminal configure only one SRS resource (e.g., SRS-ResourceId #1) within the same set (e.g., SRS-ResourceSetId #1), it may be assumed that the power control parameters of the first SRS resource (the first power control parameters) are applied regardless of the CORESETPoolindex described above.

As another example, if each SRS resource (e.g., SRS-ResourceId #1, #2, #3, #4 ) included in an SRS resource set (e.g., SRS-ResourceSetId #1) has at least one (e.g., two) TCI states set, the base station and the terminal may apply the first TCI among the at least one or more TCI states to the SRS resource signaled in the TRP associated with the CORESET ID or CORESET group ID (e.g., #0) among the SRS resource set (e.g., SRS-ResourceSetId #1), and may apply the second TCI among the at least one or more TCI states to the SRS resource signaled in the TRP associated with the CORESET ID or CORESET group ID (e.g., #1).

Meanwhile, the base station may indicate to apply the power control parameters (1-1$^{st}$ power control parameters) for the first TCI state of the first SRS resource (e.g., SRS-ResourceId #1) within the same set (e.g., SRS-ResourceSetId #1) and the power control parameters (1-2$^{nd}$ power control parameters) for the second TCI state to all resources (e.g., SRS-ResourceSetId #1, #2, #3, #4) within the same set for power control of the SRS resource signaled in the TRP associated with the CORESET ID or CORESET group ID (e.g., #0), and to apply the power control parameters (2-1$^{st}$ power control parameters) for the first TCI state of the second SRS resource (e.g., SRS-ResourceId #2) within the same set (e.g., SRS-ResourceSetId #1) and the power control parameters for the second TCI state of the second SRS resource (e.g., SRS-ResourceId #2) within the same set for power control of the SRS resource signaled in the TRP associated with the CORESET ID or CORESET group ID (e.g., #1). It may be indicated to apply the power control parameters (2-2$^{nd}$ power control parameters) to all resources within the same set (e.g., SRS-ResourceSetId #1, #2, #3, #4).

In a response to the indication of the base station, the terminal may receive a PDCCH for triggering an aperiodic SRS transmission transmitted in a TRP associated with a CORESET ID or a CORESET group ID (e.g., #0) or scheduling a MAC-CE message for activating a semi-periodic SRS, and, when the aperiodic SRS transmission is performed, the terminal may apply the power control parameters (1-1$^{st}$ power control parameters) for the first TCI of the first SRS resource (e.g., SRS-ResourceId #1) within the same set (e.g., SRS-ResourceSetId #1) and the power control parameters (1-2$^{nd}$ power control parameters) for the second TCI state to all resources (e.g., SRS-ResourceSetId #1, #2, #3, #4) within the same set.

The terminal may receive a PDCCH for triggering an aperiodic SRS transmission transmitted in a TRP associated with a CORESET ID or a CORESET group ID (e.g., #1) or scheduling a MAC-CE message for activating a semi-periodic SRS, and when transmitting an aperiodic SRS, the terminal may apply the power control parameters (2-1$^{st}$ power control parameters) for a first TCI of a second SRS resource (e.g., SRS-ResourceId #2) within the same set (e.g., SRS-ResourceSetId #1) and the power control parameters (2-2$^{nd}$ power control parameters) for a second TCI state to all resources (e.g., SRS-ResourceSetId #1, #2, #3, #4) within the same set.

For example, if the base station and the terminal configure one TCI state or two TCI states compositely per SRS resource (e.g., SRS-ResourceId #1) within the same set (e.g., SRS-ResourceSetId #1), it may be obvious to follow the previously described embodiment for the case where only one TCI state is configured. As another example, it may be assumed that the base station and the terminal configure two TCI states compositely per SRS resource (e.g., SRS-ResourceId #1) within the same set (e.g., SRS-ResourceSetId #1), and if only one TCI state is configured, the second TCI state is configured to the same value.

In the following description, the MAC-CE message described in various embodiments above is described in detail.

According to various embodiments, when the terminal receives new parameters (e.g., follow $^{1st}$ TCI, 2$^{nd}$ TCI, both TCIs, none and/or followUnifiedTCI-State-r18, etc.) in the RRC configuration and the first lower SRS resource (or the lowest SRS resource) is configured to include two TCI states, the terminal may additionally receive a MAC-CE message to update the two TCI states. Here, the MAC-CE message may be configured with at least one of information among SRS resource Set's cell ID, SRS resource Set's BWP ID, Supplementary uplink bit, SRS resource SET ID, TCI state Serving Cell ID, TCI state BWP ID, TCI state ID, and COERSETpoolindex. That is, the MAC-CE message may include at least some of the above-described information/parameters.

For example, for an SRS resource to include two TCI states, the MAC-CE message may be configured to include two TCI states for a particular SRS resource SET cell ID, SRS resource SET ID and/or TCI state serving cell ID. For another example, for an SRS resource to include two TCI states, the MAC-CE message may be configured to include two TCI states for a particular SRS resource's cell ID or SRS resource ID, TCI state serving cell ID. If two TCI states are unnecessary for at least one of the SRS resource's cell ID or SRS resource ID, TCI state serving cell ID, the unnecessary TCI states (e.g., the second) may be padded with 0, or a separate 1 bit may be configured to distinguish whether it includes 1 or 2 TCI states.

For example, if the MAC-CE message includes one TCI state for a specific SRS resource SET cell ID, SRS resource SET ID and/or TCI state serving cell ID, the TCI state ID may correspond to a SRS request field value subsequently received from the terminal, on the basis of the CoresetPoolindex previously configured in RRC and the new parameters (e.g., follow 1$^{st}$ TCI, 2$^{nd}$ TCI, both TCIs, none and/or followUnifiedTCI-State-r18). As another example, if the MAC-CE message is configured to include one TCI state for a specific SRS resource cell ID, SRS resource ID and/or TCI state serving cell ID, the TCI state ID may correspond to a SRS request field value subsequently received from the terminal, on the basis of the CoresetPoolindex configured in advance in RRC and the new parameters (e.g., follow 1$^{st}$ TCI, 2$^{nd}$ TCI, both TCIs, none and/or followUnifiedTCI-State-r18).

As another example, if the MAC-CE message includes two TCI states for a specific SRS resource SET cell ID, SRS resource SET ID and/or TCI state serving cell ID, the first TCI state ID and/or the second TCI state ID may be associated with the SRS request field value and/or CoresetPoolindex of the DCI subsequently received by the terminal, on the basis of the preconfigured new parameters (e.g., follow 1$^{st}$ TCI, 2$^{nd}$ TCI, both TCIs, none and/or followUnifiedTCI-State-r18 ). As another example, if the MAC-CE message is configured to include two TCI states for a specific SRS resource cell ID, SRS resource ID and/or TCI state serving cell ID, the first TCI state ID and/or the second TCI state ID may be associated with a SRS request field value and/or CoresetPoolindex subsequently received from the terminal, on the basis of the preconfigured new parameters (e.g., follow 1$^{st}$ TCI, 2$^{nd}$ TCI, both TCIs, none and/or followUnifiedTCI-State-r18).

This message may be used in the form of indicating the TCI state of semi-periodic or aperiodic SRS and in the form of indicating the SRS TCI state on the basis of the serving cell set.

Independently of the unified TCI-based MAC CE message for SRS described above, a MAC CE message for power control may be configured, wherein the configuration information includes at least some of the information included in the unified TCI-based MAC CE, and additionally, a Pathloss Reference RS may be included.

FIG. 39 is a diagram illustrating an example of an operation method of a terminal according to one embodiment of the present disclosure. Various changes may be made to the method illustrated in the flowchart of FIG. 39. For example, although illustrated as a series of steps, various steps in each drawing may overlap, occur in parallel, occur in a different order, or occur a plurality of times. In other examples, steps may be omitted or replaced with other steps.

With reference to FIG. 39, in operation 3910 according to one embodiment, a terminal may receive configuration information for a plurality of SRS (sounding reference signal) resource sets. For example, the configuration information may be received through higher layer signaling. According to one embodiment, the plurality of SRS resource sets may include one or more first SRS resource sets and one or more second SRS resource sets. One or more first SRS resource sets may correspond to a first index. One or more second SRS resource sets may correspond to a second index.

In operation 3920 according to one embodiment, the terminal may transmit an SRS on the basis of configuration information and a unified transmission configuration index (TCI) state. According to one embodiment, the unified TCI state may be identified to correspond to either a first index or a second index.

For more specific details on the operation of the terminal illustrated in FIG. 39, the description of the above-described embodiment may be referred to.

FIG. 40 is a diagram illustrating an example of an operation method of a base station according to one embodiment of the present disclosure. Various changes may be made to the method illustrated in the flowchart of FIG. 40. For example, although illustrated as a series of steps, the various steps in each drawing may overlap, occur in parallel, occur in a different order, or occur a plurality of times. In other examples, steps may be omitted or replaced with other steps.

With reference to FIG. 40, in operation 4010 according to one embodiment, a base station may transmit configuration information for a plurality of sounding reference signal (SRS) resource sets. For example, the configuration information may be transmitted through higher layer signaling. According to one embodiment, the plurality of SRS resource sets may include one or more first SRS resource sets and one or more second SRS resource sets. One or more first SRS resource sets may correspond to a first index. One or more second SRS resource sets may correspond to a second index.

In operation 4020 according to one embodiment, the base station may receive an SRS related to configuration information. According to one embodiment, the SRS may correspond to a unified transmission configuration index (TCI) state. According to one embodiment, the unified TCI state may correspond to either a first index or a second index.

For more specific details on the operation of the terminal illustrated in FIG. 40, the description of the above-described embodiment may be referred to.

FIG. 41 is a diagram illustrating the structure of a terminal in a wireless communication system according to one embodiment of the present disclosure.

With reference to FIG. 41, the terminal may include a transceiver, which refers to a terminal receiving unit 4100 and a terminal transmitting unit 4110, a memory (not shown), and a terminal processing unit 4105 (or a terminal control unit or processor). According to the communication method of the terminal described above, the transceiver 4100 and 4110, the memory, and the terminal processing unit 4105 of the terminal may operate. However, the components of the terminal are not limited to the examples described above. For example, the terminal may include more or fewer components than the components described above. In addition, the transceiver, the memory, and the processor may be implemented in the form of a single chip.

The transceiver may transmit and receive signals with the base station. Here, the signals may include control information and data. To this end, the transceiver may be configured with an RF transmitter that up-converts and amplifies the frequency of a transmitted signal, an RF receiver that low-noise amplifies a received signal and down-converts the frequency, etc. However, this is only one example of the transceiver, and the components of the transceiver are not limited to the RF transmitter and the RF receiver.

In addition, the transceiver may receive a signal through a wireless channel and output it to the processor, and transmit a signal output from the processor through the wireless channel.

The memory may store programs and data necessary for the operation of the terminal. In addition, the memory may store control information or data included in signals transmitted and received by the terminal. The memory may be composed of a storage medium such as ROM, RAM, a hard disk, CD-ROM, and DVD, or a combination of storage media. In addition, there may be a plurality of memories.

In addition, the processor may control a series of processes so that the terminal may operate according to the above-described embodiment. For example, the processor may control components of the terminal to receive DCI consisting of two layers and simultaneously receive a plurality of PDSCHS. There may be a plurality of processors, and the processor may perform component control operations of the terminal by executing a program stored in a memory.

FIG. 42 is a diagram illustrating the structure of a base station in a wireless communication system according to one embodiment of the present disclosure.

With reference to FIG. 42, the base station may include a transceiver, which refers to a base station receiving unit 4200 and a base station transmitting unit 4210, a memory (not shown), and a base station processing unit 4205 (or a base station control unit or processor). According to the communication method of the base station described above, the transceiver 4200 and 4210, the memory, and the base station processing unit 4205 of the base station may operate. However, the components of the base station are not limited to the examples described above. For example, the base station may include more or fewer components than the components described above. In addition, the transceiver, the memory, and the processor may be implemented in the form of a single chip.

The transceiver may transmit and receive signals with the terminal. Here, the signals may include control information and data. To this end, the transceiver may be configured with an RF transmitter that up-converts and amplifies the frequency of a transmitted signal, an RF receiver that low-noise amplifies a received signal and down-converts the frequency, etc. However, this is only one example of the transceiver, and the components of the transceiver are not limited to the RF transmitter and the RF receiver.

In addition, the transceiver may receive a signal through a wireless channel and output it to the processor, and transmit a signal output from the processor through the wireless channel.

The memory may store programs and data required for the operation of the base station. In addition, the memory may store control information or data included in signals transmitted and received by the base station. The memory may be composed of a storage medium or a combination of storage media such as a ROM, a RAM, a hard disk, a CD-ROM, and a DVD. In addition, there may be a plurality of memories.

The processor may control a series of processes so that the base station may operate according to the above-described embodiment of the present disclosure. For example, the processor may configure two layers of DCIs including allocation information for a plurality of PDSCHs and control each component of the base station to transmit them. There may be a plurality of processors, and the processor may perform the component control operation of the base station by executing a program stored in a memory.

The methods according to the embodiments described in the claims or specification of the present disclosure may be implemented in the form of hardware, software, or a combination of hardware and software.

In the case of software implementation, a computer-readable storage medium storing one or more programs (software modules) may be provided. The one or more programs stored in the computer-readable storage medium are configured for execution by one or more processors in an electronic device. The one or more programs include instructions that cause the electronic device to execute methods according to embodiments described in the claims or specification of the present disclosure.

These programs (software modules, software) may be stored in a random access memory, a non -volatile memory including a flash memory, a Read Only Memory (ROM), an Electrically Erasable Programmable Read Only Memory (EEPROM), a magnetic disc storage device, a Compact Disc-ROM (CD-ROM), a Digital Versatile Discs (DVDs) or other forms of optical storage devices, a magnetic cassette. Alternatively, they may be stored in a memory composed of a combination of some or all of these. In addition, each configuration memory may be included in a plurality of numbers.

In addition, the program may be stored in an attachable storage device that is accessible through a communications network, such as the Internet, an Intranet, a Local Area Network (LAN), a Wide LAN (WLAN), or a Storage Area Network (SAN), or a combination thereof. The storage device may be connected to the device performing the embodiments of the present disclosure through an external port. In addition, a separate storage device on the communications network may be connected to the device performing the embodiments of the present disclosure.

In the specific embodiments of the present disclosure described above, the components included in the invention are expressed in the singular or plural form according to the specific embodiments presented. However, the singular or plural expressions are selected appropriately for the presented situation for the convenience of explanation, and the present disclosure is not limited to the singular or plural components, and even if a component is expressed in the plural form, it may be composed of the singular form, or even if a component is expressed in the singular form, it may be composed of the plural form.

Meanwhile, the embodiments of the present disclosure disclosed in this specification and drawings are only specific examples to easily explain the technical contents of the present disclosure and to help the understanding of the present disclosure, and are not intended to limit the scope of the present disclosure. That is, it is obvious to a person having ordinary skill in the art to which the present disclosure pertains that other modified examples on the basis of the technical idea of the present disclosure are possible. In addition, each of the above embodiments may be combined and operated as needed. For example, parts of one embodiment of the present disclosure and parts of another embodiment may be combined and operated as a base station and a terminal. For example, parts of the first embodiment and the second embodiment of the present disclosure may be combined and operated as a base station and a terminal. In addition, although the above embodiments have been presented on the basis of the FDD LTE system, other modified examples on the basis of the technical idea of the above embodiments may be implemented in other systems such as the TDD LTE system, 5G, or NR system.

Meanwhile, the order of description in the drawings explaining the method of the present disclosure does not necessarily correspond to the order of execution, and the order of precedence may be changed or executed in parallel.

Alternatively, the drawings illustrating the method of the present disclosure may omit some components and include only some components without damaging the essence of the present disclosure.

In addition, the method of the present disclosure may be implemented by combining part or all of the contents included in each embodiment within a scope that does not harm the essence of the invention.

Various embodiments of the present disclosure have been described above. The description of the present disclosure as described above is for illustrative purposes, and the embodiments of the present disclosure are not limited to the disclosed embodiments. Those skilled in the art will appreciate that the present disclosure may be easily modified into other specific forms without changing the technical idea or essential features of the present disclosure. The scope of the present disclosure is indicated by the claims described below rather than the detailed description above, and all changes or modifications derived from the meaning and scope of the claims, and their equivalent concepts should be interpreted as being included in the scope of the present disclosure.

## Claims

1. A method performed by a terminal in a communication system, the method comprising:

   receiving configuration information for a plurality of sounding reference signal (SRS) resource sets through higher layer signaling, wherein the plurality of SRS resource sets comprise one or more first SRS resource sets associated with a first index and one or more second SRS resource sets associated with a second index; and
   transmitting SRS based on the configuration information and the unified transmission configuration index (TCI) state, wherein the unified TCI state is identified to correspond to either the first index or the second index.

2. The method of claim 1, wherein in case that the configuration information comprises a control resource set (CORESET) pool index corresponding to a plurality of CORESETs, the first index is a first value of the CORESET pool index, the second index is a second value of the CORESET pool index, and the method further comprises receiving a downlink control information (DCI) including an SRS request field, wherein the unified TCI is identified such that the DCI corresponds to a CORESET pool index corresponding to the received CORESET.

**3.** The method of claim 1, wherein in case that the TCI uplink (UL) state or the joint TCI state is configured to be used for the SRS, the first index is a first value of the CORESET pool index, the second index is a second value of the CORESET pool index, and the unified TCI state is identified to correspond to a value of the CORESET pool index indicated based on one or more of a medium access control (MAC) control element (CE) or DCI.

**4.** The method of claim 1, wherein the configuration information comprises a configuration for one more of the first index and the second index,

wherein in case that the configuration configures one of the first index and the second index, the unified TCI state is identified to correspond to the index configured by the configuration,
wherein the method further comprises transmitting a DCI including an SRS request field when the configuration configures both the first index and the second index, and
wherein the unified TCI is identified to correspond to an index indicated by the DCI among the first index and the second index.

**5.** The method of claim 1, wherein the one or more second SRS resource sets are the remaining SRS resource sets excluding the one or more first SRS resource sets among the plurality of SRS resource sets.

**6.** A terminal of a communication system comprising:

a transceiver; and
a processor coupled to the transceiver, wherein the processor is configured to:

receive configuration information for a plurality of sounding reference signal (SRS) resource sets through higher layer signaling, wherein the plurality of SRS resource sets comprise one or more first SRS resource sets associated with a first index and one or more second SRS resource sets associated with a second index; and
transmit SRS based on the configuration information and the unified transmission configuration index (TCI) state, wherein the unified TCI state is identified to correspond to either the first index or the second index.

**7.** The terminal of claim 6, wherein in case that the configuration information comprises a CORESET pool index corresponding to a plurality of control resource sets (CORESETs), the first index is a first value of the CORESET pool index, the second index is a second value of the CORESET pool index, and the processor is configured to receive downlink control information (DCI) including an SRS request field, wherein the unified TCI is identified such that the DCI corresponds to a CORESET pool index corresponding to the received CORESET.

**8.** The terminal of claim 6, wherein wherein the TCI uplink (UL) state or the joint TCI state is configured to be used for the SRS, the first index is a first value of the CORESET pool index, the second index is a second value of the CORESET pool index, and the unified TCI state is identified to correspond to a value of the CORESET pool index indicated based on one or more of a medium access control (MAC) control element (CE) or DCI.

**9.** The terminal of claim 6, wherein the one or more second SRS resource sets are the remaining SRS resource sets excluding the one or more first SRS resource sets among the plurality of SRS resource sets.

**10.** A method performed by a base station in a communication system, the method comprising:

transmitting configuration information for a plurality of sounding reference signal (SRS) resource sets through higher layer signaling, wherein the plurality of SRS resource sets comprise one or more first SRS resource sets associated with a first index and one or more second SRS resource sets associated with a second index; and
receiving SRS related to the configuration information and the unified transmission configuration index (TCI) state, wherein the unified TCI state corresponds to either the first index or the second index.

**11.** The method of claim 10, wherein in case that the configuration information comprises a CORESET (control resource set) pool index corresponding to a plurality of CORESETs, the first index is a first value of the CORESET pool index, the second index is a second value of the CORESET pool index, and the method further comprises transmitting a downlink control information (DCI) including an SRS request field, wherein the unified TCI corresponds to a CORESET pool index corresponding to the received CORESET.

**12.** The method of claim 10, wherein in case that the TCI uplink (UL) state or the joint TCI state is configured to be used for the SRS, the first index is a first value of the CORESET pool index, the second index is a second value of the CORESET pool index, and the unified TCI state corresponds to a value of the CORESET pool index indicated based on one or more of a medium access control (MAC) control element (CE) or DCI.

**13.** The method of claim 10, wherein the configuration information comprises a configuration indicating one or more of the first index and the second index,
wherein in case that the configuration configures one of the first index and the second index, the unified TCI state is identified to correspond to the index configured by the configuration, and the method further comprises transmitting a DCI including an SRS request field when the configuration configures both the first index and the second index, wherein the unified TCI corresponds to an index indicated by the DCI among the first index and the second index.

**14.** The method of claim 10, wherein the one or more second SRS resource sets are SRS resource sets remaining among the plurality of SRS resource sets excluding the one or more first SRS resource sets.

**15.** A base station in a communication system comprising:

a transceiver; and
a processor coupled to the transceiver, wherein the processor is configured to:

transmit configuration information for a plurality of sounding reference signal (SRS) resource sets through higher layer signaling, wherein the plurality of SRS resource sets comprise one or more first SRS resource sets associated with a first index and one or more second SRS resource sets associated with a second index; and
receive an SRS related to the configuration information and the unified transmission configuration index (TCI) state, wherein the unified TCI state corresponds to one of the first index or the second index.

FIG. 1

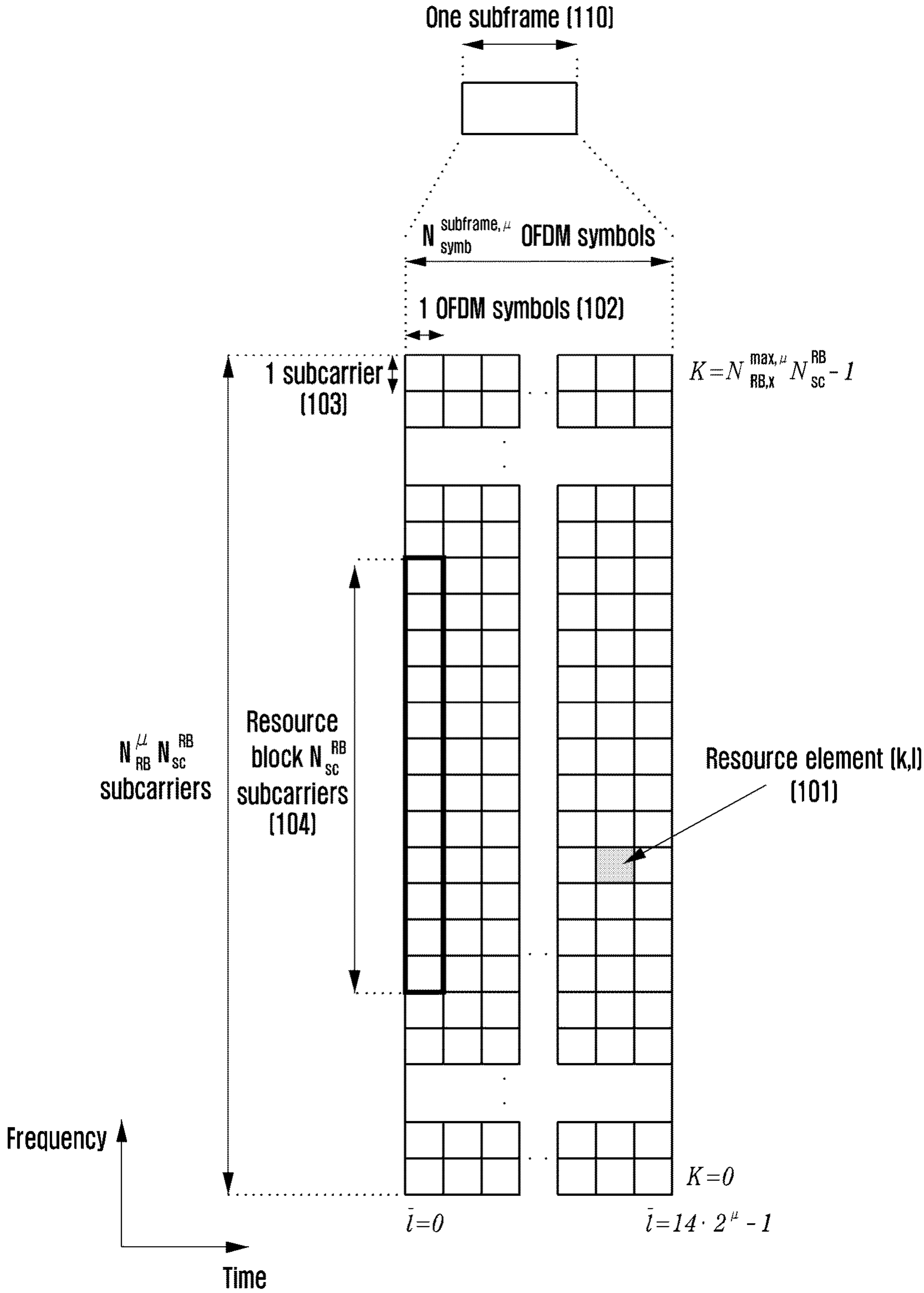
One subframe (110)
N subframe,μ symb OFDM symbols
1 OFDM symbols (102)
1 subcarrier (103)
K=N max,μ RB,x N RB sc - 1
Resource block N RB sc subcarriers (104)
N μ RB N RB sc subcarriers
Resource element (k,l) (101)
Frequency
Time
K=0
l=0
l=14· 2μ - 1

FIG. 2

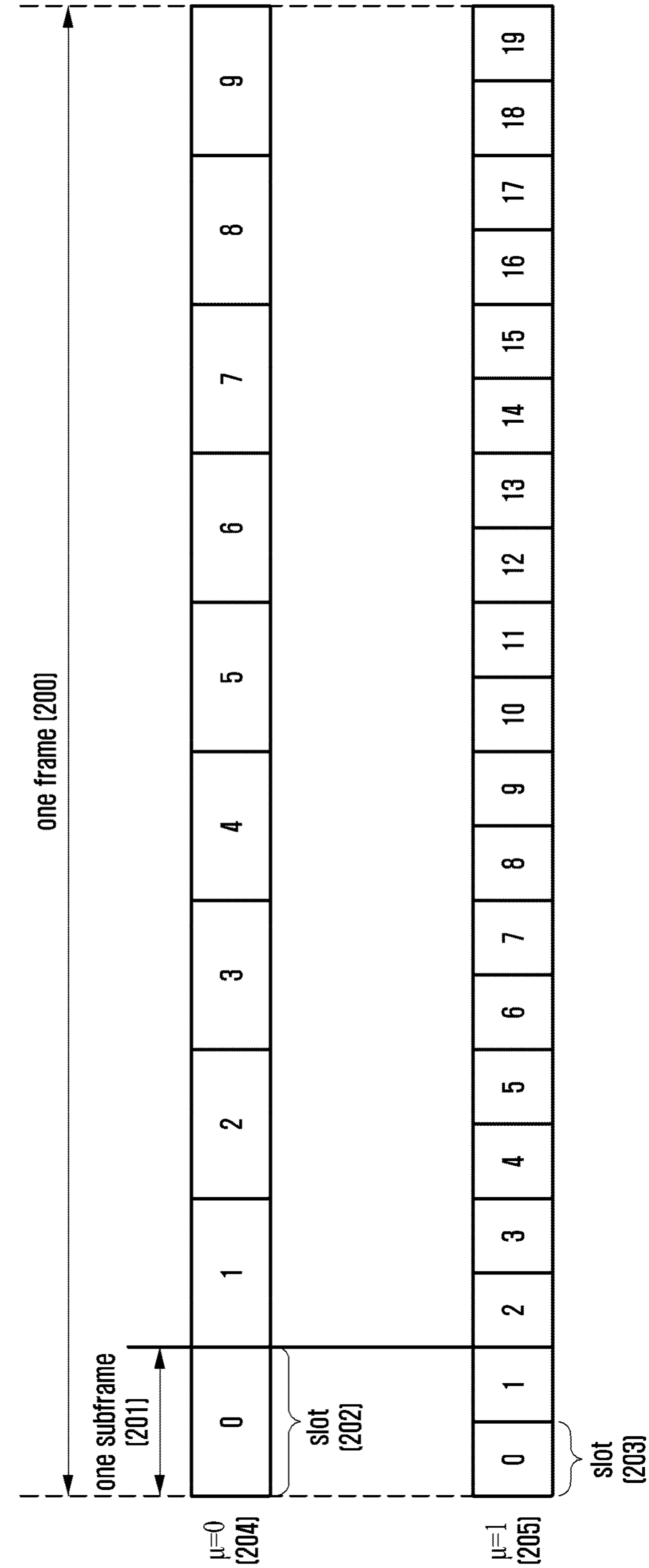
one frame (200)
one subframe (201)
slot (202)
slot (203)
μ=0 (204)
μ=1 (205)
0
1
2
3
4
5
6
7
8
9
0
1
2
3
4
5
6
7
8
9
10
11
12
13
14
15
16
17
18
19

FIG. 3

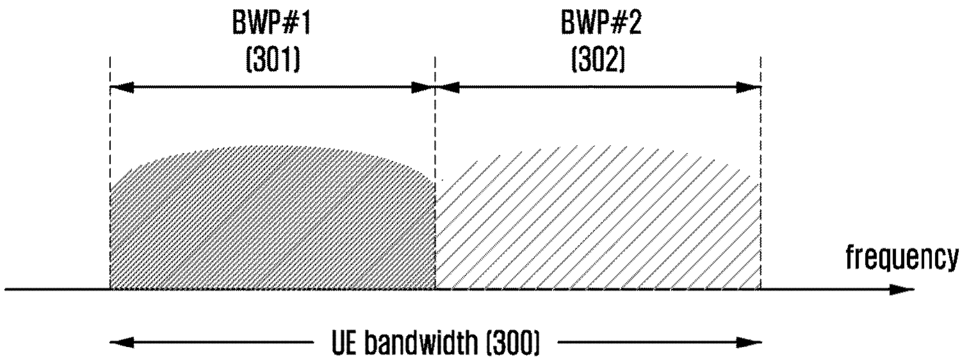

FIG. 4

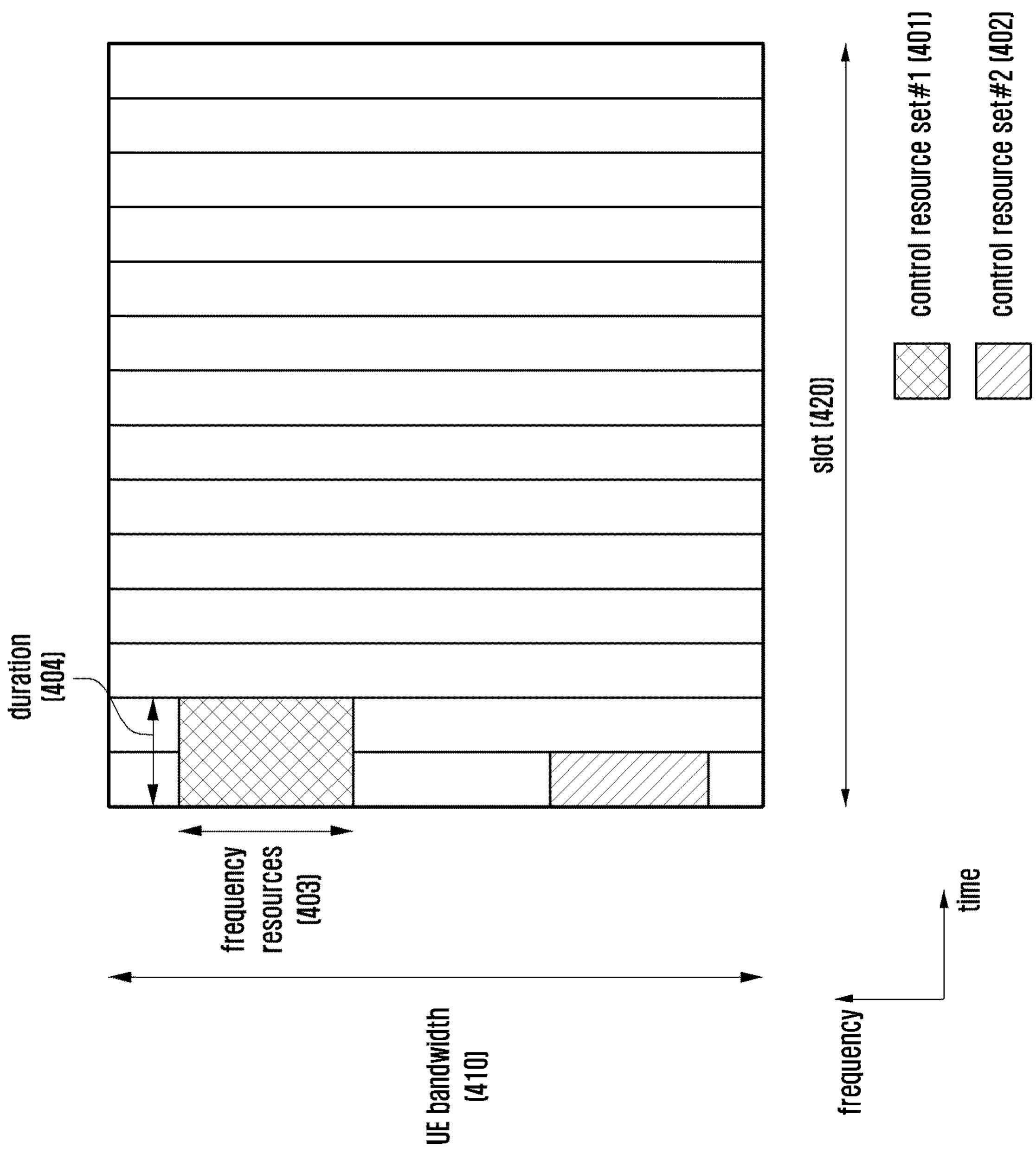
duration
(404)
frequency
resources
(403)
UE bandwidth
(410)
slot (420)
control resource set#1 (401)
control resource set#2 (402)
frequency
time

FIG. 5A

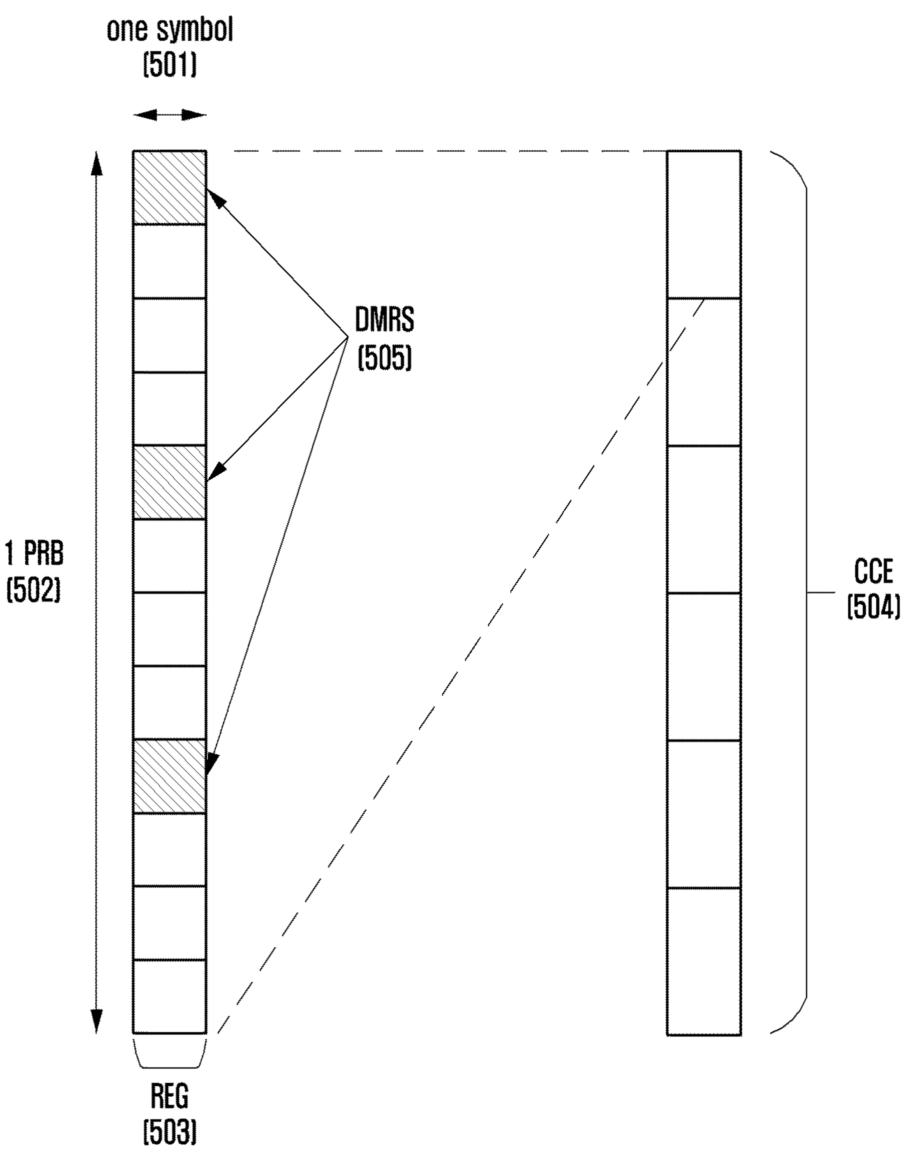

FIG. 5B

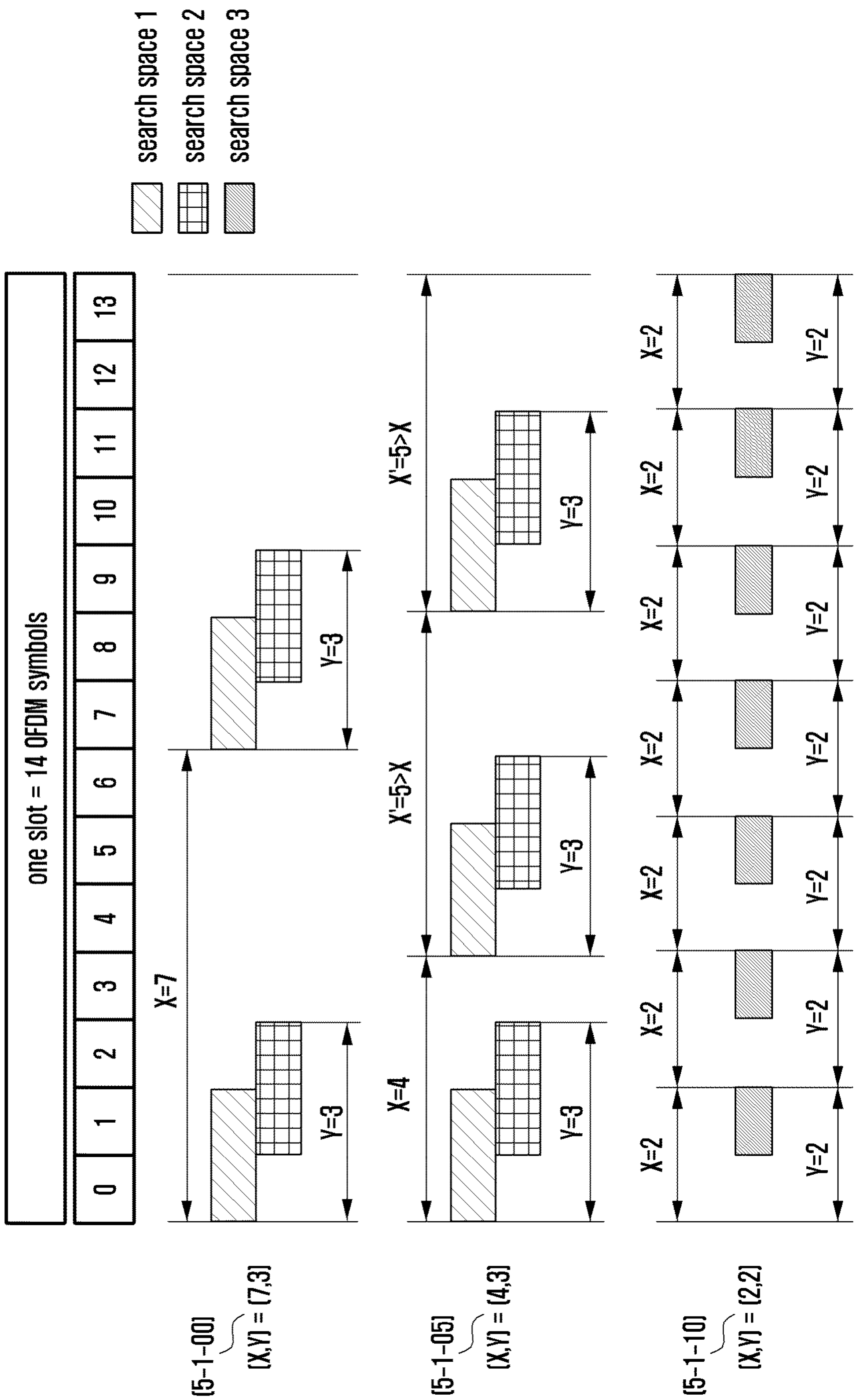

search space 1
search space 2
search space 3
one slot = 14 OFDM symbols
0
1
2
3
4
5
6
7
8
9
10
11
12
13
X=7
Y=3
Y=3
X=4
X'=5>X
X'=5>X
Y=3
Y=3
Y=3
X=2
Y=2
(5-1-00)
(X,Y) = (7,3)
(5-1-05)
(X,Y) = (4,3)
(5-1-10)
(X,Y) = (2,2)

FIG. 6

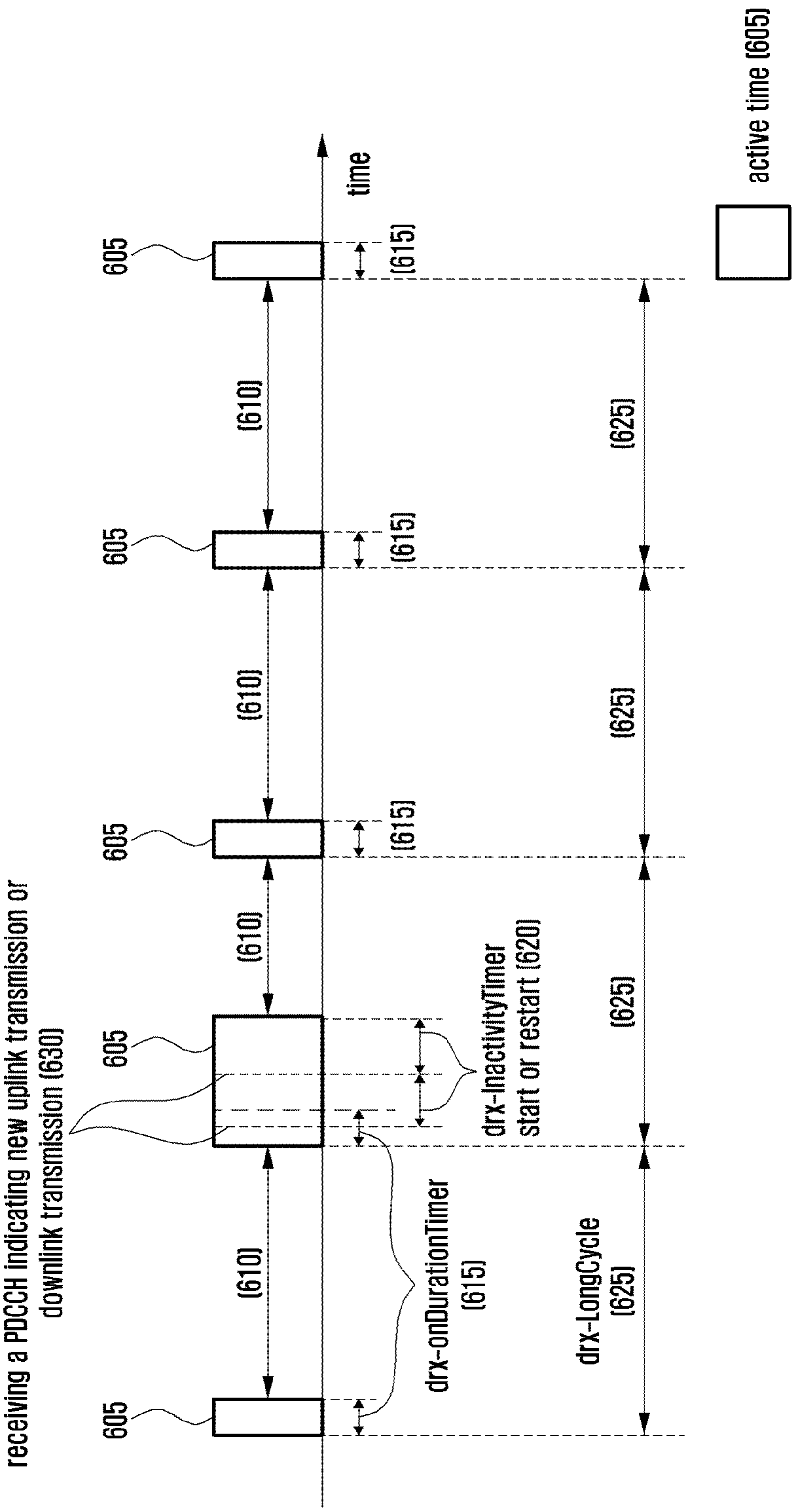
time
active time (605)
605
605
605
605
605
(610)
(610)
(610)
(610)
(615)
(615)
(615)
(625)
(625)
(625)
receiving a PDCCH indicating new uplink transmission or downlink transmission (630)
drx-InactivityTimer start or restart (620)
drx-onDurationTimer (615)
drx-LongCycle (625)

FIG. 7

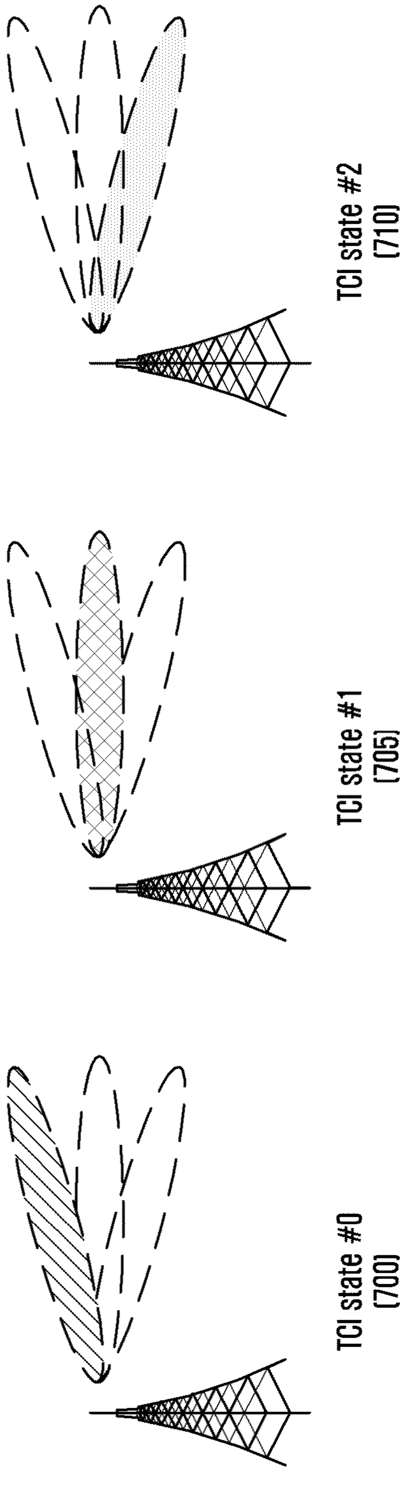

FIG. 8

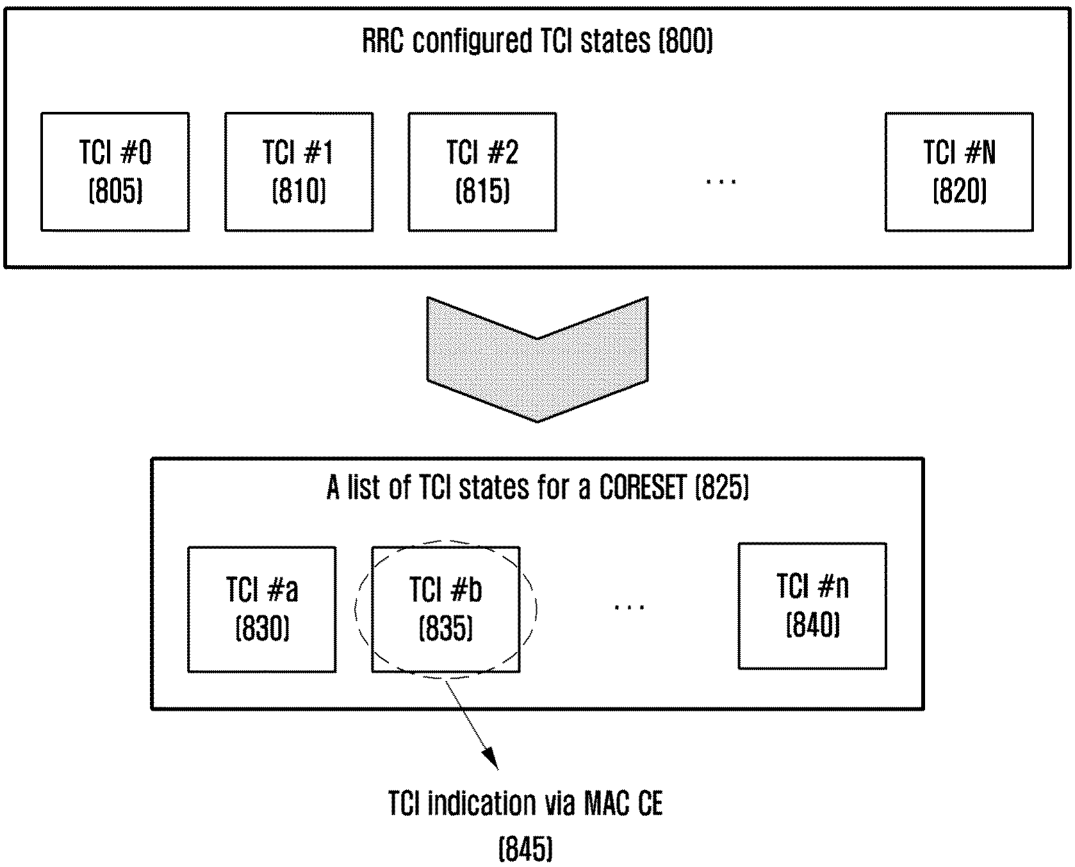
RRC configured TCI states (800)
TCI #0
(805)
TCI #1
(810)
TCI #2
(815)
...
TCI #N
(820)
A list of TCI states for a CORESET (825)
TCI #a
(830)
TCI #b
(835)
...
TCI #n
(840)
TCI indication via MAC CE
(845)

FIG. 9

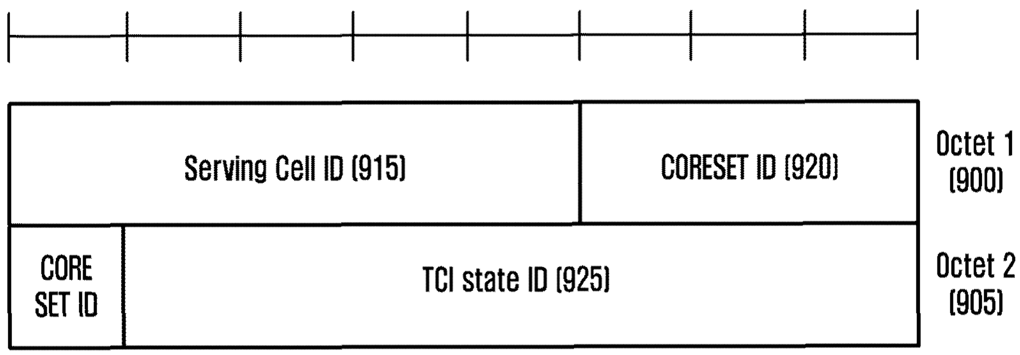
Serving Cell ID (915)
CORESET ID (920)
Octet 1 (900)
CORE SET ID
TCI state ID (925)
Octet 2 (905)

FIG. 10

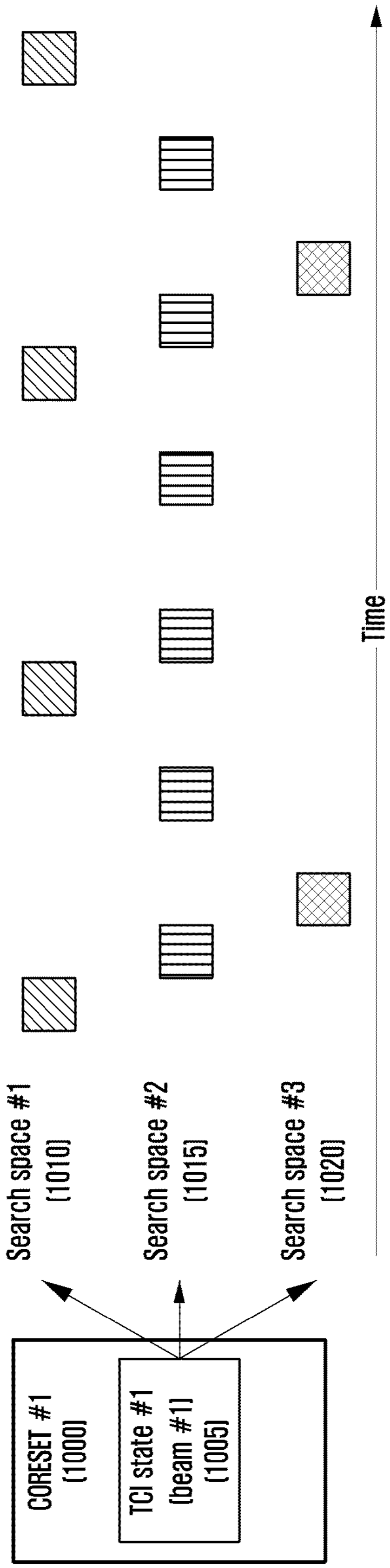
CORESET #1
(1000)
TCI state #1
(beam #1)
(1005)
Search space #1
(1010)
Search space #2
(1015)
Search space #3
(1020)
Time

FIG. 11

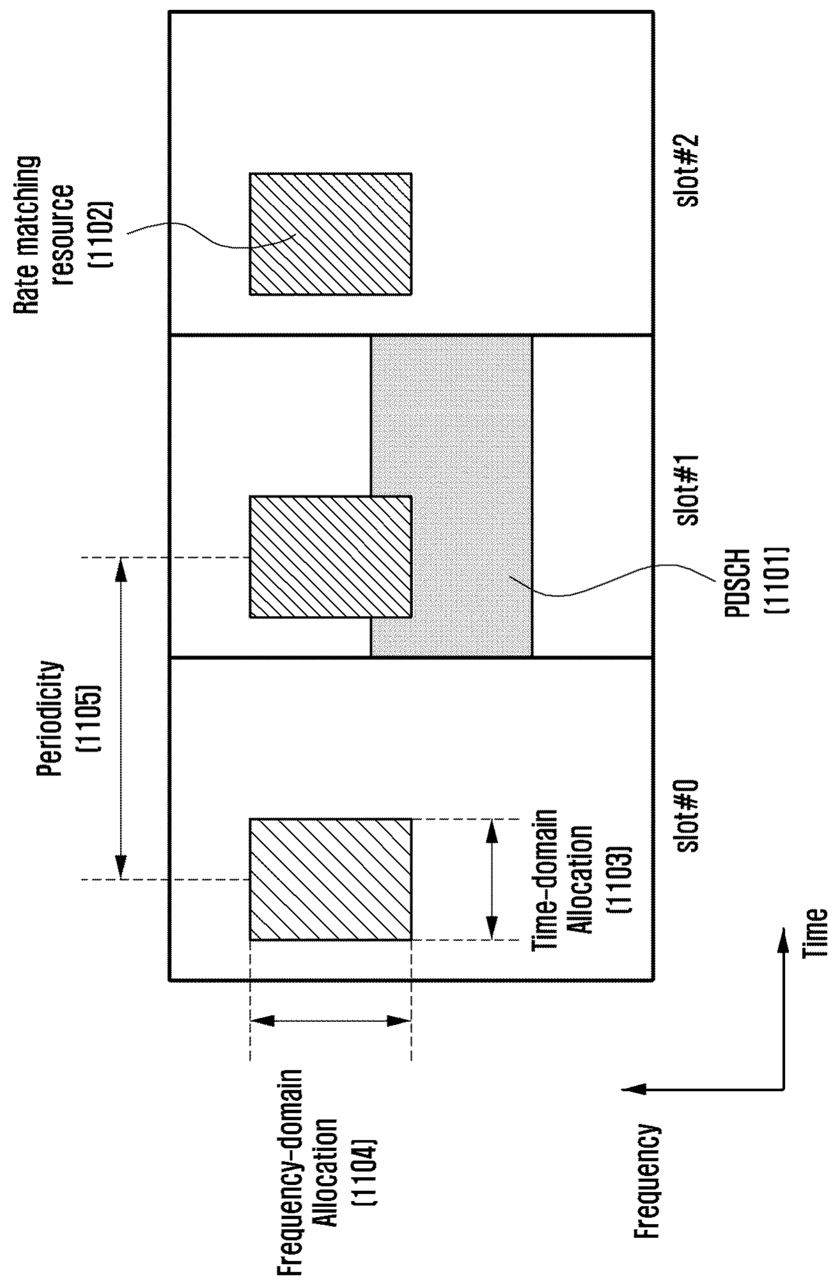
Rate matching resource (1102)
Periodicity (1105)
Time-domain Allocation (1103)
Frequency-domain Allocation (1104)
PDSCH (1101)
slot#0
slot#1
slot#2
Time
Frequency

FIG. 12

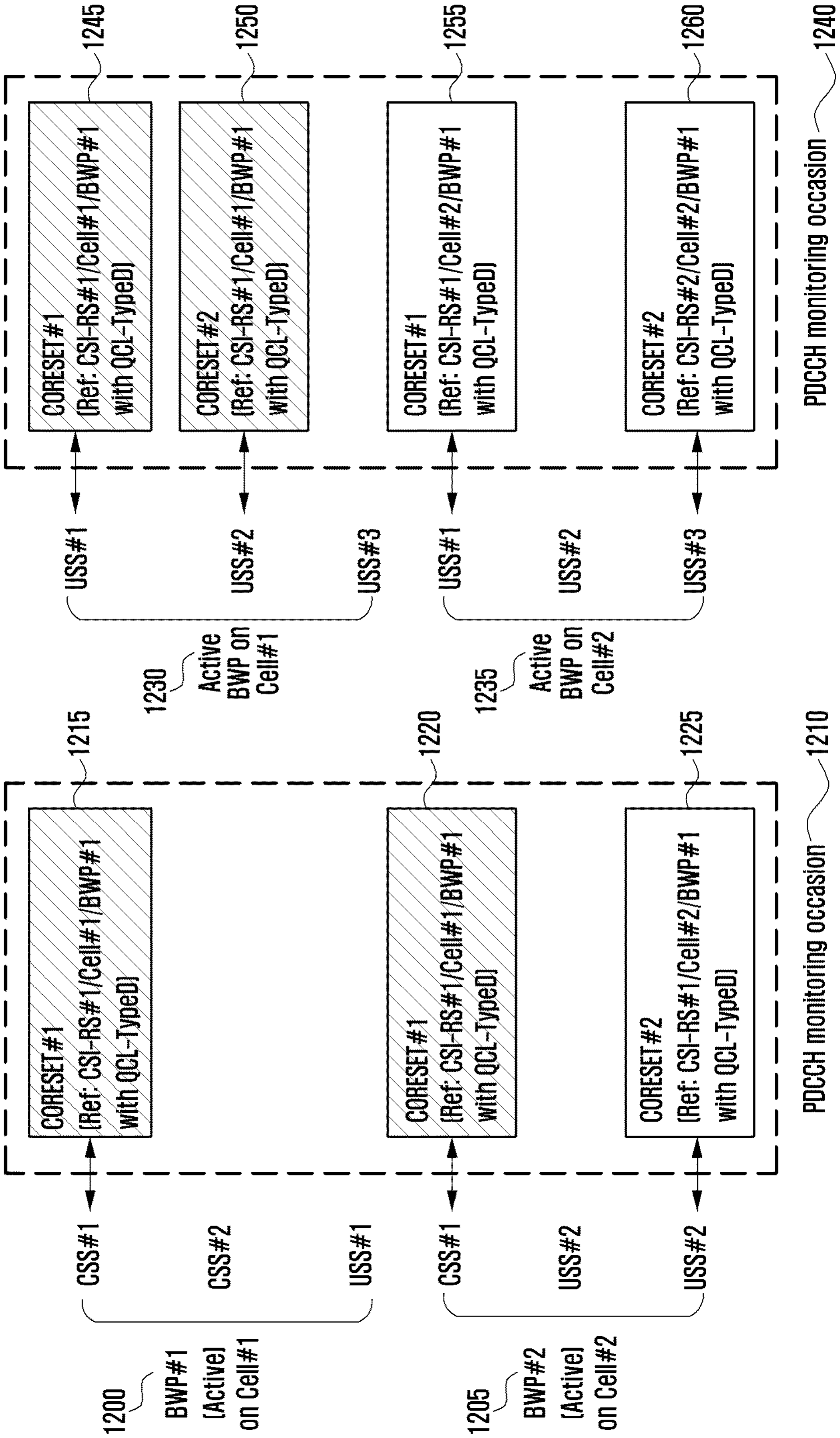
1200
BWP#1 (Active) on Cell#1
CSS#1
CSS#2
USS#1
1205
BWP#2 (Active) on Cell#2
CSS#1
USS#2
USS#2
1210
PDCCH monitoring occasion
1215
CORESET#1 (Ref: CSI-RS#1/Cell#1/BWP#1 with QCL-TypeD)
1220
CORESET#1 (Ref: CSI-RS#1/Cell#1/BWP#1 with QCL-TypeD)
1225
CORESET#2 (Ref: CSI-RS#1/Cell#2/BWP#1 with QCL-TypeD)
1230
Active BWP on Cell#1
USS#1
USS#2
USS#3
1235
Active BWP on Cell#2
USS#1
USS#2
USS#3
1240
PDCCH monitoring occasion
1245
CORESET#1 (Ref: CSI-RS#1/Cell#1/BWP#1 with QCL-TypeD)
1250
CORESET#2 (Ref: CSI-RS#1/Cell#1/BWP#1 with QCL-TypeD)
1255
CORESET#1 (Ref: CSI-RS#1/Cell#2/BWP#1 with QCL-TypeD)
1260
CORESET#2 (Ref: CSI-RS#2/Cell#2/BWP#1 with QCL-TypeD)

FIG. 13

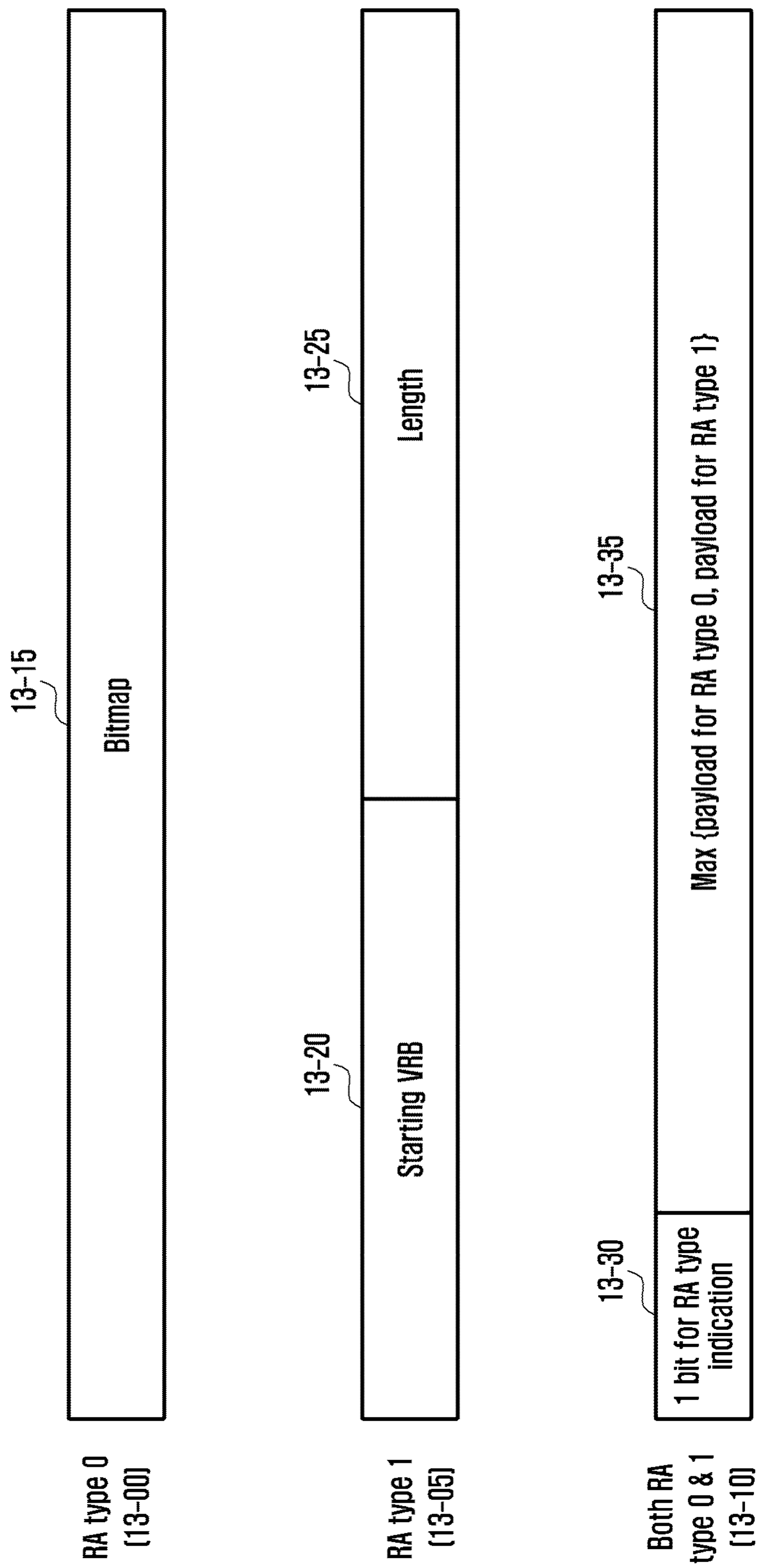
RA type 0
(13-00)
13-15
Bitmap
RA type 1
(13-05)
13-20
Starting VRB
13-25
Length
Both RA
type 0 & 1
(13-10)
13-30
1 bit for RA type
indication
13-35
Max {payload for RA type 0, payload for RA type 1}

FIG. 14

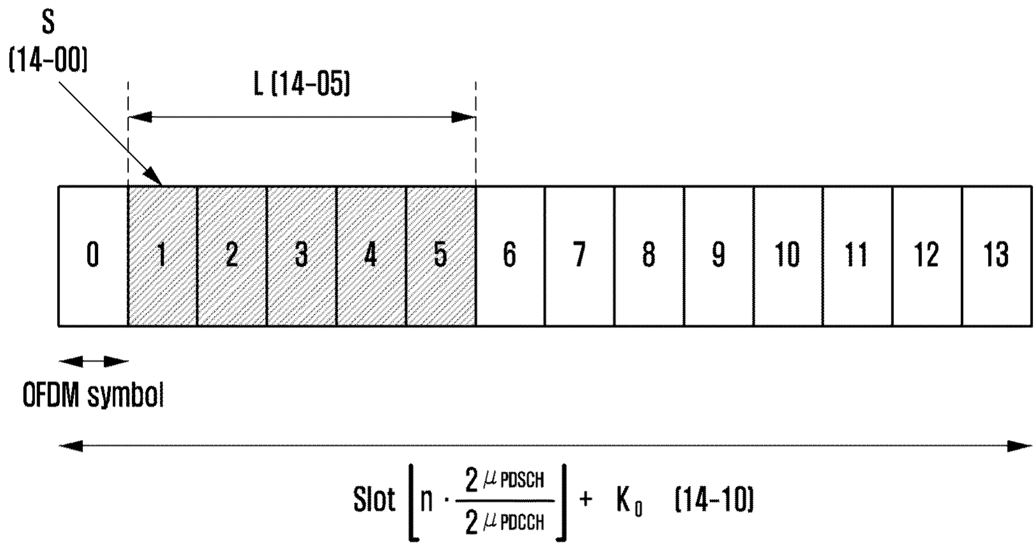
S
(14-00)
L (14-05)
0
1
2
3
4
5
6
7
8
9
10
11
12
13
OFDM symbol
Slot $\left\lfloor n \cdot \frac{2^{\mu_{PDSCH}}}{2^{\mu_{PDCCH}}} \right\rfloor + K_0$ (14-10)

FIG. 15

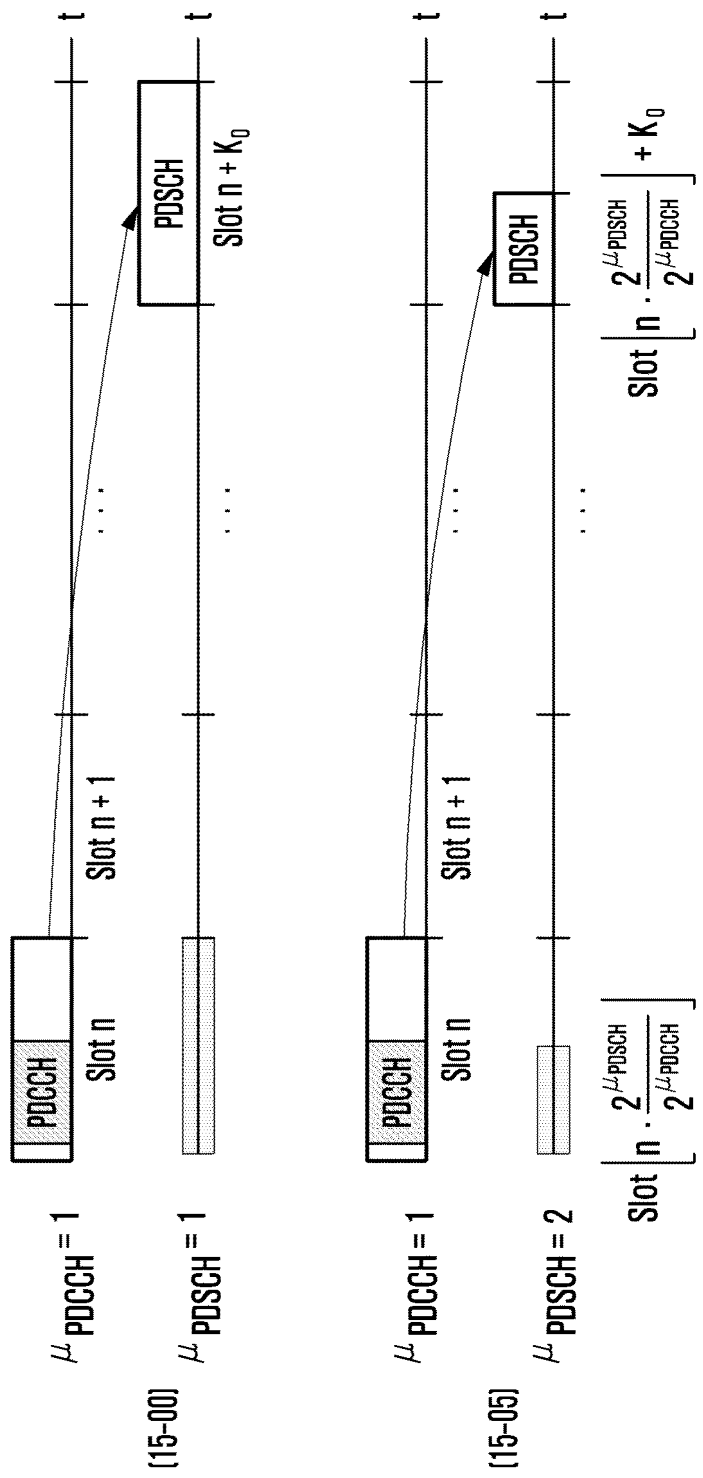
(15-00)
$\mu_{PDCCH} = 1$
$\mu_{PDSCH} = 1$
PDCCH
Slot n
Slot n + 1
PDSCH
Slot n + $K_0$
t
(15-05)
$\mu_{PDCCH} = 1$
$\mu_{PDSCH} = 2$
PDCCH
Slot n
Slot n + 1
PDSCH
Slot $\left\lfloor n \cdot \frac{2^{\mu_{PDSCH}}}{2^{\mu_{PDCCH}}} \right\rfloor$
Slot $\left\lfloor n \cdot \frac{2^{\mu_{PDSCH}}}{2^{\mu_{PDCCH}}} \right\rfloor + K_0$
t

FIG. 16

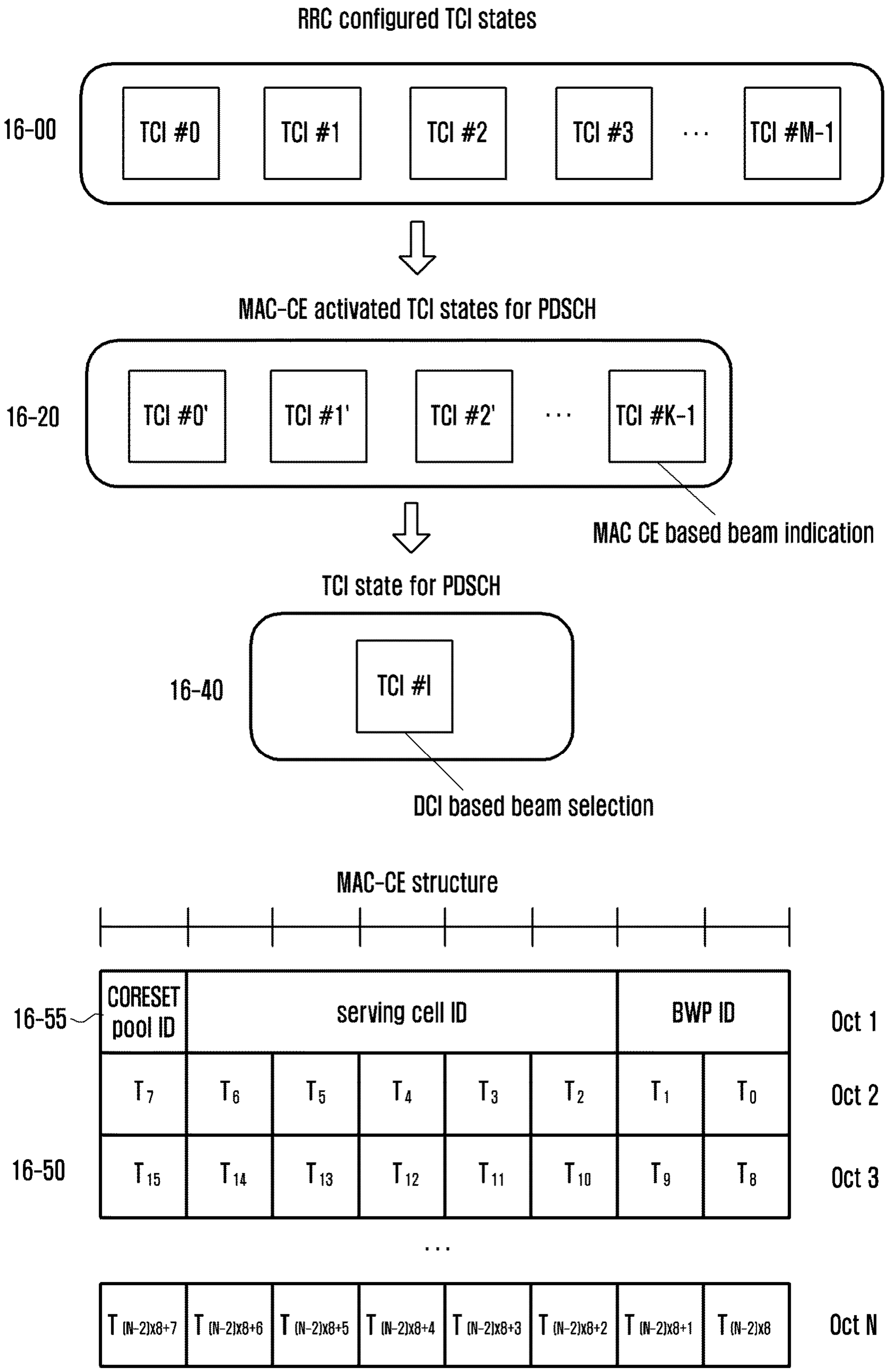
RRC configured TCI states
16-00
TCI #0
TCI #1
TCI #2
TCI #3
TCI #M-1
MAC-CE activated TCI states for PDSCH
16-20
TCI #0'
TCI #1'
TCI #2'
TCI #K-1
MAC CE based beam indication
TCI state for PDSCH
16-40
TCI #I
DCI based beam selection
MAC-CE structure
16-55
CORESET pool ID
serving cell ID
BWP ID
Oct 1
T7 T6 T5 T4 T3 T2 T1 T0
Oct 2
16-50
T15 T14 T13 T12 T11 T10 T9 T8
Oct 3
T (N-2)x8+7 T (N-2)x8+6 T (N-2)x8+5 T (N-2)x8+4 T (N-2)x8+3 T (N-2)x8+2 T (N-2)x8+1 T (N-2)x8
Oct N

FIG. 17

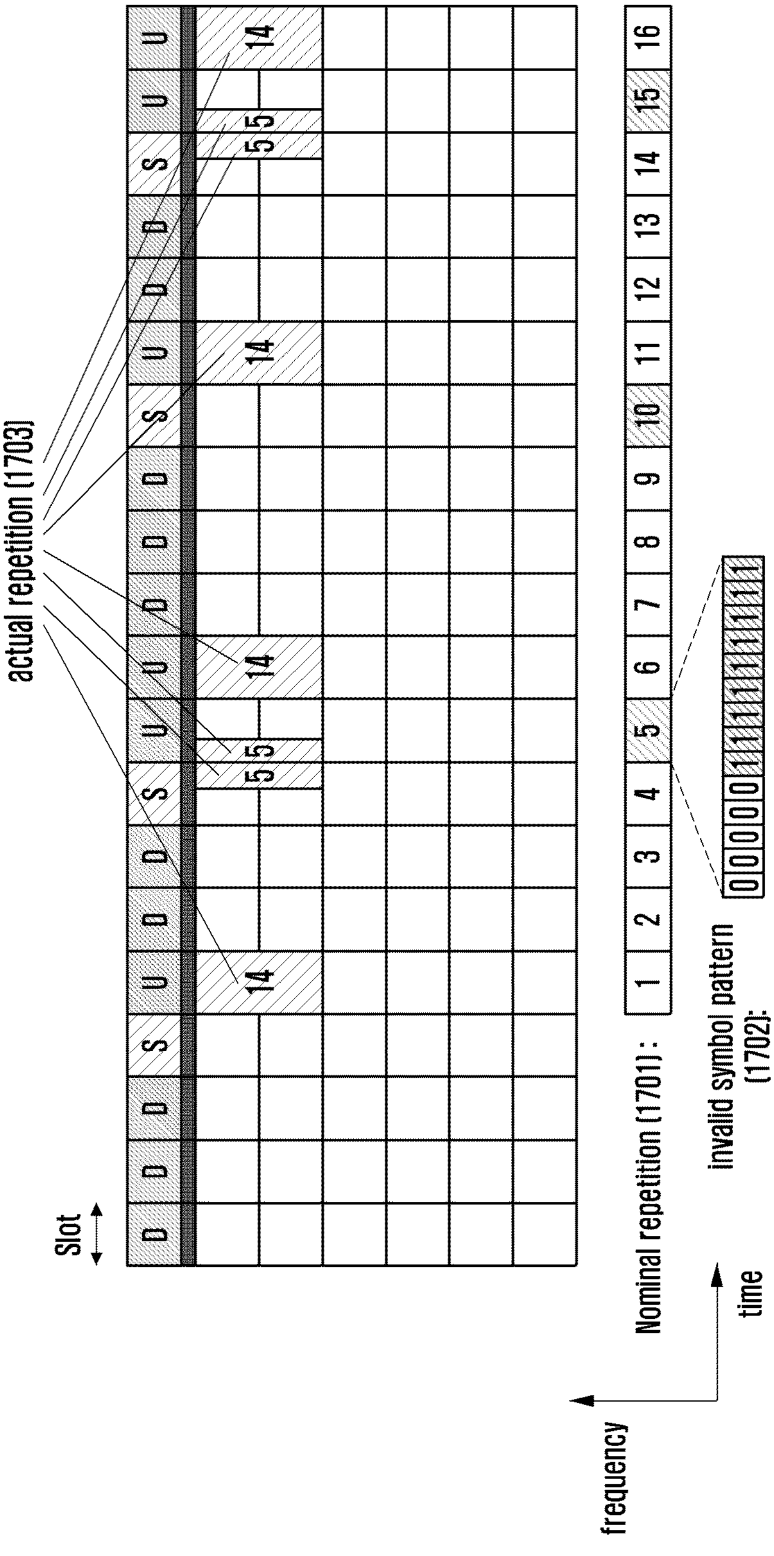
actual repetition (1703)
Slot
D D D S U D D S U U D D D S U D D S U U
14
5 5
14
14
5 5
14
Nominal repetition (1701) :
1 2 3 4 5 6 7 8 9 10 11 12 13 14 15 16
invalid symbol pattern (1702):
0 0 0 0 0 1 1 1 1 1 1 1 1 1
time
frequency

FIG. 18

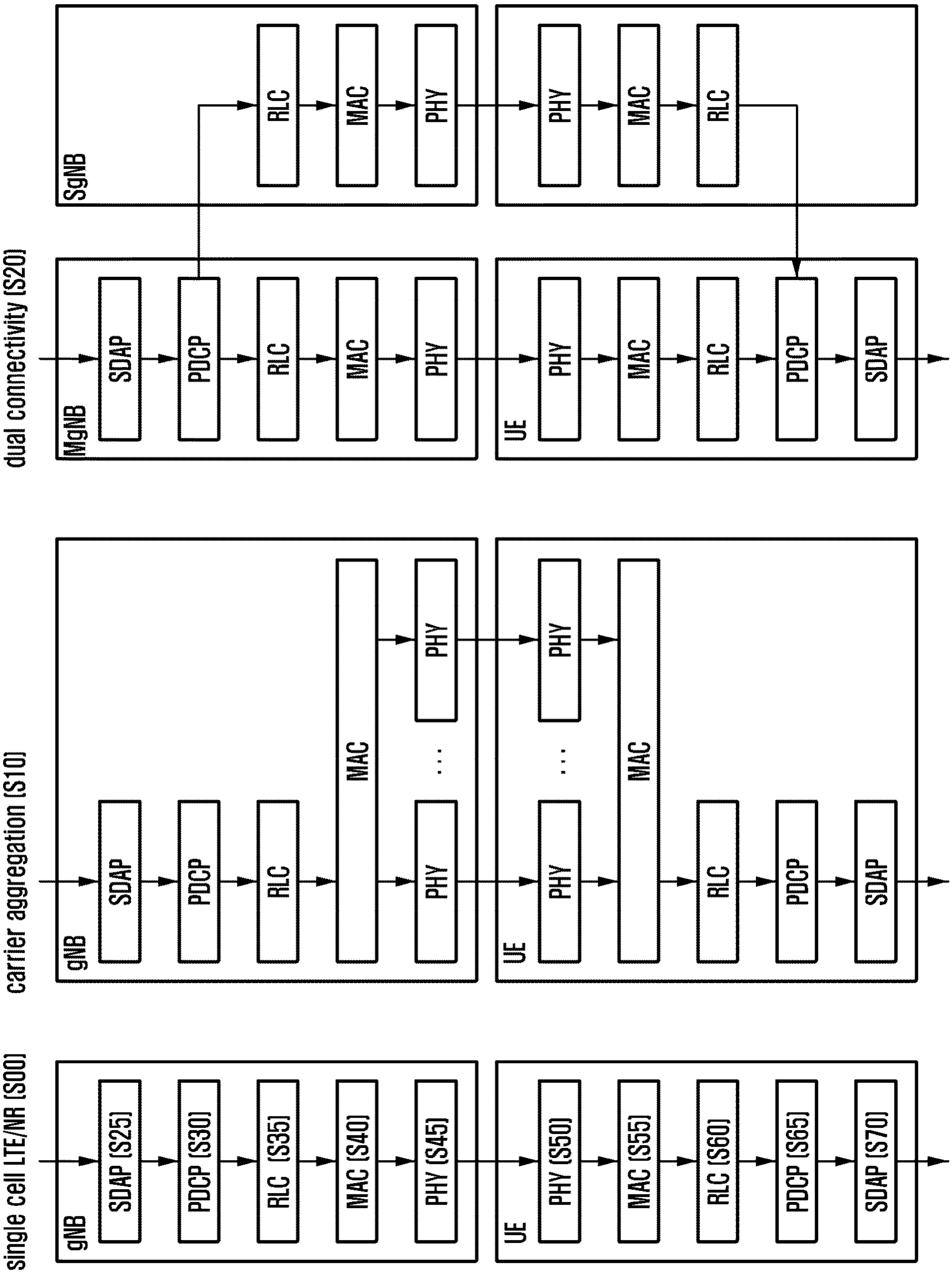
single cell LTE/NR (S00)
gNB
SDAP (S25)
PDCP (S30)
RLC (S35)
MAC (S40)
PHY (S45)
UE
PHY (S50)
MAC (S55)
RLC (S60)
PDCP (S65)
SDAP (S70)
carrier aggregation (S10)
gNB
SDAP
PDCP
RLC
MAC
PHY
...
PHY
UE
PHY
...
PHY
MAC
RLC
PDCP
SDAP
dual connectivity (S20)
MgNB
SDAP
PDCP
RLC
MAC
PHY
SgNB
RLC
MAC
PHY
UE
PHY
MAC
RLC
PDCP
SDAP
PHY
MAC
RLC

FIG. 19

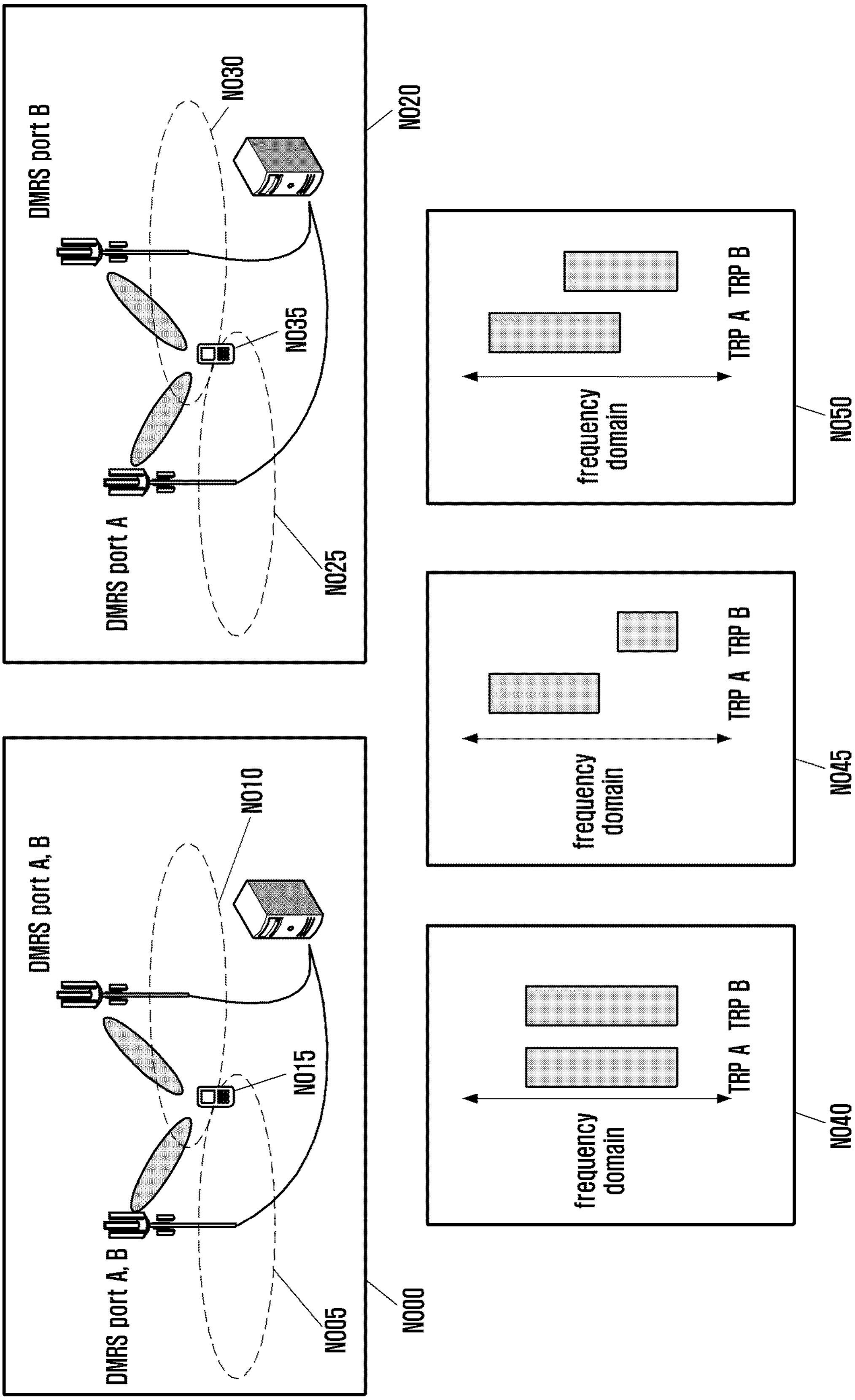
DMRS port A, B
DMRS port A, B
N000
N005
N010
N015
DMRS port A
DMRS port B
N020
N025
N030
N035
frequency domain
TRP A TRP B
N040
frequency domain
TRP A TRP B
N045
frequency domain
TRP A TRP B
N050

FIG. 20

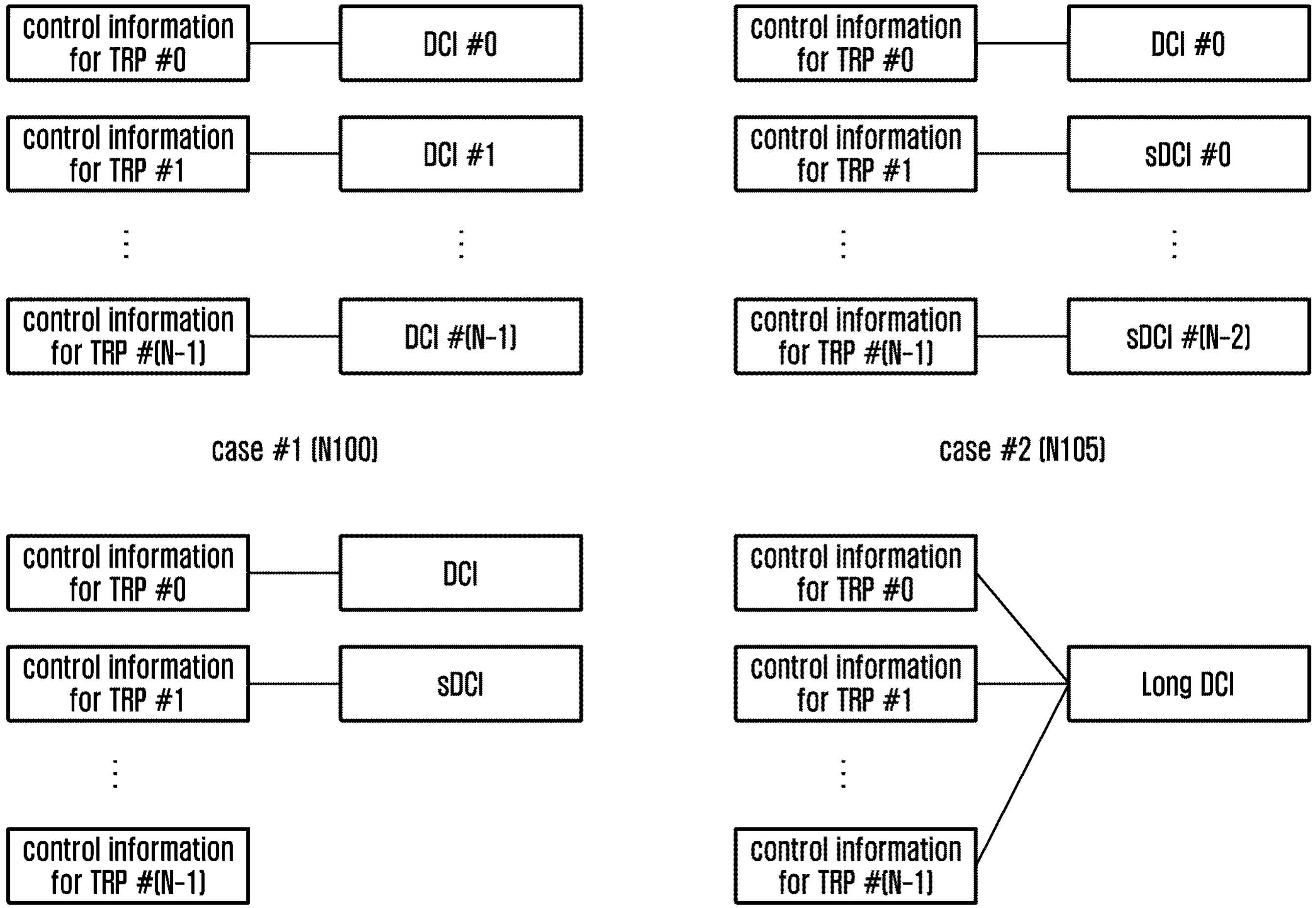


case #1 (N100)

case #2 (N105)

case #3 (N110)

case #4 (N115)

FIG. 21

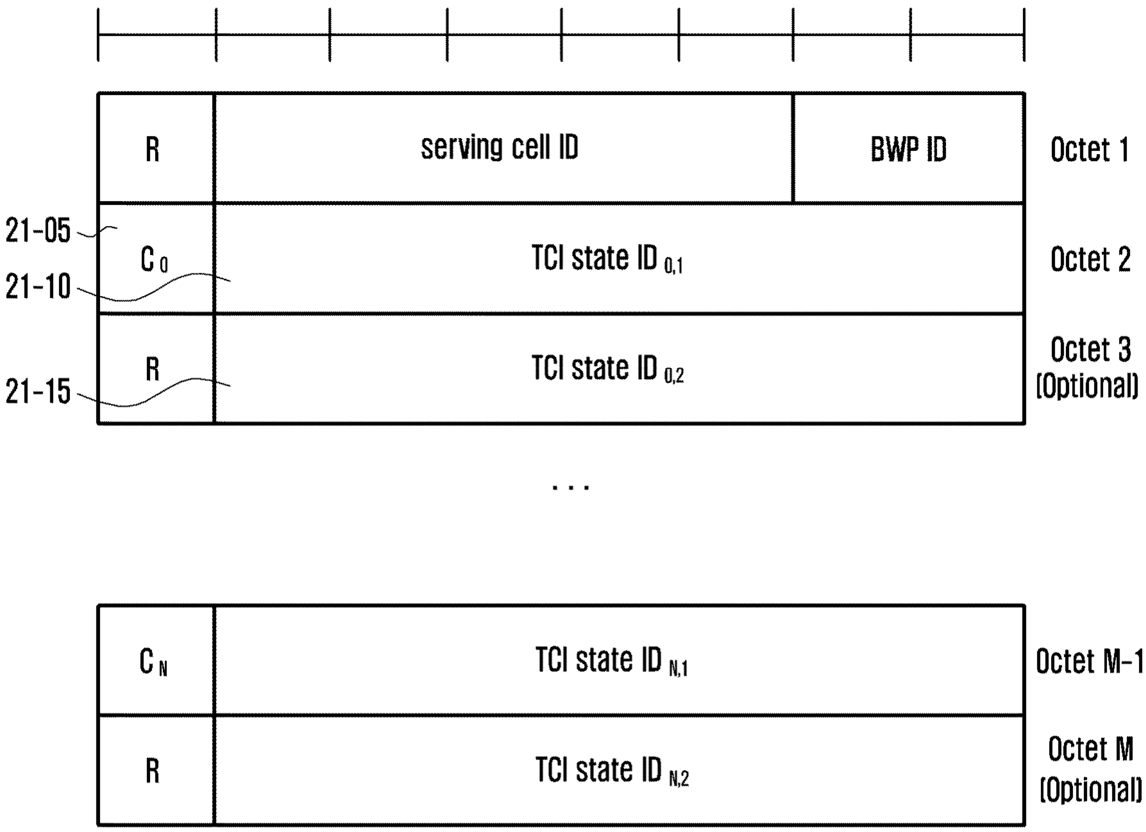
R
serving cell ID
BWP ID
Octet 1
21-05
$C_0$
TCI state ID $_{0,1}$
Octet 2
21-10
R
TCI state ID $_{0,2}$
Octet 3 (Optional)
21-15
...
$C_N$
TCI state ID $_{N,1}$
Octet M-1
R
TCI state ID $_{N,2}$
Octet M (Optional)

FIG. 22

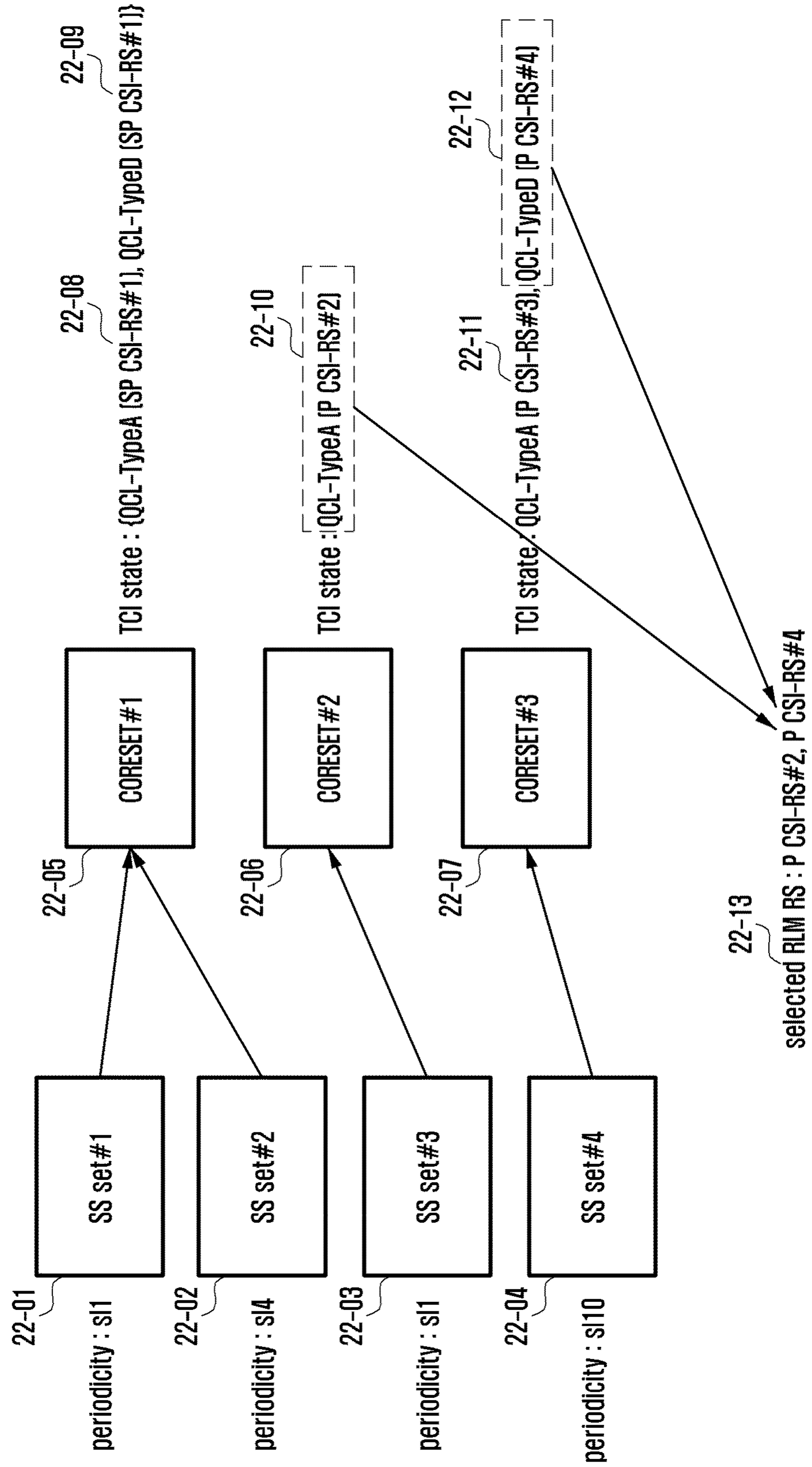
periodicity : sl1
22-01
SS set#1
periodicity : sl4
22-02
SS set#2
periodicity : sl1
22-03
SS set#3
periodicity : sl10
22-04
SS set#4
22-05
CORESET#1
22-06
CORESET#2
22-07
CORESET#3
TCI state : {QCL-TypeA (SP CSI-RS#1), QCL-TypeD (SP CSI-RS#1)}
22-08
22-09
TCI state : {QCL-TypeA (P CSI-RS#2)}
22-10
TCI state : {QCL-TypeA (P CSI-RS#3), QCL-TypeD (P CSI-RS#4)}
22-11
22-12
22-13
selected RLM RS : P CSI-RS#2, P CSI-RS#4

FIG. 23

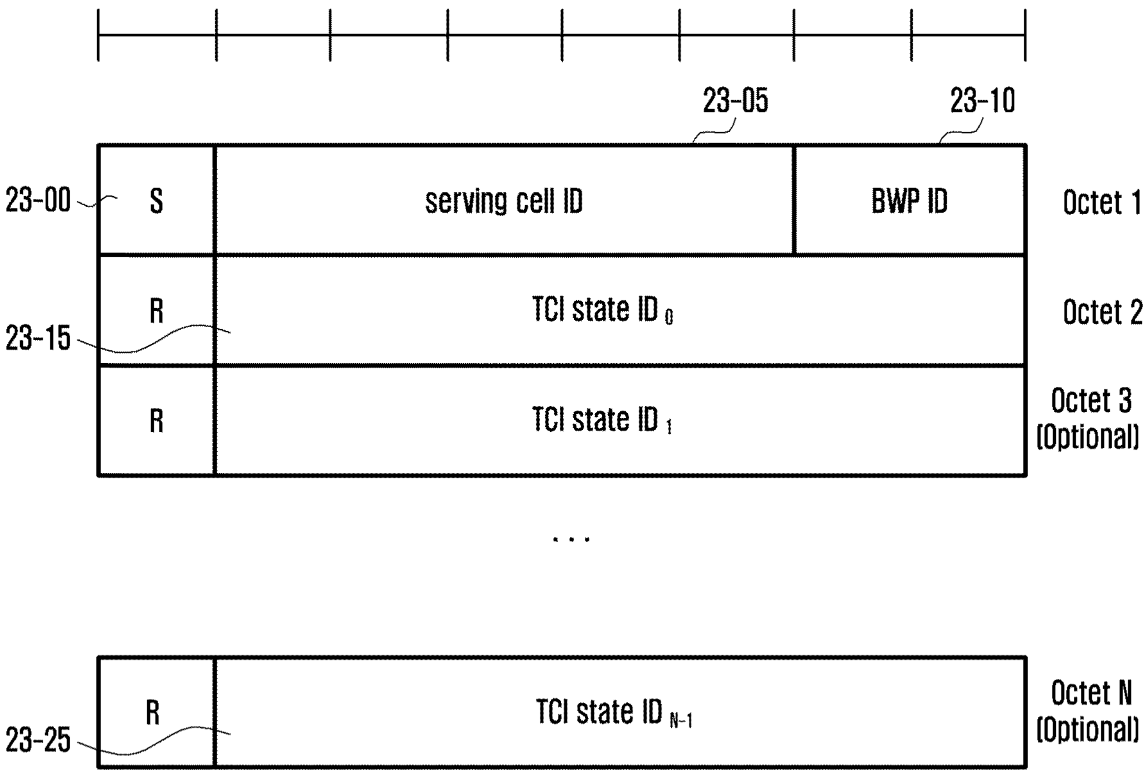
23-05
23-10
23-00
S
serving cell ID
BWP ID
Octet 1
R
TCI state ID 0
Octet 2
23-15
R
TCI state ID 1
Octet 3
(Optional)
...
R
TCI state ID N-1
Octet N
(Optional)
23-25

FIG. 24

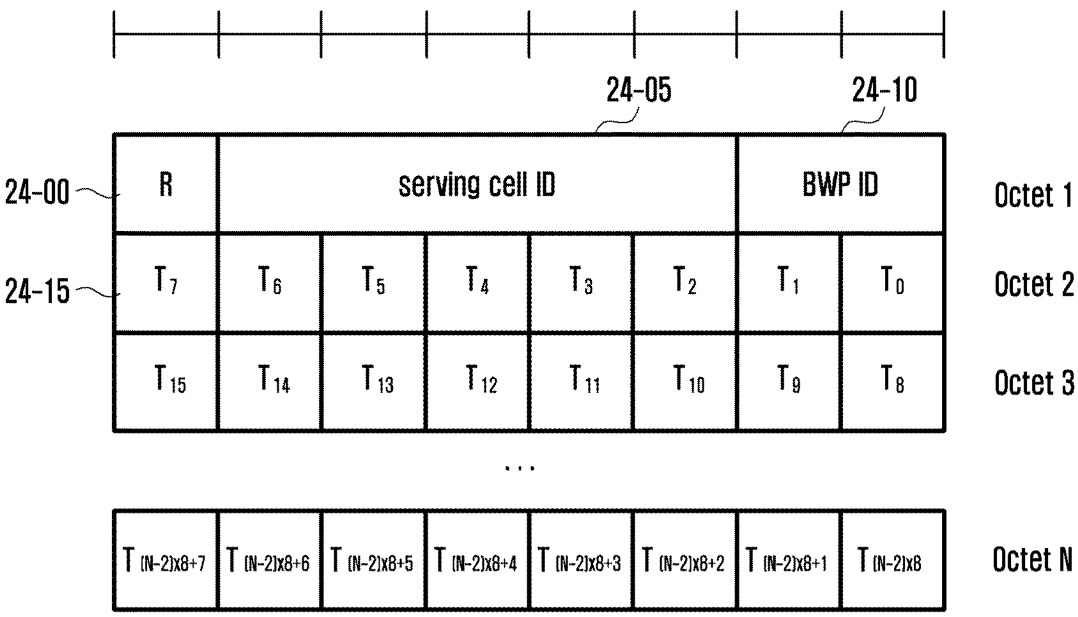
24-05
24-10
24-00
24-15
R
serving cell ID
BWP ID
Octet 1
T7
T6
T5
T4
T3
T2
T1
T0
Octet 2
T15
T14
T13
T12
T11
T10
T9
T8
Octet 3
...
T (N-2)x8+7
T (N-2)x8+6
T (N-2)x8+5
T (N-2)x8+4
T (N-2)x8+3
T (N-2)x8+2
T (N-2)x8+1
T (N-2)x8
Octet N

FIG. 25

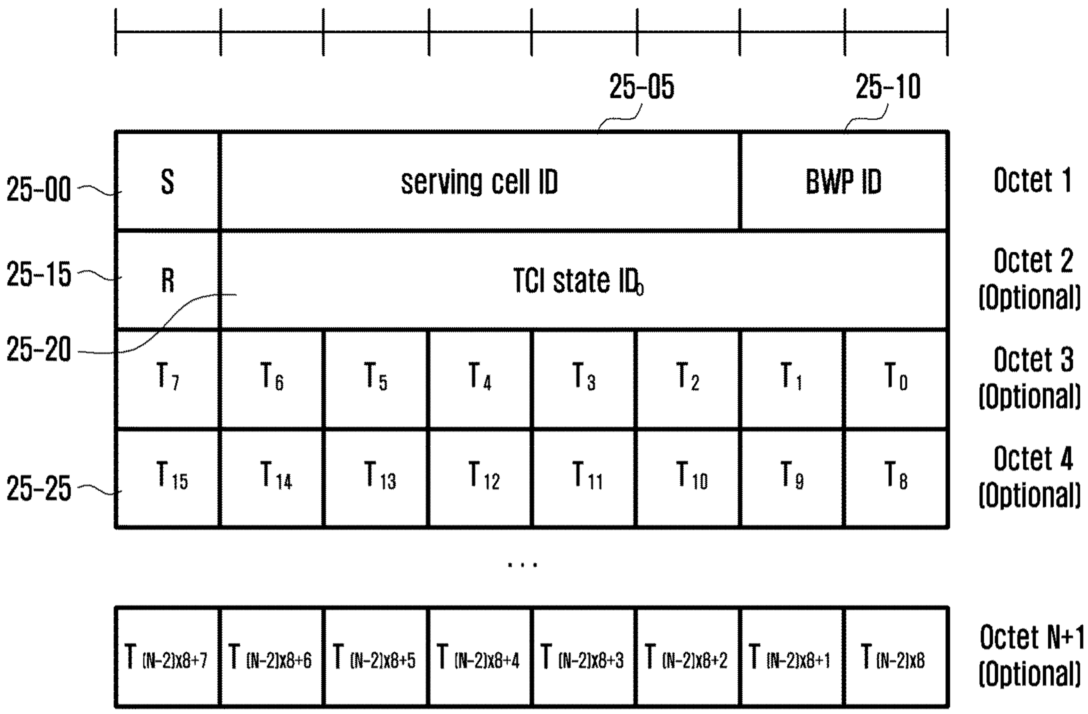
25-05
25-10
25-00
S
serving cell ID
BWP ID
Octet 1
25-15
R
TCI state ID0
Octet 2
(Optional)
25-20
T7 T6 T5 T4 T3 T2 T1 T0
Octet 3
(Optional)
25-25
T15 T14 T13 T12 T11 T10 T9 T8
Octet 4
(Optional)
...
T (N-2)x8+7 T (N-2)x8+6 T (N-2)x8+5 T (N-2)x8+4 T (N-2)x8+3 T (N-2)x8+2 T (N-2)x8+1 T (N-2)x8
Octet N+1
(Optional)

FIG. 26

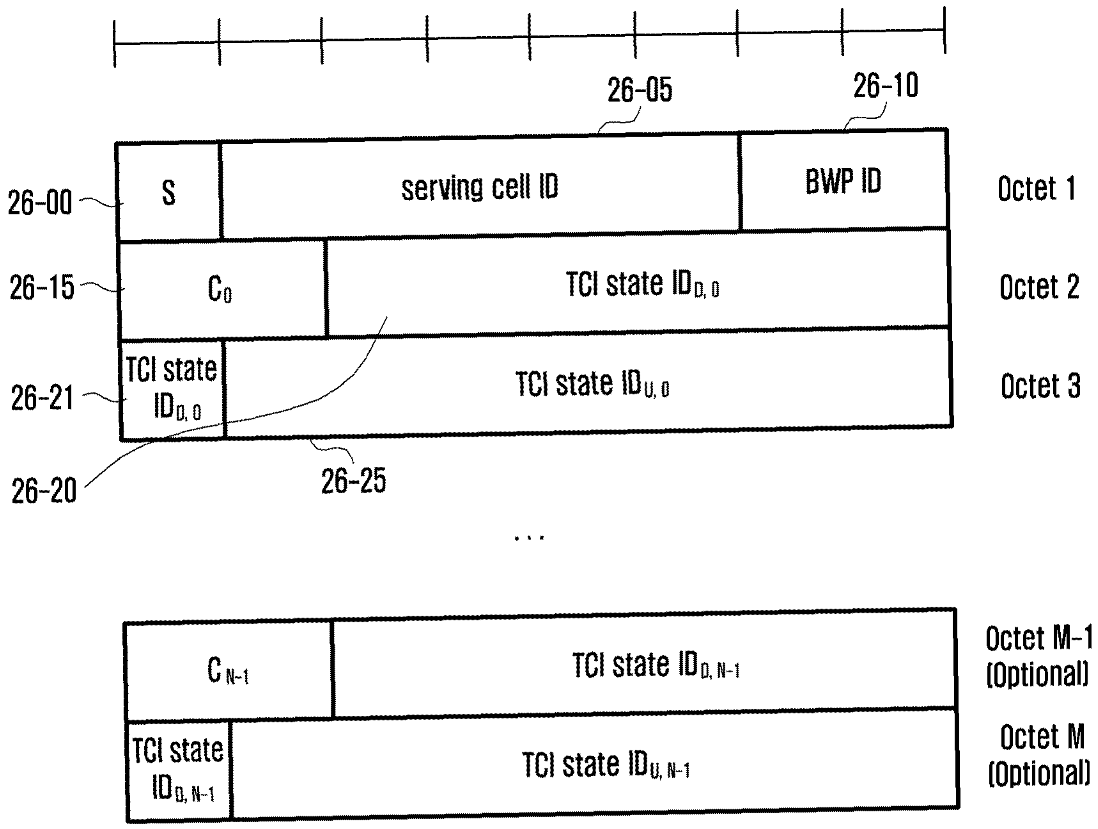
26-05
26-10
26-00
S
serving cell ID
BWP ID
Octet 1
26-15
C0
TCI state ID D, 0
Octet 2
26-21
TCI state ID D, 0
TCI state ID U, 0
Octet 3
26-20
26-25
...
C N-1
TCI state ID D, N-1
Octet M-1 (Optional)
TCI state ID D, N-1
TCI state ID U, N-1
Octet M (Optional)

FIG. 27

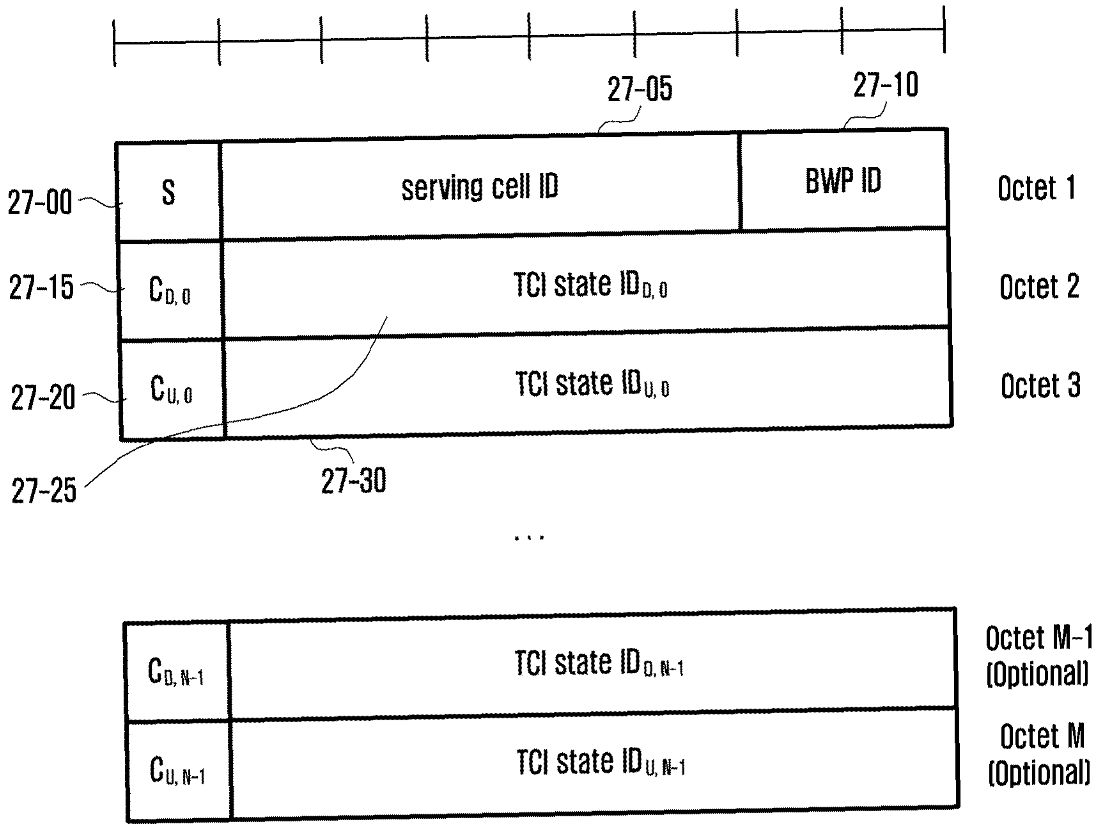
27-05
27-10
27-00
S
serving cell ID
BWP ID
Octet 1
27-15
C D, 0
TCI state ID D, 0
Octet 2
27-20
C U, 0
TCI state ID U, 0
Octet 3
27-25
27-30
...
C D, N-1
TCI state ID D, N-1
Octet M-1
(Optional)
C U, N-1
TCI state ID U, N-1
Octet M
(Optional)

FIG. 28

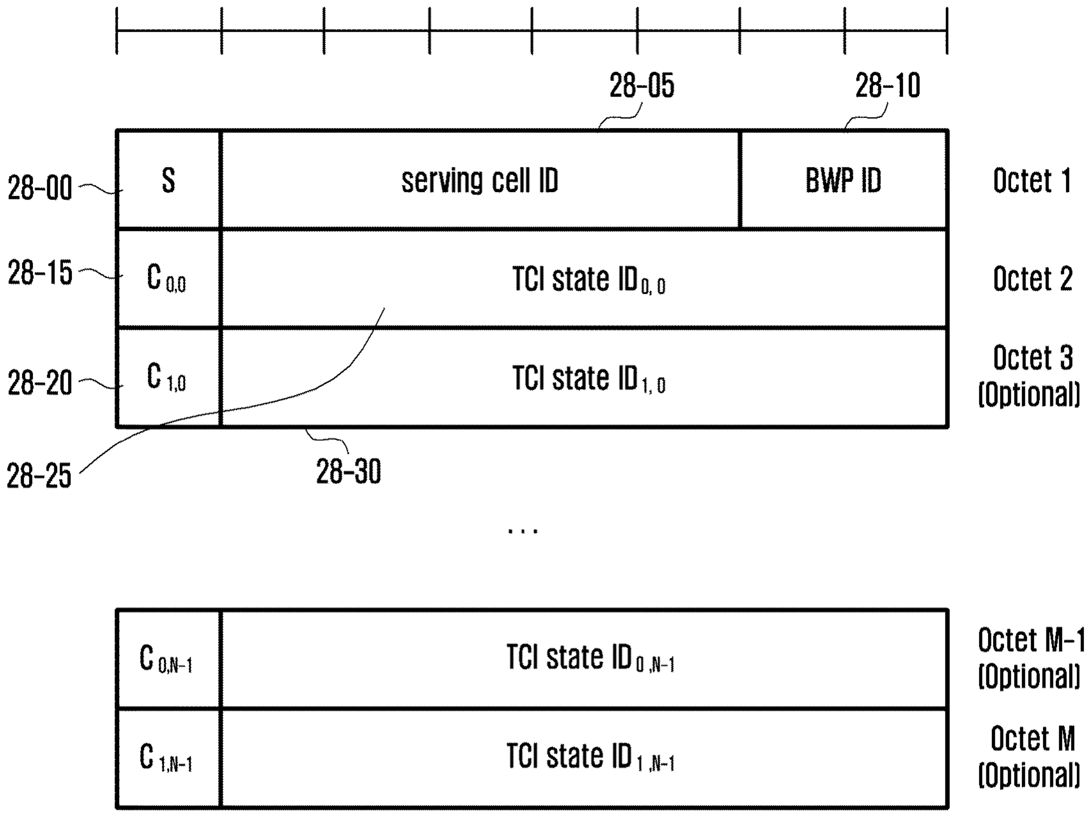
28-05
28-10
28-00
S
serving cell ID
BWP ID
Octet 1
28-15
C 0,0
TCI state ID 0, 0
Octet 2
28-20
C 1,0
TCI state ID 1, 0
Octet 3
(Optional)
28-25
28-30
...
C 0,N-1
TCI state ID 0 ,N-1
Octet M-1
(Optional)
C 1,N-1
TCI state ID 1 ,N-1
Octet M
(Optional)

FIG. 29

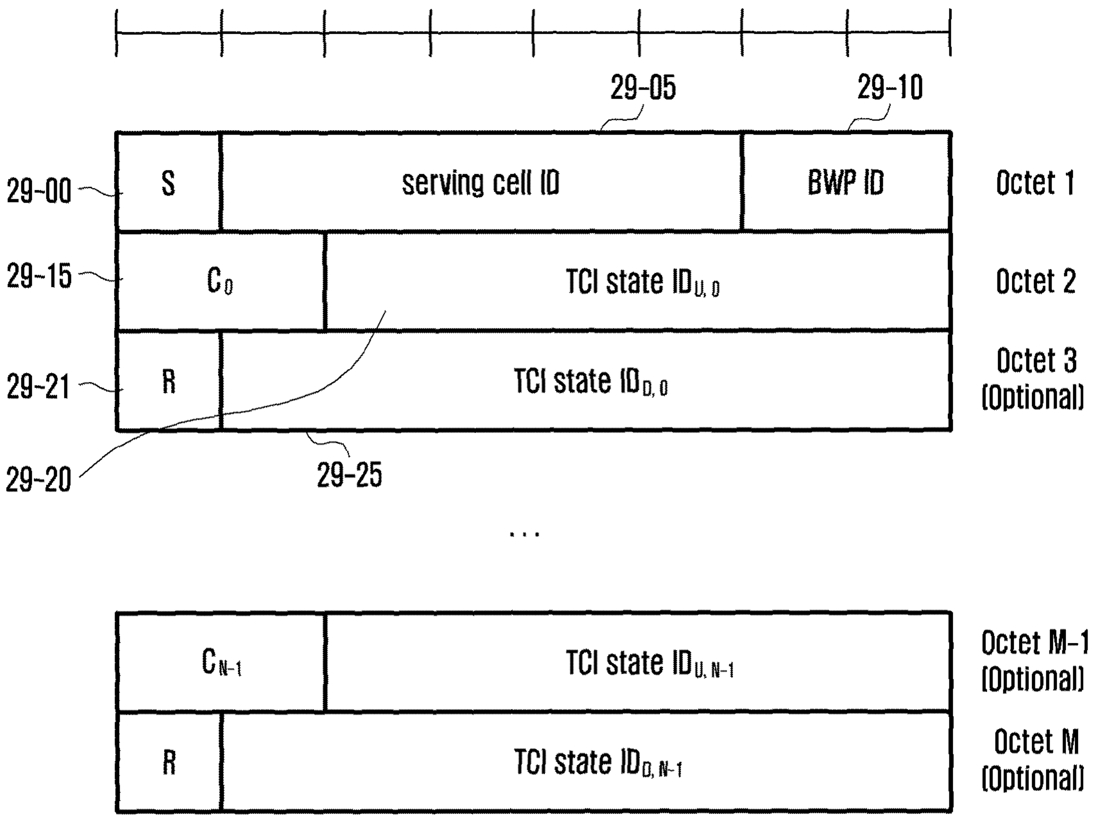
29-05
29-10
29-00
S
serving cell ID
BWP ID
Octet 1
29-15
C0
TCI state IDU, 0
Octet 2
29-21
R
TCI state IDD, 0
Octet 3
(Optional)
29-20
29-25
...
CN-1
TCI state IDU, N-1
Octet M-1
(Optional)
R
TCI state IDD, N-1
Octet M
(Optional)

FIG. 30

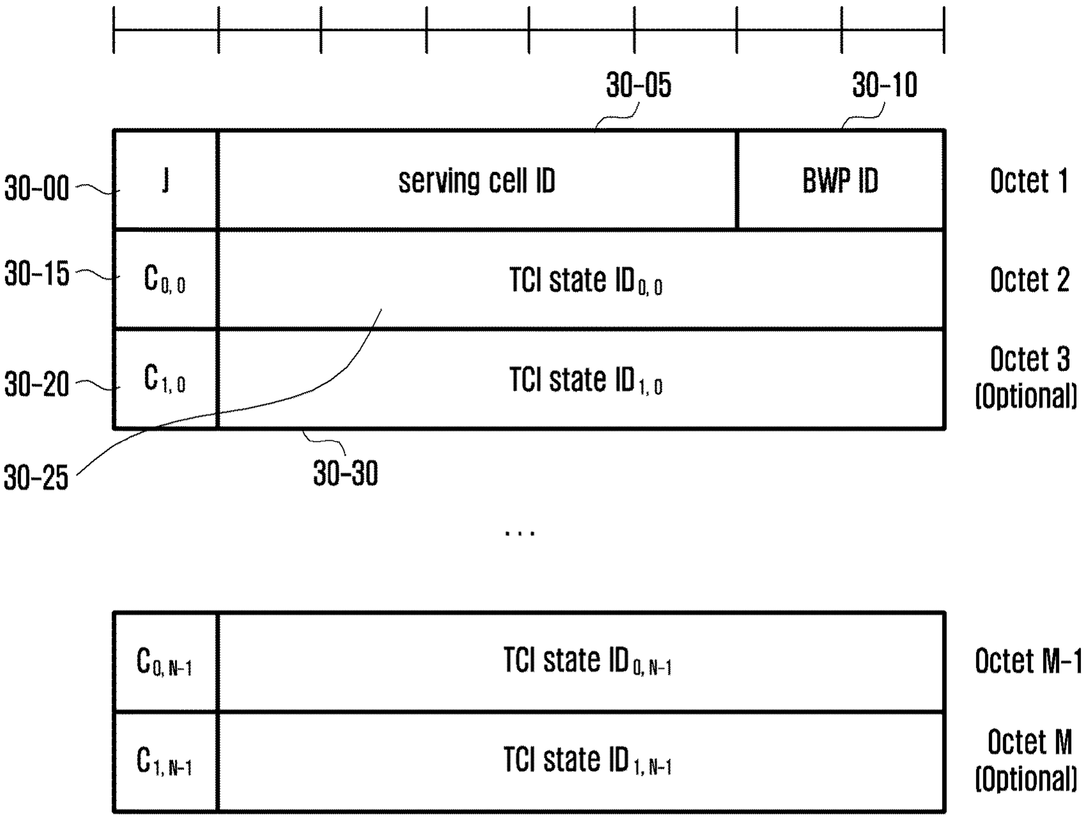
30-05
30-10
30-00
J
serving cell ID
BWP ID
Octet 1
30-15
C0, 0
TCI state ID0, 0
Octet 2
30-20
C1, 0
TCI state ID1, 0
Octet 3
(Optional)
30-25
30-30
...
C0, N-1
TCI state ID0, N-1
Octet M-1
C1, N-1
TCI state ID1, N-1
Octet M
(Optional)

FIG. 31

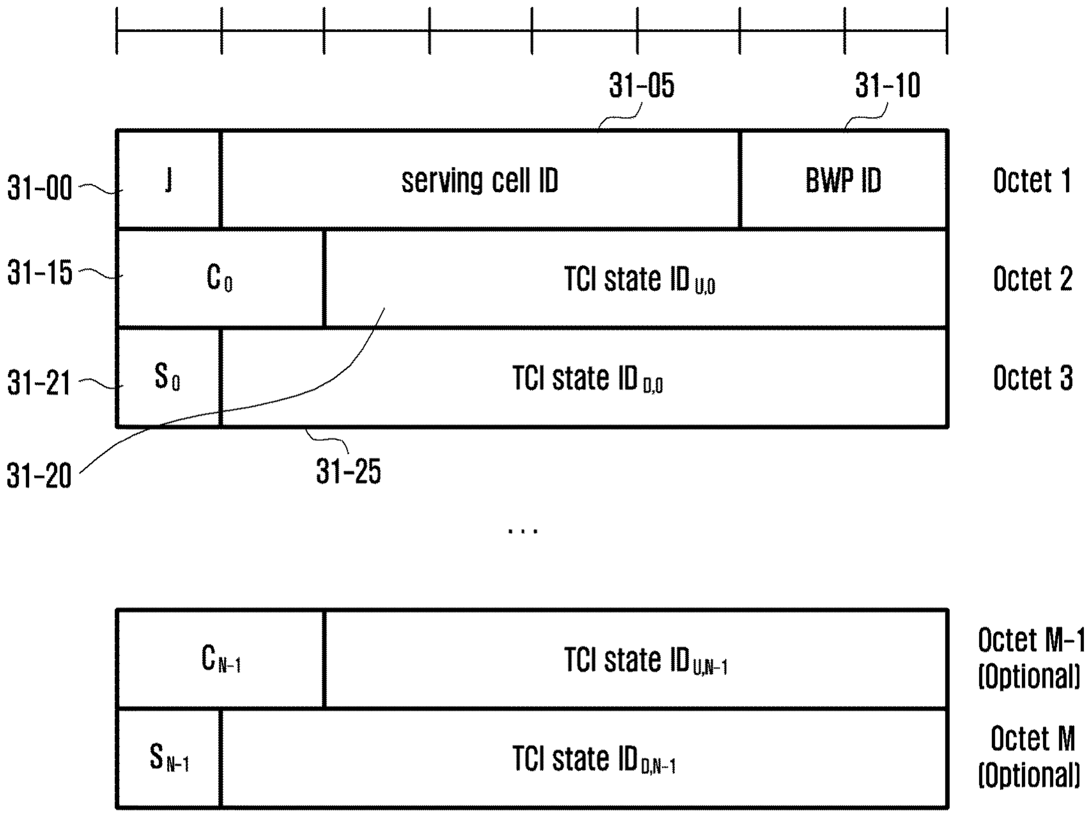
31-05
31-10
31-00
J
serving cell ID
BWP ID
Octet 1
31-15
$C_0$
TCI state $ID_{U,0}$
Octet 2
31-21
$S_0$
TCI state $ID_{D,0}$
Octet 3
31-20
31-25
...
$C_{N-1}$
TCI state $ID_{U,N-1}$
Octet M-1 (Optional)
$S_{N-1}$
TCI state $ID_{D,N-1}$
Octet M (Optional)

FIG. 32

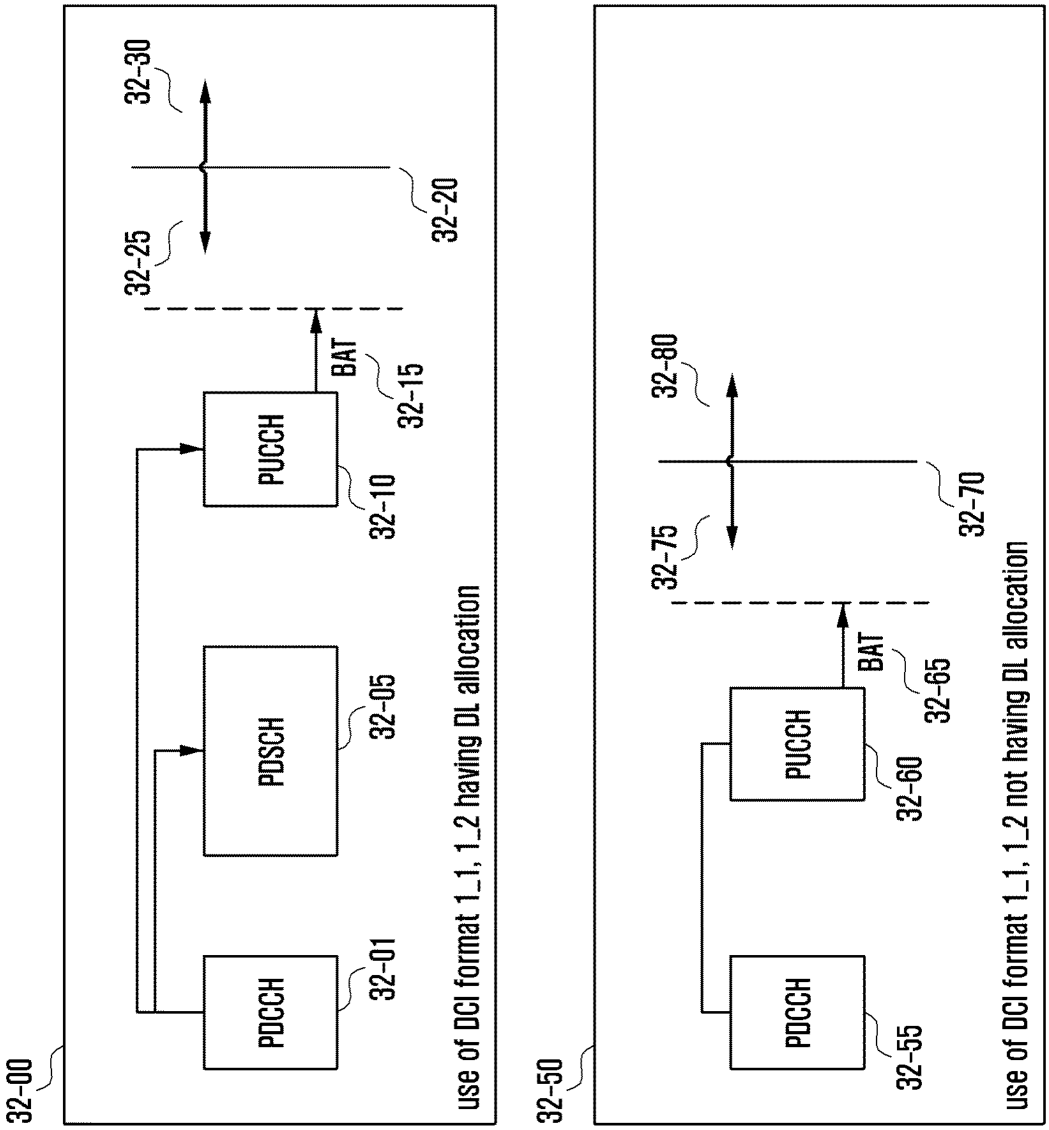
32-00
PDCCH
32-01
PDSCH
32-05
PUCCH
32-10
BAT
32-15
32-20
32-25
32-30
use of DCI format 1_1, 1_2 having DL allocation
32-50
PDCCH
32-55
PUCCH
32-60
BAT
32-65
32-70
32-75
32-80
use of DCI format 1_1, 1_2 not having DL allocation

FIG. 33

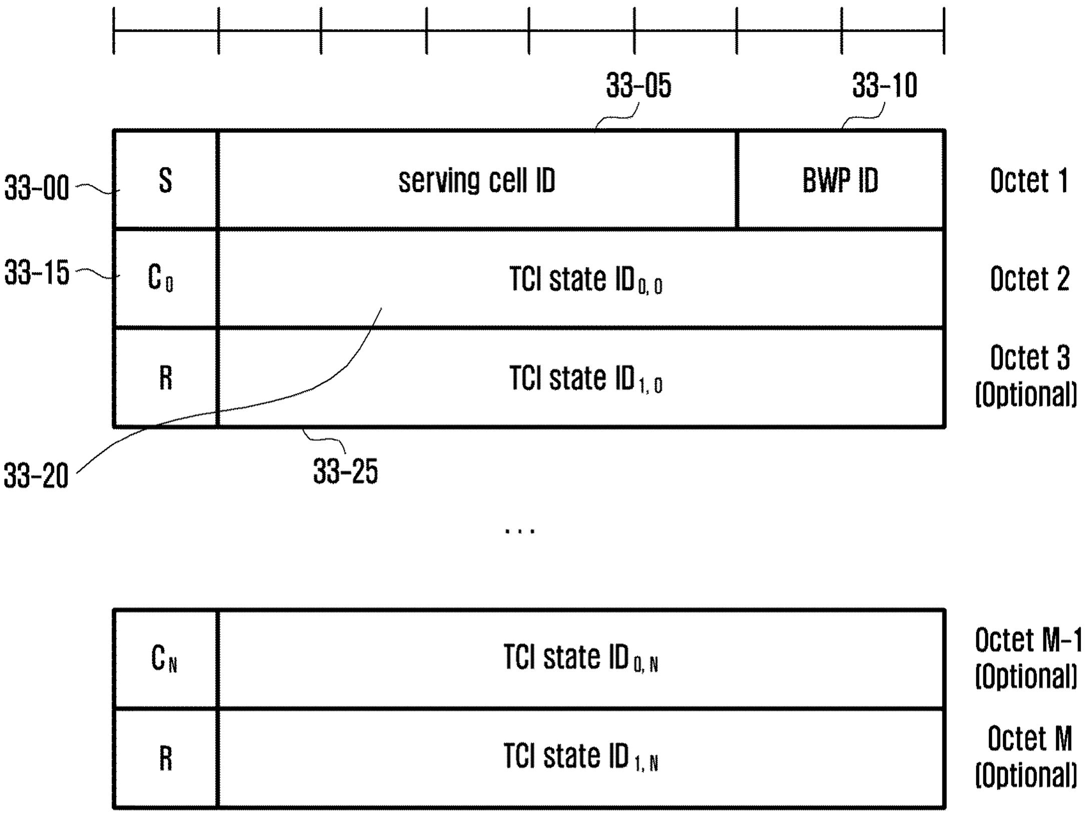
33-05
33-10
33-00
33-15
33-20
33-25
S
serving cell ID
BWP ID
Octet 1
C0
TCI state ID0, 0
Octet 2
R
TCI state ID1, 0
Octet 3
(Optional)
...
CN
TCI state ID0, N
Octet M-1
(Optional)
R
TCI state ID1, N
Octet M
(Optional)

FIG. 34

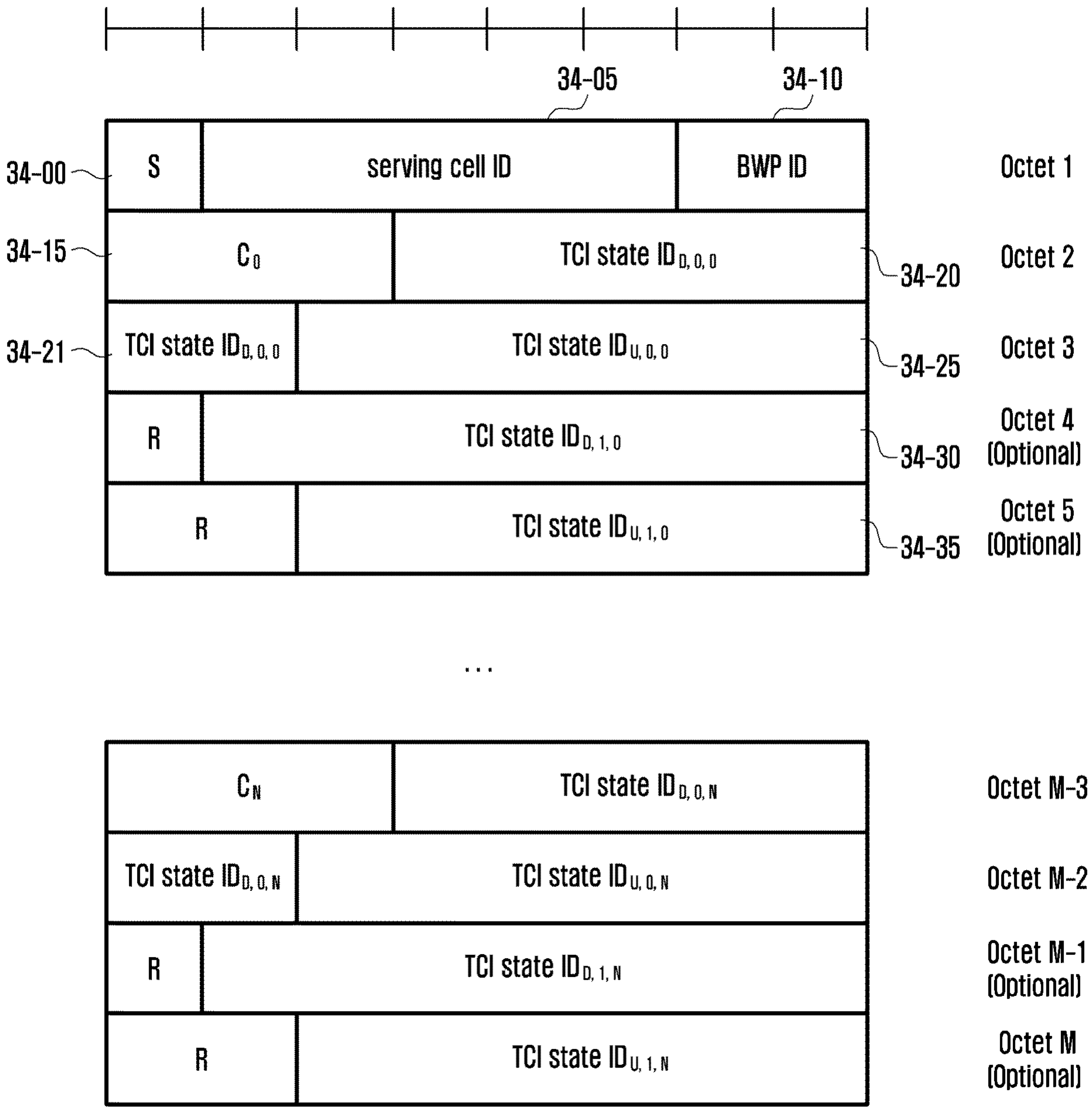
34-05
34-10
34-00
S
serving cell ID
BWP ID
Octet 1
34-15
C0
TCI state ID D, 0, 0
34-20
Octet 2
34-21
TCI state ID D, 0, 0
TCI state ID U, 0, 0
34-25
Octet 3
R
TCI state ID D, 1, 0
34-30
Octet 4 (Optional)
R
TCI state ID U, 1, 0
34-35
Octet 5 (Optional)
...
CN
TCI state ID D, 0, N
Octet M-3
TCI state ID D, 0, N
TCI state ID U, 0, N
Octet M-2
R
TCI state ID D, 1, N
Octet M-1 (Optional)
R
TCI state ID U, 1, N
Octet M (Optional)

FIG. 35

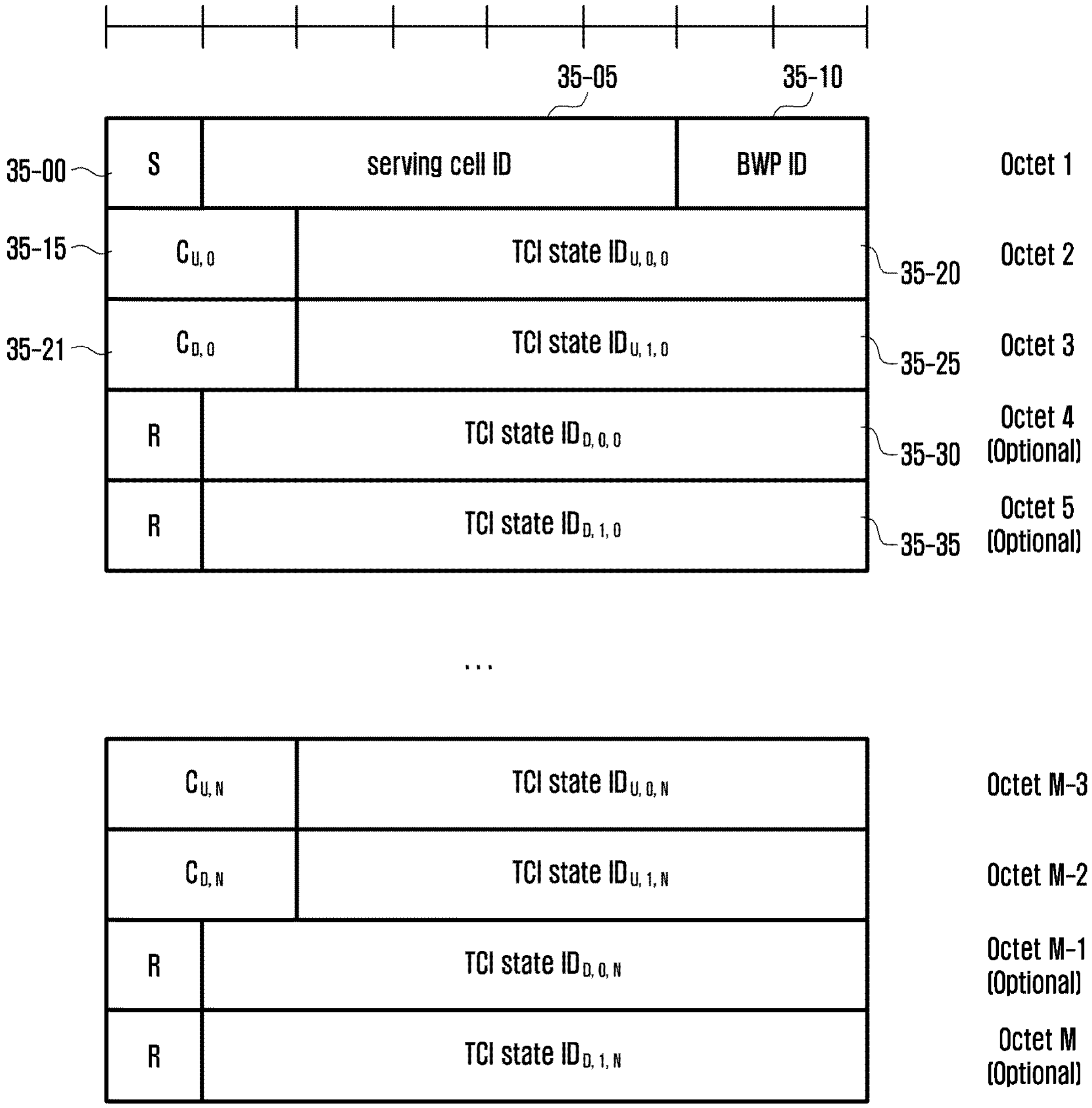
35-05
35-10
35-00
S
serving cell ID
BWP ID
Octet 1
35-15
C U, 0
TCI state ID U, 0, 0
35-20
Octet 2
35-21
C D, 0
TCI state ID U, 1, 0
35-25
Octet 3
R
TCI state ID D, 0, 0
35-30
Octet 4 (Optional)
R
TCI state ID D, 1, 0
35-35
Octet 5 (Optional)
...
C U, N
TCI state ID U, 0, N
Octet M-3
C D, N
TCI state ID U, 1, N
Octet M-2
R
TCI state ID D, 0, N
Octet M-1 (Optional)
R
TCI state ID D, 1, N
Octet M (Optional)

FIG. 36

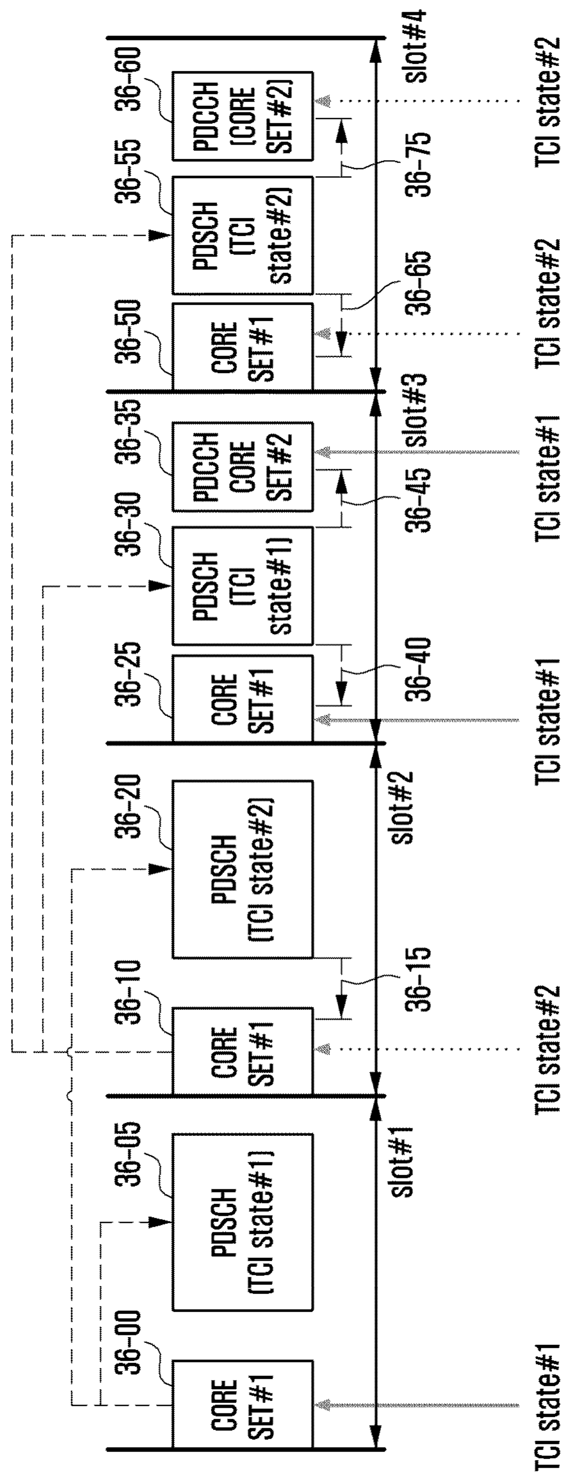
36-00
CORE SET#1
36-05
PDSCH (TCI state#1)
slot#1
TCI state#1
36-10
CORE SET#1
36-15
36-20
PDSCH (TCI state#2)
slot#2
TCI state#2
36-25
CORE SET#1
36-40
36-30
PDSCH (TCI state#1)
36-45
36-35
PDCCH CORE SET#2
slot#3
TCI state#1
TCI state#1
36-50
CORE SET#1
36-65
36-55
PDSCH (TCI state#2)
36-75
36-60
PDCCH (CORE SET#2)
slot#4
TCI state#2
TCI state#2

FIG. 37

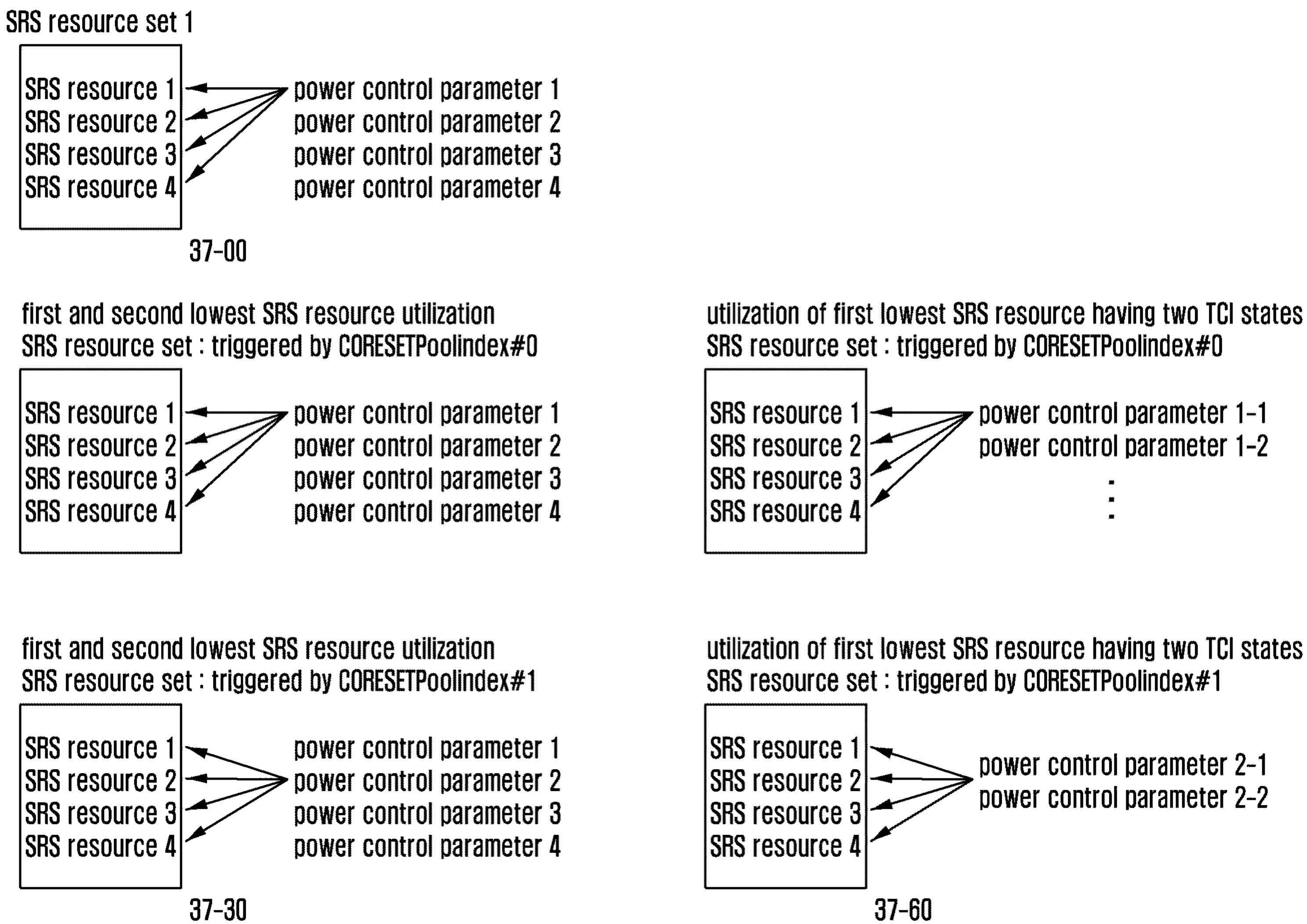
SRS resource set 1
SRS resource 1
SRS resource 2
SRS resource 3
SRS resource 4
power control parameter 1
power control parameter 2
power control parameter 3
power control parameter 4
37-00
first and second lowest SRS resource utilization
SRS resource set : triggered by CORESETPoolindex#0
SRS resource 1
SRS resource 2
SRS resource 3
SRS resource 4
power control parameter 1
power control parameter 2
power control parameter 3
power control parameter 4
utilization of first lowest SRS resource having two TCI states
SRS resource set : triggered by CORESETPoolindex#0
SRS resource 1
SRS resource 2
SRS resource 3
SRS resource 4
power control parameter 1-1
power control parameter 1-2
first and second lowest SRS resource utilization
SRS resource set : triggered by CORESETPoolindex#1
SRS resource 1
SRS resource 2
SRS resource 3
SRS resource 4
power control parameter 1
power control parameter 2
power control parameter 3
power control parameter 4
37-30
utilization of first lowest SRS resource having two TCI states
SRS resource set : triggered by CORESETPoolindex#1
SRS resource 1
SRS resource 2
SRS resource 3
SRS resource 4
power control parameter 2-1
power control parameter 2-2
37-60

FIG. 38

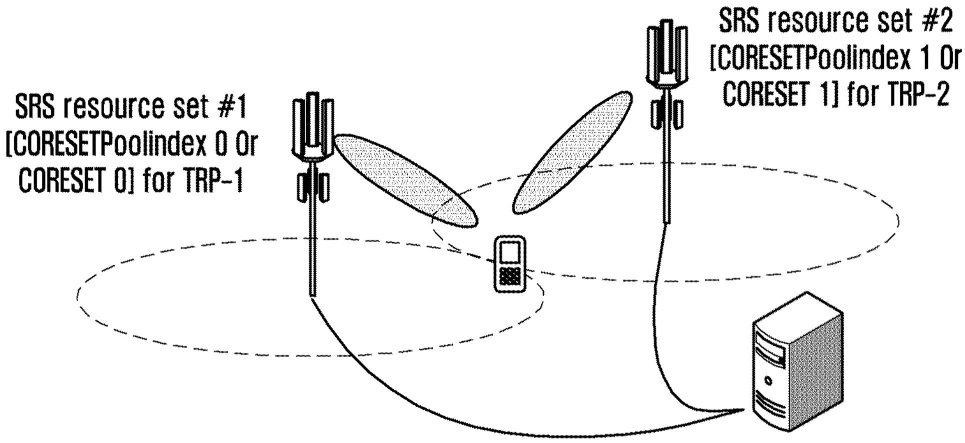
SRS resource set #1
[CORESETPoolindex 0 Or
CORESET 0] for TRP-1
SRS resource set #2
[CORESETPoolindex 1 Or
CORESET 1] for TRP-2

FIG. 39

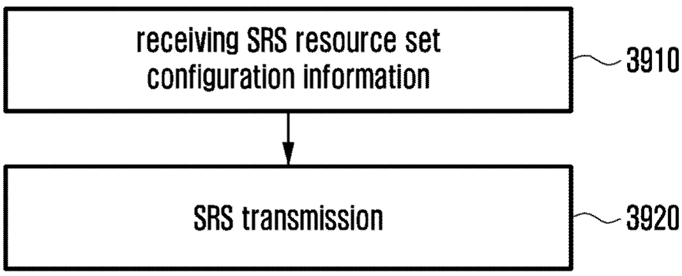
receiving SRS resource set configuration information
3910
SRS transmission
3920

FIG. 40

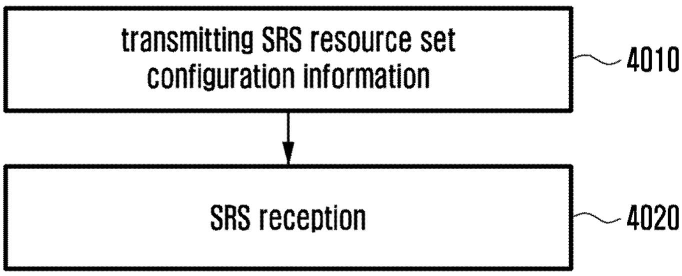
transmitting SRS resource set configuration information
4010
SRS reception
4020

FIG. 41

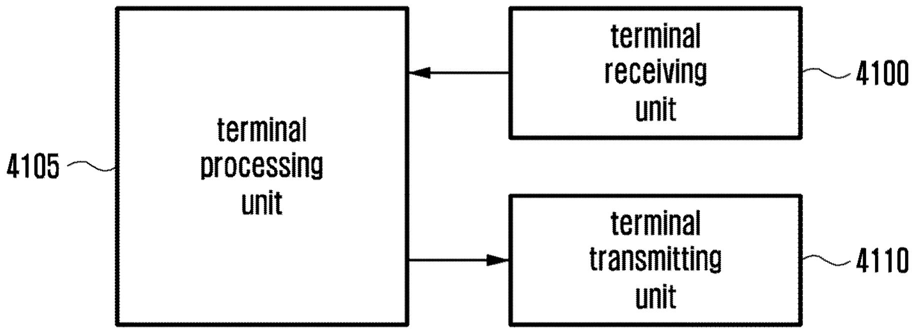
terminal
receiving
unit
4100
terminal
processing
unit
4105
terminal
transmitting
unit
4110

FIG. 42

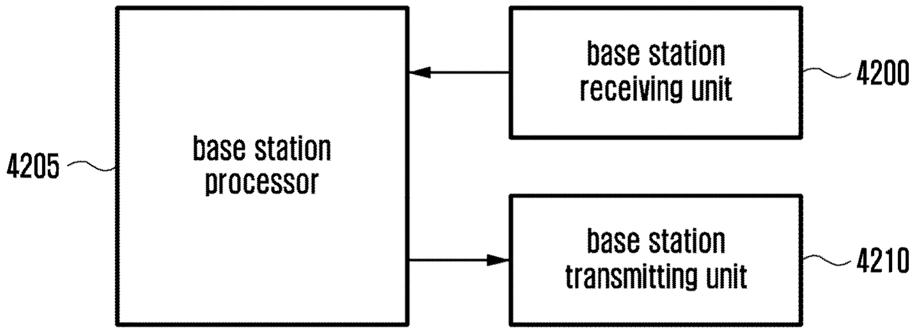
4205
base station
processor
base station
receiving unit
4200
base station
transmitting unit
4210

## INTERNATIONAL SEARCH REPORT

International application No.
**PCT/KR2023/010143**

### A. CLASSIFICATION OF SUBJECT MATTER

**H04W 72/231**(2023.01)i; **H04W 72/232**(2023.01)i; **H04W 72/12**(2009.01)i; **H04B 7/06**(2006.01)i; **H04B 7/08**(2006.01)i; **H04L 5/00**(2006.01)i

According to International Patent Classification (IPC) or to both national classification and IPC

### B. FIELDS SEARCHED

Minimum documentation searched (classification system followed by classification symbols)

H04W 72/231(2023.01); H04B 7/06(2006.01); H04L 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: SRS, 자원 세트(resource set), CORESET, 풀(pool), 인덱스(index), TCI

### C. DOCUMENTS CONSIDERED TO BE RELEVANT

| Category* | Citation of document, with indication, where appropriate, of the relevant passages | Relevant to claim No. |
|---|---|---|
| Y | MODERATOR (MEDIATEK). Moderator summary on extension of unified TCI framework (Round 1). R1-2302000, 3GPP TSG RAN WG1 Meeting #112. 02 March 2023. See section 5. | 1-15 |
| Y | SAMSUNG. Draft CR on power control parameters for multiple aperiodic SRS resource sets. R1-2301231, 3GPP TSG RAN WG1 Meeting #112. 17 February 2023. See section 6.2.1.2. | 1-15 |
| Y | HUAWEI et al. Discussion on unified TCI framework extension for multi-TRP. R1-2300093, 3GPP TSG RAN WG1 Meeting #112. 17 February 2023. See section 2.2.6. | 4,13 |
| A | SAMSUNG. On unified TCI framework for multi-TRP (MTRP) operation. R1-2301245, 3GPP TSG RAN WG1 Meeting #112. 17 February 2023. See section 2.1. | 1-15 |
| A | WO 2022-015595 A1 (INTEL CORPORATION) 20 January 2022 (2022-01-20) See paragraphs [0241]-[0254]; and claims 1-20. | 1-15 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 January 2024** | **04 January 2024** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

**INTERNATIONAL SEARCH REPORT**
**Information on patent family members**

International application No.
**PCT/KR2023/010143**

| Patent document cited in search report | Publication date (day/month/year) | Patent family member(s) | Publication date (day/month/year) |
|---|---|---|---|
| WO 2022-015595 A1 | 20 January 2022 | BR 112022025278 A2 | 24 January 2023 |
| | | JP 2023-534349 A | 09 August 2023 |
| | | US 2023-0164786 A1 | 25 May 2023 |

Form PCT/ISA/210 (patent family annex) (July 2022)